(19) Europäisches Patentamt
European Patent Office
Office européen des brevets

(11) EP 1 802 726 B1

(12) **EUROPEAN PATENT SPECIFICATION**

(45) Date of publication and mention of the grant of the patent:
**30.11.2011 Bulletin 2011/48**

(21) Application number: **05790100.1**

(22) Date of filing: **02.09.2005**

(51) Int Cl.:
***C09K 9/02*** *(2006.01)* ***C08F 293/00*** *(2006.01)*
***G02B 1/04*** *(2006.01)* ***G02B 5/23*** *(2006.01)*
***G03C 1/685*** *(2006.01)* ***C08F 220/06*** *(2006.01)*
***C08F 220/18*** *(2006.01)*

(86) International application number:
**PCT/AU2005/001327**

(87) International publication number:
**WO 2006/024099 (09.03.2006 Gazette 2006/10)**

(54) **PHOTOCHROMIC COMPOUNDS COMPRISING POLYMERIC SUBSTITUENTS AND METHODS FOR PREPARATION AND USE THEREOF**

PHOTOCHROME VERBINDUNGEN MIT POLYMEREN SUBSTITUENTEN, DEREN HERSTELLUNG UND VERWENDUNG

COMPOSÉS PHOTOCHROMES COMPRENANT DES SUBSTITUANTS POLYMÈRES ET MÉTHODES DE SYNTHÈSE ET D'UTILISATION DE CES COMPOSÉS

(84) Designated Contracting States:
**AT BE BG CH CY CZ DE DK EE ES FI FR GB GR HU IE IS IT LI LT LU LV MC NL PL PT RO SE SI SK TR**

(30) Priority: **02.09.2004 US 606664 P**
**29.04.2005 AU 2005902183**

(43) Date of publication of application:
**04.07.2007 Bulletin 2007/27**

(73) Proprietor: **Advanced Polymerik Pty Ltd**
**Notting Hill VIC 3168 (AU)**

(72) Inventors:
- **EVANS, Richard, Alexander**
  **Glen Waverly, Victoria 3158 (AU)**
- **SUCH, Georgina, Kate**
  **Richmond, Victoria 3121 (AU)**
- **DAVIS, Thomas, Paul**
  **Randwick, New South Wales 2031 (AU)**
- **MALIC, Nino**
  **Rowville, Victoria 3178 (AU)**
- **LEWIS, David, Andrew**
  **Marion, South Australia 5043 (AU)**
- **CAMPBELL, Jonathan, Andrew**
  **Maroubra, New South Wales 2035 (AU)**

(74) Representative: **Hübner, Gerd et al**
**Rau, Schneck & Hübner**
**Patentanwälte**
**Königstrasse 2**
**90402 Nürnberg (DE)**

(56) References cited:
**EP-B1- 0 277 639** **WO-A1-2004/041961**
**US-A- 5 683 628** **US-A- 6 133 390**
**US-A1- 2003 141 490** **US-B1- 6 316 569**
**US-B1- 6 362 248**

- **CHEMICAL ABSTRACTS, Columbus, Ohio, US; abstract no. 1980:172426, GAUDE D ET AL: 'Photochromism of spiropyrans. I. Study of the photodegradation of substituted and polymeric induline derivatives.' XP008095086 & BULLETIN DE LA SOXIETE CHIMIQUE DE FRANCE. no. 9-10, 1979, pages 489 - 498**
- **CHEMICAL ABSTRACTS, Columbus, Ohio, US; abstract no. 1979:575909, 'Synthesis and study of photochromic block copolymers.' XP008095091 & MAKROMOLEKULARE CHEMIE. vol. 180, no. 8, 1979, pages 1865 - 1875**
- **CHEMICAL ABSTRACTS, Columbus, Ohio, US; abstract no. 1975:73605, 'Synthesis and properties of photochromic polymers using living polymers.' XP008095087 & KOBUNSHI RONBUNSHU. vol. 31, no. 9, 1974, pages 551 - 557**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 802 726 B1

## Description

### Field

The present invention relates to a class of functionalised photochromic dyes, to compositions containing the functionalised dyes, and to a method for forming polymeric compositions and light transmissible polymeric articles exhibiting photochromic response.

### Background

Photochromism is a property which has been used in the manufacture of light transmissible articles for many years. A compound is said to be photochromic if it changes colour when irradiated at one wavelength and reverts to its original colour when irradiated at a second wavelength or thermally (without irradiation). The use of photochromics in the manufacture of spectacle lenses is a particular benefit as it enables the efficiency with which radiation is filtered to be varied with the intensity of radiation. Photochromics also have potential for use in a range of other polymeric compositions in products or in applications such as windows, automotive windshields, automotive and aircraft transparencies, polymeric films, coating compositions, optical switches and data storage devices. Photochromics could also be used in inks and to improve the security of documents and currency, for example by providing a security check under UV light or by indicating exposure to light during photocopying.

Despite the use of photochromic compounds in applications such as lenses there have been a number of problems which reduce the versatility and potential of this technology

It is advantageous to control the rate at which photochromic polymeric compositions colour when exposed to radiation and fade on cessation of this exposure. In many situations, it is important to provide rapid colouring and fading kinetics, particularly for lenses and spectacles. In some polymers however, the rate of coloration and fade is slow so that a compromise needs to be made in the components and properties of the substrate to enhance the rate of coloration and fade. For example, many photochromics colour and fade more rapidly in soft materials and yet, for applications such as spectacles or structural panels, abrasion resistance and hardness are important. This trade off between rate of transformation and hardness produces a dilemma for manufacturers between toughness and photochromic efficiency. In polymeric lenses many photochromics exhibit a slower rate of fade than is desirable. It is desirable to be able to control the fade kinetics of photochromic compounds in a wide range of media.

One approach taken by previous workers is to produce photochromics which are an integral part of the host matrix. This is achieved by functionalising the photochromic with an unsaturated group which is polymerised with the polymer matrix. The photochromic thus becomes covalently tethered to the host polymer matrix. However it is generally been observed that unless the matrix is relatively soft, the rate of fade is adversely effected. Hu et al, Pure Appln. Chem., AA(6) pp 803-810 (1996) also reported that tethering of the photochromic leads to the decolouration rate remaining almost constant with increasing dye concentration. Further the fade observed is significantly slower when this photochromic is tethered at concentrations less than 15 wt %.

Another example of cases where control of fade is desirable is with a mixture of photochromic compounds. It is sometimes necessary to use a mixture of photochromic compounds to achieve the desirable colour such as brown or grey. However, the different photochromic dyes used in combination to achieve these colours often differ slightly in the rate of fade so that the mixture undergoes an unattractive variation in colour during fade. It is desirable to tailor the fade speed of dyes that can be useful in combination so as to provide complimentary kinetics.

Another problem associated with photochromic compounds is their lifetime. Many photochromic compounds have a relatively short lifetime before they fatigue, due to chemical degradation, and either no longer undergo reversible colour change or become less efficient. This is a problem, for example, in more hostile chemical environments such as in high index lenses containing sulfur-containing polymers or paper.

Yet a further problem for providing useful photochromic articles is achieving the appropriate balance of colour intensity, fade speed and toughness. When photochromic dyes are present in an article of cured rigid matrix, the activation and fade speed (in particular) slows compared to the same dye in a solvent or relatively mobile phase. The reduced fade speed is a function of the rigidity and polarity of the substrate in which the dye is dispersed. Also, when considering a range of substrates with different rigidities, typically the saturation colour (the steady state activated colour) becomes darker as the substrate becomes more rigid, until at an extreme, where the dye is "frozen" in place, the saturation colour starts to decrease simply because the dye cannot open to the activated state. In the same situation, it has been observed that the effect of temperature on the saturated intensity is not as severe as in the more mobile substrate. These factors place a very important commercial limitation on the technology, especially when fast fade is desired because there is a trade off between increasing fade speed and optimising colour intensity in the activated state.

International Publication No. 009/15629 (PPG Industries) discloses napthopyranphotochromic compounds comprising a substituent

$-A[(C2H_4O)_x(C_3H_6O)_y(C_4H_8O)_2]D$

where
D is a polymerisable group.

The applicant discloses articles in which the compound is polymerised or copolymerised with a monomer composition to stop leaching from the resulting copolymer compounds from the polymer matrix in which they are incorporated. Similarly International Publication No. WO 01/70719 (Transitions Optical) discloses hydroxylated carboxylated naphthopyrans.

US Publication 2003/0141490 A1 (Walters et al) reports an improvement in fade speed by copolymerizing a photochromic monomer and a copolymerisable material to form a copolymer having a glass transition temperature of less than 23°C. The copolymer may be used in a spin coating composition for articles such as optical lenses.

Widmaier et al. discloses in "Synthesis and characterization of polystyrene networks containing unattached photocromic polystyrene: preliminary results of self-diffusion measurements", POLYMER, 1989, Vol 30, March, pp. 549 to 552 a polystyrene end functionalized with a photochromic moiety and obtained by living polymerization. Cho et al. discloses in "Preparation of diarylethene copolymers and their photoinduced refractive index change", Optical Materials 21 (2002), pp. 279-284, a copolymer of styrene and a photocromic monomer obtained by living polymerization.

Our copending International Application No PCT/AU2003/001453 (WO 2004/041961) discloses photochromic compounds in which the photochromic moiety is functionalised to contain one or more pendant polymeric substituent groups. The polymeric substituent chains specifically described are generally $C_2$ to $C_4$ alkylene, $C_2$ to $C_4$ haloalkyleneoxy and alkyleneoxy and hydrocarbylsilyloxy. While the photochromics disclosed in this copending application allow dramatic changes in the kinetics as a result of the polymeric functional group, the polyalkoxy chains and polysilyloxy chains offer limited control of fade kinetics, and additional and more versatile options are desirable to allow more precise tailoring of kinetics.

## Summary

We have now found that, by forming a photochromic dye with a polymeric substituent having a carbon backbone and multiplicity of pendant functional groups, the chain length and properties can be tailored for specific applications.

The compounds of the invention thus comprise a photochromic moiety which may be of a type known art and at least one substituent comprising at least one polymer. The resulting structure of the compounds of the invention offer the stability while allowing pendant groups to be used in control of the type and population of functional groups to determine photochromic properties such as the fade kinetics of the product.

The polymeric substituent is a polymer comprising monomeric units of formula I:

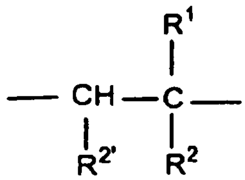

I

The polymeric substituent may be a homopolymer, a copolymer of two or more units of formula I or a copolymer comprising one or more units of formula I and additional monomeric units derived from optionally substituted olefinic compounds.

The polymer substituted photochromics of the invention are preferably of formula II

$$(PC) - (L(RY)_n)_m \qquad II$$

wherein
PC is the photochromic moiety;
L is a bond or linking group;
R is an polymeric substituent chain;
Y is a terminal group of the polymeric substituent;
n is an integer of from 1 to 3;
m is an integer of from 1 to 3 and
R is a polymer comprising a plurality of monomer units of formula I

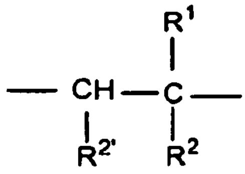

I

wherein
$R^1$, which is independently selected for each of said plurality of monomer units, is selected from the group consisting of hydrogen, halogen, alkyl, hydroxy, hydroxy alkyl, nitrile and alkoxy;
$R^2$ in each of said monomer units is independently selected from the group consisting of hydroxy, alkoxy, aryloxy, heterocyclic, carboxyl, nitrile and the group of formula

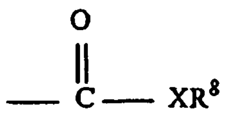

wherein $R^8$ is selected from the group consisting of alkyl, substituted alkyl, carbocyclic, substituted carbocyclic, heterocyclic, substituted heterocyclic; and X is selected from the group consisting of a bond, oxygen, sulphur and the group $NR^{7'}$ wherein $R^{7'}$ is selected from the group consisting of hydrogen, alkyl, substituted alkyl, aryl and substituted aryl, carbocyclic, substituted carbocyclic, heterocyclic and substituted heterocyclic; wherein preferably at least one of $R^{7'}$ and $R^8$ is other than hydrogen.
and the group of formula:

$-L-(O)_q-(Z-O)_p-ZY$; and

wherein

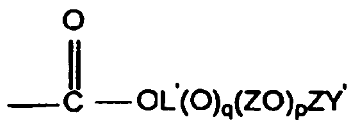

p is from 1 to 20, q is 0 or 1, Z is selected from the group consisting of $C_2$ - $C_4$ alkylene, dialkylsilyl, diarylsilyl and diaryloxysilyl; L' is a bond or a linking group such as $C_1$ to $C_6$ alkylene, aryl, alkaryl and aralkyl; and Y' is a terminal group selected from the group consisting of hydrogen, alkyl, hydroxyl and alkoxy, alkoxyalkoxy, hydroxyalkoxy and aryloxy, tri-($C_1$ to $C_6$ alkyl)silane, di($C_1$ to $C_6$ alkyl)phenyl silane;
$R^{2'}$, which is independently selected for each of said plurality of monomer units, is hydrogen and $R^2$ and $R^{2'}$ may together form a group of formula
wherein

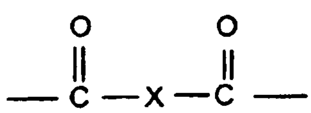

X is selected from the group consisting of oxygen, surfur and the group $NR^7$ wherein $R^7$ is selected from the group of hydrogen, alkyl, aryl, substituted alkyl and substituted aryl.

The polymer comprising the monomeric unit of formula I may be a homopolymer or copolymer. It may be a copolymer of two or more units of formula I or a copolymer of at least one unit of formula I and one or more comonomer units derived from unsaturated compounds. Where the polymer is a copolymer suitable comonomer units may include one or more distinct units of formula III or comonomers of formula:

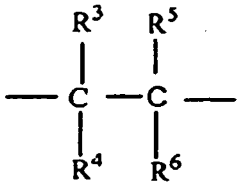 III

wherein $R^3$, $R^4$, $R^5$ and $R^6$ are independently selected from the group consisting of hydrogen, halogen, alkyl, substituted alkyl, aryl, substituted aryl and haloalkyl. The copolymer may be a random or block copolymer.

Examples of the group R include polymers of formula IV

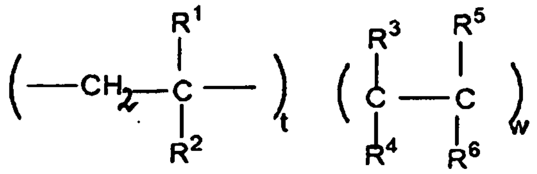 IV

wherein t is from 2 to 500, preferably 2 to 200, more preferably 2 to 100 and most preferably from 5 to 50 and w is from 0 to 500, preferably 0 to 100 and more preferably 0 to 50.

Wherein when the polymer is a copolymer the distinct units may be present as blocks or randomly distributed.

The invention further provides a photochromic comprising at least one polymeric substituent formed by a chain growth polymerization method. A particularly preferred method of chain growth is by living polymerisation, particularly living free radical polymerization.

In a further aspect the invention provides a photochromic composition comprising a polymeric substrate and photochromic compound comprising a photochromic moiety and at least one polymeric substituent comprising a carbon backbone and pendant functional groups. The polymeric substrate may be in the form of a coating composition, a polymerizable composition or rigid polymer such as rigid polymers used in optical applications.

**Detailed Description**

The compounds of the invention comprise of a photochromic moiety and at least one substituent comprising at least one polymer wherein the polymer is a homopolymer or copolymer comprising a plurality of monomer units of formula I

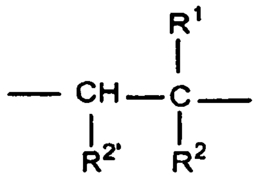 I

wherein

$R^1$ in each of the plurality of monomer units is independently selected from the group consisting of hydrogen, halogen, alkyl, hydroxy, hydroxy alkyl and alkoxy;

$R^2$ in each of said monomer units is independently selected from the group consisting of hydroxy, alkoxy, aryloxy, heterocyclic, carboxyl, nitrile and the group of formula

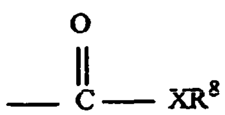

wherein $R^8$ is selected from the group consisting of alkyl, substituted alkyl, carbocyclic, substituted carbocyclic, heterocyclic, substituted heterocyclic; and X is selected from the group consisting of a bond, oxygen, sulphur and the group $NR^{7'}$ wherein $R^{7'}$ is selected from the group consisting of hydrogen, alkyl, substituted alkyl, aryl and substituted aryl, carbocyclic, substituted carbocyclic, heterocyclic and substituted heterocyclic (wherein preferably at least one of $R^{7'}$ and

$R^8$ is other than hydrogen) and the group of formula:

-L'-$(O)_q$-$(Z\text{-}O)_p$-ZY; and

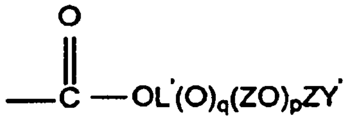

wherein

p is from 1 to 20, q is 0 or 1, Z is selected from the group consisting of $C_2$ - $C_4$ alkylene, dialkylsilyl, diarylsilyl and diaryloxysilyl; L' is a bond or a linking group such as $C_1$ to $C_6$ alkylene, aryl, alkaryl and aralkyl; and Y' is a terminal group selected from the group consisting of hydrogen, alkyl, hydroxyl and alkoxy, alkoxyalkoxy, hydroxyalkoxy and aryloxy, tri-($C_1$ to $C_6$ alkyl)silane, di($C_1$ to $C_6$ alkyl)phenyl silane;

$R^{2'}$ in each of the plurality of monomer units is independently selected from hydrogen and $R^2$ and $R^{2'}$ may together form a group of formula

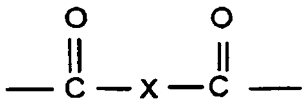

wherein

X is selected from the group consisting of oxygen, sulfur and the group $NR^7$ wherein $R^7$ is selected from the group consisting of hydrogen, alkyl, aryl, substituted alkyl and substituted aryl.

$R^2$ is preferably independently selected from the group consisting of hydroxy, alkoxy, aryloxy, heterocyclic, carboxyl, nitride, alkoxycarbonyl, substituted alkoxycarbonyl, carbamoyl, N-alkylcarbamoyl, N,N-dialkylcarbamoyl, carbaniloyl, alkylphenylaminocarbonyl, alkoxyphenylaminocarbonyl, carbazole acyl, substituted acyl and the group of formula:

-L'-$(O)_q$-$(Z\text{-}O)_p$-ZY; and

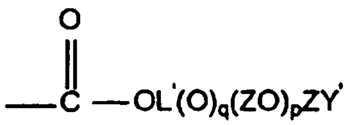

wherein

p is the number of (ZO) units and is preferably from 1 to 20 and more preferably 2 to 15, q is 0 or 1, Z is selected from the group consisting of $C_2$ - $C_4$ alkylene, dialkylsilyl, diarylsilyl and diaryloxysilyl; L' is a bond or a linking group such as $C_1$ to $C_6$ alkylene, aryl, alkaryl and aralkyl; and Y is a terminal group selected from the group consisting of hydrogen, alkyl, hydroxyl and alkoxy, alkoxyalkoxy, hydroxyalkoxy and aryloxy, tri-($C_1$ to $C_6$ alkyl)silane, di($C_1$ to $C_6$ alkyl)phenyl silane;

A particularly preferred group of polymeric substituted photochromics of the invention are of formula II

$$(PC) - (L(RY)_n)_m \qquad II$$

wherein

PC is the photochromic moiety;

L is a bond or linking group;

R is an polymeric substituent chain;

Y is a terminal group of the polymeric substituent;

n is an integer of from 1 to 3;

m is an integer of from 1 to 3 and

R is a polymer comprising a plurality of monomer units of formula I

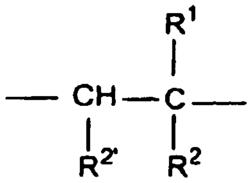

I

wherein
$R^1$ is independently selected from the group consisting of hydrogen, halogen, alkyl, hydroxy and alkoxy;
$R^2$ is independently selected from the group consisting of hydroxy, alkoxy, aryloxy, heterocyclic, carboxyl, nitrile, alkoxycarbonyl, substituted alkoxycarbonyl, carbamoyl, N-alkylcarbamoyl, N,N-dialkylcarbamoyl, carbaniloyl, alkylphenylaminocarbonyl, alkoxyphenylaminocarbonyl, carbazole acyl, substituted acyl and the group of formula:

$-L'-(O)_q-(Z-O)_p-ZY$; and

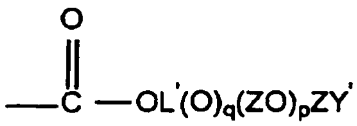

wherein
p is the number of (ZO) units and is preferably from 1 to 20 and more preferably 2 to 15, q is 0 or 1, Z is selected from the group consisting of $C_2$-$C_4$ alkylene, dialkylsilyl, diarylsilyl and diaryloxysilyl; L' is a bond or a linking group such as $C_1$ to $C_6$ alkylene, aryl, alkaryl and aralkyl; and Y is a terminal group selected from the group consisting of hydrogen, alkyl, hydroxyl and alkoxy, alkoxyalkoxy, hydroxyalkoxy and aryloxy, tri-($C_1$ to $C_6$ alkyl)silane, di($C_1$ to $C_6$ alkyl)phenyl silane;
$R^{2'}$ is independantly hydrogen and wherein $R^2$ and $R^{2'}$ may together form a group of formula

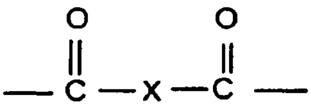

wherein
X is selected from the group consisting of oxygen, surfur and the group $NR^7$ wherein $R^7$ is selected from the group of hydrogen, alkyl, aryl, substituted alkyl and substituted aryl.

The polymer comprising the monomer of formula I may be a homopolymer or copolymer. Where the polymer is a copolymer, it may be a copolymer of two or more units or a copolymer of at least one unit of formula I with an unsaturated monomer other than of formula I. Where the polymer is a copolymer suitable comonomer units may include one or more distinct units of formula III or comonomers of formula

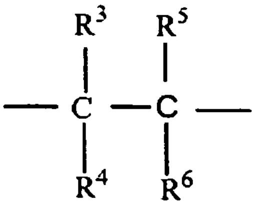

III

wherein $R^3$, $R^4$, $R^5$ and $R^6$ are independently selected from the group consisting of hydrogen, halogen, alkyl and haloalkyl. The copolymer may be a random or block copolymer.

Examples the group R include polymers of formula IV

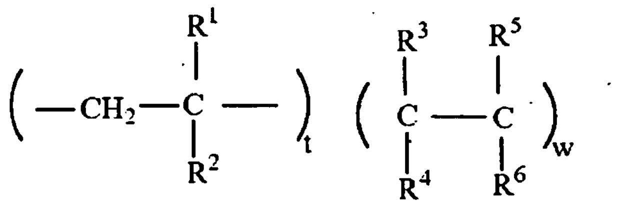 IV

wherein t is from 2 to 500, preferably from 2 to 200, more preferably from 2 to 100 and most preferably from 5 to 50 and w is from 0 to 500, preferably from 0 to 200, more preferably from 0 to 100 and most preferably from 0 to 50.

When the polymer is a copolymer the distinct units may be present as blocks or randomly distributed.

The compounds of the invention can be designed to tailor the photochromic properties for specific applications. The length, population and distribution of monomer types (in particular the type, population and distribution of function substituents) can be used to control one or more properties of the photochromic article selected from fatigue resistance, fade, activation speed and temperature sensitivity.

The type and properties of the polymeric substituent may also be used to protect the photochromic from adverse chemical environments encountered during formation or processing of the host matrix. For example, the initiator systems used in curing polymerizable compositions to form photochromic articles such as spectacles and glazing panels typically have an adverse effect on a photochromic dye, in some cases even destroying photochromism. It may be possible to reduce this deleterious effect by choosing a polymeric substituent which protects the photochromic moiety under such conditions.

The invention allows both coarse and fine-tuning of photochromic performance. For example coarse tuning of photochromic switching speed may be achieved by the *choice* of polymeric substituent (eg poly(styrene), poly(methyl methacrylate)) with those of high Tg giving slower switching speeds and those of lower Tg (below room temperature) giving faster switching speeds. Once the coarse switching speed is chosen, then the speed may be fine tuned by the *length* of the polymeric substituent. To obtain optimum control over photochromic performance it is preferred that compounds of the invention have polymeric substituents of a narrow molecular weight distribution.

When polymeric substituents (poly(methyl methacrylate) and polystyrene) have a Tg above room temperature the switching speed (fade speed) decreases with increasing length/molecular weight of the polymeric substituent. For those polymeric substituents with Tg below room temperature (eg poly(butyl acrylate)) the switching speed increases with length of the polymeric substituent. This may be because as the polymeric substituent size increases it can more efficiently insulate the dye from the surrounding host matrix and provide a highly localised "soft" environment favourable for rapid photochromic switching.

The fade speed can be tuned to particular values for a particular matrix simply by adjusting the nature and length of the polymeric substituent. No electronic modification for the dye is needed. This allows switching speeds of a combination of dyes to be matched in a photochromic lens to allow neutral colouration between clear and coloured states for the commercial lens.

*The Photochromic Moiety PC*

The photochromic moiety may be chosen from a wide range of photochromic moieties known in the art. The most appropriate photochromic moieties for use in the compounds used in accordance with the invention are photochromics which undergo a molecular isomerism such as a cis-trans isomerism or pericyclic reaction such as $6\pi$, -6 atom, $6\ \pi$, - 5 atom processes and [2+2], [4+4] or [4+2] cycloadditions. The compositions of the invention (and in particular the polymeric substituent chains) are believed to provide a nanoenvironment to provide a desired environment which may lead to a controlled speed of transformation between the colour-producing chromophore and the colourless state of the photochromics. Thus, transformations may be made faster or slower than a reference dye of identical electronic structure (but without the polymer substituent) depending on the nature of the attached polymer.

Photochromic compounds comprising a polymeric substituent in accordance with the invention may comprise a photochromic moiety selected from the group consisting of:

chromenes such as those selected from the group consisting of naphthopyrans, benzopyrans, indenonaphthopyrans and phenanthropyrans;

spiropyrans such as those selected from the group consisting of spiro(benzindoline) naphthopyrans, spiro(indoline) benzopyrans, spiro(indoline)-naphthopyrans, spiroquinopyrans, and spiro(indoline)pyrans and spirodihydroindolizines;

spiro-oxazines such as those selected from the group consisting of spiro(indoline)naphthoxazines, spiro(indoline) pyridobenzoxazines, spiro(benzindoline)pyridobenzoxazines, spiro(benzindoline)naphthoxazines and spiro(indoline)- benzoxazines; fulgidies, fulgimides; anils;perimidinespirocyclohexadienones; diarylperfluorocyclopentenes; diarylcyclopentenes; diheteroarylcyclopentenes; diheteroarylperfluorocyclopentenes;stilbenes; thioindigoids; azo dyes; diarylperfluorocyclopentenes; and diarylethenes.

Examples of photochromic moieties may be selected from the group consisting of fulgide photochromic compounds, chromene photochromic compounds and spiro-oxazine photochromic compounds. A wide range of photochromic compounds of each of the classes referred to above have been described in the prior art and having regard to the teaching herein the skilled addressee will have no difficulty in preparing a wide range of photochromic polymeric substituent adducts. Examples of chromene photochromic compounds, fulgide photochromic compounds and spiro-oxazine photochromic compounds are described in US Patent No. 5776376.
The most preferred photochromic moieties are the chromenes and spiro-oxazines, specifically spiroindolene aroxazines.

_L is a bond or linking group_

Preferably L is selected from the group consisting of a bond or the polyradical selected from the group of formula IIa, IIb, IIc, IId, IIe and IIf,

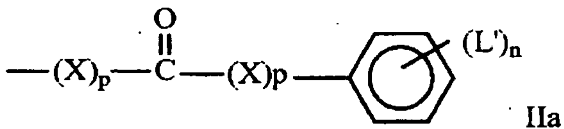

IIa

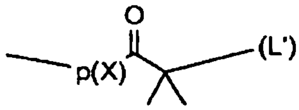

IIb

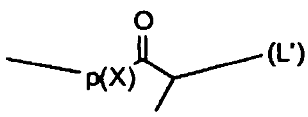

IIc

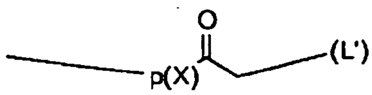

IId

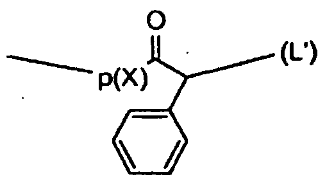

IIe

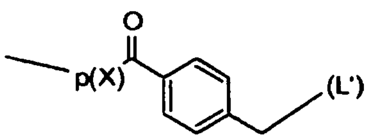

IIf

wherein in the formula IIa to IIf
L' is R or L as defined by any one of formulae IIa to IIf and the complete linker between the photochromic moiety and polymeric substituent R is no more than 6 and preferably no more than 4 L units;
X which may be the same or different is as hereinbefore defined;
$R^4$ is selected from the group consisting of hydroxy, alkoxy, amino and substituted amino such as alkyl amino;

n is an integer from 1 to 3;
w is an integer from 1 to 4;
q is an integer from 0 to 15;
p which when there is more than one may be the same or different is 0 or 1; and
(R) shows the radial for attachment of polymeric substituent R.

The purpose of the linking group is to join the one or more polymeric substituents to the photochromic moiety. A linking group may be needed when the polymeric substituent has a functional group that cannot be used directly to join to the dye.

*R is a polymeric chain*

The polymeric substituents generally comprise a plurality of monomer units of formula I, preferably a multiplicity of said monomeric units and most preferably at least five monomeric units of formula I.

Preferably in the monomeric group of formula I, the group $R^1$ is independently selected from the group consisting of hydrogen, halogen, $C_1$ to $C_6$ alkyl, $C_1$ to $C_6$ alkoxy, $C_1$ to $C_6$ hydroxyalkyl and $C_1$ to $C_6$ alkoxy. More preferably $R^1$ is hydrogen or $C_1$ to $C_6$ alkyl and most preferably $R^1$ is hydrogen or methyl.

Preferably in the monomeric group of formula I the substituent $R^2$ is independently selected from the group consisting of hydroxy, $C_1$ to $C_6$ alkoxy, ($C_1$ to $C_6$ alkoxycarbonyl, heterocyclic, substituted aryl, aryloxy, substituted heterocyclic, carboxyl, nitrile, $C_1$ to $C_{10}$ alkoxycarbonyl, alkoxycarbonyl substituted with a substitutent selected from halogen, $C_1$ to $C_6$ alkoxy alkoxy, carbamoyl, N-($C_1$ to $C_6$ alkyl)carbamoyl, N,N-di($C_1$ to $C_6$ alkyl)carbamoyl, carbaniloyl ($C_1$ to $C_6$ alkyl)phenylaminocarbonyl, ($C_1$ to $C_6$ alkoxy)phenylaminocarbonyl, formyl aroyl, ($C_1$ to $C_6$ alkoxy)carbonyl substituted by a substituent selected from the group of hydroxy and $C_1$ to $C_6$ alkoxy; and the groups of formula:

$$-L-(O)_q-(Z-O)_p-ZY; \text{ and}$$

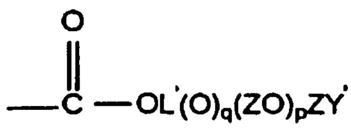

wherein
q is 0 or 1, Z is selected from the group consisting of ethylene, propylene and dimethylsilyl and p is an integer from 2 to 20; L is a bond or a linking group selected from $C_1$ to $C_6$ and Y is selected from the group consisting of $C_1$ to $C_6$ alkyl, $C_1$ to $C_6$ alkyl substituted with a group selected from hydroxy, $C_1$ to $C_6$ alkoxy, carboxyl, ($C_1$ to $C_6$ alkoxy)carbonyl, ($C_1$ to $C_6$ alkyl)dimethylsilyl and phenyldimethylsilyl.

More preferably $R^2$ is independently selected from the group consisting of carboxyl, heterocyclic of from 5 to 10 ring members comprising one or two rings and from one to three ring members optionally substituted by $C_1$ to $C_6$ alkyl, $C_1$ to $C_6$ alkoxy, ($C_1$ to $C_6$ alkoxy)carbonyl, ($C_1$ to $C_6$ alkoxy) substituted ($C_1$ to $C_6$ alkoxycarbonyl, carbamoyl, ($C_1$ to $C_6$ alkyl)carbamoyl, formyl, ($C_1$ to $C_6$ alkyl)carbonyl and the group of formula:

$$-L'-(O)_q-(Z-O)_p-ZY; \text{ and}$$

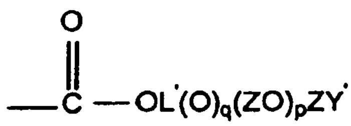

wherein
p is from 2 to 20, q is 0 or 1, Z is ethylene, propylene, dimethylsilyl and dimethoxysilyl; L is a bond or $C_1$ to $C_4$ alkyl; and Y' is selected from the group consisting of hydrogen, $C_1$ to $C_6$ alkyl, $C_1$ to $C_6$ haloalkyl, aryl, and $C_1$ to $C_6$ alkyl substituted with a substituent selected from $C_1$ to $C_6$ alkoxy, carboxyl, ($C_1$ to $C_6$ alkoxy)carbonyl, ($C_1$ to $C_6$ alkyl)dimethylsilyl and phenyldimethylsilyl;
$R^{2'}$ is hydrogen or methyl; and
$R^2$ and $R^{2'}$ may together form a bridging group of formula:

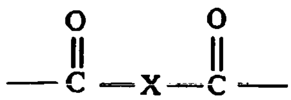

where X is selected from oxygen, sulfur and the group $NR^7$ wherein $R^7$ is selected from $C_1$ to $C_6$ alkyl, $C_1$ to $C_6$ alkoxy, ($C_1$ to $C_6$ alkyl).

In one embodiment the compound of the invention comprises a polymeric substituent R of formula I wherein $R^2$ is a substituent of formula:

$-L'-(O)_q-(Z-O)_p-ZY$; and

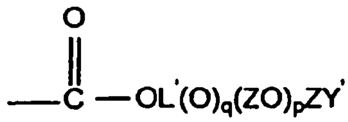

Particularly preferred examples of the substituent $R^2$ are of formula

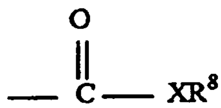

Wherein $R^8$ is selected from the group consisting of alkyl, substituted alkyl, carbocyclic, substituted carbocyclic, heterocyclic, substituted heterocyclic; and X is selected from the group consisting of oxygen, sulphur and the group $NR^{7'}$ wherein $R^{7'}$ is selected from the group consisting of hydrogen, alkyl, substituted alkyl, aryl and substituted aryl, carbocyclic, substituted carbocyclic, heterocyclic and substituted heterocyclic; wherein preferably at least one of $R^{7'}$ and $R^8$ is other than hydrogen.

Where used herein the term alk in words as alkoxy, alkylthio, alkanoyl and in the term alkyl, unless indicated to the contrary, includes groups $C_1$ to $C_{20}$ alkyl, preferably $C_1$ to $C_{10}$ alkyl and more preferably $C_1$ to $C_6$ alkyl.

Where used herein the term substituted alkyl and substituted alkoxy includes alkyl and alkoxy substituted with one or more substitutents selected from the group consisting of halo, hydroxy, alkoxy, haloalkoxy, aryloxy, carbocyclic and heterocyclic.

Where used herein the term aryl includes monocyclic and dycyclic aromatic and heteroaromatic compounds of from 5 to 10 ring members. Heteroaromatic compounds may include from 1 to 3 heteroatoms selected from oxygen, nitrogen and sulfur. Preferred examples of aryl include phenyl, pyridyl, indolyl, benzopyranyl and the like.

Where used herein the term halo preferably means chloro or fluoro.

Where used herein the term substituted aryl includes aryl substituted with one or more substitutents selected from the group consisting of halo, hydroxy, akyl, alkoxy, alkoxycarbonyl, carboxyl and nitrile.

Where used herein the term acyl includes alkanoyl such as $C_1$ to $C_{20}$ alkanoyl and aroyl such as benzoyl.

Where used herein the term substituted acyl includes acyl substituted with one or more substituents selected from the group consisting of halo, hydroxy, alkoxy, alkyl, aryl and substituted alkoxy.

Where used herein the term cycloalkyl includes aliphatic groups containing from 1 to 3 rings and a total of from 4 to 20 carbon atoms.

Where used herein the term substituted cycloalkyl may include one or more substitutents selected from the group consisting of halo, hydroxy, alkoxy and aryl.

Where used herein the term heterocyclic includes aliphatic groups containing from 1 to 20 carbon atoms and from 1 to 3 heteroatoms independently selected from oxygen, nitrogen and sulphur and up to 3 rings.

Where used herein the term substituted heterocyclic includes heterocyclic groups substituted with one of more substitutents selected from the group halo, hydroxy, alkoxy and aryl.

Examples of monomers which may be used to provide such monomeric units include:

(i) Monomers of formula

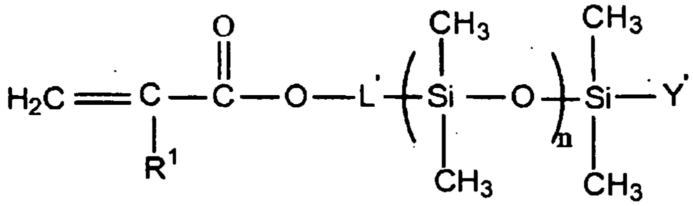

wherein $R^1$ is hydrogen $C_1$ to $C_6$ alkyl such as methyl, L' is $C_1$ to $C_6$ alkylene, Y is $C_1$ to $C_6$ alkyl and n is an integer from 2 to 30 preferably from 4 to 20; monomers of the type such as monomethacryloxypropyl terminated polydimethylsiloxane are commercially available;

(ii)

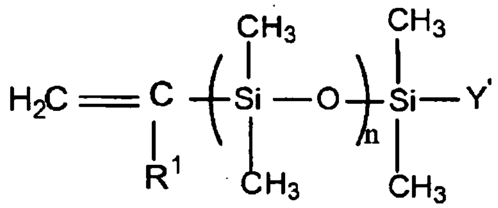

wherein $R^1$ is hydrogen or $C_1$ to $C_6$ alkyl such as methyl, Y' is $C_1$ to $C_6$ alkyl and n is from 2 to 30 and preferably 4 to 20;

(iii)

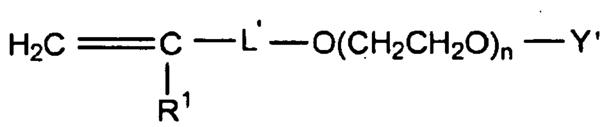

wherein $R^1$ is hydrogen or $C_1$ to $C_6$ alkyl such as methyl, L' is $C_1$ to $C_6$ alkylene and Y is $C_1$ to $C_6$ alkyldimethylsilyl. Specific examples of such compounds include monoalkylmonotrimethylsiloxy-terminated polyethylene oxide.

(iv)

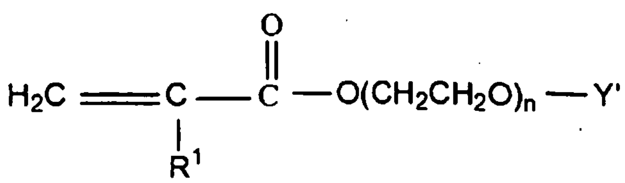

wherein $R^1$ is hydrogen or $C_1$ to $C_6$ alkyl such as methyl, n is from 2 to 30 and preferably 4 to 20 and Y is $C_1$ to $C_6$ alkyl or ($C_1$ to $C_6$ alkyl)dimethylsilyl. Specific examples of suitable monomers of this type include monomethacryloxy, monomethylsiloxy-terminated polyethylene oxide.

Specific examples of monomers that may comprise the polymeric substituent may be selected from the group consisting of acrylic acid, methyl acrylate, ethyl acrylate, propyl acrylate, butyl acrylate, hexyl acrylate, isohexyl acrylate, cyclohexyl acrylate, isobomyl acrylate, ethoxyethyl acrylate, allyl acrylate, acrolein, acrylamide, acryloyl chloride, poly (ethylenegylcol) acrylate, methacrylic acid, methyl methacrylate, ethyl methacrylate, propyl methacrylate, butyl methacrylate, hexyl methacrylate, isohexyl methacrylate, cyclohexyl methacrylate, isobomyl methacrylate, ethoxyethyl methacrylate, methacrylamide, methacryloyl chloride, allyl methacrylate, 1H,1H,2H,2H-perfluorodecyl methacrylate (and other fluorinated alkyl methacrylates), 1H,1H,2H,2H-perfluorodecyl methacrylate, 4,4,5,5,6,6,7,7,8,9,9,9-dodecafluoro-2-hydroxy-8-(trifluoromethyl)nonyl methacrylate, 3,3,4,4,5,5,6,6,7,8,8,8-dodecafluoro-7-(trifluoromethyl)octyl methacrylate, 3,3,4,4,5,5,6,6,7,7,8,8,9,9,10,10,11,12,12,12-eicosafluoro-11-(trifluoromethyly)-dodecyl methacrylate, benzyl methacrylate, 2-butoxyethyl methacrylate, 2-(tert-butylamino)ethyl methacrylate, butyl 3-butoxymethylacrylate, 9H-carbazole-9-ethylmethacrylate, 3-chloro-2-hydroxypropyl methacrylate, dicyclohexyl methacrylate, decyl methacrylate,

3-(diethoxymethylsilyl)propyl methacrylate, 2-(diethylamino)ethyl methacrylate, 2-(dimethylamino)ethyl methacrylate, 3-(dimethylchlorosilyl)propyl methacrylate, Disperse Red 1 methacrylate, Disperse Red 13 methacrylate, Disperse yellow 7 methacrylate, ethylene glycol dicyclopentenyl ether methacrylate, ethylene glycol methacrylate phosphate, ethylene glycol methyl ether methacrylate, ethylene glycol monoacetoacetate monomethacrylate, fluorescein-O-methacrylate, glycidyl methacrylate, 3-[(3,5,7,9,11,13,15-heptacyclopentylpentacyclo[9.5.1.1$^{3,9}$.1$^{5,15}$.1$^{7,13}$]octasiloxan-1-yloxy)-dimethylsilyl]propyl methacrylate (dimethylsilyloxy(propyl)methacrylate-POSS), hexyl methacrylate, 2-hydroxyethyl methacrylate, hydroxypropyl methacrylate, Isobornyl methacrylate, Isodecyl methacrylate, lauryl methacrylate, 2-(methacryloyloxy)ethyl acetoacetate, [2-(methacryloyloxy)ethyl]dimethyl-(3-sulfopropyl)ammonium hydroxide, 2-naphthyl methacrylate, 2-(4-Nitrophenoxy)ethyl methacrylate, pentabromobenzyl methacrylate, 2,2,3,3,3-Pentafluoropropyl methacrylate, 3-sulfopropyl methacrylate potassium salt, 2-(tert-butylamino)-ethyl methacrylate, tetrahydrofurfuryl methacrylate, 2,4,6-tribromophenyl methacrylate, tridecyl methacrylate, 3-(trimethoxysilyl)propyl methacrylate, 3,3,5-trimethylcyclohexyl methacrylate, trimethylsilyl methacrylate, 3-[tris(trimethylsiloxy)silyl]propyl methacrylate, 3-[tris(trimethylsiloxy)silyl]propyl methacrylate, ZONYL®TM fluoromonomer, 2-methylacrylamide methacrolein, vinyl methyl ketone, 3-methyl-3-buten-2-one, 2-methylacryloyl chloride, polyethyleneglycol) behenyl ether methacrylate , poly(ethyleneglycol) methacrylate, polyethyleneglycol) methyl ether, malaimides, styrene, styrenics, acrylonitrile, methacrylonitrile, acrylamide, methacrylamide, dimethylacrylamide, maleic anhydride.

Examples of preferred classes of monomers include alkylacrylates, alkylmethacrylates, hydroxyalkylacrylates, hydroxyalkylmethacylates, haloalkylacrylates, haloalkylmethacrylates, alkoxyalkylacrylates, alkoxyalkylmeth acrylates, optionally mono N-substituted or di-N-substituted aminoalkylmethacrylates, cycloalkylaerylates, cycloalkylmethacrylates, phenoxyacrylate, phenoxymethacylate, alkylene glycolacrylate, alkylene glycol methacrylate, polyalkyleneglycolacrylate, polyalkyleneglycolmethacrylate, acrylamides, methacrylamides, derivatives of acrylamides and methacylamides, esters of fumaric acid, maleic acid and maleic acid anhydride and esters of maleic acid, N-vinyl carbazole, N-vinylpyrrolidone, vinyl pyridine, benzyl acrylate and benzyl methacrylate.

The polymeric substituent can be made in at least three different ways. The polymeric substituent may be grown from photochromic dye possessing a suitable initiation group. Another method is that the polymer substituent is grown or added to a precursor molecule of the photochromic moiety and the photochromic moiety is subsequently made. In another method the polymeric substituent is formed and is joined to the photochromic dye by any appropriate suitable organic synthetic procedure.

The polymeric substituent is synthesised (either from the photochromic dye or independently) by a chain growth or ring-opening polymerization method. This includes but not limited to

Radical polymerization (non-living, living)

Ionic polymerization (cationic and anionic)

Group transfer polymerization.

If the polymeric substituent is prepared separately then it will preferably possess at least one reactive functional group to allow it to be coupled to a photochromic dye. The functional group may include groups such as hydroxy, thiol, ketone, aldehyde, amino (primary or secondary), carboxylic acid, carboxylic acid chloride, isocyanate, isothiocyanate, alkyl halo, vinyl, allyl, silyl hydride, silyl chloride etc. Typically one or two suitable functional groups may be present but there can be more. The reactive functional group(s) is preferred to be at the end or middle of the substituent polymer but may be at other points along the chain.

When the polymeric substituent is grown from the photochromic dye, the dye will preferably act as a point of initiation either directly or as part of a chain transfer mechanism. Thus, the dye will act as an initiator or chain transfer agent. The dye may act as a termination agent. The dye is not a monomer and will not posses a conventional polymerizable group such as a methacryl or trialkoxy silyl group that is utilized as a polymerizable group. (Note the group may be used in a non-polymerizable way to allow the attachment of the polymeric substituent. For example, the dye may have a methacrylate group that is reacted with a thiol (ie thiolene reaction)).

End functional polymers can be made by conventional chain transfer reactions. A non-limiting example is the use of mercaptoacetic acid as chain transfer reagent in methacrylate polymerization. This can give some control of molecular weight and produce polymers with a carboxylic acid at one end and a hydrogen at the other. This oligomer/polymer can then be readily attached to a dye with a hydroxyl or amino group.

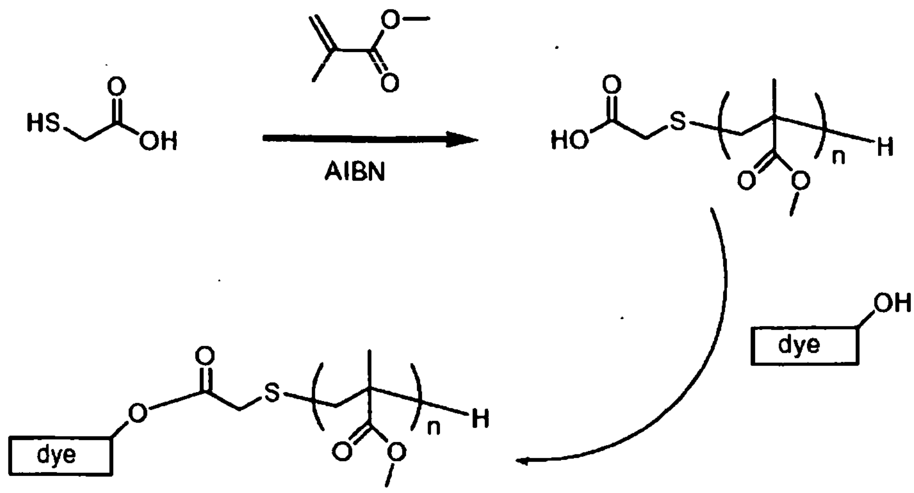


Similarly any functional chain transfer agent or initiator can provide functionality on polymer to allow coupling to the dye.

Alternatively a dye may posses a chain transfer functionality itself and thereby allow itself to either initiate or terminate a polymer chain. For a non-limiting example if the dye possess a thiol, it may directly act as a chain transfer agent (below).

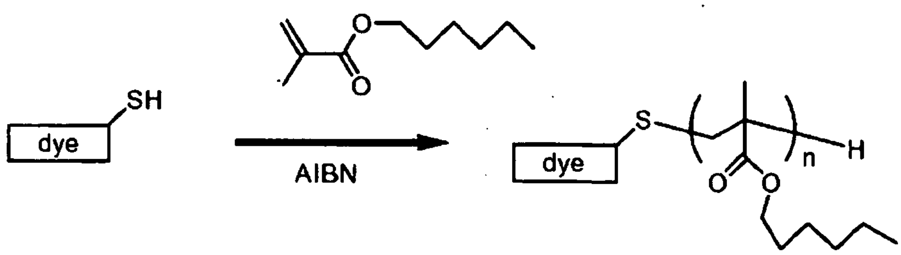


The photochromic compound of the invention comprising a polymeric substituent may posses a reactive group (for example at the free end of the polymeric substituent) that will allow it to react into a subsequent polymerization reaction. This group may arise directly from the polymeric substituent preparation process (i.e. when a polymeric substituent is grown from the dye) or may be attached in a separate process. Typically this reactive group will be at the end of the polymeric substituent away from the photochromic dye. This group may be a RAFT or iniferter type group such as dithioester, trithiocarbonate, dithiocarbamate or xanthate, an ATRP group such as a halogen or alkoxyamine for the polymeric substituent grown by a living free radical method. These groups may themselves be converted to other groups using standard chemistry. RAFT agents can be converted to thiols or hydrogen and ATRP end groups may be converted to hydrogen and amines etc.

The polymeric substituent may be a homopolymer, block, random or gradient co-polymer. The polymeric substituent is preferentially made by a radical polymerization. Of the free radical methods it is preferred that living radical and chain transfer methods of radical polymer synthesis are used.

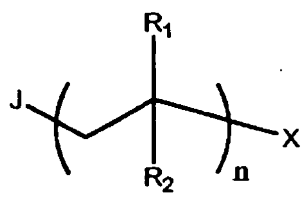

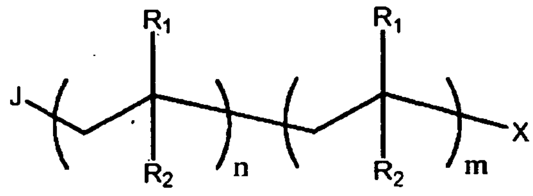
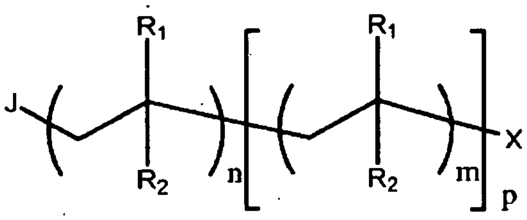

The polymeric substituent is generally derived from one or more types of radical polymerizable monomers. Typical monomers may be selected from acrylates, methacrylates, acrylamides, methacrylamides, vinyl esters, vinyl ethers, n-vinyl monomers, styrenes, cyanoacrylates, maleimides and maleic anhydride.

In a particularly preferred embodiment:

$R^1$ may be selected from hydrogen, methyl alkyl, aryl, nitrile, carboxylic acid, carboxylic esters, halogen, H, $CH_3$, alkyl, aryl, -$COOR^3$. CN, etc.
$R^2$ = -$OR^3$, -$COOR^3$, phenyl, CN, halogen, amides (-CONRR, where R is independently selected from hydrogen, alkyl, aryl)
$R^3$ = H, alkyl, aryl

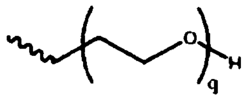

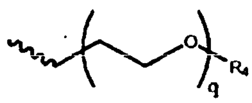

R4 = alkyl

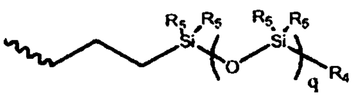

R5 = independantly selected from methyl, alkyl, phenyl

J is selected from photochromic compounds, derivatives of photochromic compounds and reactive groups for subsequent attachment of a photochromic group;
X is the terminal group and may be selected from hydrogen, methyl, butyl, alkyl, halogen, dithioester (-S-C=S-R), trithiocarbonate (-S-C=S-S-R), dithiocarbamate (-S-C=S-NRR), xanthate (-S-C=S-O-R), carboxylic acids, carboxylic esters, hydroxy, alkoxyamine etc.

The method of atom transfer radical polymerization (ATRP) may be represented as shown in the following scheme:

Initiation:

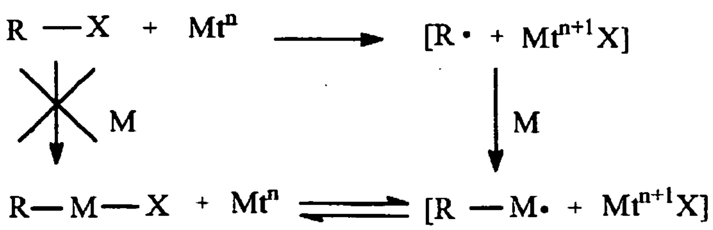

Propagation:

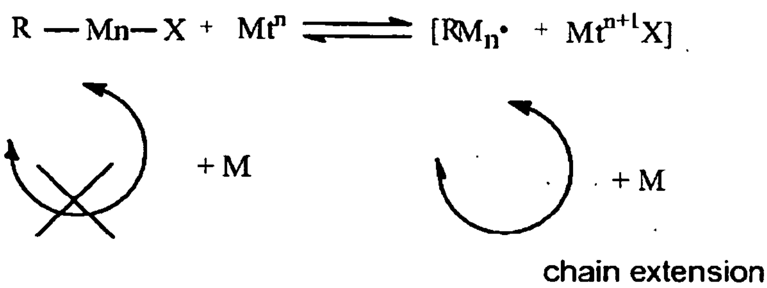


Initially, the transition metal species, $M_t^n$, abstracts the halogen atom X from the organic halide, R-X, to form the oxidized species, $M_t^{n+1}$ X, and the carbon-centred radical R which may be the photochromic moiety. In the subsequent step, the radical R, reacts with unsaturated monomer, M, with the formation of the intermediate radical species, R--M. The reaction between $M_t^{n+1}$ X and R--M results in the target product, R--M--X, and regenerates the reduced transition metal species, $M_t^n$, which further reacts with R--X and promotes a new redox cycle. When polymeric halides, R--M--X, are reactive enough toward $M_t^n$ and monomer is in excess, a number of atom transfer radical additions, i.e., a "living"/ controlled radical polymerization occurs. Further, details of this mechanism are described in the reference: Macromolecules, 1995, 28, 7901.

Another embodiment of ATRP is described in Macromolecules, 1995, 28, 7970 and Macromolecules, 1996, 29, 3665. These references report on the formation of "living" polymers using a combination of an arylsulfonyl chloride and a transition metal compound.

One part of the polymerization system in this embodiment of the process of the invention may be an arylsulfonyl halide or an alkyl sulfonyl halide of the formula $A^1SO_2X$ wherein $A^1$ is an aryl, (preferably an aryl position of the photochromic PC) substituted aryl group, an alkyl group or a substituted alkyl group, and X is chlorine, bromine or iodine. Included within the meaning of arylsulfonyl halide and alkylsulfonyl halide is any adduct, such as a 1:**1** adduct, which is a reaction product of an aryl or alkyl sulfonyl halide and any polymerizable vinyl monomer. In effect, such an adduct is one of the initial products in the polymerization process itself.

Another component of the ATRP system is a compound containing a lower valent transition metal atom. By this is meant a compound containing at least one transition metal atom that is capable of existing in a higher valent state. Included within the definition of a compound containing a transition metal atom in a lower valent state is a compound or combination of compounds that under the polymerization process conditions can form in situ the desired compound containing a transition metal atom in a lower valent state. In some cases this can include metal itself (or an alloy or a metal oxide thereof) which can either be dissolved or slightly dissolve in the process medium.

Suitable lower valent metals include Cu[I], Ru[I], Ni[II], Re[II], Pd[II], Cu[0], Ni[0], Fe[0], Pd[0], and Rh[II]. The transition metal compound should preferably be at least slightly soluble in the polymerization medium. Optionally the transition metal compound which is added may be solublized by the addition of certain complexing agents.

The molar ratio of lower valent transition metal compound: arylsulfonyl halide or alkyl sulfonyl halide is not critical, but it is preferred that it be greater than 0.2, more preferably greater than 0.5, especially if a living polymerization is desired. It is also preferred that this ratio not be over 5 and more preferably be less than 2.

Thus as indicated by the above mechanism, in order to grow a polymer directly from a photochromic dye using ATRP a suitable ATRP initiating group must be attached. The most common is the 2-bromoisobutryl group that is readily synthesised by the reaction of any hydroxy group containing compound (in this case a photochromic dye PC) with 2-bromoisobutryl bromide. The bond in which monomer will be inserted in the subsequent polymerization is indicated with an arrow.

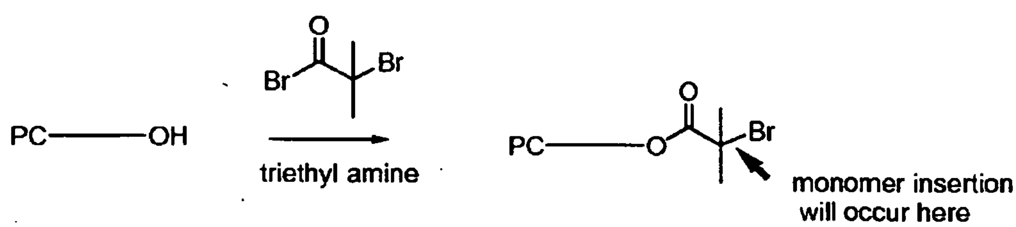

Another group suitable for use is the benzoyl choride group that is prepared in a similar way using chloromethylbenzoyl chloride as shown below.

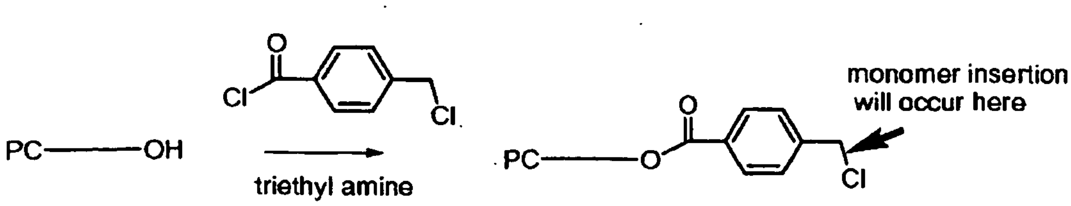


It should be understood that other suitable initiating groups are available and can be used and these are readily found in the scientific literature. General information on ATRP may be found in the article Atom Transfer Radical Polymerization by Matyjaszewski and Xia in Chemical Reviews 2001, 101, 2921-2990.

Living polymers also may be prepared using thiocarbamates or dithiocarbamates or xanthates s are preferably of formula I, I', II or II':

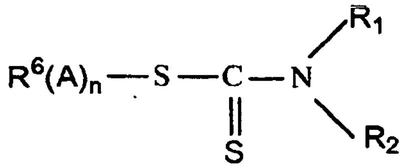
I

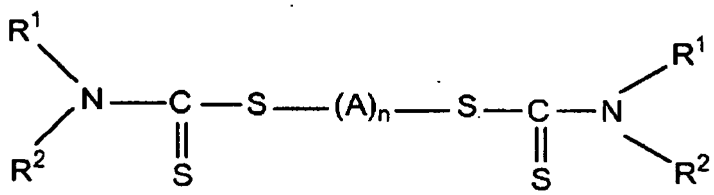
II

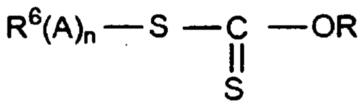
I'

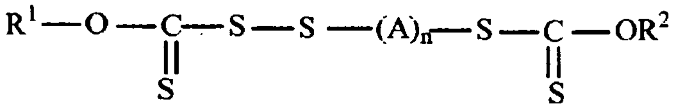
II'

wherein $R^6$ is hydrogen or an initiator fragment residue such as a photochromic moiety thereof or derivative, $R^1$ and $R^2$ are independently selected from hydrocarbyl, particularly $C_1$ to $C_6$ alkyl and A is a monomer unit.

Examples of iniferters which may be used in preparation of living polymers containing thiocarbamates or dithiocarbamates include compounds of formulation Ia, Ia', IIa and IIa':

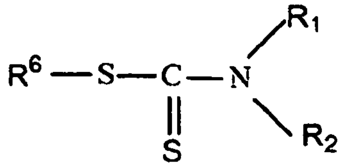
Ia

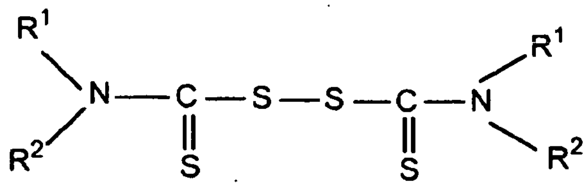

IIa

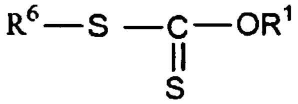

Ia'

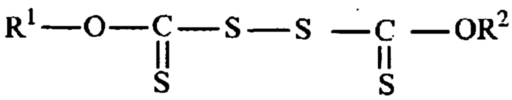

IIa''

The living prepolymer may comprise a thiocarbonylthio radical terminating group. Examples of such compounds are of formula:

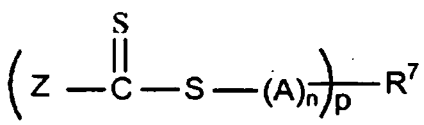

III(a)

or

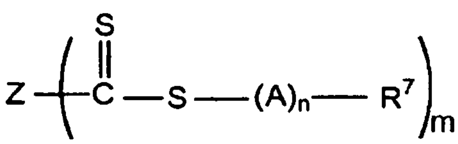

IIIb

X wherein Z is a group chosen such that the chain transfer constant is in the desired range. Suitable Z groups are hydrogen, optionally substituted alkyl, optionally substituted aryl, optionally substituted alkoxy, optionally substituted alkylthio, chlorine, optionally substituted alkoxycarbonyl, optionally substituted aryloxycarbonyl, carboxy, optionally substituted acyloxy, optionally substituted carbamoyl, cyano, dialkyl- or diarylphosphinato-, dialkyl or diarylphosphenato and polymer chain;

$R^7$ is an optionally substituted alkyl, optionally substituted alkenyl, optionally substituted alkynyl, optionally substituted (saturated, unsaturated or aromatic) carbocyclic/heterocyclic ring, optionally substituted alkylthio or other group such that $R^7$ is a free radical leaving group under the polymerization conditions and is capable of initiating free radical polymerization; $R^7$ may also be a polymer chain prepared by any polymerization mechanism or an organometallic species; and m and p are integers and preferably are at least 2.

The substituent may be the photochromic moiety or moiety subsequently attached to the photochromic moiety.

The living prepolymers of formula IIIa and IIIb may be prepared by reaction of a vinyl monomer with a thiocarboxylthio chain transfer compound of any of formulas IV(a), IV(b) or IV(c). The reaction will usually be initiated by free radicals produced from a free radical source.

Preferred dithioester chain transfer agents for use in preparing prepolymers of formula IIIa and IIIb are represented by formulas IV a-c

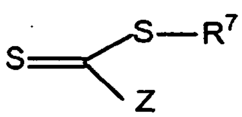

IVa

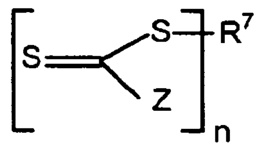

IVb

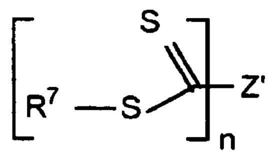

IVc

In formula IVa:

$R^7$ is an optionally substituted alkyl, optionally substituted alkenyl, optionally substituted alkynyl, optionally substituted (saturated, unsaturated or aromatic) carbocyclic/heterocyclic ring, optionally substituted alkylthio or other group such that $R^7$ is a free radical leaving group under the polymerization conditions and is capable of initiating free radical polymerization. $R^7$ may also be a polymer chain prepared by any polymerization mechanism or an organometallic species.

In formula IVb:

n is an integer greater than 1.
$R^7$ is a group derived from substituted alkyl, substituted aryl or a polymer chain, or other group such that $R^7$ is a free radical leaving group under the polymerization conditions and is capable of initiating free radical polymerization; and
Z is as defined for Formula III.

In Formula IVc:

n is an integer greater than 1.
Z' is a group derived from optionally substituted alkyl, optionally substituted or a polymer chain where the connecting moieties are selected from aliphatic carbon, aromatic carbon, oxygen or sulfur; and $R^7$ is as defined in Formula IVa.

In the case where the polymer is grown directly from the photochromic moiety or photochromic precursor: R7, Z, and/or Z' may contain a photochromic moiety or photochromic precursor. It is preferred that R7 contains the photochromic moiety or photochromic precursor.

In the case where the polymer is grown independently to the photochromic moiety or photochromic precursor and then subsequently attached to them: R7, Z, and/or Z contain a functional group suitable to allow attachment to a photochromic moiety or photochromic precursor. Such groups may be but not limited to carboxylic acid, hydroxyl etc.

Examples of functional RAFT agents that may be used with the photochromic moiety to grow a polymeric substituent or to independently prepare the polymeric substituent to be attached to a photochromic dye or photochormic precursor will now be described. The RAFT agents may be selected from but not limited to dithioesters, trithiocarbonates, xanthates or dithiocarbamates. The nature of RAFT agent synthesis allow for a great flexibility as to the provision of functional groups to allow attachment of the RAFT agent or polymers derived from them to photochromic molecules or photochromic precursors. The arrow illustrates the point of monomer insertion during a polymerization. A wide variety of functional groups may be used for coupling such as hydroxy, acid, alkene, thiol etc. that can be coupled to the photochromic agent with conventional organic synthetic methods. The choice of a specific RAFT agent is determined by the nature of the function group on the photochromic groups available for coupling and the nature of the polymer needed to be made. The examples below are non-limiting.

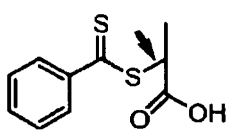

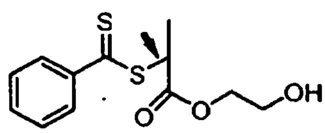

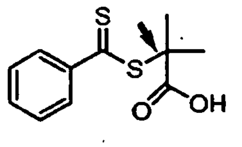

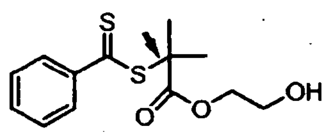

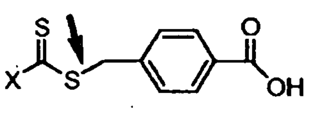

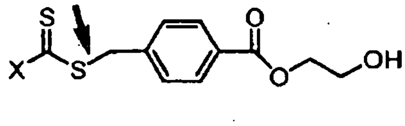

X = S-R R = alkyl, aryl
O-R
N(R)$_2$

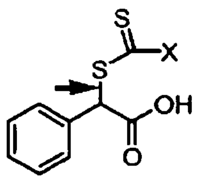

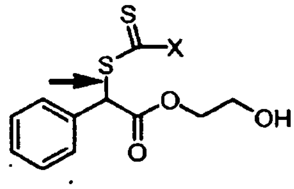

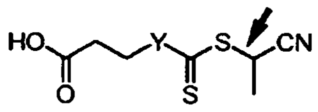

Y = S,O

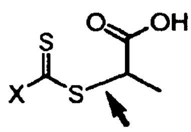

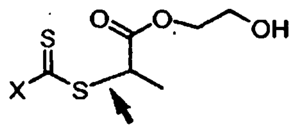

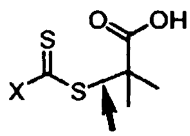

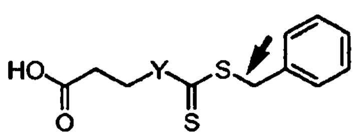

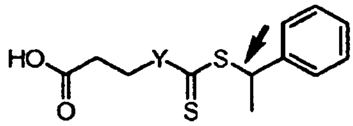

The description of the dithioester chemistry is contained in International Patent Application PCT/US97/12540 (WO 98/01478) in the name of E.I. Du Pont De Nemours and Company the contents of which are herein incorporated by reference.

Examples of the radical adducts may be prepared from the multifunctional compound of formula X:

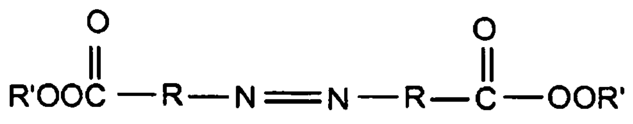

X

by activating the perester group in the case of compounds of formula X or the azo group in the case of compounds of formula VIII. Examples of multifunctional initiators such as di-t-butyl-4,4'-azobis(4-cyanoperoxy valerate) are disclosed by Piirma et al., J. Appl. Poly. Sci. 24:2051 (1979), J. Appl. Polym. Sci 26:3013 (1981) and J. Appl. Polym. Sci 33:717 (1987).

Living prepolymers containing an azo group as a link between polymeric substituent chains may be prepared by reacting an anionic polymeric substituent with an azobis(isobutylronitrile) (AIBN) according to the scheme.

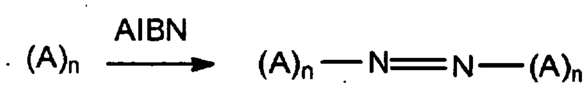

Such a procedure is disclosed by Reeb et al., Eur. Polym. J. 12:317 (1976) and Poym. Prepr., Am. Chem. Soc., Div. Polym., Chem., 21:55 (1980).

An analogous procedure may be used to prepare peroxy containing living prepolymer by reacting an anionic polymeric substituent with p,p'-bis(bromomethyl)benzoyl peroxide in the presence of a promoter such as butyl lithium. Examples of such a process are disclosed by Riess et al., Eur. Polym. J. 11:301 (1975) and Inf. Chim. 116:117 (1973).

Living prepolymers having sulfur containing trapping groups may be derived from mercaptans of formula XI or XII

$$A_n(CH_2)_m\ SH \qquad XI$$

$$A_n(CH2)_m\ S\ Bp \qquad XII$$

wherein A and B are monomers which may be the same or different.

Such mercaptans may in turn be prepared by a range of methods known in the art. In a preferred example, adducts of formula XI or XII wherein m is 2 are prepared by reaction of an anionic prepolymer $(A)^-$ with a thirane to cause ring opening and provide a 2-thiolethyl substituted prepolymer of formula XI and optionally reacting the 2-thiolethyl substituted polymer with a monomer (B), which may be the same as A or different from A, to provide a prepolymer of formula XII.

In the compounds of formula I to XII the monomer A or B and monomer units --(A)-- may have the formula defined for monomer A and monomeric unit (A) in thioesters IIIa and IIIb.

Another class of living prepolymer useful in the process of the invention are macromonomers depicted by formula XIII. In particular, macromonomers containing a maximum of two carbon-carbon double bonds more preferably one carbon-carbon double bond, per polymer chain.

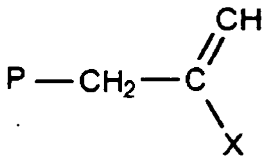

XIII

Where X is $--CONR_2$, --COOR, $OR^1$, --OCOR, $--OCOOR^1$, $--NRCOOR^1$, halo, cyano, or a substituted or unsubstituted phenyl or aryl, wherein R is independently selected from the group of hydrogen, silyl, or a substituted or unsubstituted alkyl, alkyl ether, phenyl, benzyl, or aryl, wherein said groups may be substituted with epoxy, hydroxy, isocyanato, cyano, amino, silyl, acid (--COOH), halo, or acyl; and wherein $R^1$ is the same as R except not H.

Macromonomers of this type can be prepared by a number of different methods. Two methods of preparation, included for illustration purposes but not meant to be limited, are:

1) Catalytic chain transfer agents containing Co2+ Co3+ as described in U.S. Pat. Nos. 5,362,826, 5,324,879 and WO 9731030 which is equivalent to U.S. Pat. No. 6,100,350, the contents of which are incorporated by reference.
2) Addition-fragmentation polymerization as described in PCT/US95/14428 (WO 960704) which is equivalent to U.S. Pat. No. 5,756,605 and to U.S. Pat. No. 6,291,620 the contents of which are incorporated by reference.

The macromonomer may be used as a living prepolymer in the process of the invention or may be modified to provide a radical terminating group adapted to reversibly cleave from the prepolymer under activating conditions. In one embodiment a double bond of the macromonomer is converted and provides a capped radical by any of a range of methods depending on the type of radical terminating group to be used. For example, an alkoxy amine terminating group may be provided by reaction with an oxygen activating group such as a butoxide followed by reaction with a hindered nitroxide. Alternatively a group suitable for ATRP may be incorporated by reaction with an appropriate brominating agent, such as hexadecyltrimethylphosphoniumbromide, to form a bromide.

Nitroxide radical species such as TEMPO (tetramethyl-1-oxyl radical) or other may also be used to form the polymeric substituent. It is believed that the nitroxide radical enables the polymer length and molecular weight distribution to be controlled. The use of nitroxide radicals in the process of the invention is particularly preferred when in the alkoxy amine of Formula I n is zero or less than about 5. Radical initiators such as AIBN may also be used to provide rate enhancement.

The alkoxyamine used in the present invention is preferably of Formula I

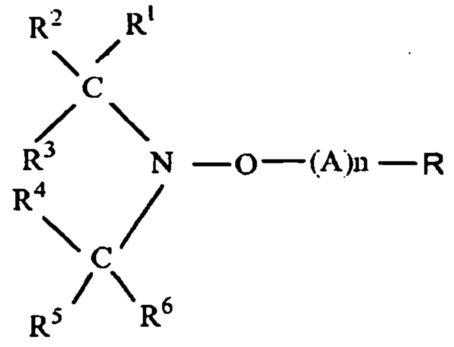

wherein --$(A)_n$ R is a radical species capable of polymerising in the presence of the monomer component comprising the cross-linking agent. R is preferably the photochromic moiety PC or derivative thereof. In the initiators of formula (I), the groups $R^1$, $R^2$, $R^5$ and $R^6$ are the same or different straight chain or branched substituted or unsubstituted alkyl groups of a chain length sufficient to provide steric hindrance and weakening of the O--$(A)_n$ bond, and

$R^3$ and $R^4$ are the same or different straight chain or branched alkyl or substituted alkyl groups or $R^3CNCR^4$ may be part of a cyclic structure which may have fused with it another saturated or aromatic ring. Mixtures of alkoxyamines may be used if desired.

In the group $(A)_n$ R the unit A is a monomer unit which, when there is more than one A, may be the same or different;

n is zero or greater than zero; and

X is an initiator fragment residue.

The weakening of the O--X bond is generally achieved at moderate temperatures to provide free radical polymerization.

Specific examples of suitable nitroxides include the following:

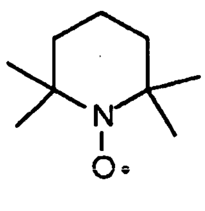

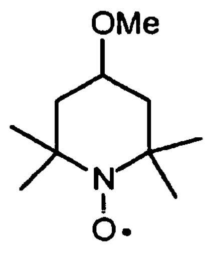

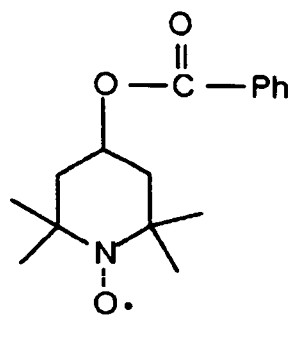

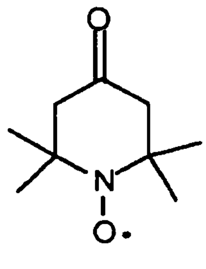

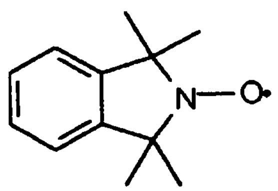

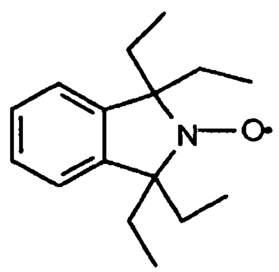

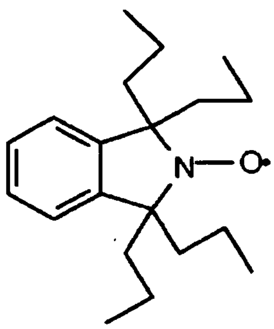

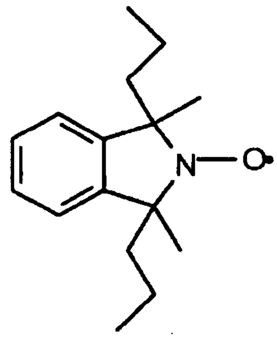

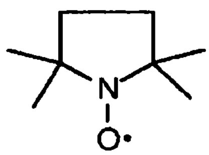

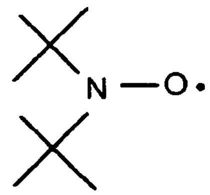

Examples of the initiator fragment residue include radicals of formula:

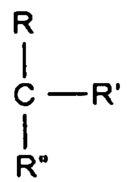

wherein R, R' and R", are independently selected from the group consisting of hydrogen, alkyl, phenyl, cyano, carboxylic acid, carboxylic groups and substituted groups thereof and wherein two of R, R' and R" may together form an aliphatic or aromatic ring. The most preferred initiator fragment is a radical formed from the photochromic moiety.

Alkoxy amines such as those of Formula I can be manufactured by heating a nitroxide radical of Formula II in the presence of a stoichiometric amount of a carbon centred free radical X, where X may be generated by any of the methods well known in the art e.g. by the decomposition of an azo compound, by scission of an alkoxy radical or by H atom abstraction from a suitable monomeric or polymeric compound or by addition of a free radical to an olefin. More specifically X can be generated by the thermal or photochemical dissociation of X-X, or X-Z-X or X-Z-Z-X where Z is a group which in its uncombined form is a small stable molecule e.g. $CO_2$ or $N_2$.

The alkoxyamine so formed may be isolated and purified for later use or it may be used without further purification for the initiation of polymerization.

Details of such nitroxide mediated polymerization process are provided in U.S. Pat. No. 4,581,429 (Solomon et al). Such a polymeric substituent may be prepared using the mono-unsaturated monomers and butadiene monomers listed above.

An aminoxy capped polymeric substituent may also be prepared by anionic polymerization. For example polymeric substituents derived from anionic polymerization such as poly(styryllithium) may be reacted with a pyridinium salt such as 1-oxo-4-methoxy-2,2,6,6-tetramethylpyridinium salt (OAS) to provide the corresponding nitroxyl radical (MTEMPO). An example of such a procedure is described by Yoshida et al in the paper "Synthesis of Polystyrene having an Aminoxy Terminal by the Reactions of Living Polystyrene with Oxoaminium Salt and with Corresponding Nitroxyl Radical", Macromolecules 27 (12) 3119-3124. Alternatively a polymeric substituent may be prepared by anionic polymerization and the polymeric substituent anion reacted with AIBN which may subsequently be substituted with a nitroxide. The preparation of AIBN terminated following anionic polymerization is described by Vinchon et al "Preparation de Promoteurs Azoiques Macromoleculaires Par Voie Anionique. European Polymer Journal, 12 pp. 317-321. This paper prepares a block copolymer of styrene and methylmethacrylate and a copolymer of styrene and vinyl chloride which may be utilised in the process of the present invention.

The nitrosyl radical portion of Formula I may, for example, be provided by PROPOXYL (2,2,5,5-tetramethyl-1-pyrrolidinyloxy) and derivatives thereof, TEMPO (2,2,6,6-tetramethyl-1-piperidinyloxy) and derivatives thereof and

DOXYL (4,4-dimethyl-1-oxazolidinyloxy) and derivatives thereof. Other examples of suitable nitroxide radicals are provided in U.S. Pat. No. 4,581,429 (Solomon et al) the contents of which are herein incorporated by reference.

The following are additional examples of how the photochrome may be constructed. The RAFT and ATRP groups for growth from a dye or independent polymeric substituent synthesis with subsequent attachment to the dye.

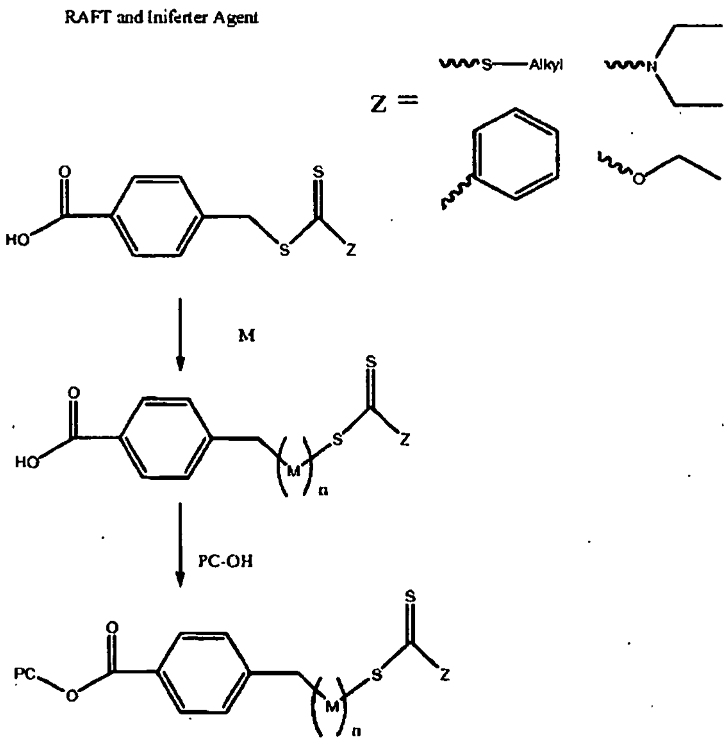


A particularly preferred example of ATRP growth from dye is shown in the scheme below.

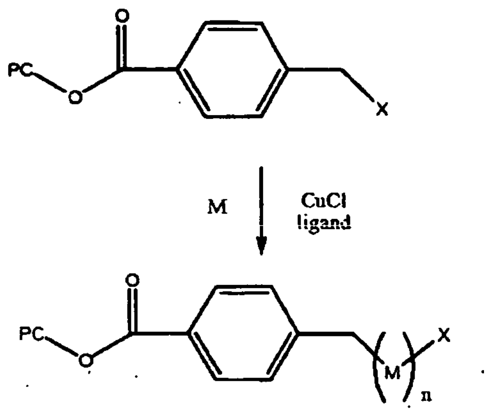


*Y is a terminal group of the Polymeric substituent*

In the compound of the invention of formula II the group Y is a terminal group.

The terminal group Y may be adapted to react with a host polymeric matrix or may be non reactive with the host polymer matrix so that it does not react with during curing of the host. In the preferred embodiment in which the polymeric substituent is formed by living free radical polymerisation the terminal group may be a free radical capping group as described above. For example the terminal group may be selected from hydrogen, methyl, butyl, alkyl, halogen, dithioester (-S-C=S-R), trithiocarbonate (-S-C=S-S-R), dithiocarbamate (-S-C=S-NRR), xanthate (-S-C=S-O-R), carboxylic acids, carboxylic esters, hydroxy etc. The terminal group may also be selected from other reactive and non reactive groups such as the group consisting of $C_1$ to $C_6$ alkyl, $C_1$ to $C_6$ alkyl substituted with a group selected from

hydroxy, $C_1$ to $C_6$ alkoxy, carboxyl, ($C_1$ to $C_6$ alkoxy)carboxyl, acryloyl, methacryloyl, acryloyloxy and methacryloyloxy. Logically, such end groups can also be converted or further reacted to allow a different functionality to be Y. For example a hydroxyl group may be converted to a carboxylic acid by reaction with succinic anhydride.

*Molecular weight and Polydispersity*

One of the significant advantages of the living polymerisation process for preparation of compounds of the invention is that the average molecular weight and the distribution of molecular weights within compound composition may be controlled.

Control of the molecular weight distribution may be used to regulate the fade kinetics of the photochromic. Preferably the polydispersity of the compound is less than 1.5, preferably less than 1.3 and most preferably less than 1.2.

As it has been shown by the examples of this invention, the speed of switching can be controlled by the length of the polymer. Therefore, if fine tuning of the switching speed is required then low polydispersity of the polymer substituent is needed otherwise only coarse control of switching speed is possible.

In the embodiment the compound may be used in combination with other photochromic compounds known in the art or other photochromic compounds of the invention or provide the desired properties of fade colour or colour variation during fade.

Control of molecular weight distribution enables specific fade kinetics to be tailored for a photochromic by using a polymeric substituent having a narrow molecular distribution. For example, if it is desired to match two dyes of different colour to provide a consistent colour during fade one or both dyes may be modified with the photochromic substituent of controlled molecular weight distribution to provide kinetics which are consistent between the dyes.

The control polydispersity in the above manner is particularly preferred when the polymeric substituent has a molecular weight of over 500 more preferably over 1000.

The control of molecular weight distribution is also an advantage for block copolymers particularly where the blocks are of significantly different properties (eg significantly different polarity or free space). Using living polymerisation the length and structure of blocks may be controlled so as to vary the nanoenvironment at differing distance from the photochromic link along the chain of the polymeric substituent.

Although we have shown the control of chain length to be useful in determining fade speed, such control may not be needed in all applications. Thus conventional polymerization using functional chain transfer agents or functional dyes as described earlier may be good enough. A major factor in switching speed of a dye in a matrix is the Tg of the environment around the dye. If fast as possible switching is desired then precise control of the dye switching speed through chain length is not particularly essential. The use of simple chain transfer mechanism (such as thiols in radical polymerization) may suffice. The important factor is to use monomers that give low Tg polymers such as (but not limited to) butyl acrylate, hexyl acrylate, 2-ethylhexyl methacrylate etc.

Geometry of Polymeric Substituent.

Without wishing to be bound by theory, the geometry of the polymeric substituent may be varied to achieve additional control of the photochromic performance. Generally faster switching in a rigid matrix is desired. Thus better encapsulation from the matrix when using low Tg polymeric substituents/polymers can provide faster switching. The position of the placement of the dye on the polymeric substituent can provide additional control. Typically placement of the dye in the middle of the polymer gives better encapsulation than at the end of a polymer of the same size. This can be achieved in a practical sense by attaching or growing two or more polymers from the one point on the dye. The polymers may be attached at more than one point on to the dye but it is more practical to join them at one point. This can be achieved in the following non-limiting way. It illustrates the use of multiple ATRP agents on one dye. It is understood this method is easily adaptable to RAFT agents etc.

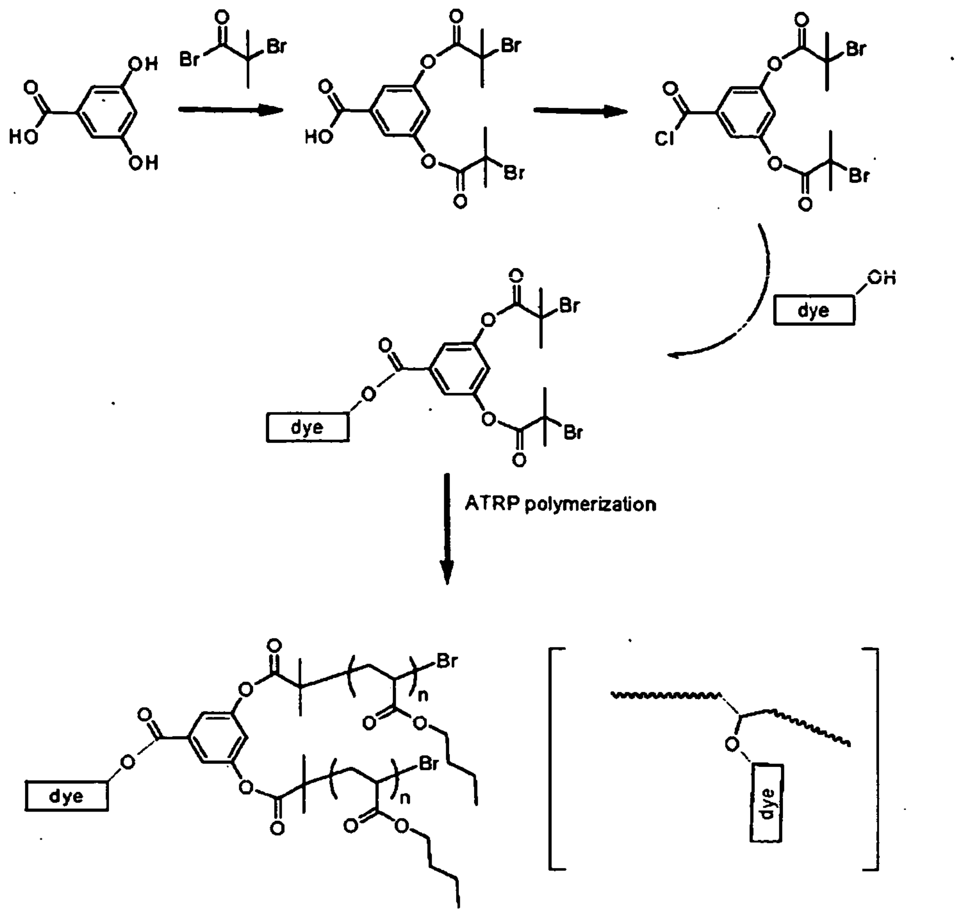


It is understood that the process could be repeated for even more arms via a dentritic style of linker. Alternatively a trihydroxy benzoic acid might be used to give three polymer arms. As described previously the branched polymer-dye conjugate might also be made by previously making the polymer and then attaching it to the dye as the last step.

It has been shown in this application that placing the dye in the "middle" of a low Tg polymer (achieved by the attachment of two polymer chains at one point on a dye) rather than at the end does provide faster switching speed than having the dye at the end of the polymer of the same molecular weight. This is illustrated in Ex 9 for the poly(butyl acrylate)-spirooxazine conjugates (Ex 6a and 7c) in monomer formulation B. Both poly(butyl acrylate) conjugates switch faster than the comparison example dyes but the dye with the branched poly(butyl acrylate) is faster with T3/4 particularly improved. It should be noted that as the matrix becomes softer as in lenses made from the pure acrylate mix of formulation C, the difference between the end-capped and branched polymer conjugates reduces.

In addition, branching in the attached polymer may be achieved through the use of a polymerizable chain transfer agent. The degree of branching is determined by the reactivity and quantity of branching agent. For example a non-limiting example might use mercaptomethyl styrene as the polymerizable chain transfer agent. Similarly other chain transfer agents including living radical polymerization agent can be readily adapted for this use. This is illustrated below. As before this polymer may be made from the dye or made separately and then attached to the dye.

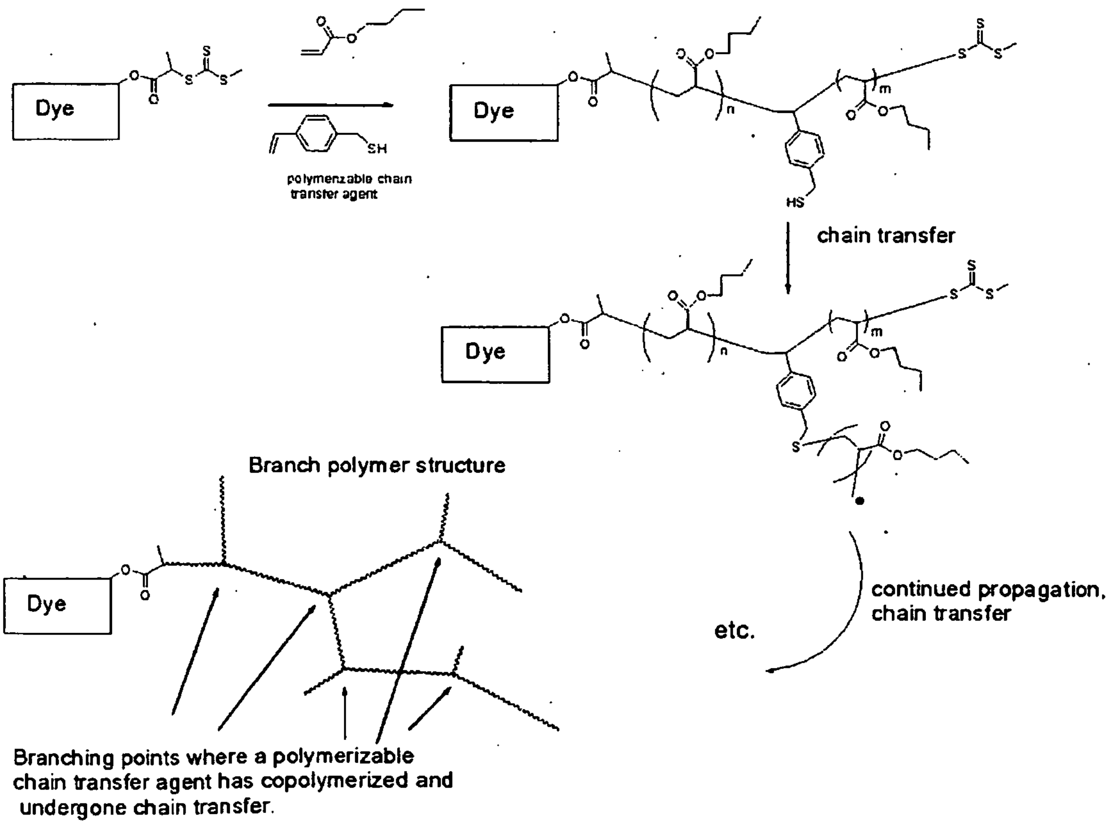


Without wishing to be bound by theory, a set of rules has been established that aids the choice of polymeric substituent to the dye for desired effect on dye performance. Typically, for any given matrix, the Tg of the polymer is the primary property for controlling switching speed. Low Tg polymers gives faster switching (both colouration and/or decolouration). High Tg polymers give slower switching (both colouration and/or decolouration). Within each of those switching regimes, fine tuning of the switching may be possible. For low Tg polymers, the longer the polymer the faster the switching and the shorter the polymer the slower the switching. For high Tg polymers, the longer the polymer the slower the switching and the shorter the polymer the faster the switching. Without wishing to be bound by theory this appears to be due to the degree of encapsulation increasing with increasing chain length of the polymer.

Without wishing to be bound by theory, the compatability of the attached polymers and their end-groups is also a factor. As the polymer and end-group becomes less comparable with the matrix, the encapsulation of the dye and their agreegates becomes more efficient. Thus shorter less compatible polymers may give the same photochromic performance as a longer more compatible polymer. However care must be taken in ensuring a balance between enough incompatablity to maximise switching speed enhancement with the minimum polymer size but not too much incompatibility that would result in gross phase separation and haze. The nature of the end group itself appears to have an effect on the efficency of the process. For example, the ATRP active halogen endgroup (eg. Cl or Br) would be expected to have greater incompatabilty with the standard matrices described than the RAFT endgroup that possesses a butyl trithiocarbonate. Thus one may expect better performance of the ATRP polymer versus the RAFT terminated polymers for the same molecular weight polymer. The compatabilty of the RAFT agent is easily adjusted by altering the RAFT group with more incompatable groups for example, replacement of the trithiocarbonate's butyl group (in the examples in this application) with $CH_2CH_2CF_3$ or $CH_2CH_2Si(CH_3)_3$ would be expected to make the endgroup more incompatible with the matrix. Ideally, the size of the polymeric substituent should be as small as possible to maximize the photochromic content and minimize any effect on the mechanical properties of the host matrix.

It can be seen that there is enormous flexibility in this methodology in being able to control chain length, choice of monomer, geometry of the attached polymers, the nature of the polymer (homo, random copolymer, block copolymer) and compatabilty of the polymer with the host matrix. This in turn allows control over the free volume, Tg, polarity and other factors immediately around the dye which control the photochromic performance of the dye without altering the electronic nature of the dye. The same dye can be made to switch at vastly different speeds in the same matrix composition. The protection of the dye or dye aggregates from the host matrix relies on the coiling of the attached polymeric substituent/ polymer to create a free volume or at least a localised matrix of controlled properties. This of course means that the

efficiency of the polymer control over switching is likely to vary with the dye's steric requirements for switching, the length of the polymeric substituent, the compatibility of the polymeric substituents with the matrix and the matrix itself. The choice of a specific polymer to attach to a dye for a particular matrix for a particular dye will depend on those factors.

*Specific examples of photochromics (PC)*

The compound of the invention comprises a photochromic moiety. Preferred examples of photochromic moieties include the spirooxazine of formula III, chromene of formula XX, fulgide/fulgamide of formula XXX or an azo dye of formula XL. Formulae III, XX, XXX and XL are described below with reference to examples.

Preferred spiro-oxazines of the general formula III can be suitably used.

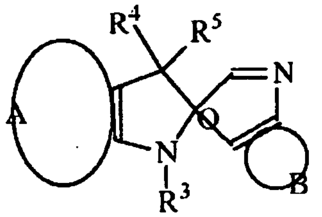

III

In the general formula III, $R^3$, $R^4$ and $R^5$ may be the same or different and are each an alkyl group, a cycloalkyl group, a cycloarylalkyl group, an alkoxy group, an alklyleneoxyalkyl group, an alkoxycarbonyl group, a cyano, an alkoxycarbonylalkyl group, an aryl group, an arylalkyl group, an aryloxy group, an alkylenethioalkyl group, an acyl group, an acyloxy group or an amino group, $R^4$ and $R^5$ may together form a ring, and $R^3$, $R^4$ and $R^5$ may optionally each have a substituent(s). The substituent(s) can includes (include), besides the above-mentioned groups, halogen atom, nitro group, heterocyclic group, etc.

The group represented by moiety IIIa

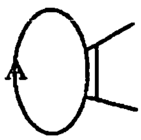

IIIa

is a substituted or unsubstituted bivalent aromatic hydrocarbon group or a substituted or unsubstituted bivalent unsaturated heterocyclic group. The group represented by moiety IIIb

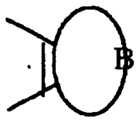

IIIb

is a substituted or unsubstituted bivalent aromatic hydrocarbon group or a substituted or unsubstituted bivalent unsaturated heterocyclic group. Specific examples of the bivalent aromatic hydrocarbon group are groups of 6 to 14 carbon atoms derived from benzene ring, naphthalene ring, phenanthrene ring, anthracene ring or the like. Specific examples of the bivalent unsaturated heterocyclic group are groups of 4 to 9 carbon atoms derived from furan ring, benzofuran ring, pyridine ring, quinoline ring, isoquinoline ring, pyrrole ring, thiophene ring, benzothiophene ring or the like.

The substituents can be the same groups as mentioned above with respect to $R^3$, $R^4$ and $R^5$. In particular, a group represented by

$-NR^6R^7$

(wherein $R^6$ and $R^7$ are each an alkyl group, an alkoxy group, an allyl group or the like, each of which may be substituted; and $R^6$ and $R^7$ may be bonded and cyclized with each other to form a nitrogen-containing heterocyclic ring) is preferable from the standpoint of high density of its developed colour in the initial photochromic performance.

In a particularly preferred embodiment the photochromic compounds of the invention are of formula IV

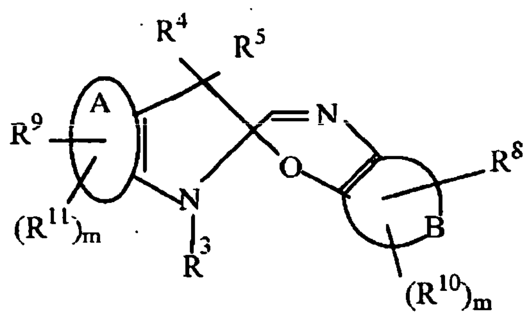

IV

wherein $R^3$, $R^4$, $R^5$, $R^8$ $R^9$, $R^{10}$ and $R^{11}$ are independently selected from the group consisting of hydrogen, alkyl, halo, haloalkyl, cycloalkyl, cycloarylalkyl, hydroxy, alkoxy, alkyleneoxyalkyl, alkoxycarbonyl, aryl, arylalkyl, aryloxy, alkylenethioalkyl, acyl, acyloxy, amino, $NR^6R^7$, cyano and the group $L(R)_n$ wherein at least one of $R^3$, $R^8$ and $R^9$ is the polymeric substituent group of formula $L(R)_n$ wherein L, R and n are hereinbefore defined and wherein there is more than one $L(R)_n$ group in the groups $R^8$, $R^3$, $R^4$ and $R^5$ and one or more R groups may optionally be linked together to form one or more bridging polymeric substituent. The m is an integer and may be 0,1 or 2 wherein m is 2 the groups may be independently selected.

In the compound of formula IV the total of the number of monomer units in polymeric substituents, $(R)_n$ is at least 7 and preferably at least 12.

More preferably, the substituent $R^3$ is selected from the group consisting of alkyl, cycloalkyl, cycloarylalkyl, alkyleneoxyalkyl, aryl, arylalkyl alkylenethioalkyl, and the group $L(R)_n$ and more preferably $R^3$ is selected from alkyl, cycloalkyl, cycloarylalkyl, alkenyloxyalkyl, aryl, arylalkyl, and the group $L(R)_n$ and preferably $R^4$ and $R^5$ are indefinitely selected from alkyl, cycloalkyl and aryl.

$R^8$ and $R^9$ are independently selected from hydrogen and $L(R)_n$; $R^{10}$ and $R^{11}$ are independently selected from the group consisting alkyl, cycloalkyl, cycloarylalkyl, alkoxy, $-NR^6R^7$, cyano, alkyleneoxyalkyl, alkoxycarbonyl, aryl, arylalkyl, aryloxy, alkylenethioalkyl, aryl aryloxy and amino and most preferably $R^{10}$ and $R^{11}$ are independently selected from alkyl, cycloalkyl, alkoxy, $NR^6R^7$ and cyano; and

m is 0 or 1.

Examples of the preferred fused aromatic ring groups of formula IIIa include IIIa(i);

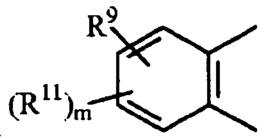

IIIa(i)

wherein $R^9$ and $R^{11}$ are as hereinbefore defined.

Examples of the preferred fused aromatic ring group of formula IIIb include IIIb(i), IIIb(ii), IIIb(iii) and IIIb(iv).

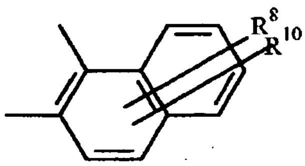

IIIb(i)

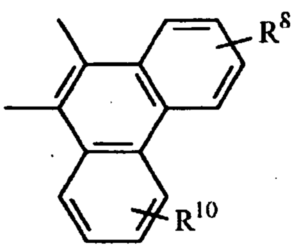

IIIb(ii)

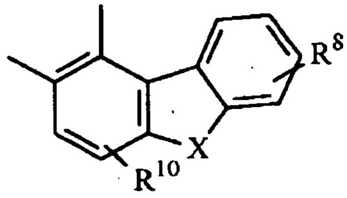

IIIb(iii)

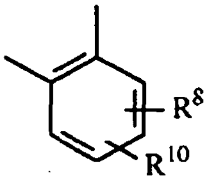

IIIb(iv)

Specific examples of the group of formula IIIa(i) include

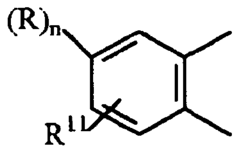

IIIa(ia)

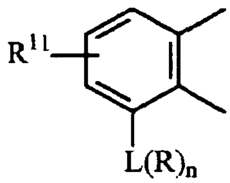

IIIa(ib)

Specific examples of the group of formula IIIb include

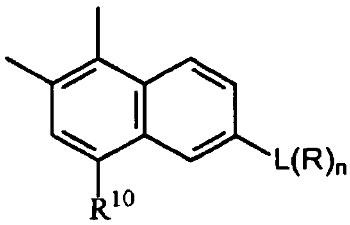

IIIb(ia)

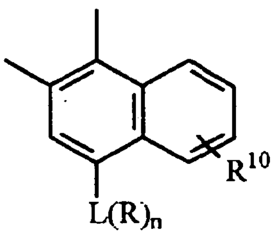

IIIb(ib)

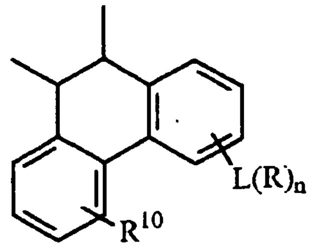

IIIb(iia)

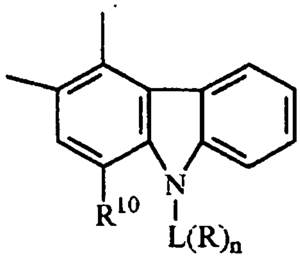

IIIb(iiia)

One particularly preferred embodiment of the compounds of formula IV has the formula IVa

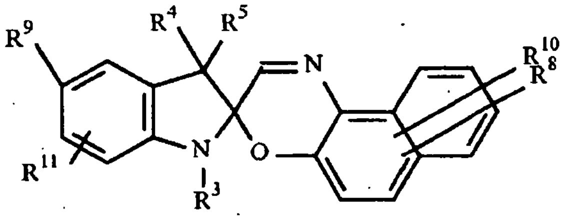

IVa

The more preferred compounds of formula IVa are compounds wherein $R^4$ and $R^5$ are preferably independently selected from the group consisting of $C_1$ to $C_4$ alkyl and the group wherein $R^4$ and $R^5$ link together to form a cycloalkyl of from 4 to 6 carbon atoms.

$R^8$ and $R^9$ are independently selected from the group consisting of hydrogen, halogen, cycloalkyl, cycloarylalkyl, hydroxy alkoxy, cyano, alkenyloxyalkyl, alkoxycarbenyl, aryl, aralkyl, aryloxy, alkylene, thioalkyl and the polymeric substituent of formula $L(R)_n$ wherein L, R and n are as hereinbefore defined;

$R^{10}$ and $R^{11}$ are independently selected from the group consisting of hydrogen, halogen, cycloalkyl, cycloarylalkyl, alkoxy, cyano, alkenyloxyalkyl, alkoxycarbonyl, aryl, arylalkyl, acyloxy and alkylenethioalkyl. Most preferably $R^{10}$ and $R^{11}$ are hydrogen; and at least one of $R^8$ and $R^9$ is the group $L(R)_n$ wherein the total number of monomer units in R is at least 10 and more preferably at least 12.

In order to provide an increase in fade rate of the photochromic in a polymer (preferably a polymer of high Tg) article, the size of the polymer chain must be greater than a certain size. The minimum size will depend on the nature of the polymeric substituent chain and the linking group. It is believed that the fade is significantly accelerated where a polymer chain may adopt a conformation in which a portion of the chain is adjacent the oxazine ring. Accordingly, linking groups which direct the polymeric substituent chain across the molecule (such as the group of formula VI to VIII comprising at least one polymer chain R in a portion ortho to the link) may enable the minimum number of effective monomer units to be reduced when compared with other linking groups.

The more preferred compounds of the invention are of formula (IVb)

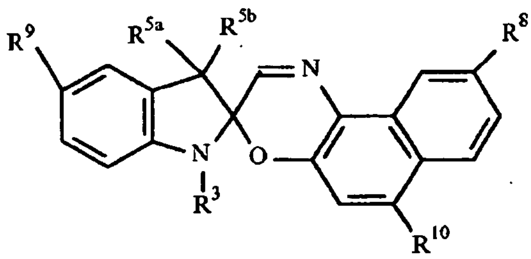

(Ivb)

where the substituents are hereinbefore described and even more preferably $R^3$ is $C_1$ to $C_4$ alkyl; $C_3$ to $C_6$ cycloalkyl, aryl, alkylaryl, arylalkyl and $L(R)_n$; $R^{5a}$ and $R^{5b}$ are independently selected from $C_1$ to $C_6$ alkyl $C_3$ to $C_6$ cycloalkyl, aryl; $R^8$ and $R^9$ are selected from hydrogen, hydroxy, $C_1$ to $C_6$ alkoxy; $R^{10}$ is selected from the group hydrogen, hydroxy, $C_1$ to $C_6$ alkoxy $-NR^6R^7$ wherein $R^6$ and $R^7$ are independently hydrogen, $C_1$ to $C_6$ alkyl and wherein $R^6$ and $R^7$ may together form a divisional hydrocarbon chain of 4 to 6 carbon atoms.

As we have discussed above, in order to maximise the rate of colouration and fade in polar and non-polar polymers it is preferred that one of $R^3$, $R^8$ and $R^9$ is $L(R)_n$ comprising at least 10, more preferably at least 12 monomer units and the other two of $R^3$, $R^8$ and $R^9$ are other than $L(R)_n$ where $L(R)_n$ contains 7 monomer units.

In compounds where more than one of $R^3$, $R^8$ and $R^9$ is $L(R)_n$ comprising at least 7 monomer units, the effect on the rate of colouration and fade will depend to some extent on the polymeric substituent and type of polymer. In cases where the polymer and polymeric substituents are compatible, the rate of fade may be decreased and when the polymeric substituent and resin are less compatible, the effect may be less or fade may be increased.

We have found that for compounds of formula IV a (preferably IVb) if $R^8$ and $R^9$ are shorter chains or smaller substituents they are also useful in controlling the rate of fade though to a more limited extent.

In a further embodiment, the invention therefore provides compounds of formula IVa (preferably IVb) wherein $R^8$ and $R^9$ are each selected from groups of formula I and groups of formula $L(R)_n$ as hereinbefore defined and the group $LR^{11}$ wherein $R^{11}$ is lower alkyl, lower haloalkyl, lower polyalkyleneoxy aryl and aryl(lower alkyl). The term lower is used to mean up to 6 carbon atoms in the chain and preferably up to 4.

In yet another embodiment we provide an intermediate for preparation of compounds of the invention, the intermediate being of formula IVa and more preferably IVb wherein $R^8$ and $R^9$ are selected from XH wherein X is hereinbefore defined. Preferably $R^8$ and $R^9$ are the same.

Compounds of the invention may be prepared by reaction of intermediates Va or Vb and VI.

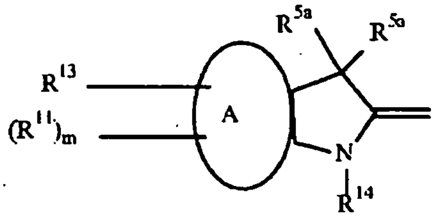

Va

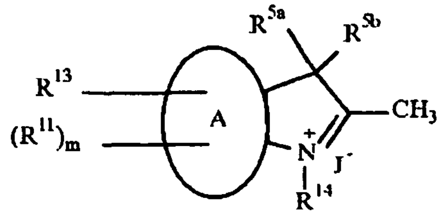

Vb

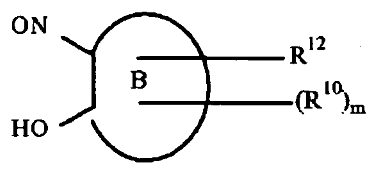

VI

One method for preparing compounds of the invention comprises reacting a methylene indolene of formula Va or Fishers base or indolium salt of formula Vb where J is halogen, particularly the iodide salt, wherein $R^{13}$ is $R^9$ and $R^{14}$

is $R^3$ with a nitrosohydroxy compound of formula VI to provide a compound of the invention of formula IV.

Alternatively, a methylene indolene of formula Va or indolium salt of formula Vb may be reacted with a nitrosohydroxy compound of formula VI wherein $R^{12}$ and $R^{13}$ are independently selected from the group consisting of hydrogen and -XH and at least one of $R^{12}$ and $R^{13}$ is -XH to provide an intermediate of formula VII.

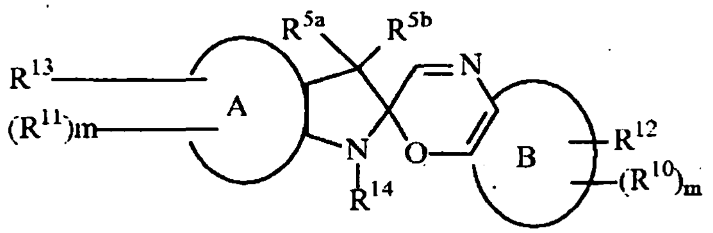
VII

and reacting the compound of formula VIII with a compound of formula VII

$JL(R)_n$ VIII

wherein J is a leaving group to form a compound of formula IV wherein at least one of $R^8$ and $R^9$ are the group $L(R)_n$

Alternatively or in addition the compound of formula IV wherein $R^3$ is $L(R)_n$ may be prepared by reacting the compound of formula Va or Vb with a compound of formula VIII to provide a compound of formula Va and Vb where $R^{14}$ is $L(R)_n$ and reacting the compound of formula VIa or VIb with a compound of formula VI to provide a compound of formula IV wherein $R^3$ is $L(R)_n$.

Specific examples of compounds of formula VIII, include J $L(R)_n$ where J is chlorine, L is of formula IIa to IIc where p is O and R is any one of the R group examples (i) to (v) shown above.

Compounds of formula X

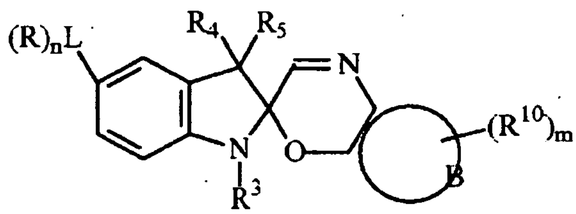
X

having a wide variety of the fused aromatic groups B may be prepared using the intermediate of formula Vc.

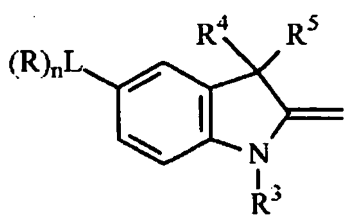
Vc

The fused aromatic group B and its substituents may be chosen to provide the desired colour of the photochromic compound. Such compounds provide a versatile method of preparation of rapid fade spiroindolineoxazines.

Examples of suitable substituted methylene indolene compounds of formula Va and Vb include 5-amino indolene compounds described by Gale & Wiltshire (J. Soc. Dye and Colourants 1974, 90, 97-100), 5-amino methylene compounds described by Gale, Lin and Wilshire (Aust. J. Chem. 1977 30 689-94) and 5-hydroxy compounds described in Tetrahedron Lett. 1973 12 903-6 and in US Patent 4062865.

One of the preferred groups of photochromics are the spiropyrans. Examples of spiropyrans include compounds of formula XIX and XX

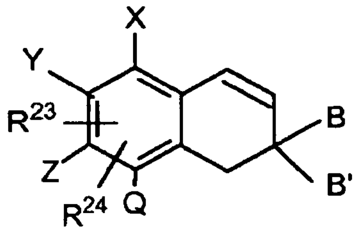

XIX

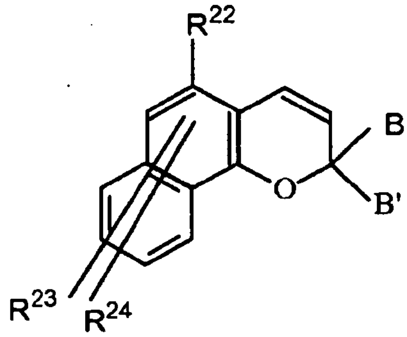

XX

wherein in XIX the groups X, Y, Z and Q may be substituents including where one or more thereof form a carbocyclic ring optionally fused with aryl and the substituents $R^{23}$ and $R^{24}$ may be present in any ring; and
wherein
B and B' are optionally substituted aryl and heteroaryl; and
$R^{22}$, $R^{23}$ and $R^{24}$ are independently selected from hydrogen; halogen; $C_1$ to $C_3$ alkyl; the group $L(R)_n$; and the group of formula COW wherein W is $OR^{25}$, $NR^{26}R^{27}$, piperidino or morpholino wherein $R^{25}$ is selected from the group consisting of $C_1$ to $C_6$ alkyl, phenyl, ($C_1$ to $C_6$ alkyl)phenyl, $C_1$ to $C_6$ alkoxyphenyl, phenyl $C_1$ to $C_6$ alkyl, ($C_1$ to $C_6$ alkoxy)phenyl, $C_1$ to $C_6$ alkoxy $C_2$ to $C_4$ alkyl and the group $L(R)_n$; $R^{26}$ and $R^{27}$ are each selected from the group consisting of $C_1$ to $C_6$ alkyl, $C_5$ to $C_7$ cycloalkyl, phenyl, phenyl substituted with one or two groups selected from $C_1$ to $C_6$ alkyl and $C_1$ to $C_6$ alkoxy and the group $L(R)_n$; $R^{22}$ and $R^{23}$ may optionally form a carboxylic ring of 5 or 6 ring members optionally fused with an optionally substituted benzene and wherein at least one of the substituents selected from the group of substituents consisting of B and B', $R^{22}$, $R^{23}$, $R^{24}$, $R^{25}$, $R^{26}$ and $R^{27}$ is the group $L(R)_n$.

When $R^{22}$ and $R^{23}$ are carbocyclic a preferred compound is of formula XX(d)

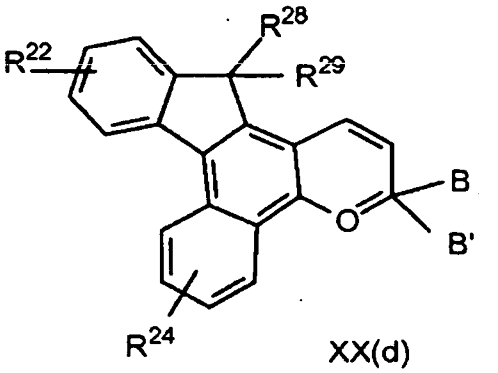

XX(d)

where $R^{22}$, $R^{28}$ and $R^{29}$ are as defined for $R^{22}$ above.

Preferably B and B' are independently selected from the group consisting of aryl optionally substituted with from 1 to 3 substituents, heteroaryl optionally substituted with from 1 to 3 substituents. The substituents where present are preferably selected from the group consisting of hydroxy, aryl, $C_1$ to $C_6$) alkoxyaryl, ($C_1$ to $C_6$) alkylaryl, chloroaryl ($C_3$ to $C_7$) cycloalkylaryl, ($C_3$ to $C_7$) cycloalkyl, ($C_3$ to $C_7$) cycloalkoxy, ($C_1$ to $C_6$) alkyl, aryl ($C_1$ to $C_6$) alkyl, aryl ($C_1$ to $C_6$) alkoxy, aryloxy, aryloxyalkyl, aryloxy ($C_1$ to $C_6$) alkoxy, ($C_1$ to ($C_6$) alkylaryl, ($C_1$ to $C_6$) alkyl, ($C_1$ to $C_6$) alkoxy, amino, N-($C_1$ to $C_6$) alkyl amino, ipirazino, N-aryl piperazino, indolino, piperidino, aryl pipersillins, morpholino, thiomorpholino, tetrahydro quinolino.

$NR^{29}R^{30}$ wherein $R^{29}$ and $R^{30}$ are independently selected from the group selected from $C_1$ to $C_6$ alkyl, phenyl, $C_5$ to $C_7$ cycloalkyl and the group wherein $R^{29}$ and $R^{30}$ form a linking group of 4 or 5 linking groups comprising methylene groups and optionally containing one or two hetero atoms and optionally further substituted by $C_1$ to $C_3$ alkyl and the group $L(R)_n$.
$R^{22}$ is selected from the group consisting of hydrogen, $C_1$ to $C_6$ alkyl; COW
where
W is $OR^{25}$ wherein $R^{25}$ $C_1$ to $C_6$ alkyl; and the group $NR^{26}R^{27}$; wherein $R^{26}$ and $R^{27}$ are independently $C_1$ to $C_6$ alkyl; and the group $L(R)_n$. Particularly referred naphthopyran compounds are of formula XX(a)

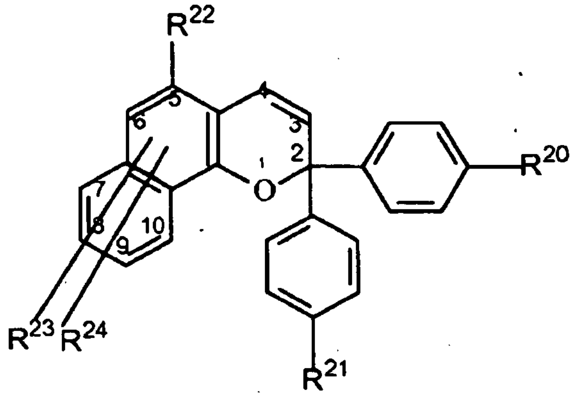

XX(a)

wherein

$R^{20}$ and $R^{21}$ are independently selected from the group consisting of hydrogen, hydroxy, alkoxy, amino, alkylamino, dialkylamino and $L(R)_n$;

$R^{22}$ is the group COW where W is $C_1$ to $C_6$ alkoxy or the group $L(R)_n$;

$R^{23}$ is selected from the group consisting of hydrogen and $NR^{26}R^{27}$ where $R^{26}$ are independently selected from the group consisting of $C_1$ to $C_6$ alkyl and where $R^{26}$ and $R^{27}$ may together form an alkylene group of 4 to 6 carbon atoms;

$R^{24}$ is hydrogen or the group $L(R)_n$; and wherein at least one of $R^{22}$ and $R^{24}$ is $L(R)_n$.

Compounds of formula XXV wherein $R^{23}$ and/or $R^{24}$ comprise the polymeric substituent group $L(R)_n$ may be prepared from a suitably substituted acetophenone, benzophenone or benzaldehyde of formula XXI(a). In this process the compound of formula XXI(a) (or a polyhydroxy compound where more than one substituent is required) is reacted with an polymeric substituent esterified toluene sulfonate of formula XXI to provide the corresponding polymeric substituent ether of formula XXI(b). The aromatic polymeric substituent ether of formula XXI(b) is reacted with an ester of succinic acid such as the dialkyl succinate of formula XXI(c). A Stobbe reaction produces the condensed half ester of formula XXII which undergoes cyclo dehydration in the presence of acidic anhydride to form the naphthalene polymeric substituent ether of formula XXIII. This compound of formula XXIII may be reacted with acid such as hydrochloride acid and an anhydrous alcohol such as methanol to form the corresponding naphthol shown in formula XXIV which is in turn coupled with the propargyl alcohol of formula XXV to form the polymeric substituent substituted naphthopyran of the invention of formula XX(b).

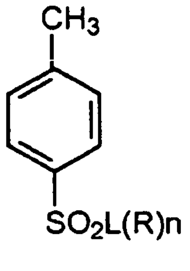

XXI

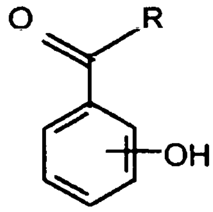

XXI(a)

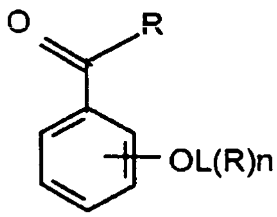

XXI(b)

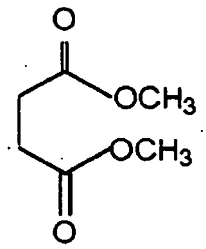

XXI(c)

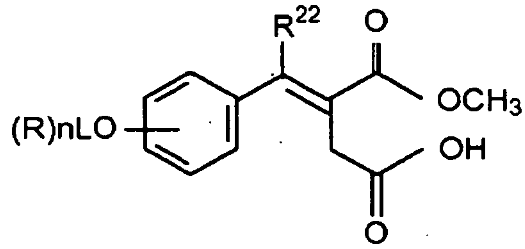

XXII

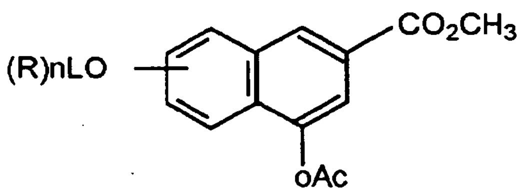

XXIII

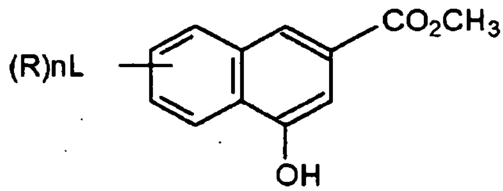

XXIV

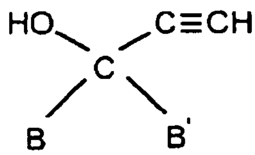

XXV

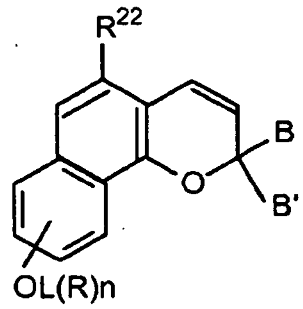

XX(b)

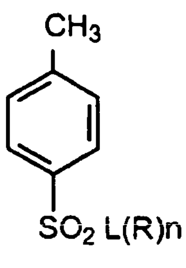

XXI(e)

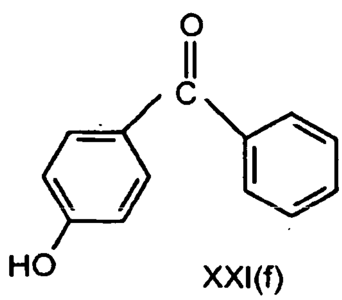

XXI(f)

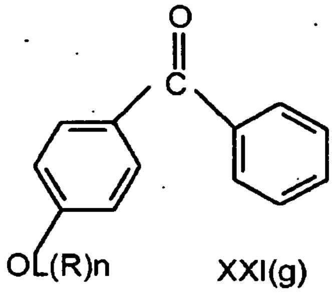

XXI(g)

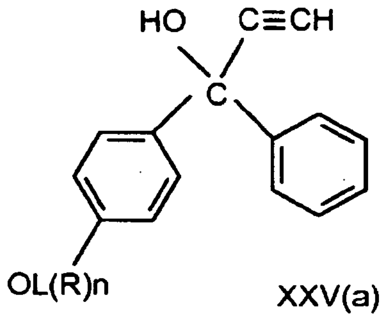

XXV(a)

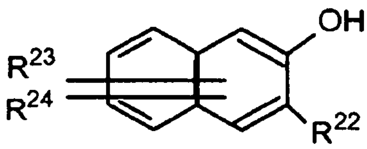

XXIV(b)

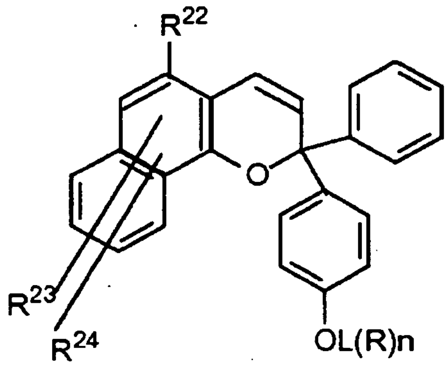

XX(c)

Alternatively, compounds of formula XX(c) in which at least one of the geminal phenyl groups is substituted by a polymeric substituent may be prepared from the benzophenone of formula XXI(f). In this process the benzophenone substituted with the appropriate hydroxyl groups is reacted with the polymeric substituent ester of toluene sulfonate of formula XXI(e) to form the corresponding polymeric substituent substituted benzophenone of formula XXI (g). The corresponding propargyl alcohol of formula XXV(a) is prepared from the benzophenone by reaction with sodium acetylide in a solvent such as THF. This propargyl alcohol of formula XXV(a) is coupled with the appropriate substituted naphthol of formula XXIV(b) to form the polymeric substituent substituted naphthopyran of formula XX(c).

A further option for forming polymeric substituent substituted pyrans of the invention of formula XX(d) in which the polymeric substituent is present in the 5-position of the naphthopyran may utilise the corresponding carboxylated naphthol of formula XXIII(a). In such a process the naphthol of formula XXIII(a) is reacted with an appropriate polymeric substituent of formula XXI(d) (particularly where linking group L comprising oxygen) to provide a polymeric substituent ester of formula XXIV(a). The polymeric substituent naphthol ester of formula XXIV(a) may be reacted with propargyl alcohol of formula XXV to provide the naphthopyran of formula XX(d) in which the polymeric substituent is present in the five position.

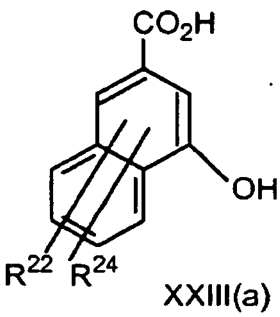

XXIII(a)

H L(R)n

XXI(d)

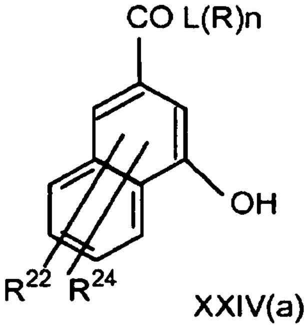

XXIV(a)

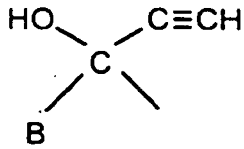

XXV

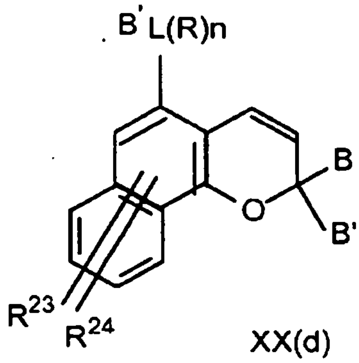

XX(d)

In a further alternative compounds of formula XX wherein $R^{22}$ comprises the polymeric substituent $L(R)_n$ may be formed by reacting a compound of formula XX(e) with an acid chloride or anhydride substituted polymeric substituent to provide a compound of formula:

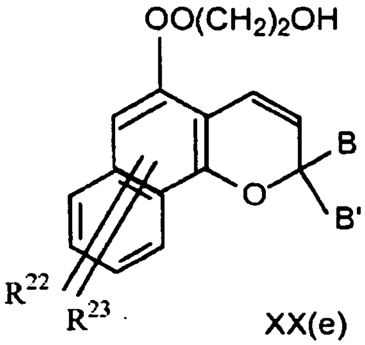

XX(e)

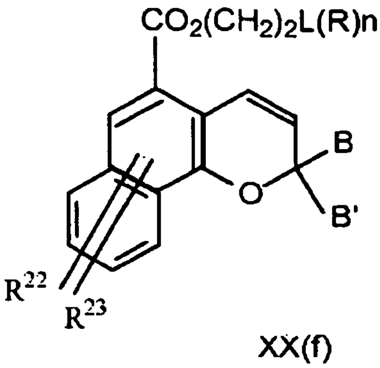

XX(f)

Examples of fulgides and fulgimides include compounds of formula XXX and more preferably XXXa:

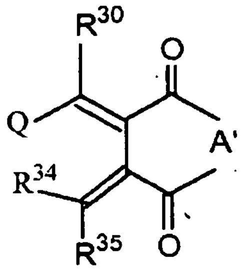

XXX

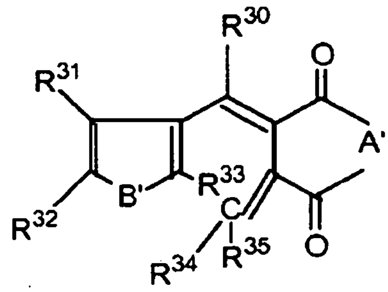

XXXa

wherein

Q is selected from the group consisting of optionally substituted aromatic, optionally substituted heteroaromatic (where said aromatic/heteroaromatic may be mono or polycyclic aromatic/heteroaromatic);

$R^{30}$, $R^{32}$ and $R^{33}$ are independently selected from the group consisting of a $C_1$ to $C_4$ alkyl, $C_1$ to $C_4$ alkoxy phenyl, phenoxy mono- and di($C_1$-$C_4$) alkyl substituted phenyl or phen($C_1$-$C_4$)alkyl and $R^{32}$ and $R^{32}$ optionally together form a fused benzene which may be further substituted;

A' is selected from the group consisting of oxygen or =N-$R^{36}$, in which $R^{36}$ is $C_1$-$C_4$ alkyl or phenyl,

B' is selected from the group consisting of oxygen or sulfur;

$R^{34}$ and $R^{35}$ independently represents a $C_1$-$C_4$ alkyl, phenyl or phen($C_1$-$C_4$) alkyl or one of $R^{34}$ and $R^{35}$ is hydrogen and the other is one of the aforementioned groups, or $R^{34}R^{35}$ represents an adamantylidine group;

and wherein at least one of $R^{30}$, $R^{31}$, $R^{32}$, $R^{35}$ and $R^{36}$ is the group $L(R)_n$.

The fulgides and fulgimides comprising polymeric substituent substituents in accordance with the invention may be particularly useful in molecular switches.

The fulgides and fulgimides of formula XXX may be formed in accordance with procedures similar to those described in US Patent 4,220,708. Fulgides of formula XXX(a) in which the group A- is oxygen may be prepared from five membered heterocycle of formula XXX by reaction with an ester of succinic acid of formula XXXII wherein $R^{37}$ is a residue of an alcohol, by a Stobbe condensation reaction. Hydrolysing the half ester product of XXXIII formed in the reaction provides the diacid of XXXIII wherein $R^{37}$ is hydrogen. Heating of the diacid of formula XXXIII yields the succinic anhydride product of formula XXXIII(a). The Stobbe condensation may be carried out by refluxing in t-butanol containing potassium t-butoxide or with sodium hydride in anhydrous toluene. Compounds of the invention of formula XXX(b) in which A- of formula XXX is N-36 may be prepared from the compound of XXX(a) by heating the anhydride and a primary amine $R^{36}NH_2$ to produce the corresponding half amide which can in turn be cyclised to form the imide of formula XXX (b) for example by heating with an acid chloride or acid anhydride. Alternatively the half ester Stobbe condensation product of formula XXX can be converted to the imide of XXX(b) by reaction with a compound of formula $R^{36}NHMgBr$ to produce the corresponding succinamic acid which may be dehydrated with an acid chloride to provide the compound of formula XXX(b). Compounds of formula XXX(b)

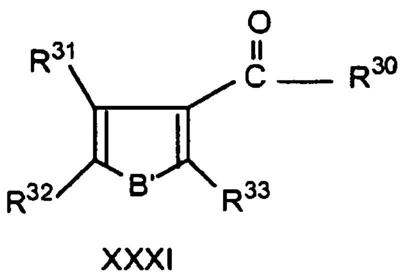

XXXI

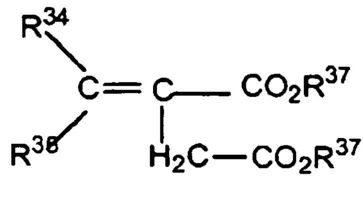

XXXII

wherein $R^{36}$ comprises an polymeric substituent group are particularly preferred.

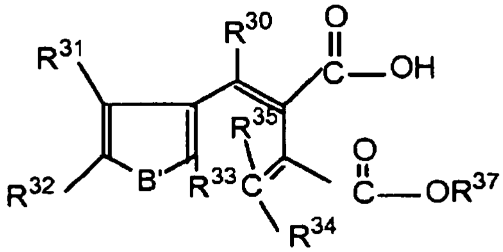

XXXIII

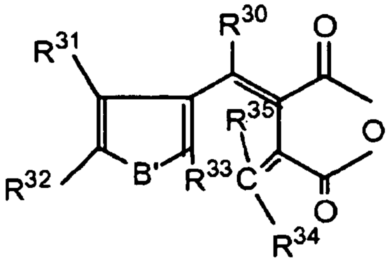

XXXIII

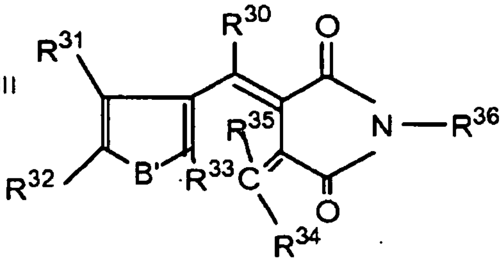

XXX(a)

XXX(b)

Compounds of formula XXXI wherein $R^{30}$ includes the polymeric substituent $L(R)_n$ may be prepared by reaction of a polymeric substituent acid chloride such as (XXXV) with the appropriate furan in the presence of a Lewis acid catalyst (such as tin tetrachloride):

Fulgimide compounds of formula XXX in which

A' is the group of formula XXXVI may be prepared by reaction of an amine with a free nucleophilic group such as 4-hydroxyaniline with the corresponding fulgide of formula XXX where A' is oxygen to provide the intermediate fulgimide having a free nucleophilic group such as hydroxy (eg formula XXXVII) and reaction of the free nucleophilic of the fulgimide with (i) a polymeric substituent acid chloride or anhydride (ii) functional groups suitable to allow the growth of a polymer directly from the fulgimide. This might be a group suitable for RAFT, ATRP or iniferter control radical polymerization to provide the polymeric substituent substituted fulgimide of (eg formula XXXVI)

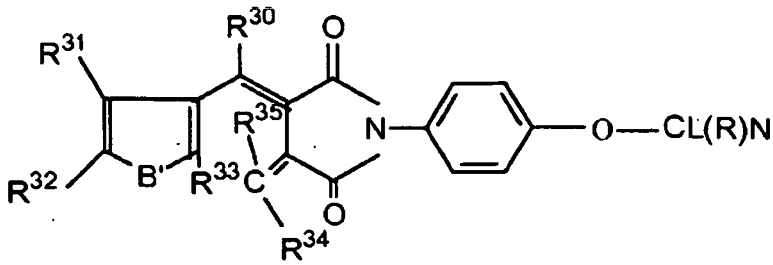

XXXVI

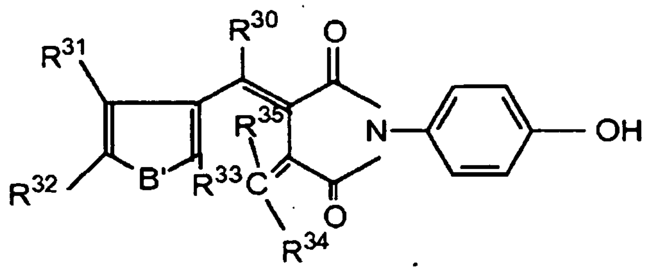

XXXVII

Examples of azo dyes include compounds of formula XL

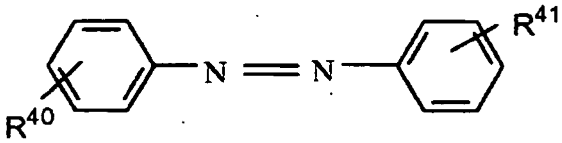

XL

wherein:

one of $R^{40}$ and $R^{41}$ is a polymeric substituent and the other is selected from the group consisting of hydrogen, $C_1$ to $C_6$ alkyl, $C_1$ to $C_6$ alkoxy, $-NR^{42}R^{43}$ wherein $R^{42}$ and $R^{43}$ are as defined for $R^{26}$ and $R^{27}$ aryl (such as phenyl) aryl substituted with one or more substituents selected from $C_1$ to $C_6$ alkyl and $C_1$ to $C_6$ alkoxy, substituted $C_1$ to $C_6$ alkyl wherein the substituent is selected from aryl and $C_1$ to $C_6$ alkoxy, substituted $C_1$ to $C_6$ alkoxy wherein the substituent is selected from $C_1$ to $C_6$ alkoxy aryl and aryloxy.

The photochromic moiety may also be selected from diarylperfluorocyclopentenes including compounds of formula XXXV and XXXVI:

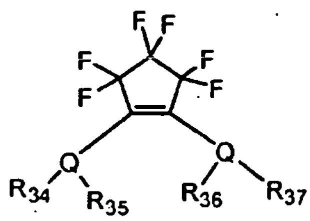

XXXV

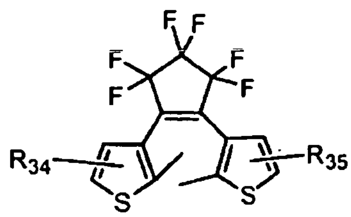

XXXVI

wherein
Q is selected from the group consisting of optionally substituted aromatic, optionally substituted heteroaromatic (where said aromatic/heteroaromattc may be mono or polycyclic aromatic/heteroaromatic);
$R^{34}$,$R^{35}$,$R^{36}$,$R^{37}$ independently represents a $C_1$ to $C_4$ alkyl, phenyl or phen($C_1$ to $C_4$) alkyl or one of and $R^{34}$ ,$R^{35}$ $R^{36}$, $R^{37}$ is hydrogen and the others is one of the aforementioned groups; and
wherein at least one of Q , $R^{34}$,$R^{35}$ , $R^{36}$ and $R^{37}$ comprises the group$L(R)_n$; and

*Compositions containing the photochromic compound*

The compounds of the invention with low Tg polymers/oligomer substituents tend to be oils. This makes them more soluble in monomers and polymer matrices. It also means they are less likely to crystallise in the matrix, thus this may allow higher loading of dyes and may also prevent the crystallisation that may occur with conventional photochromic

dyes.

The photochromic compound according to any one of the invention will preferably provide a fade half life of the compound in the standard photochromic cast test (herein described in the Examples) which is at least 20% different compared with the corresponding photochromic compound in absence of the polymeric substituent. The photochromic compound according to the invention preferably has a fade half life in the standard photochromic cast which is reduced by at least 40% compared with the corresponding photochromic compound without the polymeric substituent.

Most preferably the photochromic compound has a t 3/4 in the standard photochromic cast is at least 40% reduced when compared with the corresponding composition wherein the photochromic compound does not contain the polymeric substituent.

In one aspect the invention provides a polymer article incorporating the compound of the invention and having a host matrix of Tg of at least 50°C preferably at least 70°C and most preferably at least 80°C. In a further aspect the invention provides a polymerizable composition for forming a photochromic article of glass transition temperature of at least 50°C, preferably at least 70°C and most preferably at least 80°C, on curing.

In the preferred embodiment of the invention the polymeric substituent significantly increases the rate of fade so that the fade half life and/or the time taken to reach a ¾ reduction in absorbance is reduced by at least 30% compared with the corresponding composition in absence of the polymeric substituent and preferably at least 50%.

The compounds of the invention with higher Tg polymers/oligomer substituents tend to be amorphous solid materials. This also means they are less likely to crystallise in the matrix, thus this may allow higher loading of dyes and may also prevent the crystallisation that may occur with conventional photochromic dyes.

The compounds of the invention have their own built-in nanoenvironment because the dye is chemically bound to a favourable polymeric substituent.

The compounds of the invention may contain one or more photochromic dyes. The compounds of the invention may also be used in mixtures with conventional photochromics.

The use of compounds of the invention allows the fade speed of the photochromic to be changed without changing its colour. Thus it allows the tuning of fade speed for different coloured dyes. This is important to get a consistent colour when fading occurs. Thus, if a blue dye of a particular speed is needed, modification can be made to include an polymeric substituent of an appropriate length in accordance with the invention.

The photochromic compounds (or compositions containing same) of the present invention may be applied or incorporated into a host material by methods known in the art. Such methods include dissolving or dispersing the compound in the host material. The compound may be melt blended with the host matrix.

The compounds of the invention may be incorporated in polymerizable compositions used to form the host matrix so that they become bound within the polymerized host. In one embodiment of the invention the photochromic compound of the invention comprises a terminal group (group Y in the compound of the invention of formula II) which is reactive with the polymerizable composition during curing. For example the polymerizable group may be an unsaturated group which becomes tethered to the host polymer during curing of the host composition. The group may be an alcohol, acid, amine or other group for reacting with co-reactive functional groups in a host monomer. In this embodiment the compound of the invention becomes chemically bound with the polymeric substituent forming a tether bound (particularly by covalent bonds) to the host. Reactions between the terminal group of the polymeric substituent of a photochromic compound are described in our co pending Australian provisional patent application No. 2004902302.

In one aspect the invention provides a photochromic article having a Tg of at least 50°C, comprising a polymeric matrix formed by polymerization of a monomer composition comprising a photochromic monomer comprising a photochromic moiety which is tethered to a reactive group which has undergone reaction to become part of the polymer via a pendant polymeric substituent comprising at least 3 and more preferably at least 5 and more preferably at least 7 monomeric units as hereinbefore described.

As a result of the polymeric substituent tether the rate of fade of the photochromic is significantly increased compared with the corresponding composition comprising an electrically equivalent dye without the pendant polymeric substituent. Generally the photochromic article is solid at ambient temperature and typically it has a Tg of at least 50°C, preferably at least 70°C, and most preferably at least 80°C. The advantage of the photochromic compound of the invention (comprising at least polymeric substituent having at least one functional group reactive with the matrix or polymerizable composition used to form the matrix) is that the polymeric substituent chain may coil about or near the photochromic group to provide nanoencapsulation facilitating more rapid conversion between ring-open and ring-closed forms. The polymeric substituent chains may provide a low Tg nanoenvironment or otherwise favourably alter the local environment. Accordingly for faster colouration and fade, it is preferred that the polymeric substituent attached to the photochromic compound of the invention has a relatively low Tg. For example the Tg is preferably less than 25°C. More preferably the compounds of the invention are non-crystalline at room temperature and more preferably liquid at room temperature, this making them easier to disperse and dissolve in the monomeric composition.

Alternatively the compound of the invention may be non-reactive with the host and/or the polymerizable composition for forming the host. In this embodiment the compound of the invention may become incorporated in the host

before, during or after curing of a polymerizable composition used to form the host.

The photochromic compound of the invention may be incorporated by imbibation into the host material. It may also be introduced by immersion, thermal transfer or coating and incorporation of the photochromic layer as part of a separation layer between adjacent layers of the host material. The term "imbibation" or "imbibe" is intended to mean and include diffusion of the photochromic compound alone into the host material, solvent assisted diffusion, absorption of the photochromic compound into a porous polymer, vapor phase transfer, and other such transfer mechanisms. For example:

(a) The photochromic compounds (or compositions containing same) of the present invention can be mixed with a polymerizable composition that, upon curing, produces an optically clear polymeric host material and the polymerizable composition can be cast as a film, sheet or lens, or injection molded or otherwise formed into a sheet or lens;
(b) The photochromic compounds of the present invention can be dissolved or dispersed in water, alcohol or other solvents or solvent mixtures and then imbibed into the solid host material by immersion for several minutes to several hours, eg, 2-3 minutes to 2-3 hours for the host material in a bath of such solution or dispersion. The bath is conventionally at an elevated temperature, usually in the range of 50°C to 95°C. Thereafter, the host material is removed from the bath and dried;
(c) The photochromic compounds (and compositions containing the same) may also be applied to the surface of the host material by any convenient manner, such as spraying, brushing, spin-coating or dip-coating from a solution or dispersion of the photochromic material in the presence of a polymeric binder. Thereafter, the photochromic compound is imbibed by the host material by heating it, eg, in an oven, for from a minute to several hours at temperatures in the range of from 80°C to 180°C.;
(d) In a variation of the above imbibation procedure, the photochromic compound or composition containing the same can be deposited onto a temporary support, or fabric, which is then placed in contact with host material and heated, eg, in an oven;
(e) The photochromic compounds can be dissolved or dispersed in a transparent polymeric material which can be applied to the surface of the host in the form of a permanent adherent film or coating by any suitable technique such as spraying, brushing, spin-coating or dip-coating;
(f) The photochromic compounds can be incorporated or applied to a transparent polymeric material by any of the above mentioned methods, which can then be placed within the host material as a discrete layer intermediate to adjacent layers of a host material(s);
(g) The photochromic adduct of the invention may be incorporated into a dye composition by ball milling with a carrier to disperse it in a binder matrix. Such a composition may be used as an ink, for example in ink jet printing and suitable (PC) moieties may be chosen to allow security markings on documents to be visible on exposure to UV light used in photocopy;
(h) The photochromic compound may be compounded with suitable resins and the resin melted to shape it to form a film, for example by blow moulding or to form more complex extruded shapes, e.g. by injection moulding and/or blown structures.

The transfer method is described, inter alia, in the documents U.S. Pat. Nos. 4,286,957 and 4,880,667. In this technique, a surface of the transparent polymer substrate is coated with a layer of a varnish containing the photochromic substance to be incorporated. The substrate, thus coated, is then treated thermally in order to cause the photochromic substance to migrate into the substrate.

It is a significant advantage of the adduct photochromic of the invention that they are relatively stable even at elevated temperature. In contrast attempts made to improve fade results using unsaturated functional groups result in compounds which polymerise at elevated temperature and must generally be stored to avoid premature polymerization.

Although the polymeric substituent attached to the photochromic moiety results in the photochromic moiety activating and fading significantly faster than the unsubstituted photochromic moiety when in the same substrate, the inventors have observed that the polymer substituted photochromics can have a higher saturated absorption than the corresponding unsubstituted photochromic at the same molar concentration. This is contrary to the relationship between fade speed and intensity which is normally observed. As previously explained a very important commercial limitation is normally placed on the technology because there is a trade off between increasing fade speed and optimising colour intensity in activated state.

This surprising result for compounds of the invention has been observed for examples of the invention which comprise photochromic moieties such as spirooxazines and chromenes and polymer substitutents having a low Tg. This observation implies that the dye adducts with a low Tg polymeric substituent may also have a smaller performance difference over a range of temperatures, ie a reduced temperature effect compared with corresponding unsubstituted photochromic in the same matrix.

The present invention is more particularly described in the following examples which are intended as illustrative

only since numerous modifications and variations therein will be apparent to those skilled in the art.

Examples of host materials that may be used with the photochromic compounds of the present invention include polymers, i.e., homopolymers and copolymers of polyol(allyl carbonate) monomers, homopolymers and copolymers of polyfunctional acrylate monomers, polyacrylates, poly(alkylacrylates) such as poly(methylmethacrylate), cellulose acetate, cellulose triacetate, celluslose acetate propionate, cellulose acetate butyrate, poly(vinyl acetate), poly(vinylalcohol), poly(vinylchloride), poly(vinlylidene chloride), polyurethanes, polycarbonates, poly(ethylene-terephthalate), polystyrene, copoly(styrene-methylmethacrylate), copoly(styrene-acrylateonitrile), poly(vinylbutryl), and homopolymers and copolymers of diacylidene pentaerythritol, particularly copolymers with polyol(allylcarbonate) monomers, e.g. diethylene glycol bis(allyl carbonate), and acrylate monomers. Transparent copolymers and blends of the transparent polymers are also suitable as host materials.

The host material may be an optically clear polymerized organic material prepared from a polycarbonate resin, such as the carbonate-linked resin derived from bisphenol A and phosgene which is sold under the trademark LEXAN; a poly(methylmethacrylate), such as the material sold under the trademark PLEXIGLAS; polymerizates of a polyol(allyl carbonate), especially diethylene glycol bis(allyl carbonate), which is sold under the trademark CR-39, and its copolymers such as copolymers with vinyl acetate, eg copolymers of from about 80 - 90 percent diethylene glycol bis(allyl carbonate) and 10 - 20 percent vinyl acetate, particularly 80 - 85 percent of the bis(allyl carbonate) and 15 - 20 percent vinyl acetate, cellulose acetate, cellulose propionate, cellulose butyrate, polystyrene and copolymers of styrene with methyl methacrylate, vinyl acetate and acrylonitrile, and cellulose acetate butyrate.

Polyol (allyl carbonate) monomers which can be polymerised to form a transparent host material are the allyl carbonates of linear or branched aliphatic glycol bis(allyl carbonate) compounds, or alkylidene bisphenol bis(allyl carbonate) compounds. These monomers can be described as unsaturated polycarbonates of polyols, eg glycols. The monomers can be prepared by procedures well known in the art, eg, US Pat. Nos. 2,370,567 and 2,403,113. The polyol (allyl carbonate) monomers can be represented by the graphic formula:

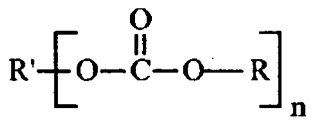

wherein R is the radical derived from an unsaturated alcohol and is commonly an allyl or substituted allyl group, R' is the radical derived from the polyol, and n is a whole number from 2-5, preferably 2. The allyl group (R) can be substituted at the 2 position with a halogen, most notably chlorine or bromine, or an alkyl group containing from 1 to 4 carbon atoms, generally a methyl or ethyl group. The R group can be represented by the graphic formula:

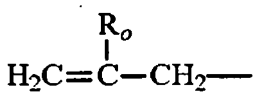

wherein Ro is hydrogen, halogen, or a $C_1$-$C_4$ alkyl group. Specific examples of R include the groups: ally 2-chloroallyl, 2-bromoallyl, 2-fluoroallyl, 2-methylallyl, 2-ethylallyl, 2-isopropylallyl, 2-n-propylallyl, and 2-n-buylallyl. Most commonly R is the allyl group:

$H_2C$=CH-$CH_2$-

R' is the polyvalent radical derived from the polyol, which can be an aliphatic or aromatic polyol that contains 2, 3, 4 or 5 hydroxy groups. Typically, the polyol contains 2 hydroxy groups, ie a glycol or bisphenol. The aliphatic polyol can be linear or branched and contain from 2 to. 10 carbon atoms. Commonly, the aliphatic polyol is an alkylene glycol having from 2 to 4 carbon atoms or a poly($C_2$-$C_4$) alkylene glycol, ie ethylene glycol, propylene glycol, trimethylene glycol, tetramethylene glycol, or diethylene glycol, triethylene glycol etc.

In a further embodiment, the invention provides a photochromic article comprising a polymeric organic host material selected from the group consisting of poly(methyl methacrylate), poly(ethylene glycol bismethacrylate), poly (ethoxylated bisphenol A dimethacrylate), thermoplastic polycarbonate, poly(vinyl acetate), polyvinylbutyral, polyurethane, and polymers of members of the group consisting of diethylene glycol bi(allylcarboriate) monomers, diethylene glycol dimethacrylate, monomers, ethoxylated phenol bismethylacrylate monomers, diisopropenyl benzene monomers and ethoxylated trimethylol propane triacrylate monomers, and a photochromic amount of a compound of the invention.

The polymeric organic host material is selected from the group consisting of polyacrylates, polymethacrylates,

poly($C_1$-$C_{12}$) alkyl methacrylates, polyoxy(alkylene methacrylates), poly(alkoxylates phenol methacrylates), cellulose acetates, cellulose triacetate, cellulose acetate propionate, cellulose acetate butyrate, poly(vinyl acetate), poly(vinyl alcohol), poly(vinyl chloride) poly(vinylidene chloride), thermoplastic polycarbonates, polyesters, polyurethanes, polythiourethanes, poly(ethylene terephthalate), polystyrene, poly(alpha methylstyrene), copoly(styrene-methylmethacrylate), copoly(styreneacrylonitrile), polyvinylbutyral and polymers of members of the group consisting of polyol(allyl carbonate) monomers, polyfunctional acrylate monomers, polyfunctional methylacrylate monomers, diethylene glycol dimethacrylate monomers, diisopropenyl benzene monomers, alkoxylates polyhydric alcohol monomers and diallylidene pentaerythritol monomers.

The photochromic article may comprise a polymeric organic material which is a homopolymer or copolymer of monomer(s) selected from the group consisting of acrylates, methacrylates, methyl mathacrylate, ethylene glycol bis methacrylate, ethoxylated bisphenol A dimethacrylate, vinyl acetate, vinylbutyral, urethane, thiourethane, diethylene glycol bis(allyl carbonate), diethylene glycol dimethacrylate, diisopropenyl benzene, and ethoxylated trimethyl propane triacrylates.

The photochromic composition of the invention may contain the photochromic compound in a wide range of concentrations depending on the type of photochromic moiety and its intended application. For example in the case of inks in which high colour intensity is required a relatively high concentration of up to 30 wt% photochromic may be required. On the other hand it may be desirable in some cases such as optical articles to use photochromics in very low concentrations to provide a relatively slight change in optical transparency on irradiation. For example, as low as 0.01 mg/g of host resin may be used. Generally the photochromic resin will be present in an amount of from 0.001wt% of host resin up to 30 wt% of host resin. More preferably the photochromic compound will be present in an amount of from 0.001 to 10 wt% of host matrix and still more preferably from 0.005 to 10 wt% of host matrix.

The photochromic article may contain the photochromic compound in an amount of from 0.05 to 10.0 milligram per square centimetre of polymeric organic host material surface to which the photochromic substance(s) is incorporated or applied.

The compounds of the invention may be used in those applications in which the organic photochromic substances may be employed, such as optical lenses, eg, vision correcting ophthalmic lenses and plano lenses, face shields, goggles, visors, camera lenses, windows, mirrors, automotive windows, jewellery, aircraft and automotive transparencies, e.g., T-roofs, sidelights and backlights, plastic films and sheets, textiles and coatings, e.g. coating compositions and inks, cosmetics, data storage devices, optical switching devices. As used herein, coating compositions include polymeric coating composition prepared from materials such as polyurethanes, epoxy resins and other resins used to produce synthetic polymers; paints, i.e., a pigmented liquid or paste used for the decoration, protection and/or the identification of a substrate; and inks, i.e., a pigmented liquid or paste used for writing and printing on substrates, which include paper, glass, ceramics, wood, masonry, textiles, metals and polymeric organic materials. Coaling compositions may be used to produce verification marks on security documents, e.g. documents such as banknotes, passport and driver' licenses, for which authentication or verification of authenticity may be desired. Security documents, for indicating exposure to light during photocopying.

The invention will now be described with reference to the following examples. It is to be understood that some of the examples are provided by way of illustration of the invention and that they are in no way limiting to the scope of the invention.

EXAMPLES

The photochromic properties of compositions of a number of embodiments are described with reference to the attached drawings. In the drawings:

Figure 1 is a plot of fade speed of PS-SOX by length/Tg of polystyrene polymeric substituent in a host matrix of 9G: nouryset 110 1:4, wherein PS-SOX is not part of the invention.

Figure 2 is a plot of coloration speed of PS-SOX by length/Tg of polystyrene polymeric substituent in a host matrix of 9G:nouryset110 1:4, wherein PS-SOX is not part of the invention.

Figure 3 is a plot of fade speed of PMMA-SOX and BA-SOX by length/Tg of polymeric substituent in a host matrix of 9G:nourysetl 10 1:4, according to the invention.

Figure 4 is a plot of coloration speed of BA-SOX by length/Tg of polymeric substituent in a host matrix of 9G: nouryset110 1:4, according to the invention.

**Example 1** which is not part of the invention.

Synthesis of Photochromic initiator 1 and spirooxazine-polystyrene polymer conjugates.

Part 1. Synthesis of photochromic initiator **1**.

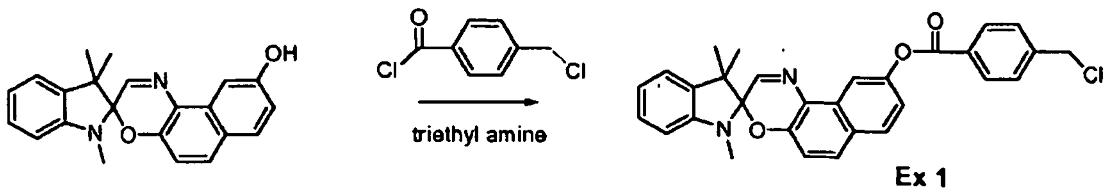


Ex 1

9'-(4-Chloromethylbenzoyloxy) -1,3,3-trimethylspiro[indoline2,3'-[3H]naphtha[2,1-b][1,4] oxazine] (1)

9'-Hydroxy-1,3,3-trimethylspiro[indoline2,3'-[3H]naphtha[2,1-b][1,4] oxazine] (2.5g, $72.7x10^{-4}$ mol) was added to 30mL of dichloromethane in a 100mL three necked round bottomed flask. Triethylamine(1.10g, $10.9x10^{-3}$ most), was added and the reaction was stirred for half an hour. Then 4-(chloromethyl)benzoyl chloride (1.65g, $87.2x10^{-4}$ mol), was dissolved in 10mL dichloromethane and added dropwise to the reaction under argon, cooled to 0°C. The reaction was stirred at ice temperature for a further hour, and then at room temperature for one final hour. A TLC in 1:1 diethyl ether, hexane confirmed the product had been obtained. The product was washed with 100mL 0.5M NaOH, 100mL water, 100mL 0.5M HCl, 100mL water, 100mL brine and dried with $MgSO_4$. The final solution was rotary evaporated to produce 3.05g of material (85% yield). This product was then recrystallised using a combination of methanol and chloroform (mp 205-208°C). $^1$H NMR ($(CD_3)_2CO$) δ 1.35 (s, 3H, H-2), 1.36 (s 3H, H-3), 2.78 (s, 3H, H-10), 4.87(s, 2H, H-30), 6.67 (d, J = 7.8 Hz, H-8), 6.87 (t of d, J = 7.4 , 1.0Hz, 1H, H-6), 7.08 (d, J = 9Hz, 1H, H-13), 7.16 (app d, J = 7.4Hz, 1H, H-5), 7.20 (t of d, J = 7.8, 1.2Hz, 1H, H-7), 7.38 (d of d, J = 8.8, 2.4Hz, 1H, H-14 ), 7.72 (app d, J = 8.5Hz, 2H, (C-26 & C-28)), 7.84 (s, 1H, H-22), 7.86 (d, J = 8.5Hz, 1H, H-17), 7.96 (d, J = 8.6Hz, 1H, H-16) 8.28 (app d, J = 8.6Hz, 2H, H-25 & H-29)), 8.40 (d, J = 2.4Hz, 1H, H-19). $^{13}$C NMR ($C_6D_6$) δ: 21.10 (C-2), 25.59 (C-3), 29.77 (C-10), 45.50 (C-30) 52.23 (C-1), 99.52 (C-11), 107.89 (C-8), 114.25 (C-19), 117.07 (C-13), 120.41 (C-17), 120.68 (C-6), 122.02 (C-5), 124.1 (C-21), 128.1 (C-15), 129.15 (C-26 & C-28 & C-7), 130.07 (C-16), 130.39 (C-20), 130.70 (C-14), 131.14 (C-25 & C-29), 133.02 (C-24), 136.57 (C-4), 143.36 (C-27), 145.52 (C-12), 148.35 (C-9), 151.17 (C-18), 151.27 (C-22), 165.06 (C-23). The numbering system is given in the diagram below. Mass spectrum (EI): m/z 497 ($M^+$ +1, 45%), 193 (100), 160(55), 218 (40), 457(35). Mass spectrum (HR, FAB): m/z 496.154 ($C_{30}H_{25}ClN_2O_3$ requires 496.16).

Part 2. Poly(styrene) -photochromic conjugates **PS-SOX**

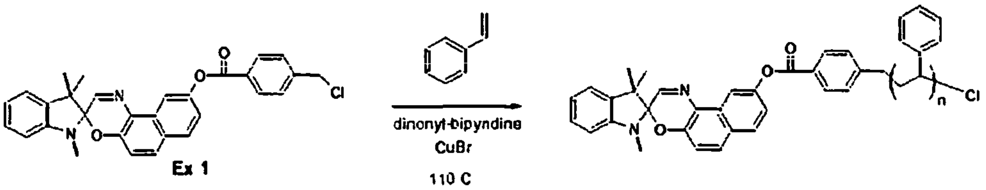


Styrene polymeric substituent was grown from the initiator Ex **1** under the following typical procedure: initial reactants were mixed at a 100:1:1:2, ratio of styrene ($17.4x10^{-3}$ mol), spirooxazine initiator Ex 1 ($17.4x10^{-5}$ mol), catalyst (CuBr($17.4x10^{-5}$ mol)) and ligand (dinonyl-bipyridine ($34.9x10^{-5}$ mol)). The reactions were degassed and then polymerized at 110°C. A number of samples were made and polymerized for increasing lengths of time to produce polymeric substituents of increasing lengths. (Table A) The polymers were purified by precipitation in methanol. Molecular weight and polydispersity of the polymers were obtained using gel permeation chromatography (GPC), calibrated with poly (styrene) standards with THF as eluent. The polymer conversions were obtained from $^1$H NMR spectra recorded on a Bruker AC200 spectrometer.

Table A.

| Line | Sample | Time (mins) | $M_n$[a] | $M_n$ theoretical | % conv[b] | PD[c] | Tg[d] |
|---|---|---|---|---|---|---|---|
| 1 | **PS-SOX-1** | 60 | 1572 | 1278 | 7.9 | 1.29 | 83 |
| 2 | **PS-SOX-2** | 180 | 3483 | 3715 | 30.9 | 1.21 | 94 |
| 3 | **PS-SOX-3** | 240 | 4280 | 4340 | 36.9 | 1.20 | - |
| 4 | **PS-SOX-4** | 300 | 4368 | 5058 | 43.8 | 1.18 | 97 |
| 5 | **PS-SOX-5** | 360 | 5868 | 5850 | 51.4 | 1.18 | - |
| 6 | **PS-SOX-6** | 420 | 6433 | 6485 | 57.5 | 1.15 | 102 |
| 7 | **PS-SOX 7** | 480 | 7988 | 7527 | 67.5 | 1.19 | 102 |

a) molecular weight and polydispersity were obtained using gel permeation chromatography (GPC), calibrated with poly(styrene) standards with THF as eluent.
b) Polymer conversions were obtained from 1H NMR spectra recorded on a Bruker AC200 spectrometer.
c) Mw/Mn
d) Thermal analyses of spirooxazine conjugates were done using a Mettler Toledo DSC821. Samples (10mg) were heated from 25°C to 150°C at 10°C a minute under nitrogen.

**Example 2** which is not part of the invention.

Synthesis of photochromic initiator 2.

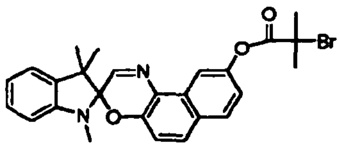

**9'-(4-Methylbenzoyloxy)-1,3,3-trimethylspiro[indoline2,3'-[3H]naphtha[2,1-b][1,4]oxazine](2)**

This compound was synthesised as for **Ex 1** except acid chloride used was 2-bromo-isobutylbromide. The product was purified using column chromatography. $^1H$ NMR ($(CD_3)_2CO$) δ; 1.34, 1.36, 2.16, 2.78, 6.67, 6.87, 7.08, 7.16, 7.20, 7.36, 7.84, 7.86, 7.96, 8.38 ppm.

**Example 3** which is not part of the invention.

Synthesis of photochromic initiator 3

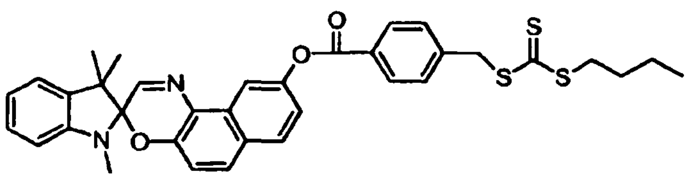

Butane-1-thiol(1.06g, $1.17x10^{-2}$mol), Carbon disulphide(2.14g, $2.81x10^{-2}$mol) and triethylamine(2.85g, $2.81x10^{-2}$mol) were added to 30mL Chloroform and stirred overnight. Then 9'-(4-Chloromethylbenzoyloxy) -1,3,3-trimethylspiro [indoline2,3'-[3H]naphtha[2,1-b][1,4] oxazine](5.82g, $1.17x10^{-2}$mol) was added and stirred at 60°C until TLC(3:2 Diethyl ether, Hexane) showed product formed. The product was purified by washing with water, brine and drying with magnesium

sulphate and then recrystallised using methanol/chloroform. $^1H$ NMR ($(CD_3)_2CO$) δ: 94, 1.35, 1.36, 1.47, 1.71, 2.78, 3.46, 4.85, 6.67, 6.87, 7.07, 7.16, 7.20, 7.37, 7.68, 7.84, 7.86, 7.95, 8.23, 8.40 ppm,

**Comparative Example 1**

Synthesis of comparison photochromic dye **CE1**.

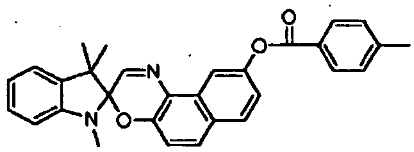

9'-(4-Methylbenzoyloxy)-1,3,3-trimethylspiro[indoline2,3'-[3H]naphtha[2,1-b][1,4] oxazine](**CE1**)

This compound was synthesised as for compound **1** except acid chloride used was 4-methyl benzoyl chloride instead of 4-(chloromethyl)benzoyl chloride (84% yield, mp 245-248°C). $^1H$ NMR ($(CD_3)_2CO$) δ 1.35 (s, 3H, H-2), 1.36 (s 3H, H-3), 2.48 (s, 3H, H-30), 2.78 (s, 3H, H-10), 6.67 (d, J = 7.8 Hz, H-8), 6.87 (t of d, J = 7.4 , 1.0Hz, 1H, H-6), 7.08 (d, J = 9Hz, 1H, H-13), 7.16 (app d, J = 7.4Hz, 1H, H-5), 7.20 (t of d, J = 7.8, 1.2Hz, 1H, H-7), 7.36 (d of d, J = 8.8, 2.4Hz, 1H, H-14 ), 7.45 (app d, J = 8.0Hz, 2H, (H-26 & H-28)), 7.84 (s, 1H, H-22), 7.86 (d, J = 8.5Hz, 1H, H-17), 7.96 (d, J = 8.6Hz, 1H, H-16), 8.15 (app d, J = 8.2Hz, 2H, H-25 & H-29)), 8.38 (d, J = 2.4Hz, 1H, H-19). $^{13}C$ NMR ($C_6D_6$)δ: 21.11 (C-2), 25.59 (C-3), 21.79 (C-30), 29.76 (C-10), 52.20 (C-1), 99.48 (C-11), 107.87 (C-8), 114.33 (C-19), 116.91 (C-13), 120.64 (C-17), 120.68 (C-6), 122.02 (C-5), 124.13 (C-21), 128.16 (C-15), 128.63 ( C-7), 129.85 (C-26 & C-28), 129.97 (C-16 & C-20), 130.68 (C-14), 131.01 (C-25 & C-29), 133.07 (C-24), 136.61 (C-4), 144.46 (C-27), 145.44 (C-12), 148.38 (C-9), 151.11 (C-22), 151.41 (C-18), 165.61 (C-23). Mass spectrum (EI): m/z 462 ($M^+$, 85%), 119 (100), 159(93), 447 (30), 158(30). Mass spectrum (HR, EI): m/z 462.1938 ($C_{30}H_{26}N_2O_3$ requires 462.1943).

**Comparative Example 2**

Synthesis of comparison photochromic dye **CE2**

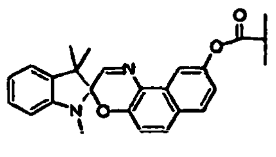

This compound was synthesized as for compound Ex 1 but the acid chloride used was isobutyryl chloride. $^1H$ NMR ($(CD_3)2CO$)δ 1.34, 1.36, 2.16, 2.78, 6.67, 6.87, 7.08, 7.16, 7.20, 7.24, 7.85, 7.85, 7.94, 8.29 ppm.

**Example 4** according to the invention

Poly(methylmethcrylate)-photochromic conjugate **PMMA-SOX**

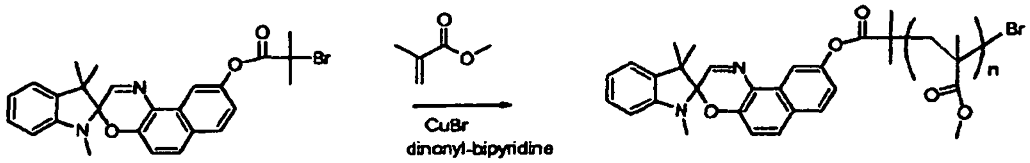

Methyl methacrylate polymer was grown from the initiator **Ex 2** using the following typical ATRP procedure: initial reactants were mixed at a 100:1:1:2 ratio of methyl methacrylate (17.4x10-3 mol), spirooxazine initiator **Ex 2** (17.4x10-5 mol), catalyst (CuBr(17.4x10-5 mol)) and ligand (dinonyl-bipyridine (34.9x10-5 mol)). 2mL of benzene was also added. The components were degassed using a schenk line and reacted in a consistent temperature oil bath at 60°C for the times indicated. The polymers were then precipitated and washed with methanol.

| Line | Sample | Time (mins) | $M_n$[a] | $M_n$ theoretical | % conv[b] | PD[c] | Tg[d] |
|---|---|---|---|---|---|---|---|
| 1 | **PMMA-SOX-1** | 30 | 4579 | 2601 | 21.05 | 1.08 | 105 |
| 2 | **PMMA-SOX-2** | 60 | 6428 | 3830 | 33.33 | 1.11 | 107 |
| 3 | **PMMA-SOX-3** | 180 | 8329 | 5327 | 48.28 | 1.06 | 106 |
| 4 | **PMMA-SOX-4** | 360 | 11550 | 6214 | 57.14 | 1.05 | 109 |
| 5 | **PMMA-SOX-5** | 600 | 13795 | 7311 | 68.09 | 1.04 | 110 |
| 6 | **PMMA-SOX-6** | 840 | 17764 | 8603 | 81.0 | 1.05 | 108 |

a) molecular weight and polydispersity were obtained using gel permeation chromatography (GPC), calibrated with poly(styrene) standards with THF as eluent.
b) Polymer conversions were obtained from 1H NMR spectra recorded on a Bruker AC200 spectrometer.
c) Mw/Mn
d) Thermal analyses of spirooxazine conjugates were done using a Mettler Toledo DSC821. Samples (10mg) were heated from 25°C to 150°C at 10°C a minute under nitrogen.

**Example 5** according to the invention

**Syntheis of spirooxazine-poly(butyl acrylate) conjugates and analysis of photochromic performance.**

Part 1. Poly(butyl acrylate)-photochromic conjugate **PBA-SOX**.

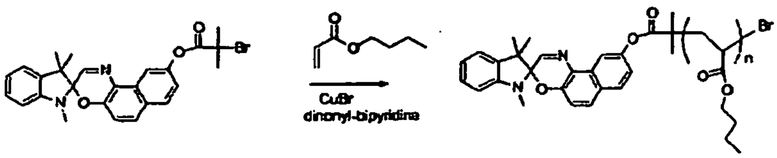


Butyl acrylate polymer was grown from the initiator **Ex 2** under the following typical ATRP procedure: initial reactants were mixed at a 100:1:1:2 ratio of butyl acrylate (17.4x10-3 mol), spirooxazine initiator **Ex 2** (17.4x10-5 mol), catalyst (CuBr(17.4x10-5 mol)) and ligand (dinonyl-bipyridine (34.9x10-5 mol)). The components were degassed using a schenk line and reacted in a consistent temperature oil bath at 90°C for the times indicated. The polymers were then precipitated and washed with methanol.

| Line | Sample | Time (mins) | Mn[a] | Mn theoretical | % conv[b] | PD[c] |
|---|---|---|---|---|---|---|
| 1 | **PBA-SOX-1** | 120 | 2610 | 1929 | 11.2 | 1.09 |
| 2 | **PBA-SOX-2** | 300 | 5850 | 3736 | 25.3 | 1.07 |
| 3 | **PBA-SOX-3** | 420 | 9340 | 5748 | 41.0 | 1.07 |
| 4 | **PBA-SOX-4** | 540 | 11500 | 7517 | 54.8 | 1.08 |
| 5 | **PBA-SOX-5** | 660 | 13700 | 8735 | 64.3 | 1.09 |

(continued)

| Line | Sample | Time (mins) | Mn[a] | Mn theoretical | % conv[b] | PD[c] |
|---|---|---|---|---|---|---|
| 6 | **PBA-SOX-6** | 840 | 16900 | 10132 | 75.2 | 1.10 |

(a) molecular weight and polydispersity were obtained using gel permeation chromatography (GPC), calibrated with poly(styrene) standards with THF as eluent.b) Polymer conversions were obtained from 1H NMR spectra recorded on a Bruker AC200 spectrometer. c) MwlMn

Part 2 Photophysical performance of polystryene, poly(methyl methacrylate) and poly(butyl acrylate) spirooxazine conjugates.

Photochromic analyses were performed on lenses composed of a 1:4 weight ratio of polyethyleneglycol 400 dimethacrylate (9G) and 2,2'-Bis[4-methacryloxyethoxy] phenyl]propane (Nouryset 110) with 0.4% AIBN. The polymer-photochromic conjugates were dissolved in a standard monomer mix of 9G:Nouryset 110 and cured 80°C, 8 hrs) to give clear test lenses. Lenses were made in a mould 14mm dia x 2.6 mm. The molecular weights of the photochromic-dye conjugates are of the purified (precipitated) polymer conjugates and the values in the polymer tables are of the crude molecular weight straight from the reaction mixture.

The test lenses were then evaluated on a light table consisting of a Cary 50 UV-Vis spectrophotometer using a 300 W Oriel Xenon lamp. A combination of Schott WG 320 cut-off filter, UV band pass filter (Edmund Scientific U-360) and water bath were placed in front of the Xenon light source giving a resulting light source of 25 mW per $cm^2$ of UV light (320-400nm). The lamp filters were cooled with water continuously circulating through to a central reservoir. Colouration and decoloration were monitored at the $\lambda_{max}$ of the colored form of the individual photochromic dye at 20°C (temperature controlled via a peltier sample accessory). In the case of the spirooxazines the $\lambda_{max}$ of the coloured form used for monitoring kinetics was 605-610 nm and that was the wavelength used for all spirooxazine examples in this application.

Fade kinetics are reported either as a t1/2 (the time taken for the maximum colouration to reduce to half it's original optical density) or k1, k2 A1/A2 an Ath being various parameters of the biexponential model of fade. The decoloration curves were analyzed using the following biexponential equation:

$$A(t) = A_1 e^{-k_1 t} + A_2 e^{-k_2 t} + A_{th}$$

where A(t) is the optical density at the $\lambda_{max}$, $A_1$ and $A_2$ are contributions to the initial optical density $A_0$, $k_1$ and $k_2$ are the rates of the fast and slow components and $A_{th}$ is coloration when time approaches.

**PS-SOX** thermal decoloration.

| Line | Sample | Mn (Tg °C) | Photochromic agent (mg) | Monomer (g) | A0 | T1/2 (Sec) | K1 (min-1) | K2 (min-1) | $A_1/A_2$ | Ath |
|---|---|---|---|---|---|---|---|---|---|---|
| 1 | **CEI** | - | 0.6 | 1.0 | 0.42 | 16 | 5.41 | 0.57 | 1.55 | 0.07 |
| 2 | **PS-SOX-1** | 1572 (83) | 1.9 | 1.0 | 0.99 | 16 | 2.39 | 0.078 | 3.55 | 0.03 |
| 3 | **PS-OX-2** | 3483 (94) | 4.2 | 1.0 | 1.01 | 26 | 1.72 | 0.060 | 2.81 | 0.06 |
| 4 | **PS-SOX-4** | 4368 (97) | 5.2 | 1.0 | 0.95 | 28 | 1.64 | 0.062 | 2.61 | 0.06 |
| 5 | **PS-SOX-6** | 6433 (102) | 7.7 | 1.0 | 0.84 | 44 | 1.24 | 0.057 | 2.03 | 0.06 |
| 6 | **PS-SOX 7** | 7988 (102) | 9.6 | 1.0 | 0.92 | 49 | 1.36 | 0.065 | 1.89 | 0.08 |
| 7 | **Ex 1** | - | 0.6 | 1.0 | 0.83 | 63 | 1.13 | 0.043 | 1.79 | 0.13 |

**PMMA-SOX** thermal decoloration.

| Line | Sample | Mn | Photochromic agent (mg) | Monomer (g) | $A_0$ | T1/2 (Sec) | K1 (min-1) | K2 (min-1) | A1/A2 | Ath |
|---|---|---|---|---|---|---|---|---|---|---|
| 1 | **CE1** | - | 0.5 | 1.0 | 1.2 | 20 | 3.23 | 0.15 | 2.35 | 0.08 |
| 2 | **PMMA -SOX-1** | 4512 | 5.4 | 1.0 | 1.5 | 63 | 0.81 | 0.049 | 1.95 | 0.04 |
| 3 | **PMMA -SOX-2** | 6910 | 8.3 | 1.0 | 1.6 | 83 | 0.84 | 0.056 | 1.59 | 0.07 |
| 4 | **PMMA SOX-3** | 9605 | 11.5 | 1.0 | 1.7 | 63 | 0.89 | .055 | 1.72 | 0.06 |
| 5 | **PMMA -SOX-4** | 11139 | 13.3 | 1.0 | 1.8 | 66 | 0.81 | .046 | 1.98 | 0.04 |
| 6 | **PMMA -SOX-5** | 14044 | 16.9 | 1.0 | 1.6 | 101 | 0.65 | .040 | 1.51 | 0.07 |
| | **PMMA -SOX-6** | 17492 | 21.0 | 1.0 | 1.7 | 106 | 0.62 | .037 | 1.40 | 0.06 |
| 7 | **Ex 2** | - | 0.6 | 1.0 | 1.2 | 27 | 2.70 | .15 | 2.29 | 0.10 |

**PBA-SOX** thermal decoloration Set 1.

| Line | Sample | Mn | Photochromic agent (mg) | Monomer (g) | $A_0$ | T1/2 (Sec) | K1 (min-1) | K2 (min-1) | A1/A2 | Ath |
|---|---|---|---|---|---|---|---|---|---|---|
| 1 | **CE2** | - | 0.5 | 1.0 | 1.2 | 20 | 3.23 | 0.15 | 2.35 | 0.08 |
| 2 | **PBA-SOX-1** | 2890 | 3.5 | 1.0 | 1.6 | 9 | 4.16 | 0.093 | 6.25 | 0.02 |
| 3 | **PBA-SOX-2** | 5670 | 6.8 | 1.0 | 1.5 | 7 | 4.94 | 0.084 | 8.71 | 0.0 |
| 4 | **PBA-SOX-3** | 9850 | 11.8 | 1.0 | 1.4 | 8 | 4.33 | 0.103 | 5.05 | 0.03 |
| 5 | **PBA-SOX-4** | 12300 | 14.8 | 1.0 | 1.4 | 6 | 5.19 | 0.102 | 6.34 | 0.02 |
| 6 | **PBA-SOX-5** | 14400 | 17.3 | 1.0 | 1.5 | 7 | 5.27 | 0.108 | 8.02 | 0.02 |
| 7 | **PBA-SOX-6** | 17400 | 20.9 | 1.0 | 1.3 | 5 | 6.96 | 0.113 | 7.83 | 0.02 |
| 8 | **Ex 2** | - | 0.6 | 1.0 | 1.2 | 27 | 2.70 | 0.15 | 2.29 | 0.10 |

A second set of lenses were made using the PBA-SOX-1 to 6 in the standard formulation A and gave the same T1/2 value to within 2 seconds.

**PBA-SOX** thermal decoloration Set 2.

| Sample | $M_n$[d] (PD) | Dye Conc (mg/g) | $T_{1/2}$ (sec) | $A^{0(c)}$ | $k_1$ ($min^{-1}$)[d] | $A_1$[d] | $k_2$ ($min^{-1}$)[d] | $A_2$[d] | $A_{th}$[d] |
|---|---|---|---|---|---|---|---|---|---|
| **CE2** | - | 0.5 | 21 | 1.15 | 2.1 | 0.64 | 0.06 | 0.22 | 0.04 |
| **PBA- SOX-1** | 2900 (1.11) | 3.47 | 12 | 1.09 | 3.3 | 0.74 | 0.10 | 0.13 | 0.02 |
| **PBA- SOX-2** | 5600 (1.09) | 6.8 | 9 | 1.04 | 4.1 | 0.75 | 0.12 | 0.11 | 0.01 |
| **PBA- SOX-3** | 9900 (1.07) | 11.82 | 10 | 1.03 | 3.5 | 0.69 | 0.10 | 0.15 | 0.02 |
| **PBA- SOX-4** | 12300 (1.08) | 14.76 | 7 | 1.03 | 5.0 | 0.78 | 0.12 | 0.11 | 0.01 |
| **PBA- SOX-5** | 14400 (1.08) | 17.28 | 8 | 0.96 | 4.6 | 0.78 | 0.11 | 0.12 | 0.02 |
| **PBA- SOX-6** | 17400 (1.10) | 20.88 | 5 | 0.97 | 6.0 | 0.74 | 0.12 | 0.11 | 0.02 |

[a] Decolorisation monitored at λmax of the coloured form of the dye (605nm) at 20 °C after irradiation at 300-400 nm. [b] Poly(butyl acrylate) equivalents using Mark-Houwink parameters on polystyrene calibration standards. [c] Measured absorbance of each system before normalization. The absorbance values differ slightly from the previous table as the irradiation beam line was altered. [d] Kinetic parameters of bi-exponential decolouration expression.

The effect of chain length on fade speed was examined for a number of the above prepared compounds in different matrices.

Figures 1 to 4 illustrate the flexibility offered by this method. It can be seen that control over photochromic switching speed is achieved by the nature and length of the polymer/oligomer attached to the dye. In all cases the polymer-dye conjugate is in a test lens of 9G:nouryset 110 1:4 where the polymer dye conjugate has been dissolved in the monomers (9G& nouryset110) and then cured to give a rigid test lens.

Figure 1 shows an embodiment being not part of the invention and plots the fade speed of PS-SOX by length/Tg of polystyrene polymeric substituent. As the polymeric substituent has a high Tg (above room temperature), fade speed slows down with increasing length/Tg of the polymeric substituent.

Thus Figure 1 shows that poly(styrene) substituent will cause the photochromic dye to fade to the clear state more slowly than an electronically identical control dye (CE1) in a test lens. The speed can then be further fine tuned by selecting the length of poly(styrene). Fade speed clear decreases as the poly(styrene) chain length increases. Without wishing to be bound by theory, this is likely do to both the degree or efficiency of encapsulation and increase in Tg with increasing chain length.

Figure 2 shows an embodiment being not part of the invention and plots the coloration speed of PS-SOX for different length/Tg of polystyrene polymeric substituent. As the polymeric substituent has a high Tg (above room temperature), coloration speed slows down with increasing length/Tg of the polymeric substituent.

Thus Figure 2 shows that coloration rates are similarly effected with poly(styrene) chains slowing the speed of switching as compared to the control dye (CE1). Without wishing to be bound by theory, the longer the polystyrene chain the better the encapsulation, the higher the Tg and hence increasingly slower coloration is observed. The photochromic initiator (1) is as slow as the high molelcuar weight polystyrene-spirooxazine conjugate as it under goes chain transfer with polymerizing host matrix. Thus it is actually bonded to the crosslinked network and no long an individual free small molecule. CE1 is the appropriate comparison dye as it will not react with the matrix.

Figure 3 shows an embodiment being not part of the invention and plots the fade speed of PMMA-SOX and BA-SOX for different length/Tg of polymeric substituent. When the polymeric substituent has Tg greater than room temperature then fade speed becomes slower (ie PMMA) than the control. When the polymeric substituent has Tg below room temperature then the fade speed becomes faster than the control (CE2). Moreover the length of the polymeric substituent provides further fine tuning control see curves 4 and 5). Thus the fade speed can be precisely controlled for a given matrix.

Thus Figure 3 shows results for fade speed of both poly(methyl methacrylate) and poly(butyl acrylate) substituted photochromic dyes in test lenses. Poly(methyl methacrylate) substituted spirooxazine with its high Tg, slows switching speeds of the photochromic dye. In this case, Tg of the conjugate shows little variation but there is still a reasonable correlation of increasing chain length with decreasing fade speed. This suggests that encapsulation of the dye increasing with increasing chain length. In the case of poly(butyl acrylate) substituted spirooxazine, switching speed is faster than

the control dye as the attached polymer is now providing a low Tg environment (poly(butyl acrylate) has a reported Tg of around -54°C). Fine tuning of the fade speed is readily achieved by the altering the length of the poly(butyl acrylate). Without wishing to be bound by theory, increasing chain length increases the degree of encapsulation and fade speed increases with increasing chain length.

Figure 4 shows an embodiment being not part of the invention and plots the of coloration speed of BA-SOX for different length/Tg of polymeric substituent The polymeric substituent has a Tg below room temperature then the coloration speed becomes faster than the control (CE2) due to the greater mobility provided by the flexible polymeric substituent. Moreover the length of the polymeric substituent provides further fine tuning control. Thus the coloration speed can be precisely controlled for a given matrix.

Thus Figure 4 illustrates the increase in coloration speed of the photochromic dye by the attachment of poly (butyl acrylate). It is easily seen that the colouration is significantly faster than the control dye and rapidly achieves a steady state optical density. This is unlike the control dye that shows conventional slow asymptotic approach to a steady state value. Fine tuning of the coloration speed is achieved by the altering the length of the poly(butyl acrylate) as shown.

This kind and degree of control of photochomic switching speeds is without precedent.

**Example 6** according to the invention

RAFT terminated poly(butyl acrylate)-spirooxazine conjugates.

Part 1.

Synthesis of RAFT photochromic initiator

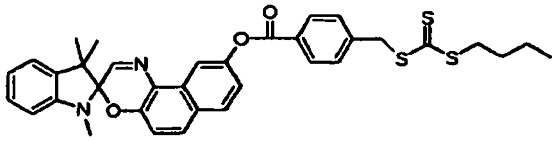

Synthesis of RAFT photochromic initiator as describe in Ex 3

Part 2.

Synthesis of RAFT terminated poly(butyl acrylate)-spirooxazine.

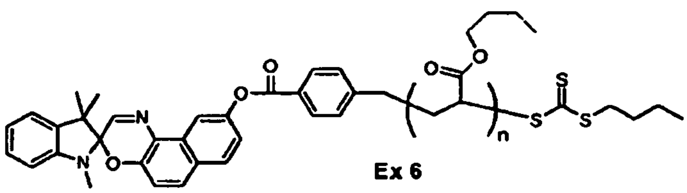

Ex 6

Butyl acrylate was grown form the initiator Ex 3 under the following typical RAFT procedure: initial reactants were mixed at a 80:1 ratio of butyl acrylate (0.057 mol) to RAFT spirooxazine initiator Ex 3 ($6.99 \times 10^{-4}$mol). Seven mL benzene was added to each reaction, five weight percent of AIBN relative to the RAFT agent ($5.7 \times 10^{-3}$mol) was also added. The components were degassed using a schenk line and reacted in a constant oil temperature bath at 60°C for the times indicated. The polymers were then precipitated and washed with methanol.

| Line | Sample | Time | Mn | PD |
|---|---|---|---|---|
| 1 | **Ex 6a** | 180 | 5100 | 1.10 |
| 2 | **Ex 6b** | 420 | 13000 | 1.13 |

**Comparative Example 3.**

RAFT photochromic initiator

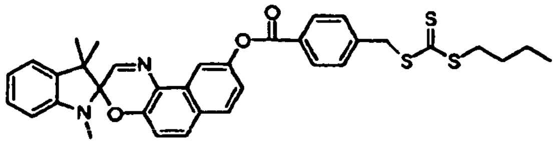

Synthesised as described in Example 6 Part 1 and Ex 3..

*Example 7* according to the invention

[0245] Synthesis of RAFT terminated bis(poly(butylacryale)-spirooxazine.

Part 1. Synthesis of 3,5-bis(2-bromopropionyloxy)benzoic acid

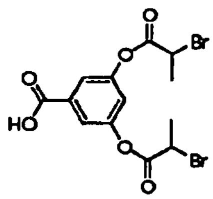

3.5-Dihydroxybenzoic acid (2.0 g, 12.98 mmol) and $K_2CO_3$ (8.97 g, 64.88 mmol) were dissolved in a mixture of water (32 mL) and *i*-PrOH (12 mL). The mixture was then cooled to -20°C and 2-bromopropionyl chloride (4.89 g, 28.55 mmol) added dropwise over 15 minutes with vigorous stirring. Stirring was then continued for an additional 20 minutes whilst maintaining the temperature between -20°C to -15°C. The reaction mixture was quenched by the slow addition of 6M aqueous HCl (17 mL) and the resulting white solid filtered, washed with water and dried in air. The crude product (4.46 g) was recrystallised from $Et_2O$/hexane. $^1H$ NMR (400 MHz, $CDCl_3$) $\delta$ 7.80 (d, *J* = 2.20 Hz, 2H, ArH), 7.29 (t, *J* = 2.20 Hz, 1H, ArH), 4.60 (q, *J* = 6.95 Hz, 2H, CH), 1.96 (d, *J* = 6.95 Hz, 6H, $CH_3$). $^{13}C$ NMR (100 MHz, $CDCl_3$) $\delta$ 170.1, 168.1, 150.8, 131.6, 120.8, 120.1, 39.0, 21.3.

Part 2.

Synthesis of 3,5-bis(2-(*n*-butyltrithiocarbonato)propionyloxy) benzoic acid

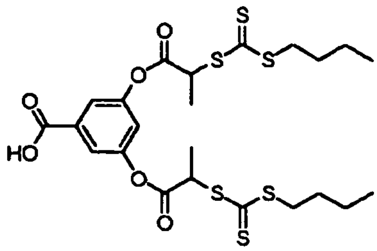

To a mixture of butanethiol (2.13 g, 0.0236 mol) and $CS_2$ (17.95 g, 0.236 mol) in chloroform (25 mL) was added triethylamine (2.39 g, 0.0236 mol) with stirring under nitrogen. The mixture was stirred for 4 hours at room temperature after which a solution comprised of 3,5-bis(2-bromopropionyloxy)benzoic acid as made in part 1 (2.5 g, 0.0059 mol) and

triethylamine (0.60 g, 0.0059 mol) in chloroform (10 mL) was added. The mixture was stirred at room temperature for a further 18 hours, washed twice with 1 M aqueous HCl then water and dried with $MgSO_4$. The solvent was evaporated *in vacuo* and the oily residue purified by column chromatography using silica gel and eluting with EtOAc/hexane (2:5) to give a yellow oil which slowly solidifies on standing (1.89 g, 54%). $^1$H NMR (200 MHz, $CDCl_3$) δ 7.74 (d, *J* = 2.19 Hz, 2H, ArH), 7.21 (t, *J* = 2.19 Hz, 1H, ArH), 4.99 (q, *J* = 7.31 Hz, 2H, CH), 3.40 (t, *J* = 7.31 Hz, 4H, $SCH_2$), 1.74 (d, *J* = 7.31 Hz, 6H, $CHCH_3$, overlap with quintet, *J* = 7.31 Hz, 4H, $SCH_2CH_2$), 1.44 (sextet, *J* = 7.31 Hz, 4H, $CH_2CH_3$), 0.94 (t, *J* = 7.31 Hz, 6H, $CH_2CH_3$). $^{13}$C NMR (50 MHz, $CDCl_3$) δ 221.6, 170.1, 169.2, 150.9, 131.4, 120.8, 120.5, 47.6, 37.2, 29.8, 22.0, 16.3, 13.5.

Part 3.

Synthesis of 3,5-bis(2-(*n*-butyltrithiocarbonato)propionyloxy)benzoyl chloride

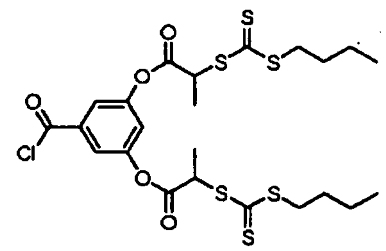

3,5-Bis(2-(*n*-butyltrithiocarbonato)propionyloxy)benzoic acid as made in part 2 (1.87 g, 3.15 mmol) was dissolved in $CH_2Cl_2$ (25 mL) together with one drop of DMF. Thionyl chloride (1.87 g, 15.75 mmol, 5 mol. eq.) was then added under nitrogen and the mixture refluxed for 3 hours. The solvent and excess reagent were evaporated *in vacuo* with subsequent addition of 1,2-dichloroethane and evaporation once more to remove residual thionyl chloride *via* azeotrope. The product is a deep-yellow viscous oil which is used without further purification. Analysis by NMR indicated quantitative conversion to the acid chloride. $^1$H NMR (200 MHz, $CDCl_3$) δ 7.73 (d, *J* = 1.83 Hz, 2H, ArH), 7.27 (t, *J* = 1.83 Hz, 1H, ArH), 4.96 (q, *J* = 7.31 Hz, 2H, CH), 3.37 (t, *J* = 7.31 Hz, 4H, $SCH_2$), 1.72 (d, *J* = 7.31 Hz, 6H, $CHCH_3$, overlap with quintet, *J* = 7.31 Hz, 4H, $SCH_2CH_2$), 1.42 (sextet, *J* = 7.31 Hz, 4H, $CH_2CH_3$), 0.92 (t, *J* = 7.31 Hz, 6H, $CH_2CH_3$). $^{13}$C NMR (50 MHz, $CDCl_3$) δ 221.4, 168.9, 166.3, 150.9, 134.8, 121.8, 121.5, 47.4, 37.0, 29.6, 21.8, 16.0, 13.4.

Part 4

Synthesis of spirooxazine bis(RAFT) initiator

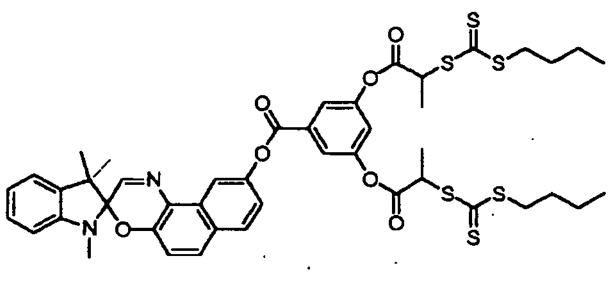

To a solution of hydroxy-1,3,3-trimethylspiro[indoline-2,3'-[2,1-b][1,4]oxazine (0.903 g, 2.62 mmol) in $CH_2Cl_2$ (10 mL) was added triethylamine (0.53 g, 5.24 mmol) dropwise with stirring under nitrogen. The mixture was cooled in an ice bath and a solution of 3,5-bis(2-(*n*-butyltrithiocarbonato)propionyloxy)benzoyl chloride as made in part 3 (1.93 g, 3.15 mmol) in $CH_2Cl_2$ (10 mL) added slowly *via* syringe. The reaction mixture was then allowed to warm to room temperature and stirred for an additional 30 minutes after which it was washed with 1M aqueous HCl, water, aqueous $NaHCO_3$, water then brine. The organic layer was dried with $MgSO_4$, the solvent evaporated and the resulting residue purified by column

chromatography using silica gel and eluting with EtOAc/hexane (2:5) giving a yellow viscous oil (2.30 g, 95%). $^1H$ NMR (400 MHz, $d_6$-acetone) δ 8.43 (d, *J* = 2.20 Hz, 1H), 7.95 (d, *J* = 2.20 Hz, slight overlap), 7.93 (d, *J* = 9.15 Hz, slight overlap), 7.82 (d, *J* = 8.78, 1H, overlapping peak), 7.82 (s, 1H), 7.42 (t, *J* = 2.20 Hz, 1H), 7.39 (dd, *J* = 8.78, 2.20 Hz, 1H), 7.19 (t, *J* = 7.68 Hz, 1H), 7.14 (d, *J* = 6.95 Hz, 1H), 7.06 (d, *J* = 8.78 Hz, 1H), 6.87 (t, *J* = 7.32 Hz, 1H), 6.64 (d, *J* = 7.68 Hz, 1H), 5.10 (q, *J* = 7.32 Hz, 2H), 3.44 (t, *J* = 7.32 Hz, 4H), 2.76 (s, 3H), 1.78 (d, *J* = 7.32 Hz, 6H), 1.70 (quintet, 7.32 Hz, 4H), 1.43 (sextet, *J* = 7.32 Hz, 4H), 1.34 (d, 2.20 Hz, 6H), 0.92 (t, *J* = 7.32 Hz, 6H). $^{13}C$ NMR (100 MHz, $d_6$-acetone) δ 224.31, 170.85, 165.00, 153.30, 153.08, 151.78, 149.49, 146.68, 137.64, 133.86, 133.57, 131.98, 131.44, 129.75, 129.32, 124.84, 123.24, 122.69, 122.56, 121.66, 121.24, 118.52, 114.77, 108.99, 100.73, 53.52, 49.63, 38.61, 31.72, 30.78, 26.73, 23.62, 21.97, 17.56, 14.86.

Part 5.

Synthesis of RAFT terminated bis(poly(butylacrylate))-spirooxazine.

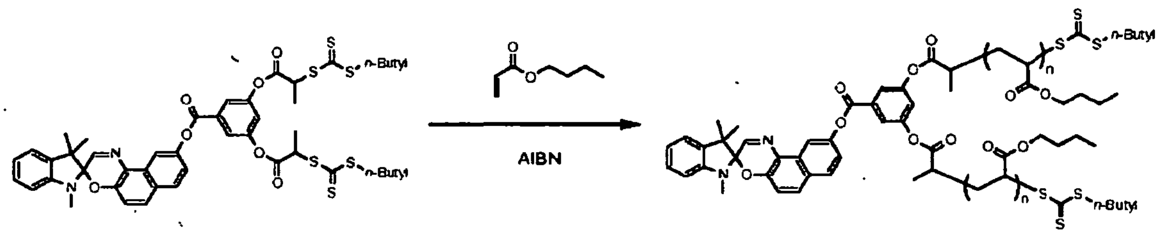


Six ampoules each containing spirooxazine bis(RAFT) initiator as made in part 4 (0.1437 g, 0.156 mmol), butyl acrylate (2.0 g, 15.604 mmol), AIBN (2.56 mg, 0.0156 mmol) and benzene (3 mL) were degassed with four freeze/pump/thaw cycles and then reacted in a consistent temperature oil bath at 60°C for the times indicated. The polymers were purified by firstly removing excess butyl acrylate *via* evaporation and then precipitation from $CH_2Cl_2$/methanol.

| Line | Sample | Time (mins) | $M_n$[a] | $M_n$ theoretical | Conversion (%) | PD |
|---|---|---|---|---|---|---|
| 1 | **Ex. 7a** | 30 | 1176 | 1716 | 6.2 | 1.05 |
| 2 | **Ex 7b** | 60 | 2780 | 3331 | 18.8 | 1.09 |
| 3 | **Ex 7c** | 90 | 5180 | 5548 | 36.1 | 1.08 |
| 4 | **Ex 7d** | 120 | 6693 | 6945 | 47.0 | 1.06 |
| 5 | **Ex 7e** | 181 | 9428 | 9226 | 64.8 | 1.06 |
| 6 | **Ex 7f** | 300 | 12011 | 11367 | 81.5 | 1.06 |

[a] number molecular weight with respect to polystyrene standards.

**Comparative Example 4.** Spirooxazine bis(RAFT) initiator

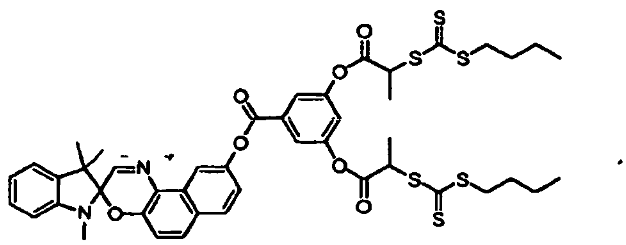

This compound was synthesised as described in Example 7 Part 1-4.

**Example 8** according to the invention

Thiol terminated poly(butyl acrylate)-spirooxazine

Part 1. Synthesis of 2-bromopropionyloxy-functionalised spirooxazine

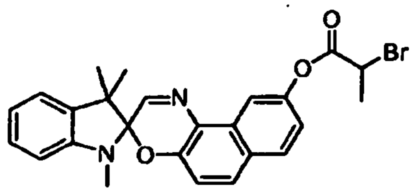

9'-Hydroxy-1,3,3-trimethylspiro[indoline-2,3'-[2,1-b][1,4]oxazine (2.0 g, 5.81 mmol) was added to dry $CH_2Cl_2$ (20 mL) and then triethylamine (1.62 mL, 11.61 mmol) added under nitrogen. The mixture was cooled in an ice bath and 2-bromopropionylbromide (1.38 g, 6.39 mmol) added dropwise with stirring. The mixture was stirred for 30 minutes with cooling and then an additional 1 hour at room temperature after which it was washed with 0.5M aqueous HCl, water, 0.5M aqueous NaOH, water and brine followed by drying with $MgSO_4$. Some hexane was added to the solution and then passed through a plug of silica gel to remove impurities. The solvent was evaporated and the resulting deep green glassy solid recrystallised from acetone/water to yield a yellow microcrystalline powder (2.22 g, 80%). $^1H$ NMR (400 MHz, $d_6$-acetone) δ 8.29 (d, *J* = 2.56 Hz, 1H), 7.93 (d, *J* = 9.15 Hz, 1H), 7.84 (s, 1H, overlap), 7.83 (d, *J* = 9.15 Hz, 1H), 7.24 - 7.14 (m, overlap, 3H), 7.07 (d, *J* = 8.78 Hz, 1H), 6.87 (t, *J* = 7.68, 1H), 6.66 (d, *J* = 7.68 Hz, 1H), 4.94 (q, *J* = 6.95 Hz, 1H, CH), 2.77 (s, 3H, $CH_3N$), 1.98 (d, *J* = 6.95 Hz, 3H, $CH_3CH$), 1.35 (d, *J* = 8.05 Hz, 6H, gem $CH_3$).

Part 2.

2-(n-butyltrithiocarbonato)propionyloxy-functionalised spirooxazine

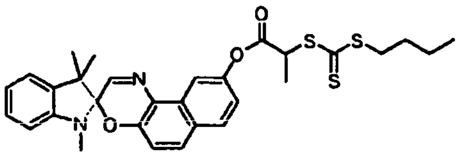

Butanethiol (0.85 g, 9.39 mmol), carbon disulfide (7.15 g, 93.9 mmol) and triethylamine (0.95 g, 9.39 mmol) were added to $CHCl_3$ (15 mL) under nitrogen and allowed to stir at room temperature for 3 hours. A solution of the 2-bromopropionyloxy-functionalised spirooxazine as made in part 1 (1.50 g, 3.13 mmol) in $CHCl_3$ (10 mL) was then added and the mixture stirred for an additional 18 hours. The reaction mixture was then washed twice with 1M aqueous HCl, water and brine then dried with $MgSO_4$. Evaporation of the solvent gave the crude product which was purified by column chromatography using silica gel and eluting with EtOAc/hexane (1:3), giving a deep green viscous oil (1.49 g, 84%). $^1H$ NMR (400 MHz, $d_6$-acetone) δ 8.27 (d, *J* = 2.20 Hz, 1H), 7.90 (d, *J* =8.78 Hz, 1H), 7.83 (s, 1H, overlap), 7.82 (d, overlap, 1H), 7.20 (dd, overlap, *J* = 8.78, 2.20 Hz, 1H), 7.19 (td, overlap, *J* = 7.68 Hz, 1.46, 1H), 7.15 (d, *J* = 7.32 Hz, 1H), 7.06 (d, *J* = 8.78 Hz, 1H), 6.87 (t, *J* = 7.68 Hz, 1H), 6.66 (d, *J* = 8.05 Hz, 1H), 5.13 (q, *J* = 7.32 Hz, 1H, CH), 3.49 (t, *J* = 7.32 Hz, 2H, $SCH_2$), 2.77 (s, 3H, $CH_3N$), 1.82 (d, *J* = 7.32 Hz, 3H, $CH_3CH$), 1.74 (pent., *J* = 7.32 Hz, 2H, $SCH_2CH_2$), 1.47 (sex., *J* = 7.32 Hz, 2H, $CH_2CH_3$), 1.35 (d, *J* = 8.42 Hz, 6H, gem-$CH_3$), 0.95 (t, *J* = 7.32 Hz, 3H, $CH_2CH_3$). $^{13}C$ NMR (100 MHz, $d_6$-acetone) δ 222.94, 169.73, 151.57, 150.19, 147.95, 145.11, 136.08, 131.94, 130.39, 129.87, 128.17, 127.73, 123.18, 121.67, 120.08, 119.33, 116.93, 112.92, 107.42, 99.21, 51.97, 48.27, 36.92, 30.18, 29.15, 25.09, 22.02, 20.32, 16.11, 13.22.

Part 3.

Synthesis of Spirooxazine-polybutylacrylate conjugate *via* RAFT polymerisation

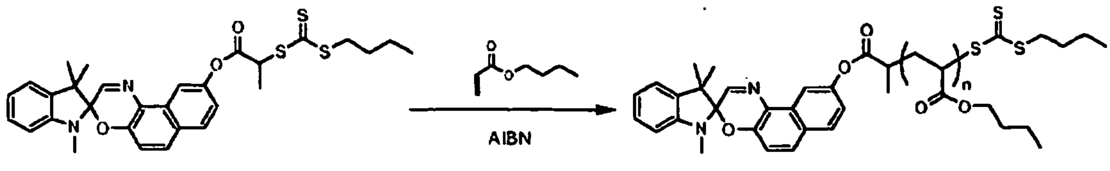


An ampoule containing 2-(*n*-butyltrithiocarbonato)propionyloxy-functionalised spirooxazine as made in part 2 (0.110 g, 0.1945 mmol), butyl acrylate (1.872 g, 14.607 mmol, 75 molar eq.), AIBN (1.6 mg, 0.0097 mmol) and benzene (4 mL) was degassed with four freeze/pump/thaw cycles and then reacted in a consistent temperature oil bath at 60°C for 4.5 hours. The polymers were purified by firstly removing excess butyl acrylate via evaporation and then precipitation from $CH_2Cl_2$/methanol. Analysis by GPC determined the molecular weight ($M_n$ = 5,728) and polydispersity (1.09). $^1H$ NMR (400 MHz, $d_6$-acetone) δ 8.26 (s, 1H), 7.89 (d, *J* = 8.78 Hz, 1H), 7.83 (s, overlap, 1H), 7.82 (d, overlap, 1H), 7.20 (m, overlap, 2H), 7.15 (d, *J* = 7.32 Hz, 1H), 7.05 (d, *J* = 8.78 Hz, 1H), 6.87 (t, *J* = 7.32 Hz, 1H), 6.66 (d, *J* = 7.68 Hz, 1H), 4.87 (m, 1H), 4.07 (br m, polymer butyl $OCH_2$), 3.44 (t, *J* = 7.32 Hz, 2H, $SCH_2$), [2.80, 2.78, 2.76 (three singlets, 6H, spirooxazine gem-$CH_3$)], 2.38 (br m, polymer), 1.93 (br sextet, polymer), 1.65 (br m, polymer), 1.42 (br m, polymer), 0.96 (br t, polymer butyl $CH_3$).

Part 4.

Synthesis of thiol terminated poly(butyl acrylate)-spirooxazine.

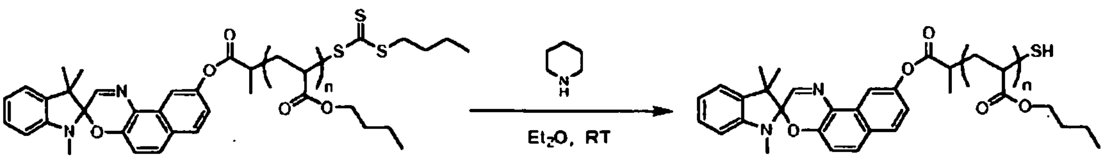


Ex 8

The polymer conjugate as made in part 3 with terminal *n*-butyltrithiocarbonate (0.15 g) was dissolved in diethylether (10 mL) and a large excess of piperidine (0.15 mL, ca. 100 mol eq.) added. The mixture was stirred at room temperature for one hour after which it was washed with 1 M aqueous HCl, water and brine. The ether layer was dried with $MgSO_4$ and the solvent gently evaporated *in vacuo* (≤ 35°C). The polymer was then dissolved in $CH_2Cl_2$ and loaded onto a short silica gel column which was then eluted with $CH_2Cl_2$ to remove the byproducts. The polymer was removed by subsequent elution with diethylether and the solvent evaporated *in vacuo.* The purified polymer was analysed by $^1H$ NMR which showed the absence of the characteristic *n*-butyltrithiocarbonate (-$SCH_2$-) triplet signal at 3.44 ppm and hence its successful removal. Analysis by GPC showed a retention of molecular weight ($M_n$ = 5,997) with respect to the starting polymer, however with the presence of *ca.* 10% combination product presumably as a result of disulfide formation. The polydispersity was 1.13. $^1H$ NMR (400 MHz, $d_6$-acetone) δ 8.26 (s, 1H), 7.89 (d, *J* = 8.78 Hz, 1H), 7.83 (s, overlap, 1H), 7.82 (d, overlap, 1H), 7.20 (m, overlap, 2H), 7.15 (d, *J* = 7.32 Hz, 1H), 7.05 (d, *J* = 8.78 Hz, 1H), 6.87 (t, *J* = 7.32 Hz, 1H), 6.66 (d, *J* = 7.68 Hz, 1H), 4.07 (br m, polymer butyl $OCH_2$), 3.37 (br, 1H), [2.80, 2.78, 2.76 (three singlets, 6H, spirooxazine gem-$CH_3$)], 2.38 (br m, polymer), 1.93 (br sextet, polymer), 1.65 (br m, polymer), 1.42 (br m, polymer), 0.96 (br t, polymer butyl $CH_3$).

**Comparative Example 5** Spirooxazine RAFT initiator.

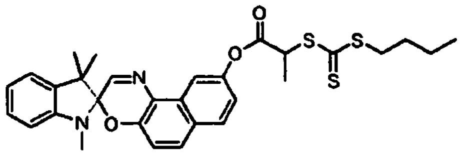

This compound was synthesised in the manner described in example 6 part 1-2.

**Test Lenses**

**Monomer Formulations**

**Formulation A.** Formulation A consisted of 1:4 weight ratio of polyethyleneglycol 400 dimethacrylate ("9G" NK Esters) and 2,2'-Bis[4-methacryloxyethoxy] phenyl]propane ("Nouryset 110" Akzo) with 0.4% AIBN.

**Formulation B.** Formulation B consisted of 1:3:16 weight ratio of polyethyleneglycol 400 dimethacrylate ("9G" NK Esters), polyethyleneglycol (600) diacrylate (Aldrich 45,500-8) and 2,2'-Bis[4-methacryloxyethoxy] phenyl]propane ("Nouryset 110" Akzo) with 0.4% AIBN.

**Formulation C** Formulation C consisted of polyethyleneglycol (600) diacrylate (Aldrich 45,500-8) and 2,2'-Bis [4-acryloxyethoxy] phenyl]propane ("Bisphenol A ethoxylate (1EO/phenol) diacrylate" Aldrich 41.355-0) with 0.4% AIBN.

*Example 9* according to the invention

**(Monomer formulation B)**

This example was carried out in the manner described in example 5 part 2 except that the monomer formulation used was monomer formulation B (1:3:16 weight ratio of polyethyleneglycol 400 dimethacrylate ("9G" NK Esters), polyethyleneglycol (600) diacrylate (Aldrich 45,500-8) and 2,2'-Bis[4-methacryloxyethoxy] phenyl]propane ("Nouryset 110" Akzo) with 0.4% AIBN). The acrylate content improves reaction of the RAFT terminated poly(butyl acrylate) photochromic conjugates with the monomer formulation. The RAFT groups will react as that is how the polymer conjugate was made (RAFT agent with acrylate monomer as described in examples 6 and 7)

| Line | Sample | Mn | Photochromic Agent (mg) | Monomer (g) | Ao[a] | $T_{1/2}$[a] (Sec) | $T_{3/4}$[a] (Sec) |
|---|---|---|---|---|---|---|---|
| 1 | **CE 3** | 612 Control | 0.85 | 1.11 | 0.73 | 59 | 458 |
| 2 | **Ex 6a** | 5100 (pBA eqiv) | 7.46 | 1.20 | 1.04 | 16 | 74 |
| 3 | **CE 4** | 920 Control | 1.68 | 1.50 | 0.73 | 67 | 521 |
| 4 | **Ex 7c** | 5180 (pSty eqiv) | 10.08 | 1.50 | 1.08 | 11 | 33 |
| 5 | **Ex 8** | 5997 (pSty equiv) | 11.67 | 1.50 | 1.4 | 10 | 29 |
| 6 | **CE 5** | 564 | 1.10 | 1.50 | 1.2 | 65 | 491 |

a. average of three measurements.

It can be seen in this example that a low Tg tether as illustrated by poly(butyl acrylate) tether allows the photochromic dye (Ex 6a, 7c,8) to switch faster than the control dyes (CE 3, CE 4, CE5) that do not possess the tether. Furthermore attachment the dye (Ex 5c) to the center of the poly(butyl acrylate) provides faster switching than when the dye (Ex 4a) is placed at the end of the poly(butylacrylate).

**Example 10** according to the invention

**(Monomer formulation C)**

This example was carried out in the manner described in example 5 part 2 except that the monomer formulation used was monomer formulation C (1:4 polyethyleneglycol (600) diacrylate (Aldrich 45,500-8) and 2,2'-Bis[4-acryloxyethoxy] phenyl]propane ("Bisphenol A ethoxylate (1EO/phenol) diacrylate" Aldrich 41,355-0) with 0.4% AIBN). The acrylate content improves reaction of the RAFT terminated poly(butyl acrylate) photochromic conjugates with the monomer formulation. The RAFT groups will react as that is how the polymer conjugate was made (RAFT agent with acrylate monomer as described in examples 6 and 7)

| Line | Sample | Mn | Photochromic Agent (mg) | Monomer (g) | Ao | $T_{1/2}$ (Sec) | $T_{3/4}$ (Sec) |
|---|---|---|---|---|---|---|---|
| 1 | **CE 3** | 612 Control | 1.54 | 2.01 | 1.00 | 30 | 189 |
| 2 | **Ex 6a** | 5100 (p8A eqiv) | 6.06 | 1.02 | 1.20 | 15 | 47 |
| 3 | **CE 4** | 920 Control | 1.7 | 1.76 | 0.83 | 49 | 342 |
| 4 | **Ex 7c** | 5180 (pSty eqiv) | 7.36 | 1.29 | 1.15 | 15 | 42 |

It can be seen in this example that a low Tg tether as illustrated by poly(butyl acrylate) allows the photochromic dye (Ex 6a, 7c) to switch faster than the control dyes (CE 3, CE 4) that do not possess the tether. Furthermore attachment the dye (Ex 7c) to the center of the poly(butyl acrylate) provides faster switching than when the dye (Ex 6a) is placed at the end of the poly(butylacrylate). However as the matrix is softer than that of example 9, the difference between the Ex 6a and Ex 7 is smaller.

*Example 11* according to the invention

**Spirooxazine-polymer conjugates with random copolymers comprised of n-hexyl and isobornyl acrylate.**

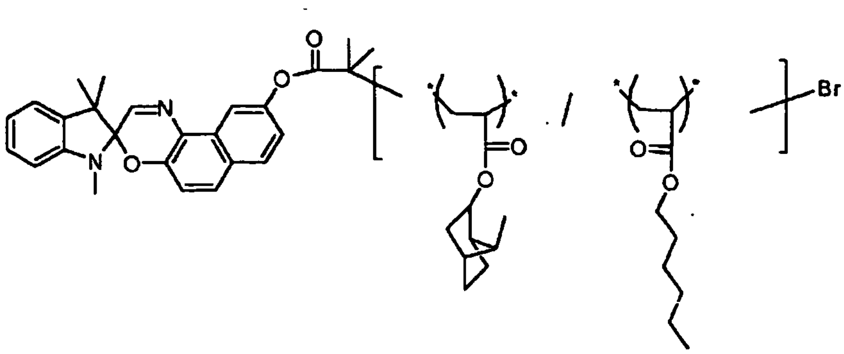

The polymers were synthesised in the manner described in Example 4 using ATRP initiator described in Example 2. In this case the monomers used were n-hexyl acrylate and isobornyl acrylate in the amounts tabulated below. The polymers were synthesised to have approximately the same number of monomer units in each example. The Tg of the polymer was then changed by changing the proportion of n-hexyl and isobornyl acrylate in the monomer formulation. Pure n-hexyl acrylate polymers are of low Tg (-57 ) and increasing amounts of isobomyl acrylate increase the Tg of the polymer.

| Line | Polymer No. | Ratio of monomer components (hexyl: isobornyl) | Molecular Weight (NMR conv)[a] | Molecular Weight (GPC)[b] | Chain Length (NMR)[c] | Polydispersity (GPC)[d] |
|---|---|---|---|---|---|---|
| 1 | **Ex 11a** | 100:0 | 10872 | 12208 | 70 | 1.09 |
| 2 | **Ex 11b** | 75:25 | 9886 | 9259 | 60 | 1.15 |
| 3 | **Ex 11c** | 50:50 | 11859 | 10137 | 64 | 1.16 |
| 4 | **Ex 11d** | 25:75 | 13025 | 10130 | 67 | 1.15 |

(continued)

| Line | Polymer No. | Ratio of monomer components (hexyl: isobornyl) | Molecular Weight (NMR conv)[a] | Molecular Weight (GPC)[b] | Chain Length (NMR)[c] | Polydispersity (GPC)[d] |
|---|---|---|---|---|---|---|
| 5 | **Ex 11e** | 0:100 | 12519 | 9056 | 60 | 1.16 |

a) molecular weight calculated using NMR with the following equation: Mn = $(mW_{monomer}$ [monomer]/[initiator] % conversion$)_{monomer\ a}$ + $(mW_{monomer}$ [monomer]/[initiator] % conversion$)_{monomer\ b}$. b) molecular weight calculated by GPC c) chain length = ([monomer]/[initiator] % conversion$)_{monomer\ a}$ + ([monomer]/[initiator] % conversion$)_{monomer\ b}$. d) polydispersity was calculated using GPC.

The polymers were then added to monomer formulation A and cure in the manner described in example 5 part 2. Concentration of the dye-polymer conjugate was kept constant at 1.2 x $10^{-3}$ mmoles/gram.

**Photophysical analysis of spirooxazine -n-hexyl and isobornyl acrylate conjugates.**

| Line | Sample | Ratio of monomers (hex: iso) | Photochromic agent (mg) | Lens monomer (g) | $A_c$ | $t_{1/2}$ (s) | $K_1$ ($min^{-1}$) | $A_1$ | $K_2$ ($min^{-1}$) | $A_2$ | $A_{1b}$ |
|---|---|---|---|---|---|---|---|---|---|---|---|
| 1 | **Ex 2 (Initiator)** | - | 0.5 | 1.000 | .82 | 38 | 1.23 | 0.59 | 0.058 | 0.23 | 0.05 |
| 2 | **Ex 11a** | 100-0 | 13.05 | 1.000 | 1.03 | 5 | 6.99 | 0.83 | 0.122 | 0.09 | 0.01 |
| 3 | **Ex 11b** | 75-25 | 11.86 | 1.000 | 0.95 | 10 | 3.74 | 0.71 | 0.095 | 0.14 | 0.02 |
| 4 | **Ex 11c** | 50-50 | 14.23 | 1.000 | 1.21 | 21 | 1.92 | 0.65 | 0.076 | 0.19 | 0.02 |
| 5 | **Ex 11d** | 25-75 | 15.63 | 1.000 | 0.74 | 143 | 0.57 | 0.44 | 0.044 | 0.34 | 0.08 |
| 6 | **Ex 11e*** | 0-100 | 15.02 | 1.000 | 0.27 | 178 | 0.51 | 0.40 | 0.040 | 0.35 | 0.10 |

* some phase separation observed.

In this case the polymer length and polarity is kept relatively constant. The Tg of the polymer is adjusted by the adjusting the relative amount low and high Tg monomers. It is clearly seen that as the amount of isobomyl acrylate is increased in the polymer attached to the dye, the fade speed become increasingly slower. Thus control of photochromic performance is obtained through control over the composition of the attached polymeric substituent. In this case it is through variation of the Tg of polymeric substituent. It is to be understood that control of photochromic performance is not limited to control of Tg of the polymeric substituent but other properties of the polymer such as polarity, compatibility and others may also be varied.

***Example 12*** according to the invention

**Spirooxazine-poly(styrene)-co-Poly(butyl acrylate) block copolymers.**

These were synthesised using initiator of **Ex 3.** Macroinitiators of the first (polystyrene block) were synthesised as follows.

Part 1. Synthesis of styrene-spirooxazine conjugate macroinitiator (**Ex 12a & 12b**).

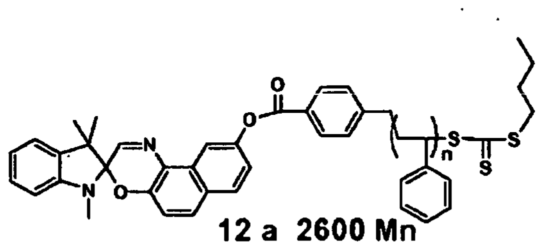

**12 a 2600 Mn**
**b 12600 Mn**

Styrene and photochromic RAFT initiator of example **3** were added to an ampoule (exact amounts given in table below). The reaction was degassed by four freeze-pump-thaw cycles using a schenk line and then flame sealed under vacuum. The polymerizations were then carried out in a constant temperature oil bath at 110°C for 8 and 29hrs respectively. The polymerization mixtures were purified by precipitation into methanol.

| | Reaction time (hours) | Mass of Styrene | Mass of RAFTInitator |
|---|---|---|---|
| **Ex 12a** | 8 | 5.46g | 0.32g |
| **Ex 12b** | 29 | 8.00g | 0.24g |

Part 2. Synthesis of spirooxazine-polystyrene-co-poly(butyl acrylate) copolymers (**Ex. 12aa -12ac**). First block of polystyrene 2600 Mn.

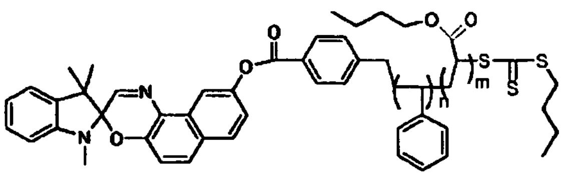

**12 aa 3300 total Mn**
**ab 7700 total Mn**
**ac 15700 total Mn**

A stock solution was produced containing n-butyl acrylate monomer (3.356g, $2.62 \times 10^{-2}$ mol), macroinitiator **Ex**

**12a** (0.670g, 2.62x$10^{-4}$ mol), AIBN (0.0021g, 1.2810-5 mol) and 3ml Benzene. This stock solution was then divided into three ampoules. Each reaction was degassed by four freeze-pump-thaw cycles using a schenk line and then flame sealed under vacuum. The polymerizations were then carried out in a constant temperature oil bath at 60°C for 4, 8 and 16hrs respectively. The polymerization mixtures were purified by precipitation into methanol.

Part 3. Synthesis of spirooxazine-polystyrene-co-poly(butyl acrylate) copolymers (**Ex. 12ba - 12bc**). First block of polystyrene 12600 Mn.

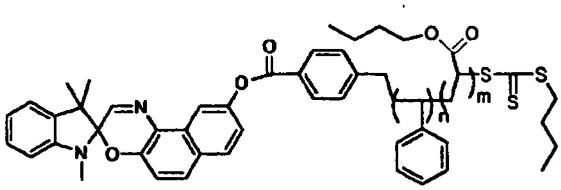

**12 ba 14600 total Mn**
**bb 19200 total Mn**
**bc 26700 total Mn**

A stock solution was produced containing n-butyl acrylate monomer (2.786g, 3.73×$10^{-2}$ mol), macroinitiator **Ex 12b** (2.501g, 1.87×$10^{-4}$ mol), AIBN (1.6×$10^{-3}$g, 9.74×$10^{-6}$ mol) and 2ml benzene. This stock solution was then divided into three ampoules. Each reaction was then degassed by four freeze-pump-thaw cycles using a schenk line and then flame sealed under vacuum. The polymerizations were then carried out in a constant temperature oil bath at 60°C for 2, 8, and 48hrs respectively. The ampoule removed at 2hr had no polymer so a further ampoule was produced with n-butyl acrylate. (0.0957, 7.47×$10^{-4}$ mol), macroinitiator **Ex 12b** (0.100g, 7.46×$10^{-6}$ mol), AIBN (6.0×$10^{-5}$g, 3.65×$10^{-7}$ mol) and 0.25ml benzene. The polymerization mixtures were purified by precipitation into methanol. This reaction was degassed and sealed as above and then heated in a constant temperature oil bath for 1hr. All polymerizations were precipitated into methanol.

**Table 5.1:** Polymer Characteristics of the block copolymer-spirooxazine conjugates. Polystyrene first block.

| Conjugate | $M_n$ of styrene component | $M_n$ of BA component | Total $M_n$ | Polydispersity |
|---|---|---|---|---|
| **Ex 12a** | 2600 | - | 2600 | 1.13 |
| **Ex 12aa** | 2600 | 800 | 3300 | 1.13 |
| **Ex 12ab** | 2600 | 5100 | 7700 | 1.08 |
| **Ex 12ac** | 2600 | 13200 | 15700 | 1.07 |
| **Ex 12b** | 12600 | - | 12600 | 1.13 |
| **Ex 12ba** | 12600 | 2000 | 14600 | 1.15 |
| **Ex 12bb** | 12600 | 6600 | 19200 | 1.13 |
| **Ex 12bc** | 12600 | 14200 | 26800 | 1.18 |
| Molecular weight calculated using GPC for initial block and then NMR for final block. | | | | |

Part 4. Photochromic performance.

The polymers of part 3 were then added to monomer formulation A and cured in the manner described in example 5 part 2. Concentration of the dye-polymer conjugate was kept constant at 1.2 x $10^{-3}$ mmoles/gram.

Photochromic performance of test lenses containing block copolymer-spirooxazine conjugates (**Ex. 12a - 12bc**) with a styrene initial blocks in lens formulation A.

| Sample | $M_n$[a] | Dye Mass (mg) | Lens monomer mass (g) | $T_{1/2}$ $sec^{-1}$ | $T_{3/4}$ $sec^{-1}$ | A0[b] | $k_1$[c] Min-1 | $k_2$[c] Min-1 | $A_1$[c] | $A_2$[c] | $A_{th}$[c] |
|---|---|---|---|---|---|---|---|---|---|---|---|
| **Ex 12a** | 2600 | 3.07 | 1.000 | 99 | 680 | 0.71 | 0.80 | 0.055 | 0.45 | 0.33 | 0.08 |
| **Ex 12aa** | 3300 | 4.01 | 1.000 | 84 | 579 | 0.84 | 0.87 | 0.057 | 0.47 | 0.32 | 0.07 |
| **Ex 12ab** | 7700 | 9.20 | 1.000 | 35 | 270 | 0.81 | 1.39 | 0.067 | 0.52 | 0.26 | 0.06 |
| **Ex 12ac** | 15700 | 18.87 | 1.000 | 9 | 55 | 0.85 | 3.60 | 0.084 | 0.59 | 0.17 | 0.03 |
| **Ex 12b** | 12600 | 15.13 | 1.000 | 151 | 1017 | 0.41 | 0.66 | 0.049 | 0.41 | 0.35 | 0.10 |
| **Ex 12ba** | 14600 | 17.49 | 1.000 | 134 | 891 | 0.40 | 0.68 | 0.050 | 0.42 | 0.35 | 0.09 |
| **Ex 12bb** | 19200 | 23.08 | 1.000 | 48 | 395 | 0.67 | 1.17 | 0.063 | 0.48 | 0.28 | 0.07 |
| **Ex 12bc** | 26800 | 32.06 | 1..000 | 8 | 96 | 0.73 | 2.55 | 0.078 | 0.56 | 0.20 | 0.04 |

[a] Molecular weight calculated using GPC for initial block and then NMR for final block. [b] Measured absorbance of each system before normalization. [c] Kinetic parameters of bi-exponential decolouration expression.

This example illustrates that effect of a directly attached high Tg polymer (polystyrene) can be readily compensated for by the addition of a second block of low Tg monomer (polybutyl acrylate). Without wishing to be bound by theory, this is consistent with the encapsulation of the dye or its aggregates by the attached polymer. As the attached polymer coils around the dye, even a distant segment of the attached polymer can be localised near the dye. This is seen in above example where increasing amounts of poly(butyl acrylate ) to the end of the spirooxzaine-polystyrene macroinitiator gives increasing fade speed. (Examples **12a** to **12ac** and example **12b** to **12bc**). This occurs even though the polymer styrene block can be quite large (**Ex 12b** to **12bc**) with ca. 110 styrene units between the dye and poly(butyl acrylate) block. In a more general sense the example shows that all segments of an attached polymer can influence the dye performance. In addition, when this example is considered together with **Ex 13**, it can be seen that a low Tg environment anywhere near the dye is the major factor in determining fade speed and can out weight or largely negate other effects or factors. In this example it negates the influence of the high Tg segment of the block copolymer even though the high Tg segment is the one attached first to the dye.

The example illustrates the utility of have a high Tg block in between the dye and the soft block in allowing a wide range of fade speed to be dialled up. In the series with the short polystyrene first block (**Ex 12a - 12ac**). $T_{1/2}$ could be dialled up between 99 (**Ex. 12a**) and 9 (**Ex. 12ac**) seconds ($t_{3/4}$ 680 to 55 secs). With a longer block of polystyrene next to the dye an even wider range could be achieved with $T_{1/2}$ varying from 151 (**Ex. 12b**) to 8 (**Ex. 12bc**) seconds ($T_{3/4}$ 1017 to 96 secs). Although pure poly(butyl acrylate) polymers give fast colouration and decolouration (**Ex. 5, PBA-SOX-1 to PBA-SOX-6**), the $T_{1/2}$ range obtained was over 5-9 seconds.

***Example 13*** according to the invention

**Spirooxazine-poly(butyl acrylate)-co- poly(styrene) block copolymers.**

These were synthesised using initiator of **Ex 3**. Macroinitiators of the first poly(butyl acrylate) block were synthesised as follows.

Part 1. Synthesis of n-butyl acrylate- spirooxazine conjugate macroinitiators (**Ex 13a & 13b**).

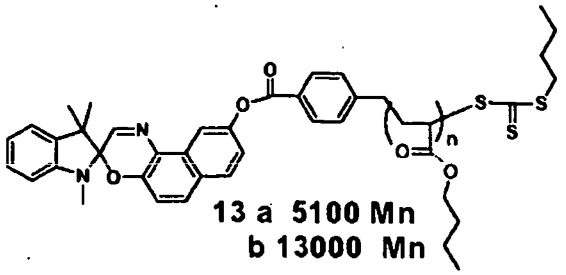

13 a 5100 Mn
b 13000 Mn

The n-butyl acrylate monomer (7.28g, $5.67\times10^{-2}$ mol) and photochromic RAFT initiator described in **Ex 3** (0.437g, $6.98\times10^{4}$ mol) were added to an ampoule, 5 mol % AIBN was also added relative to the RAFT initiator. The reaction was degassed by four freeze-pump-thaw cycles using a schenk line and then flame sealed under vacuum. The polymerizations were then carried out in a constant temperature oil bath at 60°C for 3 and 7hrs respectively. The polymerization mixtures were purified by precipitation into methanol.

Part 2. Synthesis of spirooxazine- poly(butyl acrylate)-co- poly(styrene) copolymers (**Ex. 13aa -13ac**). First block of polystyrene 5100 Mn.

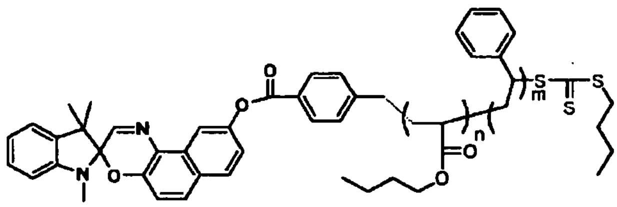

13 aa 7300 total Mn
ab 14000 total Mn
ab 22000 total Mn

A stock solution was produced containing styrene monomer (3.599g, $3.46\times10^{-2}$ mol), macroinitiator **13a** (1.651g, $3.46\times10^{-4}$ mol), AIBN ($2.9\times10^{-3}$g, $1.77\times10^{-5}$ mol) and 2ml benzene. This stock solution was then divided into three ampoules, a further 1.199g of styrene monomer was added to ampoule three. Each reaction was then degassed by four freeze-pump-thaw cycles using a schenk line and then flame sealed under vacuum. The polymerizations were then carried out in a constant temperature oil bath at 60°C for 16, 46 and 48hrs respectively. The polymerization mixtures were purified by precipitation into methanol.

Part 2. Synthesis of spirooxazine- poly(butyl acrylate)-co- poly(styrene) copolymers (**Ex. 13ba - 13bc**). First block of polystyrene 13000 Mn.

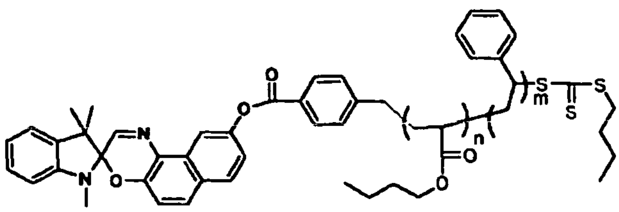

13 ba 14900 total Mn
bb 22000 total Mn
bc 28000 total Mn

A stock solution was produced containing styrene monomer (2.332g, $2.24\times10^{-2}$ mol), macroinitiator **Ex 13b** ( 3.00g, $2.24\times10^{-4}$ mol) and 2 ml benzene. This stock solution was then divided into three ampoules. Each reaction was degassed by four freeze-pump-thaw cycles using a schenk line and then flame sealed under vacuum. The polymerizations were then carried out in a constant temperature oil bath at 110°C for 16, 96 and 120hrs respectively. The polymerization mixtures were purified by precipitation into methanol.

Polymer Characteristics of the block copolymer-spirooxazine conjugates. First block poly(butyl acrylate)

| Conjugate | $M_n$ of styrene component | $M_n$ of BA component | Total $M_n$ | Polydispersity |
|---|---|---|---|---|
| **Ex 13a** | - | 5100 | 5100 | 1.11 |
| **Ex 13aa** | 2200 | 5100 | 7300 | 1.09 |
| **Ex 13ab** | 8600 | 5100 | 13700 | 1.09 |
| **Ex 13ac** | 16500 | 5100 | 21600 | 1.08 |
| **Ex 13b** | - | 13000 | 13000 | 1.07 |
| **Ex 13ba** | 1900 | 13000 | 14900 | 1.06 |
| **Ex 13bb** | 9000 | 13000 | 21900 | 1.08 |
| **Ex 13bc** | 14900 | 13000 | 27900 | 1.11 |

All $M_n$ values have been rounded to the nearest hundred. [1]Molecular weight calculated using GPC for initial block and then NMR for final block

Part 4. Photochromic performance.

The polymers of part 3 were then added to monomer formulation A and cured in the manner described in example 5 part 2. Concentration of the dye-polymer conjugate was kept constant at 1.2 x $10^{-3}$ mmoles/gram.

Photochromic performance of test lenses containing of block copolymer-spirooxazine conjugates with a n-butyl acrylate initial block (Ex 13a-13b-a)

| Sample | $M_n$[a] | Dye Mass (mg) | Lens monomer mass (g) | $T_{1/2}$ $sec^{-1}$ | $T_{3/4}$ $sec^{-1}$ | $A^0$[b] | $k_1$[c] $min^{-1}$ | $k_2$[c] $min^{-1}$ | $A_1$[c] | $A_2$[c] | $A_{th}$[c] |
|---|---|---|---|---|---|---|---|---|---|---|---|
| **Ex 13a** | 5100 | 6.12 | 1.000 | 20 | 116 | 0.71 | 1.89 | 0.079 | 0.61 | 0.21 | 0.04 |
| **Ex 13aa** | 7300 | 8.72 | 1.000 | 25 | 157 | 0.69 | 1.61 | 0.077 | 0.57 | 0.24 | 0.04 |
| **Ex 13ab** | 13700 | 16.39 | 1.000 | 30 | 181 | 0.75 | 1.54 | 0.076 | 0.57 | 0.24 | 0.04 |
| **Ex 13ac** | 21600 | 25.92 | 1.000 | 39 | 269 | 0.84 | 1.31 | 0.068 | 0.54 | 0.25 | 0.06 |
| **Ex 13b** | 13000 | 15.60 | 1.000 | 8 | 57 | 0.80 | 4.10 | 0.094 | 0.65 | 0.15 | 0.03 |
| **Ex 13ba** | 14900 | 17.87 | 1.000 | 7 | 37 | 0.76 | 4.41 | 0.100 | 0.64 | 0.16 | 0.03 |
| **Ex 13bb** | 21900 | 26.31 | 1.000 | 8 | 39 | 0.81 | 4.46 | 0.094 | 0.69 | 0.15 | 0.03 |
| **Ex 13bc** | 27900 | 33.47 | 1.000 | 10 | 39 | 0.92 | 3.30 | 0.083 | 0.63 | 0.17 | 0.03 |

[a] Molecular weight calculated using GPC for initial block and then NMR for final block. [b] Measured absorbance of each system before normalization. [c] Kinetic parameters of bi-exponential decolouration expression.

This example illustrates that low Tg polymer directly attached to the dye provides a highly favourable switching environment and that addition of a second Tg polystyrene block can slow the switching. However, the extent of the over-riding nature of the directly attached poly(butyl acrylate) polymer is shown in that the additional polystyrene block can not slow the switching of the dye to the same degree observed when polystyrene is directly attached to the dye. In

examples **13a** to **13ac** the dye $T_{1/2}$ can only be slowed from 20 to 39 secs whereas in examples having a polystyrene block between the dye and poly(butyl acrylate) block had their fade speed varied over 151 to 8 secs (**Ex. 12a - 12bc**). When the poly(butyl acrylate block is of longer length then an additional block of polystyrene, irrespective of its size, had only a minor effect (**Ex. 13b - 13bc**). Without wishing to be bound by theory, this is consistent with the encapsulation of the dye or it s aggregates by the attached polymer.

Example **12** and **13** illustrate the great utility in the method in controlling switching speed without altering the electronics of the dye.

**Comparative example CE6.**

Part 1. 3-(Isobutyryloxy)benzoic acid

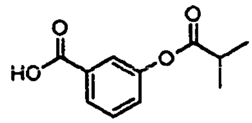

*m*-Hydroxybenzoic acid (2.0 g, 14.48 mmol) and $K_2CO_3$ (6.00 g, 43.44 mmol) were dissolved in a mixture of water (18 mL) and *i*-PrOH (6 mL). The solution was cooled in an ice bath and isobutyryl chloride (1.70 g, 1.67 mL, 15.93 mmol) added dropwise with vigorous stirring over 10 minutes. The mixture was stirred with cooling for an additional 1 hour after which it was quenched by the addition of 6M aqueous HCl (20 mL) [caution: foaming]. The precipitated solid was collected by filtration, washed with water and dried in a vacuum oven at 40°C. The product was obtained as a white powder of excellent purity with no further purification required (2.19 g, 72 %). $^1H$ NMR (400 MHz, $CDCl_3$) δ 12.34 (s br, 1H, OH), 7.99 (d, *J* = 7.68 Hz, 1H), 7.82 (s, 1H), 7.49 (t, *J* = 7.68 Hz, 1H), 7.35 (d, *J* = 7.68 Hz, 1H), 2.84 (septet, *J* = 6.95 Hz, 1H), 1.34 (d, *J* = 6.95 Hz, 6H). $^{13}C$ NMR (100 MHz, $CDCl_3$) δ 175.36, 171.44, 150.84, 130.72, 129.47, 127.44, 127.19, 123.31, 34.10, 18.81.

Part2. 3-(Isobutyryloxy)benzoyl chloride

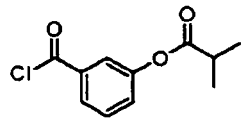

3-(Isobutyryloxy)benzoic acid as made in part 1 (1.0 g, 4.80 mmol) was added to $CH_2Cl_2$ (15 mL) together with thionyl chloride (1.71 g, 1.05 mL, 14.41 mmol) and 1 drop of DMF. The mixture was refluxed for 4 hours under nitrogen after which the solvent and excess reagent was removed by evaporation *in vacuo.* Residual thionyl chloride was removed *via* azeotrope by re-dissolving the crude product in 1,2-dichloroethane and evaporation of the solvent *in vacuo.* The product was obtained as a colourless oil (yield: quantitative by NMR). $^1H$ NMR (200 MHz, $CDCl_3$) δ 7.98 (d, *J* = 8.04 Hz, 1H), 7.81 (s, 1H), 7.52 (t, *J* = 8.04 Hz, 1H), 7.40 (d, *J* = 8.04 Hz, 1H), 2.83 (septet, *J* = 6.58 Hz, 1H), 1.32 (d, *J* = 6.58 Hz, 6H). $^{13}C$ NMR (50 MHz, $CDCl_3$) δ 175.03, 167.43, 151.03, 134.41, 129.81, 128.69, 128.45, 124.26, 34.02, 18.71.

Part 3. Spirooxazine mono-ATRP control

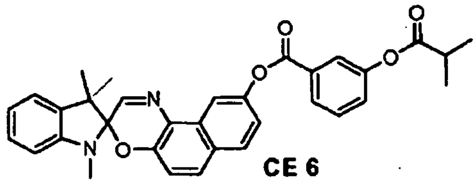

CE 6

9'-Hydroxy-1,3,3-trimethylspiro[indoline-2,3'-[3H]naphtha[2,1-b][1,4]oxazine (0.50 g, 1.45 mmol) was added to dry $CH_2Cl_2$ (10 mL) followed by the addition of triethylamine (0.29 g, 0.40 mL, 2.90 mmol) under an argon atmosphere. The mixture was cooled in an ice bath and 3-(isobutyryloxy)benzoyl chloride (0.395 g, 1.74 mmol) as made in part 2 was added dropwise with stirring. Once addition was complete the reaction mixture was allowed to warm to room temperature and stirred for an additional 1 hour. The mixture was then washed with 1 M aqueous HCl, water, aqueous $NaHCO_3$ and brine, and the organic layer dried with $MgSO_4$. The solution was filtered through a plug of silica gel and the solvent evaporated. Recrystallisation of the residue from $Et_2O$/hexane with standing over 2 days gave the product as yellow needle-shaped crystals (0.373 g, 48 %). $^1H$ NMR (400 MHz, $d_6$-acetone) δ 8.43 (d, $J$ = 2.20 Hz, 1H), 8.14 (d, $J$ = 8.05 Hz, 1H), 7.99 (s, 1H), 7.94 (d, $J$ = 8.78 Hz, 1H), 7.84 (d (overlap), 1H), 7.83 (s (overlap), 1H), 7.67 (t, $J$ = 8.05 Hz, 1H), 7.51 (d, $J$ = 8.05 Hz, 1H), 7.38 (dd, $J$ = 8.78, 2.20 Hz, 1H), 7.19 (t, $J$ = 7.68 Hz, 1H), 7.14 (d, $J$ = 7.32 Hz, 1H), 7.06 (d, $J$ = 9.15 Hz, 1H), 6.87 (t, $J$ = 8.05 Hz, 1H), 6.65 (d, $J$ = 8.05 Hz, 1H), 2.90 (septet, $J$ = 6.95 Hz; 1H), 2.77 (s, 3H), 1.34 (d (overlap), $J$ = 2.20 Hz, 6H), 1.32 (d, $J$ = 6.95 Hz, 6H). $^{13}C$ NMR (100 MHz, $d_6$-acetone) δ 175.07, 164.38, 151.68, 151.53, 150.38, 147.94, 145.09, 136.09, 132.02, 131.38, 130.41, 130.19, 129.83, 128.18, 127.71, 127.57, 127.44, 123.54, 123.25, 121.68, 120.07, 119.82, 116.86, 113.19, 107.43, 99.17, 51.95, 34.08, 29.17, 25.11, 20.36, 18.51.

***Example 14*** according to the invention

**Spirooxazine-poly(butyl acrylate) (ATRP)**

Part1. 3-(2-bromoisobutyryloxy)benzoic acid

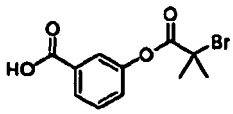

*m*-Hydroxybenzoic acid (2.0 g, 14.48 mmol) and $K_2CO_3$ (6.00 g, 43.44 mmol) were dissolved in a mixture of water (18 mL) and *i*-PrOH (6 mL). The solution was cooled in an EtOH/dry-ice bath at -20°C and 2-bromoisobutyryl bromide (3.50 g, 1.88 mL, 15.20 mmol) added dropwise with vigorous stirring over 10 minutes. The mixture was stirred with cooling at -20°C for an additional 30 minutes, allowed to warm to 0°C and then quenched by the addition of 6M aqueous HCl (15 mL) [caution: foaming]. After 20 minutes of stirring at room temperature the precipitated solid was collected by filtration, washed with water and dried in a vacuum oven at 40°C. The product was obtained as a white powder of excellent purity with no further purification required (4.09 g, 98 %). $^1H$ NMR (400 MHz, $d_6$-acetone) δ 7.98 (d, $J$ = 7.68 Hz, 1H), 7.81 (s, 1H), 7.61 (t, $J$ = 7.68 Hz, 1H), 7.45 (dd, $J$ = 7.68, 1.46 Hz, 1H), 2.10 (s, 6H). $^{13}C$ NMR (100 MHz, $d_6$-acetone) δ 171.54, 167.68, 152.81, 134.11, 131.68, 129.16, 127.65, 124.21, 57.93, 31.67.

Part 2. 3-(2-bromoisobutyryloxy)benzoyl chloride

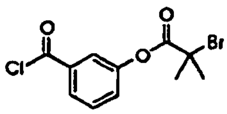

3-(2-bromoisobutyryloxy)benzoic acid (1.50 g, 5.22 mmol) as made in part 1 was added to $CH_2Cl_2$ (20 mL) together with thionyl chloride (1.86 g, 1.14 mL, 15.67 mmol) and 1 drop of DMF. The mixture was refluxed for 3 hours under nitrogen after which the solvent and excess reagent was removed by evaporation *in vacuo.* Residual thionyl

chloride was removed *via* azeotrope by re-dissolving the crude product in 1,2-dichloroethane and evaporation of the solvent *in vacuo.* The product was obtained as a low melting point crystalline solid (yield: quantitative by NMR). $^1H$ NMR (400 MHz, $CDCl_3$) δ 8.03(d, *J* = 8.05 Hz, 1H), 7.87 (s, 1H), 7.57 (t, *J* = 8.05 Hz, 1H), 7.48 (d, *J* = 8.05, Hz, 1H), 2.08 (s, 6H). $^{13}C$ NMR (100 MHz, $CDCl_3$) δ 169.80, 167.36, 150.90, 134.65, 130.04, 128.98, 128.19, 123.84, 54.80, 30.43.

Part 3. Spirooxazine mono-ATRP initiator

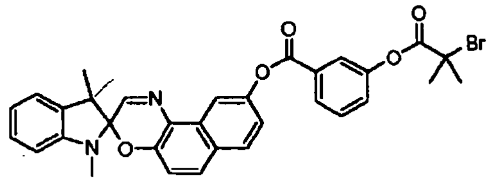

9'-Hydroxy-1,3,3-trimethylspiro[indoline-2,3'-[3H]naphtha[2,1-b][1,4]oxazine (1.0 g, 2.90 mmol) was added to dry $CH_2Cl_2$ (15 mL) followed by the addition of triethylamine (0.44 g, 0.61 mL, 4.35 mmol) under an argon atmosphere. The mixture was cooled in an ice bath and a solution of 3-(2-bromoisobutyryloxy)benzoyl chloride (0.976 g, 3.19 mmol) as made in part 2 in dry $CH_2Cl_2$ (10 mL) added dropwise with stirring. Once addition was complete the reaction mixture was allowed to warm to room temperature and stirred for an additional 1.5 hours. The mixture was then washed with 1 M aqueous HCl, water, aqueous $NaHCO_3$ and brine and the organic layer dried with $MgSO_4$. Pentane (10 mL) was added to the solution prior to passing through a plug of silica gel. The solvent was evaporated and the residue recrystallised from $Et_2O$ giving a yellow microcrystalline solid (0.973 g, 55 %). $^1H$ NMR (400 MHz, $d_6$-acetone) δ 8.43 (d, *J* = 2.20 Hz, 1H), 8.20 (d, *J* = 7.68 Hz, 1H), 8.05 (s, 1H), 7.94 (d, *J* = 8.78 Hz, 1H), 7.84 (d (overlap), 1H), 7.83 (s (overlap), 1H), 7.73 (t, *J* = 7.68 Hz, 1H), 7.57 (d, *J* = 8.05 Hz, 1H), 7.39 (dd, *J* = 8.78, 2.20 Hz,1H), 7.19 (t, *J* = 7.68 Hz, 1H), 7.14 (d, *J* = 7.32 Hz, 1H), 7.06 (d, *J* = 9.15 Hz, 1H), 6.87 (t, *J* = 7.68 Hz, 1H), 6.65 (d, *J* = 7.68 Hz, 1H), 2.77 (s, 3H), 2.13 (s, 6H), 1.34 (d, *J* = 2.56, 6H). $^{13}C$ NMR (100 MHz, $d_6$-acetone) δ 171.59, 165.80, 153.10, 153.00, 151.93, 149.52, 146.68, 137.66, 133.60, 133.19, 132.06, 131.99, 131.44, 129.76, 129.61, 129.30, 128.57, 124.83, 124.63, 1223.26, 121.67, 121.37, 118.47, 114.77, 109.01, 100.75, 57.91, 53.53, 31.69, 26.70, 21.94.

Part 4. Spirooxazine mono-ATRP with n-butyl acrylate

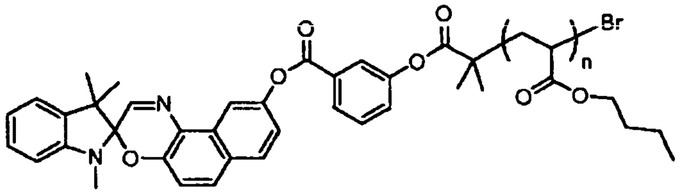

**Ex 14 a-d**

Four ampoules each containing n-butyl acrylate (2.0 g, 15.60 mmol), spirooxazine mono-initiator of part 3 (0.0957 g, 0.156 mmol), 4,4'-dinonyl-2,2'-bipyridine (0.1275 g, 0.312 mmol), CuBr (0.0224 g, 0.156 mmol) and benzene (3 mL) were prepared and degassed with 4 freeze/pump/thaw cycles. The ampoules were sealed and heated at 90°C in a thermostatted oil bath for various durations. Conversions were determined by $^1H$ NMR analysis of the reaction solutions. Molecular weights and polydispersities were determined by GPC. The polymer purification procedure is as follows: (i) excess monomer was removed by co-evaporation with chloroform, (ii) polymer then precipitated by dissolution in a minimal amount of $CH_2Cl_2$, addition of excess methanol and slow and partial solvent evaporation (the supernatant decanted), and (iii) passing an ethereal solution of the precipitated polymer through a silica plug followed by evaporation of the solvent.

| Sample | Reaction duration (mins) | Monomer conversion[a] (%) | $M_n$[b] | $M_n$[c] | Polydispersity |
|---|---|---|---|---|---|
| **Ex 14a** | 240 | 39.2 | 5,521 | 5,638 | 1.074 |
| **Ex 14b** | 480 | 53.5 | 8,359 | 7,471 | 1.068 |
| **Ex 14c** | 960 | 64.8 | 10,317 | 8,919 | 1.066 |
| **Ex 14d** | 1440 | 85.0 | 13,414 | 11,508 | 1.076 |

[a] Determined by $^1$H NMR analysis in $d_6$-acetone solution.
[b] Determined by GPC using polystyrene standards before the samples were purified.
[c] Calculated based on monomer conversion[a] plus initiator molecular weight

Part 5. Photochromic performance.

The polymers of part 4 were then added to monomer formulation A and cured in the manner described in example 5 part 2. Concentration of the dye-polymer conjugate was kept constant at 1.2 x $10^{-3}$ mmoles/gram.

Photochromic performance of test lenses containing **CE6** and **Ex 14.**

| Sample | $M_n$[a] | Dye Mass (mg) | Lens monomer mass (g) | $T_{1/2}$ $sec^{-1}$ | $T_{3/4}$ $sec^{-1}$ | $A^{0}$[b] |
|---|---|---|---|---|---|---|
| **CE 6** | 534.6 | 0.96 | 1.5000 | 63 | 375 | 0.567 |
| **Ex 14a** | 6,137 | 11.05 | 1.5003 | 19 | 71 | 1.080 |
| **Ex 14c** | 10,541 | 18.97 | 1.5004 | 12 | 30 | 0.812 |
| **Ex 14d** | 13,595 | 24.47 | 1.5002 | 11 | 34 | 0.979 |

[a] Molecular weight calculated using GPC on the samples after purification. [b] Measured absorbance of each system before normalization. [c]Kinetic parameters of bi-exponential decolouration expression. Lamp power reduced from 280 W to 160 W for these examples.

This illustrates again that attachment of polymer of low Tg to a photochromic dye will increase the fade speed. In addition, the longer the polymer the better the fade speed enhancement.

**Comparative example CE7.**

Part 1. 3,5-Bis(isobutyryloxy)benzoic acid

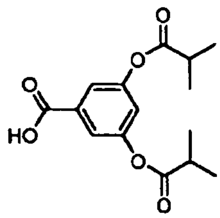

3,5-Dihydroxybenzoic acid (2.0 g, 12.98 mmol) and $K_2CO_3$ (8.97 g, 64.90 mmol) were dissolved in a mixture of water (32 mL) and *i*-PrOH (13 mL). The solution was cooled in an ice bath and isobutyryl chloride (3.04 g, 2.99 mL, 28.55 mmol) added dropwise with vigorous stirring over 10 minutes. The mixture was stirred with cooling for an additional 30 minutes after which it was quenched by the addition of 6M aqueous HCl (35 mL) [caution: foaming]. Stirring was continued for another 30 minutes and the precipitated solid collected by filtration, washed with water and dried in a vacuum oven at 40°C. The product was obtained as a white powder of good purity with no further purification required (3.02 g, 79 %). $^1$H NMR (400 MHz, $CDCl_3$) δ 11.49 (s br, 1H, OH), 7.70 (s, 2H), 7.18 (s, 1H), 2.81 (septet, *J* = 6.95 Hz, 2H), 1.32 (d, *J* = 6.95 Hz, 12H). $^{13}$C NMR (100 $MH_z$, $CDCl_3$) δ 174.93, 170.40, 151.18, 131.21, 121.00, 120.58, 34.07, 18.74.

Part 2. 3,5-Bis(isobutyryloxy)benzoyl chloride

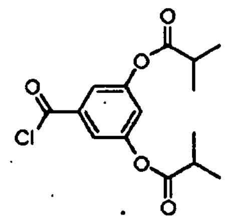

3,5-Bis(isobutyryloxy)benzoic acid (1.0 g, 3.40 mmol) as made in part 1 was added to $CH_2Cl_2$ (15 mL) together with thionyl chloride (1.21 g, 0.74 mL, 10.19 mmol) and 1 drop of DMF. The mixture was refluxed for 3.5 hours under nitrogen after which the solvent and excess reagent was removed by evaporation *in vacuo.* Residual thionyl chloride was removed *via* azeotrope by re-dissolving the crude product in 1,2-dichloroethane and evaporation of the solvent *in vacuo.* The product was obtained as a low melting point colourless crystalline solid (yield: quantitative by NMR). $^1$H NMR (200 MHz, $CDCl_3$) δ 7.70 (d, *J* = 2.19 Hz, 2H), 7.25 (t, *J* = 2.19 Hz, 1H), 2.81 (septet, *J* = 6.94 Hz, 2H), 1.31 (d, *J* = 6.94 Hz, 12H). $^{13}$C NMR (50 MHz, $CDCl_3$) δ 174.65, 166.78, 151.34, 134.83, 122.48, 121.49, 34.03, 18.67.

**Part 3. Comparson Example CE7. Spirooxazine bis-ATRP control**

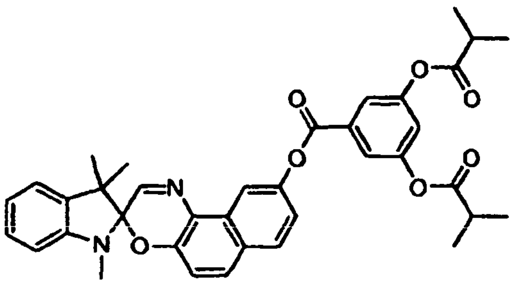

**CE7**

9'-Hydroxy-1,3,3-trimethylspiro[indoline-2,3'-[3H]naphtha[2,1-b][1,4]oxazine (0.5 g, 1.45 mmol) was added to dry $CH_2Cl_2$ (10 mL) followed by the addition of triethylamine (0.29 g, 0.40 mL, 2.90 mmol) under an argon atmosphere. The mixture was cooled in an ice bath and a solution of 3,5-bis(isobutyryloxy)benzoyl chloride (0.545 g, 1.74 mmol) as made in part 2 in dry $CH_2Cl_2$ (5 mL) was added dropwise with stirring. Once addition was complete the reaction mixture was allowed to warm to room temperature and stirred for an additional 1.5 hours. The mixture was then washed with 1 M aqueous HCl, water, aqueous $NaHCO_3$ and brine and the organic layer dried with $MgSO_4$. Filtering through a plug of silica gel and evaporation of the solvent *in vacuo* yielded the crude product which was recrystallised from $Et_2O$/hexane to give a pale-green powder (0.56 g, 62 %). $^1$H NMR (400 MHz, *$d_6$*-acetone) δ 8.42 (d, *J* = 2.20 Hz, 1H), 7.94 (d, *J* = 8.78 Hz, 1H), 7.89 (d, *J* = 2.20 Hz, 2H), 7.84 (d (overlap), 1H), 7.83 (s, 1H), 7.40 (dd, *J* = 8.78, 2.20 Hz, 1H), 7.37 (t, *J* = 2.20 Hz, 1H), 7.19 (t, *J* = 7.68 Hz, 1H), 7.14 (d, *J* = 7.32 Hz, 1H), 7.07 (d, *J* = 8.78 Hz, 1H), 6.87 (t, *J* = 7.32 Hz, 1H), 6.65 (d, *J* = 7.68 Hz, 1H), 2.90 (septet, *J* = 6.95 Hz, 2H), 2.77 (s, 3H), 1.34 (d (overlap), *J* = 3.29 Hz, 6H), 1.32 (d (overlap), *J* = 6.95 Hz, 12H). $^{13}$C NMR (100 MHz, *$d_6$*-acetone) δ 176.40, 165.33, 153.68, 153.14, 151.87, 149.53, 146.70, 137.67, 133.60, 133.51, 132.00, 131.46, 12976. 129.34, 124.85, 123.27, 123.14, 122.47, 121.67, 121.32, 118.51, 114.75, 109.02, 100.77, 53.55, 35.67, 26.70, 21.94, 20.04.

***Example 15*** according to the invention

**ATRP synthesised bis(poly(butyl acrylate))-spirooxazine conjugate.**

Part 1. 3,5-Bis(2-bromoisobutyryloxy)benzoic acid

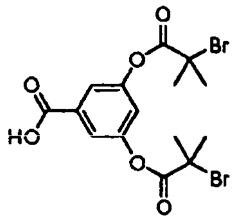

3,5-Dihydroxybenzoic acid (2.0 g, 12.98 mmol) and $K_2CO_3$ (8.97 g, 64.90 mmol) were dissolved in a mixture of water (32 mL) and *i*-PrOH (13 mL). The solution was cooled in an EtOH/dry-ice bath to -20°C and 2-bromoisobutyryl bromide (3.04 g, 2.99 mL, 28.55 mmol) added dropwise with vigorous stirring over 10 minutes. The mixture was stirred with cooling at -20°C for an additional 30 minutes, allowed to warm to 0°C and then quenched by the addition of 6M aqueous HCl (17 mL) [caution: foaming]. After 20 minutes of stirring at room temperature the mixture was extracted with $Et_2O$. The ethereal extracts were combined, washed with three portions of water then brine and dried with $MgSO_4$. The solvent was evaporated and the residue recrytallised/hexane to give a white crystalline solid (4.41 g, 75 %). $^1H$ NMR (400 MHz, $CDCl_3$) δ 10.85 (s br, 1H), 7.80 (d, $J$ = 2.20 Hz, 2H), 7.29 (t, $J$ = 2.20 Hz, 1H), 2.08 (s, 12H). $^{13}C$ NMR (100 MHz, $CDCl_3$) δ 170.16, 169.58, 151.11, 131.55, 120.77, 120.22, 54.67, 30.47.

Part 2. 3,5-Bis(2-bromoisobutyryloxy)benzoyl chloride

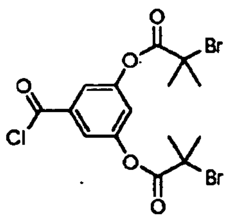

3,5-Bis(2-bromoisobutyryloxy)benzoic acid (3.20 g, 7.07 mmol) as made in part 1 was added to $CH_2Cl_2$ (15 mL) together with thionyl chloride (2.52 g, 1.55 mL, 21.22 mmol) and 1 drop of DMF. The mixture was refluxed for 2 hours under nitrogen after which the solvent and excess reagent was removed by evaporation *in vacuo*. Residual thionyl chloride was removed *via* azeotrope by re-dissolving the crude product in 1,2-dichloroethane and evaporation of the solvent *in vacuo*. The product was obtained as an oil which slowly solidifies on standing (yield: quantitative by NMR). $^1H$ NMR (400 MHz, $CDCl_3$) δ 7.82 (d, $J$ = 2.20 Hz, 2H), 7.36 (t, $J$ = 2.20 Hz, 1H), 2.08 (s, 12H). $^{13}C$ NMR (100 MHz, $CDCl_3$) δ 169.40, 166.58, 151.27, 135.28, 121.61, 54.51, 30.40.

Part 3. Spirooxazine bis-ATRP initiator

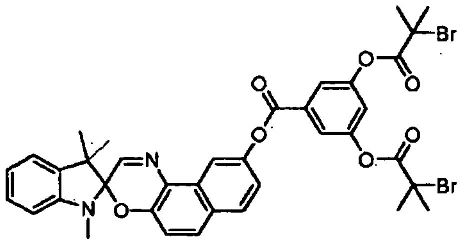

9'-Hydroxy-1,3,3-trimethylspiro[indoline-2,3'-[3H]naphtha[2,1-b][1,4]oxazine (1.0 g, 2.90 mmol) was added to dry $CH_2Cl_2$ (15 mL) followed by the addition of triethylamine (0.59 g, 0.81 mL, 5.81 mmol) under an argon atmosphere. The mixture was cooled in an ice bath and a solution of 3,5-bis(2-bromoisobutyryloxy)benzoyl chloride (1.70 g, 3.63 mmol)as made in part 2 in dry $CH_2Cl_2$ (10 mL) was added dropwise with stirring. Once addition was complete the reaction mixture was allowed to warm to room temperature and stirred for an additional 1.5 hours. The mixture was then washed with 1 M aqueous HCl, water, aqueous $NaHCO_3$ and brine and the organic layer dried with $MgSO_4$. Filtering through a plug of silica gel and evaporation of the solvent *in vacuo* yielded the crude product which was recrystallised from acetone/water to give a pale-green powder (1.40 g, 62 %). $^1H$ NMR (400 MHz, $d_6$-acetone) δ 8.44 (d, *J* = 2.20 Hz, 1H), 8.01 (d, *J* = 2.20 Hz, 2H), 7.94 (d, *J* = 8.78 Hz, 1H), 7.83 (d (overlap), 1H), 7.50 (t, *J* = 2.20 Hz, 1H), 7.41 (dd, *J* = 8.78, 2.56 Hz, 1H), 7.19 (t, *J* = 7.68 Hz, 1H), 7.14 (d, *J* = 7.32 Hz, 1H), 7.07 (d, *J* = 9.15 Hz, 1H), 6.87 (t, *J* = 7.32 Hz, 1H), 6.65 (d, *J* = 7.68 Hz, 1H), 2.77 (s, 3H), 2.14 (s, 12H), 1.34 (d, *J* = 2.56 Hz, 6H). $^{13}C$ NMR (100 MHz, $d_6$-acetone) δ 171.28, 165.01, 153.41, 153.13, 151.77, 149.49, 146.69, 137.63, 134.03, 133.57, 131.99, 131.47, 129.75, 129.35, 124.84, 123.24, 122.56, 122.15, 121.66, 121.24, 118.54, 114.79, 108.99, 100.75, 57.73, 53.53, 31.65, 26.70, 21.95.

Part 4. Bis(poly(butyl acrylate))-spirooxazine conjugate

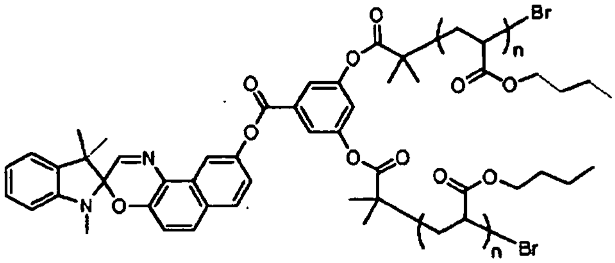

**Ex 15a to 15f**

Six ampoules each containing *n*-butyl acrylate (2.0 g, 15.60 mmol), spirooxazine bis-initiator (0.1214 g, 0.156 mmol) made in part 3, 4,4'-dinonyl-2,2'-bipyridine (0.1275 g, 0.312 mmol), CuBr (0.0224 g, 0.156 mmol) and benzene (3 mL) were prepared and degassed with 4 freeze/pump/thaw cycles. The ampoules were sealed and heated at 90°C in a thermostatted oil bath for various durations. Conversions were determined by $^1H$ NMR analysis of the reaction solution. Molecular weights and polydispersities were determined by GPC. The polymer purification procedure is as follows: (i) excess monomer was removed by co-evaporation with chloroform, (ii) polymer then precipitated by dissolution in a minimal amount of $CH_2Cl_2$, addition of excess methanol and slow and partial solvent evaporation (the supernatant decanted), and (iii) passing an ethereal solution of the precipitated polymer through a silica plug followed by evaporation of the solvent.

| Sample | Reaction duration (mins) | Monomer conversion[a] (%) | $M_n$[b] | $M_n$[c] | Polydispersity |
|---|---|---|---|---|---|
| **Ex 15a** | 60 | 17.6 | 2,735 | 3,034 | 1.095 |
| **Ex 15b** | 120 | 21.1 | 3.168 | 3,483 | 1.091 |

(continued)

| Sample | Reaction duration (mins) | Monomer conversion[a] (%) | $M_n$[b] | $M_n$[c] | Polydispersity |
|---|---|---|---|---|---|
| **Ex 15c** | 240 | 42.7 | 6,081 | 6,251 | 1.088 |
| **Ex 15d** | 480 | 52.2 | 7,436 | 7,469 | 1.087 |
| **Ex 15e** | 720 | 79.0 | 11,519 | 10,904 | 1.101 |
| **Ex 15f** | 960 | 85.8 | 12,611 | 11,775 | 1.083 |

[a]Determined by $^1H$ NMR analysis in $d_6$-acelons solution.
[b]Determined by GPC using polystyrene standards on the samples before they were purifed
[c]Calculated based on monomer conversion* plus initiator molecular weight

Part 5. Photochromic performance.

The polymers as made in part 4 were then added to monomer formulation A and cured in the manner described in example 5 part 2. Concentration of the dye-polymer conjugate was kept constant at 1.2 x $10^{-3}$ mmoles/gram.

Photochromic performance of test lenses containing CE7 and ex 15

| Sample | Mn[a] | Dye Mass (mg) | Lens monomer mass (g) | $T_{1/2}$ $sec^{-1}$ | $T_{3/4}$ $sec^{-1}$ | $A^{0[b]}$ |
|---|---|---|---|---|---|---|
| **CE7** | 620.7 | 1.12 | 1.5000 | 51 | 314 | 0.896 |
| **Ex 15a** | 2,736 | 4.92 | 1.5002 | 22 | 78 | 0.646 |
| **Ex 15c** | 6,205 | 11.17 | 1.5001 | 13 | 37 | 1.363 |
| **Ex 15e** | 11,460 | 20.63 | 1.5004 | 12 | 35 | 0.701 |
| **Ex 15f** | 13,023 | 23.44 | 1.5002 | 8 | 21 | 0.899 |

[a] Molecular weight calculated using GPC after the samples were purified. [b] Measured absorbance of each system before normalization. [c] Kinetic parameters of bi-exponential decolouration expression. Lamp power reduce from 280 W to 160 W for these examples.

This illustrates again that attachment of polymer of low Tg to a photochromic dye will increase the fade speed. In addition, the longer the polymer the better the fade speed enhancement. Further more when compared to the results of **Ex 14,** the placement of the dye in the middle of the polymer chain gives greater fade speed enhancement for the sample molecular weight of polymer. This is central placement of the dye is achieved by growing two polymer chains from a single point on the dye.

*Example 16* according to the invention

**Bis(poly(butyl acrylate)-spirooxazine with flexible linker.**

Part 1. 2,2-Bis(2-bromoisobutyryloxymethyl)propionic acid

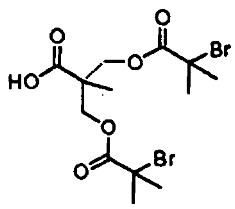

2,2-Bis(hydroxymethyl)propionic acid (1.0 g, 7.45 mmol), 4-dimethylaminopyridine (0.046 g, 0.377 mmol) and triethylamine (1.86 g, 2.59 mL, 18.64 mmol) were dissolved in dry $CH_2Cl_2$ (20 mL) under nitrogen. The mixture was cooled in an ice bath and 2-bromoisobutyryl bromide (3.77 g, 2.03 mL, 16.40 mmol) added dropwise with stirring. The reaction mixture was allowed to warm to room temperature an stirred for a further 1.5 hours after which it was extracted with three portions of 15 % aqueous $K_2CO_3$ (15 mL). The aqueous extracts were combined, acidified with concentrated HCl

and extracted with $Et_2O$ (3 x 15 mL) and the organic, layer dried with $MgSO_4$. The solvent was evaporated and the residue purified by column chromatography ($SiO_2$, $Et_2O$/hexane, 1:1) to give the product as a colourless oil (1.56 g, 48 %). $^1H$ NMR (400 MHz, $CDCl_3$) δ 10.89 (s br, $^1H$, OH), 4.37 (d, 4H, $-CH_2C$), 1.91 (s, 12H, $-CH_3$), 1.38 (s, 3H, $-CH_3$). $^{13}C$ NMR (100 MHz, $CDCl_3$) δ 178.72 (COOH), 170.93 (2 x CO), 65.94 ($CH_2$), 55.18 (CBr), 46.54 ($CCH_3$), 30.60 (4 x $CH_3$), 17.75 (1 x $CH_3$).

Part 2. 2,2-Bis(2-bromoisobutyryloxymethyl)propionyl chloride

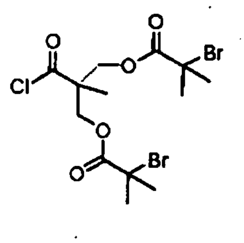

2,2-bis(2-bromoisobutyryloxymethyl)propionic acid (1.50 g, 3.47 mmol) as made in part 1 was dissolved in dry $CH_2Cl_2$ (15 mL) together with oxalyl chloride (0.88 g, 6.94 mmol) and one drop of DMF. The mixture was stirred at reflux under nitrogen for 1 hour after which the solvent and excess reagent were evaporated *in vacuo* to yield a pale yellow liquid. (Yield: quantitative by NMR). $^1H$ NMR (200 MHz, $CDCl_3$) δ 4.39 (s, 4H), 1.89 (s, 12H), 1.44 (s, 3H). $^{13}C$ NMR (50 MHz, $CDCl_3$) δ 174.74, 170.56, 65.67, 56.11, 54.79, 30.44, 17.77.

Part 3. Spirooxazine flexible bis-ATRP initiator

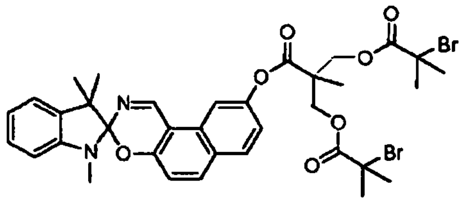

9'-Hydroxy-1,3,3-trimethylspiro[indoline-2,3'-[3H]naphtha[2,1-b][1,4]oxazine (0.50 g, 1.45 mmol) was added to dry $CH_2Cl_2$ (15 mL) followed by the addition of triethylamine (0.29 g, 0.40 mL, 2.90 mmol) under a nitrogen atmosphere. The mixture was cooled in an ice bath and 2,2-bis(2-bromoisobutyryloxymethyl)propionyl chloride (0.784 g, 1.74 mmol) as made in part 2 was added dropwise with stirring. Once addition was complete the reaction mixture was allowed to warm to room temperature and stirred for an additional 3 hours. It was then washed with 1 M aqueous HCl, water, aqueous $NaHCO_3$ and brine. The organic layer was dried with $MgSO_4$, filtered through a plug of silica and the solvent evaporated. Recrystallisation of the residue from $Et_2O$/hexane with slow and partial solvent evaporation yielded the pure product as deep-yellow needle-shaped crystals (0.62 g, 56 %). $^1H$ NMR (400 MHz, $d_6$-acetone) δ 8.32 (d, *J* = 2.20 Hz, 1H), 7.91 (d, *J* = 8.78 Hz, 1H), 7.82 (d (overlap), *J* = 8.42 Hz, 1H), 7.82 (s, 1H), 7.25 (dd, *J* = 8.78, 2.20 Hz, 1H), 7.19 (t, *J* = 7.68 Hz, 1H), 7.15 (d, *J* = 7.32 Hz, 1H), 7.06 (d, *J* = 9.15 Hz, 1H), 6.87 (t, *J* = 7.68 Hz, 1H), 6.66 (d, *J* = 7.68 Hz, 1H), 4.61 (d, *J* = 3.66 Hz, 4H), 2.76 (s, 3H), 2.00 (s, 12H), 1.62 (s, 3H), 1.34 (d, 6H). $^{13}C$ NMR (100 MHz, $d_6$-acetone) δ 173.03, 172.43, 153.15, 151.56, 149.54, 146.70, 137.66, 133.56, 131.98, 131.41, 129.78, 129.33, 124.84, 123.29, 121.68, 121.12, 118.54, 114.86, 109.03, 100.78, 68.39, 57.92, 53.55, 49.05, 31.95, 26.69, 21.95, 18.97.

Part 4. Spirooxazine flexible bis-ATRP initiator: polymerisation with n-butyl acrylate

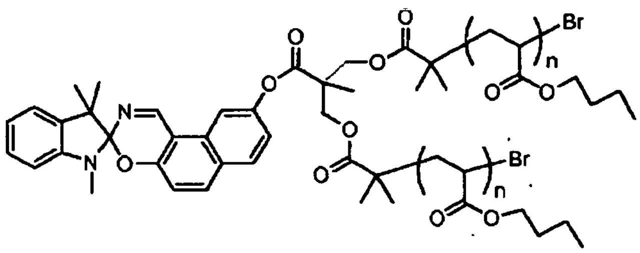

**Ex 16**

Two ampoules each containing *n*-butyl acrylate (2.0 g, 15.60 mmol), spirooxazine flexible bis-initiator (0.1185 g, 0.156 mmol) as made in part 3, 4,4'-dinonyl-2,2'-bipyridine (0.1275 g, 0.312 mmol), CuBr (0.0224 g, 0.156 mmol) and benzene (2 mL) were prepared and degassed with 4 freeze/pump/thaw cycles. The ampoules were sealed and heated at 90°C in a thermostatted oil bath for 3 and 6 hours. Conversions were determined by $^1H$ NMR analysis of the reaction solution. Molecular weights and polydispersities were determined by GPC. The polymer purification procedure is as follows: (i) excess monomer was removed by co-evaporation with chloroform, (ii) polymer then precipitated by dissolution in a minimal amount of $CH_2Cl_2$, addition of excess methanol and slow and partial solvent evaporation (the supernatant decanted), and (iii) passing an ethereal solution of the precipitated polymer through a silica plug followed by evaporation of the solvent.

| Sample | Reaction duration (mins) | Monomer conversion[a] (%) | $M_n$[b] | $M_n$[c] | Polydispersity |
|---|---|---|---|---|---|
| **Ex 16a** | 180 | 19.5 | 3,353 | 3,259 | 1.117 |
| **Ex 16b** | 360 | 28.3 | 4,867 | 4,387 | 1.112 |

[a] Determined by $^1H$ NMR analysis in $d_6$-acetone solution.
[b] Determined by GPC using polystyrene standards on the samples before purification.

Part 5. Photochromic performance.

The polymers of part 4 were then added to monomer formulation A and cured in the manner described in example 5 part 2. Concentration of the dye-polymer conjugate was kept constant at 1.2 x $10^{-3}$ mmoles/gram.

Photochromic performance of test lenses containing Ex 16b.

| Sample | Mn[a] | Dye Mass (mg) | Lens monomer mass (g) | $T_{1/2}$ $sec^{-1}$ | $T_{3/4}$ $sec^{-1}$ | $A^{0}$[b] |
|---|---|---|---|---|---|---|
| **CE7** | 620.7 | 1.12 | 1.5000 | 51 | 314 | 0.896 |
| **Ex 16b** | 4,954 | 8.92 | 1.5000 | 15 | 51 | 1.291 |

[a] Molecular weight calculated using GPC of sample after purification [b] Measured absorbance of each system before normalization. [c] Calculated on the basis of monomer conversion plus initiator molecular weight.

This example illustrates the utility of branched polymer-dye conjugates in achieving fast fade speed in a rigid polymer matrix. In this case a soft linker has been used to create the branched structure. The result is that the dye is attached to the "centre" of the polymer chain.

**Comparative example 8. Red Chromene mono-ATRP**

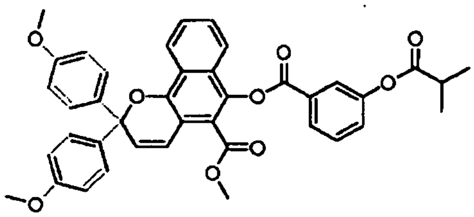

5-Methyl carboxylate-6-hydroxy-bis(4-methoxyphenyl)2*H*-naphtho[1,2-b]pyran (0.20 g, 0.427 mmol) (US Patent 6,113,814) was dissolved in dry $CH_2Cl_2$ (10 mL) and triethylamine (0.3 mL) added under argon. 3-(Isobutyryloxy) benzoyl chloride (0.145 g, 0.640 mmol) (as made in CE6 procedure part 2) was added dropwise and the mixture stirred at 40°C with reaction progress being monitored by TLC. Upon completion the solvent was evaporated *in vacuo* and the residue re-dissolved in $Et_2O$. The solution then was washed successively with 1M HCl, water, aqueous $NaHCO_3$, water and brine. The organic layer was dried with $MgSO_4$, the solvent evaporated and the crude product purified by column chromatography (silica gel, $Et_2O$/hexan 2:1) giving a purple-red solid (0.218 g, 78 %). $^1H$ NMR ($d_6$-acetone, 400 MHz) δ 8.45 (d, *J* = 8.42 Hz, 1H), 8.14 (d, *J* = 8.05 Hz, 1H), 7.98 (t, *J* = 1.83 Hz, 1H), 7.88 (d, *J* = 8.05 Hz, 1H), 7.68 (m (overlap), 2H), 7.59 (t. *J* = 8.05 Hz, 1H), 7.53 (dd, *J* = 8.05 and 1.46 Hz, 1H), 7.47 (d, *J* = 8.78 Hz, 4H), 7.03 (d, *J* = 9.88 Hz, 1H), 6.90 (d, *J* = 8.78 Hz, 4H), 6.43 (d, *J* = 9.88 Hz, 1H), 3.75 (s. 6H), 3.74 (s, 3H), 2.89 (septet, *J* = 6.95 Hz, 1H), 1.31 (d, *J* = 6.95 Hz, 6H). $^{13}C$ NMR ($d_6$-acetone. 100 MHz) δ 176.68, 167.11, 165.84, 161.12, 153.34, 148.05, 141.35, 138.63, 132.31, 131.95, 131.36, 129.94, 129.86, 129.82, 129.38, 129.17, 129.13, 128.13, 125.25, 124.45, 124.06, 122.55, 121.79, 115.45, 115.35, 84.55, 56.49, 53.80, 35.67, 20.08.

Example 17 according to the invention

Part 1. Red Chromene mono-ATRP initiator

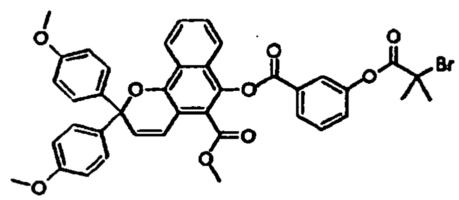

5-Methyl carboxylate-6hydroxy-bis(4-methoxyphenyl)2*H*-naphtho[1,2-b]pyran (1.0 g, 2.13 mmol) (US Patent 6,113,814) was dissolved in dry $CH_2Cl_2$ (15 mL) and triethylamine (1.10 mL) added under argon. 3-(2-Bromoisobutyryloxy)benzoyl chloride (1.30g, 4.27 mmol) (as made in Ex 14 Part 2) was then added as a solid in one portion and the mixture stirred at 40°C for 40 minutes (reaction progress monitored by TLC). The solvent was evaporated *in vacuo*, the residue re-dissolved in $Et_2O$ (30 mL) and washed successively with 1M HCl, water, aqueous $NaHCO_3$, water and brine. The organic layer was dried with $MgSO_4$ and the solvent evaporated *in vacuo.* The crude product was purified by column chromatography (silica gel, $Et_2O$/hexane, 2:1) giving a purple-red solid (1.46 g, 93 %). $^1H$ NMR ($d_6$-acetone, 400 MHz) δ 8.46 (d, *J* = 8.42 Hz, 1H), 8.19 (d, *J* = 8.05 Hz, 1H), 8.04 (t. *J* = 1.83 Hz, 1H), 7.89 (d, *J* = 8.05 Hz, 1H). 7.74 (t, *J* = 8.05 Hz, 1H), 7.68 (t. *J* = 8.05 Hz, 1H), 7.57 (m (overlap), 2H), 7.47 (d, *J* = 8.78 Hz, 4H), 7.03 (d, *J* = 9.88 Hz, 1H), 6.89 (d, *J* = 8.78 Hz, 4H), 6.43 (d, *J* = 9.88 Hz, 1H), 3.75 (s, 3H), 3.74 (s, 6H), 2.12 (s, 6H). $^{13}C$ NMR ($d_6$-acetone, 100 MHz) δ 171.59, 167.08, 165.69, 161.09, 153.07, 148.08, 141.31, 138.60, 132.52, 132.23, 131.35, 129.94, 129.85, 129.71, 129.12, 128.78, 128.12, 124.76, 124.42, 124.05, 122.53, 121.74, 115.44, 115.34, 84.54, 57.91, 56.49, 53.81, 31.67.

Part 2. Red Chromene mono-ATRP with n-butyl acrylate

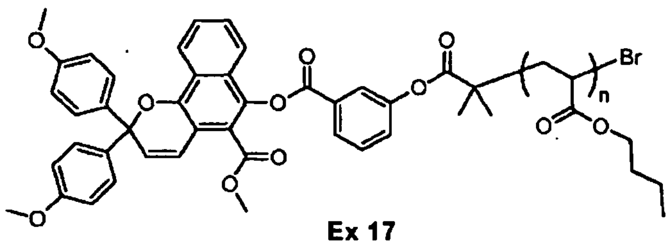

Ex 17

Five ampoules each containing *n*-butyl acrylate (2.0 g, 15.60 mmol), Red Chromene mono-initiator (0.1150 g, 0.156 mmol) as made in part 1, 4,4'-dinonyl-2,2'-bipyridine (0.1275 g, 0.312 mmol), CuBr (0.0224 g, 0.156 mmol) and benzene (3 mL) were prepared and degassed with 4 freeze/pump/thaw cycles. The ampoules were sealed and heated at 90°C in a thermostatted oil bath for various durations. Conversions were determined by $^1H$ NMR analysis of the reaction solution. Molecular weights and polydispersities were determined by GPC. The polymer purification procedure is as follows: (i) excess monomer was removed by co-evaporation with chloroform, (ii) polymer then precipitated by dissolution in a minimal amount of $CH_2Cl_2$, addition of excess methanol and slow and partial solvent evaporation (the supernatant decanted), and (iii) passing an ethereal solution of the precipitated polymer through a silica column followed by evaporation of the solvent.

| Sample | Reaction duration (mins) | Monomer conversion[a] (%) | $M_n$[b] | $M_n$[c] | Polydispersity |
|---|---|---|---|---|---|
| **Ex 17a** | 142 | 15.0 | 2,698 | 2,660 | 1.087 |
| **Ex 17b** | 270 | 22.3 | 4,083 | 3,596 | 1.079 |
| **Ex 17c** | 491 | 32.8 | 5,598 | 4,942 | 1.081 |
| **Ex 17d** | 965 | 47.3 | 8,046 | 6,800 | 1.100 |
| **Ex 17e** | 1,570 | 61.5 | 10,560 | 8,620 | 1.122 |

[a] Determined by $^1H$ NMR analysis in $d_6$-acetone solution.
[b] Determined by GPC using polystyrene standards on the samples before purification.
[c] Calculated based on monomer conversion plus initiator molecular weight

**Part 3. Photochromic performance.**

The polymers of part 2 were then added to monomer formulation A and cured in the manner described in example 5 part 2. Concentration of the dye-polymer conjugate was kept constant at 1.2 x $10^{-3}$ mmoles/gram.

Photochromic performance of test lenses containing **CE8** and **Ex 17**.

| Sample | Mn[a] | Dye Mass (mg) | Lens monomer mass (g) | $T_{1/4}$ $sec^{-1}$ | $T_{1/3}$ $sec^{-1}$ | $T_{1/2}$ $sec^{-1}$ | $A^{0[b]}$ |
|---|---|---|---|---|---|---|---|
| **CE8** | 658.7 | 1.19 | 1.5004 | 31 | 50 | 139 | 1.065 |
| **Ex 17b** | 4,112 | 7.43 | 1.5009 | 20 | 30 | 70 | 1.703 |
| **Ex 17c** | 5,709 | 10.25 | 1.5007 | 17 | 24 | 52 | 1.771 |
| **Ex 17d** | 8,419 | 15.11 | 1.5006 | 14 | 19 | 39 | 1.801 |
| **Ex 17e** | 11,258 | 20.30 | 1.5006 | 13 | 18 | 37 | 1.444 |

[a] Molecular weight calculated using GPC on the sample after purification. [b] Measured absorbance of each system before normalization. Lamp power reduced from 280 W to 160W. Rate of colouration and fade were monitored using the maximum absorbabnce at 510 nm.

This example further illustrates that attachement of low Tg polymeric substituents to a photochromic dye (in this case a Chromene) will reduce the fade speed. Thus the invention is broadly applicable. As the molecular weight increases, the switching speed as measure by fade speed also increases (as evidenced by a smaller values) $T_{1/4}$, $T_{1/3}$ and $T_{1/2}$.

**Comparative Example 9**

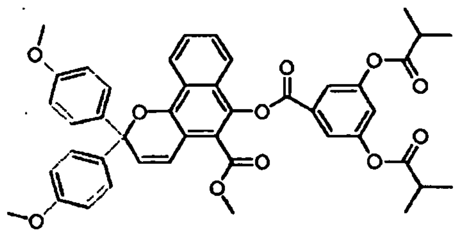

**CE 9**

5-Methyl carboxylate-6-hydroxy-bis(4-methoxyphenyl)2*H*-naphtho[1,2-b]pyran (0.20 g, 0.427 mmol) (US Patent 6,113,814) was dissolved in dry $CH_2Cl_2$ (10 mL) and triethylamine (0.18 mL) added under argon. A solution of 3,5-bis(isobutyryfoxy)benzoyl chloride (0.16 g, 0.512 mmol) (As made in **CE7** part 2) in dry $CH_2Cl_2$ (5 mL) was then added, the mixture stirred at 40°C and reaction progress monitored by TLC. Upon complexion the mixture was washed with 1M HCl, water, aqueous $NaHCO_3$ and brine. The organic layer was dried with $MgSO_4$, the solvent evaporated and the residue purified by column chromatography (silica gel, $Et_2O$/hexane, 2:1) giving a purple-red solid (0.248 g, 78%). $^1H$ NMR ($d_6$-acetone, 400 MHz) δ 8.45 (d, *J* = 8.42 Hz, 1H), 7.89 (m overlap, 3H), 7.69 (t, *J* = 7.32 Hz, 1H), 7.60 (m, *J* = 7.32 Hz, 1H), 7.47 (d, *J* = 9.15 Hz, 4H), 7.40 (t, *J* = 2.20 Hz, 1H), 7.03 (d, *J* = 10.25 Hz, 1H), 6.89 (d, *J* = 8.78 Hz, 4H), 6.43 (d, *J* = 10.25 Hz, 1H), 3.76 (s, 3H), 3.75 (s, 6H), 2.89 (septet, 2H), 1.31 (d, *J* = 6.95 Hz, 12H). $^{13}C$ NMR ($d_6$-acetone, 100 MHz) δ 176.40, 167.02. 165.25, 161.10, 153.75. 148.13, 141.28, 138.60, 132.79, 131.36, 129.99, 129.85 (shoulder, overlap), 129.85, 129.05, 128.13, 124.45, 124.05, 123.37, 122.60, 122.52, 121.65, 115.45, 115.34, 84.54, 56.49, 53.86, 35.65, 20.01.

*Example 18* according to the invention

**Bis(poly(butylacrylate)-chromene (ATRP)**

Part 1. Red Chromene bis-ATRP initiator

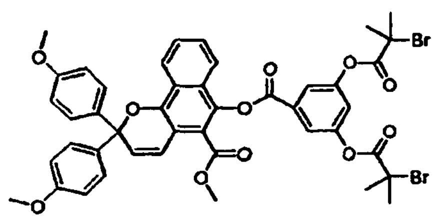

5-Methyl carboxylate-6-hydroxy-bis(4-methoxyphenyl)2*H*-naphtho[1,2-b]pyran (1.0 g, 2.13 mmol) (US Patent 6,113,814) was dissolved in dry $CH_2Cl_2$ (20 mL) and triethylamine (0.90 mL) added under argon. A solution of 3,5-bis(2-bromoisobutyryloxy)benzoyl chloride (1.25g, 2.67 mmol) (as made in **Ex 15** part 2) in dry $CH_2Cl_2$ (10 mL) was then added, the mixture stirred at 40°C and reaction progress monitored by TLC. Upon completion the mixture was washed with 1M HCl, water, aqueous $NaHCO_3$ and brine. The organic layer was dried with $MgSO_4$ and the solvent evaporated. The residue was purified by column chromatography (silica gel, $Et_2O$/hexane, 2:1) giving a purple-red solid (1.14 g, 59 %). $^1H$ NMR ($d_6$-acetone. 400 MHz) δ 8.46 (d, *J* = 8.05 Hz, 1H), 8.01 (d, *J* = 2.20 Hz, 2H), 7.91 (d, *J* = 8.42 Hz, 1H), 7.69 (t, *J* = 8.05 Hz, 1H), 7.61 (t, *J* = 8.05 Hz, 1H), 7.53 (t, *J* = 2.20 Hz, 1H), 7.47 (d, *J* = 8.78 Hz, 4H), 7.04 (d, *J* = 9.88 Hz, 1H), 6.89 (d, *J* = 8.78 Hz, 4H), 6.43 (d, *J* = 9.88 Hz, 1H), 3.77 (s, 3H), 3.75 (s, 6H), 2.12 (s, 12H). $^{13}C$ NMR ($d_6$-acetone, 100 MHz) δ 171.29, 166.99, 164.96, 161.08, 153.51, 148.20, 141.20, 138.57, 133.31, 131.36, 130.02, 129.90, 129.84, 128.98, 128.13, 124.44, 124.06, 122.72, 122.51, 122.40, 121.58, 115.44, 115.33, 84.55, 57.73, 56.48, 53.91, 31.61.

Part 2. Bis(poly(butylacrylate)-chromene (ATRP)

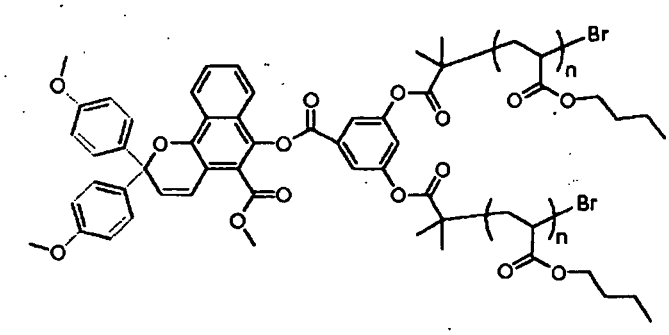

**Ex 18**

Three ampoules each containing *n*-butyl acrylate (4.0 g, 31.21 mmol), Red Chromene bis-initiator (0.1404 g, 0.156 mmol) of part 1, 4,4'-dinonyl-2,2'-bipyridine (0.1275 g, 0.312 mmol), CuBr (0.0224 g, 0.156 mmol) and benzene (2 mL) were prepared and degassed with 4 freeze/pump/thaw cycles. The ampoules were sealed and heated at 90°C in a thermostatted oil bath for various durations. Conversions were determined by $^1H$ NMR analysis of the reaction solution. Molecular weights and polydispersities were determined by GPC. The polymer purification procedure is as follows: (i) excess monomer was removed by co-evaporation with chloroform, (ii) polymer then precipitated by dissolution in a minimal amount of $CH_2Cl_2$, addition of excess methanol and slow and partial solvent evaporation (the supernatant decanted), and (iii) passing an ethereal solution of the precipitated polymer through a silica column followed by evaporation of the solvent.

| Sample | Reaction duration (mins) | Monomer conversion[a] (%) | $M_n$[b] | $M_n$[c] | Polydispersity |
|---|---|---|---|---|---|
| **Ex 18a** | 90 | 15.0 | 4.599 | 4,745 | 1.107 |
| **Ex 18b** | 140 | 23.3 | 6,942 | 6,872 | 1.098 |
| **Ex 18c** | 390 | 44.2 | 12,715 | 12,230 | 1.087 |

[a] Determined by $^1H$ NMR analysis in $d_6$-acetone solution.
[b] Determined by GPC using polystyrene standards of samples before purification.
[c] Calculated based on monomer conversion plus initiator molecular weight

**Part 3. Photochromic performance.**

The polymers were then added to monomer formulation A and cured in the manner described in example 5. Concentration of the dye-polymer conjugate was kept constant at 1.2 x $10^{-3}$ mmoles/gram.

**Table for CE9 and Example 18**

| Sample | $M_n$[a] | Dye Mass (mg) | Lens monomer mass (g) | $T_{1/4}$ $sec^{-1}$ | $T_{1/3}$ $sec^{-1}$ | $T_{1/2}$ $sec^{-1}$ | $A^0$[b] |
|---|---|---|---|---|---|---|---|
| **CE9** | 744.8 | 1.34 | 1.5003 | 38 | 69 | 263 | 1.008 |
| **Ex 18a** | 4,882 | 8.79 | 1.5004 | 14 | 21 | 46 | 1.733 |
| **Ex 18b** | 7,131 | 12.84 | 1.5004 | 11 | 16 | 32 | 1.717 |
| **Ex 18c** | 13.067 | 23.52 | 1.5001 | 8 | 12 | 21 | 1.751 |

[a] Molecular weight calculated using GPC of polymers after purification [b] Measured absorbance of each system before normalization. Lamp power reduced from 280 to 160W for these examples. Rate of colouration and fade were monitored using the maxium absorbabnce at 510 nm.

This example further illustrates that attachement of low Tg polymeric substituents to a photochromic dye (in this case a Chromene) will reduce the fade speed. As the molecular weight increases, the switching speed as measure by fade speed also increases (as evidenced by a smaller values) $T_{1/4}$, $T_{1/3}$ and $T_{1/2}$. Further more that use of a branched

polymers (or placement of the dye in the middle polymer) will give better photochromic performance and attachement of the dye at the end of polymer of the same molecular weight. This seen in that Ex 18b has faster fade than Ex 17d even though 17d has a larger Molecular weight poly(butyl acrylate) attached (Ex 17d 8419 (polystyrene equiv) Vs Ex 18 b 7131 (polystyrene equivalents). Similarly Ex 18a has faster fade than 17c.

*Example 19* according to the invention

**Spirooxazine mono-ATRP random co-polymerisation with butyl acrylate and methacryloxypropyl-poly(dimethylsiloxane) [100:5]**

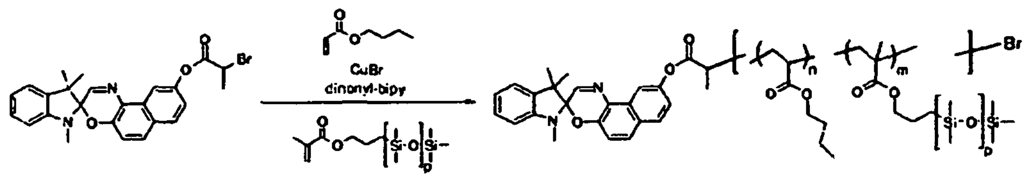


To an ampoule was added the 9'-(2-bromopropionyloxy)-1,3,3-trimethylspiro[indoline-2,3'[2,1-b][1,4]oxazine [synthesis described in example 8 step 1] (0.0748 g, 0.156 mmol), butyl acrylate (2.0 g, 15.60 mmol), methacryloxypropyl-poly (dimethylsiloxane) (0.63 g, ca. 0.78 mmol or 5 mol. eq. with respect to initiator, based on MW of 808 determined from $^1$H NMR), CuBr (0.0224 g, 0.156 mmol), 4,4'-dinonyl-2,2'-bipyridine (0.1275 g, 0.312 mmol) and benzene (1 mL). The mixture was degassed with 4 freeze/pump/thaw cycles, the ampoule sealed and then heated at 90°C in a constant temperature oil bath for 4 hours. Analysis of the reaction mixture by $^1$H NMR showed a butyl acrylate monomer conversion (MA-PDMS subtracted) of 22.4 %. GPC analysis (THF solution, polystyrene standards) gave a molecular weight (Mn) of 5,713 (equates to approximately 3.5 units of methacryloxypropyl-PDMS per polymer chain) with a polydispersity of 1.15. The crude polymer was precipitated twice from $CH_2Cl_2$/MeOH then loaded onto a silica column which was flushed with $CH_2Cl_2$/hexane (1:1) to remove any residual unreacted methacryloxypropyl-PDMS macromonomer. The product was removed from the column by eluting with $Et_2O$. Removal of the solvent *in vacuo* gave the pure polymer. GPC analysis gave a molecular weight ($M_n$) of 5,515 with a polydispersity of 1.18. $^1$H NMR (400 MHz, $d_6$-acetone) δ 8.26 (s br, 1H, spirooxazine ArH), 7.89 (d, 1H, spirooxazine ArH), 7.82 (m, 2H, spirooxazine ArH, CH=N), 7.22-7.14 (m, 3H, spirooxazine ArH), 7.05 (d, 1H, spirooxazine ArH), 6.87 (t. 1H. spirooxazine ArH), 6.66 (d, 1H, spirooxazine ArH), 4.38 (m br, 1H), 4.07 (m br, polymer butyl- $OCH_2$), 2.84, 2.80, 2.78 (3 x s, spirooxazine $CH_3N$), 2.35 (br, polymer CH), 1.91 (m br), 1.64 (m br), 1.41 (m br), 0.96 (m br, polymer butyl -$CH_3$), 0.61 (m br, ca. 6H, -$CH_2Si$), 0.13 (m. $SiCH_3$).

This is an example of flexability available in polymer composition can be achieved. This a copolymer between a polymerizable methacrylate and butyl acrylate.

*Example 20* according to the invention

**Spirooxazine poly(butyl acrylate) conjugate: Alternative synthesis**

Part 1. Benzoic acid end-functional poly(butyl acrylate) *via* RAFT polymerisation

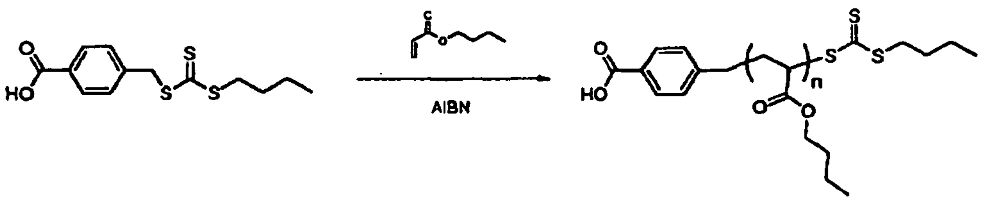


To an ampoule was added benzoic acid functionalised RAFT agent (0.0469 g, 0.156 mmol), butyl acrylate (2.0 g, 15.60 mmol), AIBN (1.28 mg, 7.80 μmol) and benzene (2 mL). The mixture was degassed with 4 freeze/pump/thaw cycles, sealed and heated at 60°C in a constant temperature oil bath for 2.5 hours. Analysis of a sample by $^1$H NMR showed

a monomer conversion of 59.1 %. The excess monomer was removed from the bulk mixture by evaporation and the crude polymer analysed by GPC (THF solution, polystyrene standards) which gave a molecular weight ($M_n$) of 8,745 with a polydispersity of 1.063. The polymer was purified by precipitation by firstly dissolving in a minimum amount of $CH_2Cl_2$ then adding MeOH and slowly evaporating to ca. ¾ volume. The supernatant was decanted and the precipitated polymer dried in a vacuum oven at 40°C. Analysis by GPC gave a molecular weight ($M_n$) of 8,701 and polydispersity of 1.069. $^1H$ NMR (400MHz, $CDCl_3$) δ 7.99 (d, 2H, ArH), 7.24 (d, 2H, ArH), 4.80 (m br, 1H, CHS(CS)S), 4.02 (m br, polymer $-OCH_2$). 3.33 (t, 2H, $SCH_2$), 2.63 (m br, 2H, $ArCH_2$), 2.27 (m br, polymer backbone CH), 1.89 (m br), 1.58 (m br), 1.36 (m br), 0.92 (t, polymer butyl $-CH_3$).

Part 2. Spirooxazine - poly(butyl acrylate) conjugate

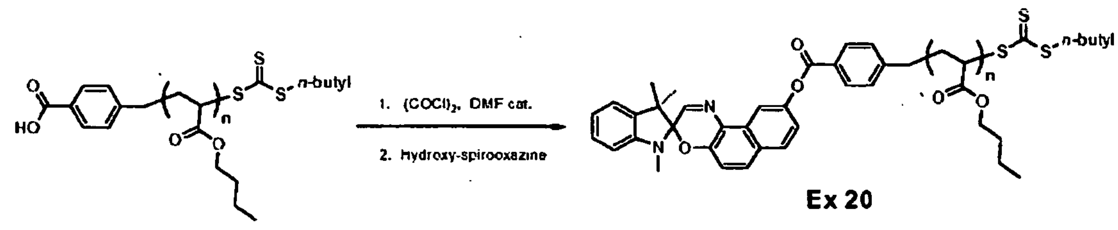


The benzoic acid end-functional poly(butyl acrylate) (0.663 g, ca. 0.076 mmol) as made in part 1 was dissolved in $CH_2Cl_2$ (5 mL) together with oxalyl chloride (0.3 mL, large excess) and 1 drop of DMF. The solution was heated at reflux under nitrogen for 3.5 hours. The solvent and excess reagent was then removed *in vacuo* and the residual oxalyl chloride removed by co-evaporation with 1,2-dichloroethane *in vacuo*. This gave the product as a viscous yellow oil which was then dissolved in dry $CH_2Cl_2$ (5 mL) and added dropwise to a solution comprised of 9'-hydroxy-1,3,3-trimethylspiro[indoline-2,3'-[3H]naphtha[2,1-b][1,4]oxazine (0.026 g, 0.076 mmol) and triethylamine (0.15 mL) in dry $CH_2Cl_2$ (5 mL), under nitrogen. The mixture was stirred at room temperature for 1 hour and then heated at 45°C for 3 hours. The reaction solution was washed with 1 M aqueous HCl, saturated aqueous $NaHCO_3$ and brine, then dried with $MgSO_4$ and the solvent evaporated. The crude product was purified by column chromatography ($SiO_2$, $Et_2O$/hexane 1:1 to 3:2) giving the pure product as a viscous yellow oil (0.34 g, 49 %). GPC analysis (THF, polystyrene standards) gives a molecular weight ($M_n$) of 9,648 with a polydispersity of 1.052. $^1H$ NMR (400 MHz, $d_6$-acetone) δ 8.39 (d, *J* = 2.20 Hz, 1H, ArH), 8.19 (d, *J* = 8.05 Hz, 2H, benzoyl linker ArH), 7.95 (d, *J* = 9.15 Hz, 1H, Ar-H), 7.85 (d, *J* = 9.15 Hz, ArH), 7.84 (s, 1H, spirooxazine CH=N), 7.48 (d, *J* = 8.05 Hz, 2H, benzoyl linker ArH), 7.36 (dd, *J* = 8.78, 2.20 Hz, 1H, ArH), 7.19 (t, *J* = 7.68 Hz, 1H, ArH), 7.16 (d, *J* = 6.95 Hz, 1H, ArH), 7,07 (d, *J* = 8.78 Hz, 1H, ArH), 6.87 (t, *J* = 7.32 Hz, 1H, ArH), 6.66 (d, *J* = 8.05 Hz, 1H, ArH), 4.87 (m br, 1H, CHS(CS)S), 4.07 (m br, polymer $-OCH_2$), 3.44 (t, 2H, $SCH_2$), 2.79 (s, $CH_3N$), 2.45-2.30 (m br, polymer backbone CH), 1.92 (m br), 1.64 (m br), 1.43 (m br), 0.96 (t, polymer butyl $-CH_3$).

Photochromic performance of test lenses containing poly(butyl acrylate) Spirooxazine conjugate made by addition of the the poly(butyl acrylate) to the dye. This was performed as described in example 5 part 2.

| Sample | $M_n$[a | Dye Mass (mg) | Lens monomer mass (g) | $T_{1/2}$ $sec^{-1}$ | $T_{3/4}$ $sec^{-1}$ | $A^0$[b] |
|---|---|---|---|---|---|---|
| Ex 13a | 5100 | 6.12 | 1.000 | 20 | 116 | 0.71 |
| Ex 20 | 9,648 | 17.37 | 1.5007 | 16 | 57 | 0.84 |
| Ex 13b | 13000 | 15.60 | 1.000 | 8 | 57 | 0.80 |

[a] Molecular weight calculated using CPCafter purification [b] Measured absorbance of each system before normalization.. Lamp power reduced from 280 to 160W for these examples.

This example shows that the polymer can be made separately to the photochromic dye and then be added to it. This is in contrast to grow the polymer directly from the dye. This example shows the generic nature of the invention and that one is not limited to simply growing the polymer from the dye. In this case **Ex 20** falls between **Ex 13a** and **Ex 13b** in terms of photochromic performance as would be expected on the basis of molecular weight of the conjugate.

*Example 21* according to the invention

**Spirooxazine-poly(*N*-isopropylacrylamide) conjugate *via* RAFT polymerisation**

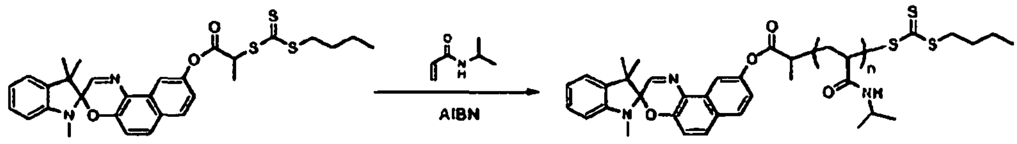


Two ampoules containing 2-(*n*-butyltrithiocarbonato)propionyloxy-functionalised spirooxazine (0.0499 g, 0.0884 mmol) [for synthesis procedure see example 8 steps 1-2], *N*-isopropylacrylamide (1.0 g, 8.84 mmol, 100 molar eq.), AIBN (0.73 mg, 4.42 μmol) and 1,4-dioxane (4 mL) was degassed with three freeze/pump/thaw cycles and then heated in a consistent temperature oil bath at 60°C for 75, 460 and 915 minutes. Conversions were determined by $^1H$ NMR analysis of the reaction mixture and found to be 23.2, 80.1 and 95.4 % respectively. Molecular weights (determined based on conversions) were calculated as 3,190. 9,629 and 11,360 respectively, The pure polymers were isolated by addition of acetone (2 mL) to the reaction mixture and subsequent precipitation by dropwise addition into hexane (200 mL). The precipitated polymers were collected by filtration, washed with hexane and dried in a vacuum oven at 40°C. $^1H$ NMR (400 MHz, $d_6$-acetone) δ 8.24 (m br, spirooxazine ArH), 7.84 (m, spirooxazine ArH, CH=N), [7.17 (m br, spirooxazine ArH), 7.04 (d, spirooxazine ArH), and 6.87 (t, spirooxazine ArH) all overlap with poly(NIPAM) broad NH], 6.66 (d, spirooxazine ArH), 4.02 (br, polymer NCH), 3.40 (t br, $SCH_2$), 2.78 (s, spirooxazine -$NCH_3$), 2.20 (br, polymer backbone CH), 1.70 (br, polymer backbone $CH_2$). 1.14 (m, polymer $CH_3$).

Photochromic performance of a test lens (formulation A) containing **Ex 21**. Test performed as described in example 5 part 2.

| Sample | $M_n$[a] | Dye Mass (mg) | Lens monomer mass(g) | $T_{1/2}$ $sec^{-1}$ | $T_{3/4}$ $sec^{-1}$ | $A^0$[b] |
|---|---|---|---|---|---|---|
| **Ex 21** | 3190 | 5.76 | 1.507 | 60 | 398 | 1.107 |

[a] Molecular weight calculated using GPC after sample purification [b] Measured absorbance of each system before normalization. Lamp power reduced from 280 to 160W for this example.

**Example 22** according to the invention

**Spirooxazine mono-ATRP co-polymerisation with methyl methacrylate and methacryloxypropyl(pentamethyldisiloxane)**

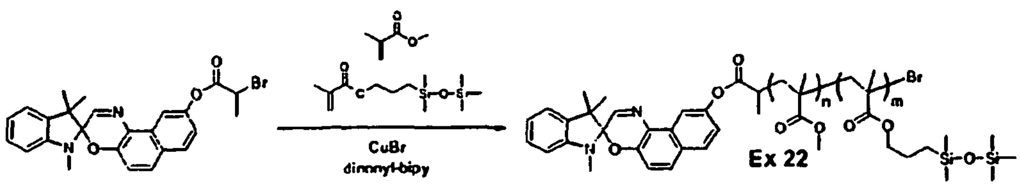


To an ampoule was added the 9'-(2-bromopropionyloxy)-1,3,3-trimethylspiro[indoline-2,3'[2,1-b][1,4]oxazine [synthesis described in example 8 step 1] (0.0699 g, 0.146 mmol), methyl methacrylate (0.3647 g, 3.643 mmol), methacryloxypropyl (pentamethyldisiloxane) (1.0 g, 3.643 mmol), CuBr (0.0209 g, 0.146 mmol), 4,4'-dinonyl-2,2'-bipyridine (0.1191 g, 0.291 mmol) and benzene (2 mL). The mixture was degassed with 4 freeze/pump/thaw cycles, the ampoule sealed and then heated at 60°C in a constant temperature oil bath for 60 minutes. Analysis of the reaction mixture by $^1H$ NMR gave a monomer conversion of 51.9 %. Excess monomer was removed by evaporation and the crude polymer analysed by GPC (THF solution, polystyrene standards) which gave a molecular weight (Mn) of 8,155 with a polydispersity of 1.47. The crude polymer was precipitated from $CH_2Cl_2$/MeOH then loaded onto a silica column which was flushed with $CH_2Cl_2$

to remove any residual methacryloxypropyl(pentamethyldisiloxane) monomer. The product was removed from the column by eluting with $Et_2O$ Evaporation of the solvent *in vacuo* gave the pure polymer. GPC analysis gave a molecular weight ($M_n$) of 7,854 with a polydispersity of 1.40. $^1H$ NMR (400 MHz, $d_6$-acetone) δ 8.26 (s br, 1H, spirooxazine ArH), 7.89 (d, 1H, spirooxazine ArH), 7.82 (m, 2H, spirooxazine ArH, CH=N), 7.22-7.14 (m, 3H, spirooxazine ArH), 7.05 (d, 1H, spirooxazine ArH), 6.87 (t, 1H, spirooxazine ArH), 6.66 (d, 1H, spirooxazine ArH), 3.95 (m br, polymer -$OCH_2$), 3.61 (s br, polymer -$OCH_3$), 2.78 (s, 3H, spirooxazine $NCH_3$), 1.96 (br), 1.86 (br), 1.72 (br), 1.50 (br), 1.36 (d br), 1.12 (br), 0.90 (br), 0.64 (br, $CH_2Si$), 0.14 (s, $SiCH_3$).

Photochromic performance of a test lens (formulation A) containing **Ex 22.** Test performed as described in example 5 part 2.

| Sample | $M_n$[a] | Dye Mass (mg) | Lens monomer mass (g) | $T_{1/2}$ $sec^{-1}$ | $T_{3/4}$ $sec^{-1}$ | $A^0$[b] |
|---|---|---|---|---|---|---|
| **PMMA-SOX-2**[c] | 6910 | 8.3 | 1.00 | 83 | - | 1.6 |
| **Ex 22** | 7854 | 14.14 | 1.5000 | 36 | 165 | 1.755 |

[a] Molecular weight calculated using GPC after purification. [b] Measured absorbance of each system before normalization. Lamp power reduced from 280 to 160W for this example, [c] Data from example 5.

Without wishing to be bound by theory, here we see the example of how the incorporation of a monomer (methacrcyloxypropyl(pentamethyldisiloxane), that would lower the Tg and compatibility of a methyl methacrylate polymer, giving faster fast speed **(Ex 22)** than the same molecular weight methyl methacrylate homopolymer **(PMMA-SOX-2) .** Here we see a dramatic reduction in T1/2 of the dye conjugate containing some short silioxane side groups, relative to a pure poly(methyl methacrylate) chain.

<u>**Example 23**</u> according to the invention

**Spirooxazine mono-ATRP co-polymerisation with butyl acrylate and methacryloxypropyl(pentamethyldisiloxane)**

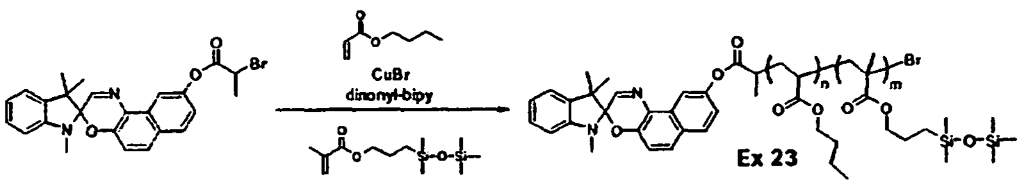


To two ampoules was added the 9'-(2-bromopropionyloxy)-1,3,3-trimethylspiro[indoline-2,3'[2,1-b][1,4]oxazine [synthesis described in example 8 step 1] (0.0748 g, 0.156 mmol), butyl acrylate (1.5 g, 11.70 mmol), methacryloxypropyl (pentamethyldisiloxane) (1.0709 g, 3.901 mmol), CuBr (0.0224 g, 0.156 mmol), 4,4'-dinonyl-2,2'-bipyridine (0.1275 g, 0.312 mmol) and benzene (2 mL). The mixtures were degassed with 4 freeze/pump/thaw cycles, the ampoules sealed and then heated at 90°C in a constant temperature oil bath for 45 and 135 minutes. Analysis of the reaction mixtures by $^1H$ NMR showed monomer conversions (BA, MA-propylpentamethyldisiloxane) of 36.0, 65.7 % and 57.0, 88.1 % respectively. GPC analysis (THF solution, polystyrene standards) gave molecular weights (Mn) of 7,443 and 12,081 with polydispersities of 1.25 and 1.20 respectively (molecular weights calculated from monomer conversions were 8,450 and 12,006 respectively). The crude polymers were precipitated from $CH_2Cl_2$/MeOH then loaded onto a silica column which was flushed with $CH_2Cl_2$ to remove any residual methacryloxypropyl-(pentamethyldisiloxane) monomer. The pure products were removed from the column by eluting with $Et_2O$ and the solvent subsequently evaporated *in vacuo.* GPC analysis gave molecular weights (Mn) of 7,317 (Ex 23a) and 11,589 (Ex 23b) with polydispersities of 1.26 and 1.16 respectively. $^1H$ NMR (400 MHz, $d_6$-acetone) δ 8.26 (s br, 1H, spirooxazine ArH), 7.89 (d, 1H, spirooxazine ArH), 7.82 (m, 2H, spirooxazine ArH, CH=N), 7.22-7.14 (m, 3H, spirooxazine ArH), 7.05 (d, 1H. spirooxazine ArH), 6.87 (t, 1H, spirooxazine ArH), 6.66 (d, 1H, spirooxazine ArH), 4.04 (m br, polymer -$OCH_2$), 2.78 (s, 3H, spirooxazine $NCH_3$), 2.50-0.90 (m br, aliphatic-H), 0.62 (m br, $CH_2Si$), 0.12 (s, $SiCH_3$).

Photochromic performance of a test lens (formulation A) containing Ex 23. Test performed as described in example 5 part 2.

| Sample | $M_n$[a] | Dye Mass (mg) | Lens monomer mass (g) | $T_{1/2}$ $sec^{-1}$ | $T_{3/4}$ $sec^{-1}$ | $A^0$[b] |
|---|---|---|---|---|---|---|
| **CE2[c]** | - | 0.5 | 1.0 | 20 | - | 1.200 |
| **Ex 23a** | 7,317 | 13.40 | 1.5009 | 13 | 36 | 1.137 |

[a] Molecular weight calculated using GPC after purification. [b] Measured absorbance of each system before normalization. Lamp power reduced from 280 to 160W for these examples. [c] Data from example 5.

Here were see another example of a low Tg polymer providing fade speed enhancement. In this case it is a co-polymer of butyl acrylate and methacryloxypropyl(pentamethyldisiloxane) and it reduced the $t_{½}$ to 13 seconds from 20 seconds for the comparison example.

**Example 24** according to the invention

**- Dye Fatigue**

Dyes were cast into the test cast Formulation and cured and exposed to the photochromic dye fatigue test, consisting of exposure in a Suntester for 24 hours, which has been shown to simulate approximately 2 years of use. The unactivated and activated %T (averaged across the visible spectrum) were measured initially and after 24 hours exposure in the suntester, and the data is recorded in the Table below. The %T was converted to absorbance and the differences in performance after fatigue were calculated by the change in the steady state absorption (defined as the difference between the unactivated and activated states).

As can be seen in the table below ("Difference in Activation") the tailed dyes, Examples 14 and 17, showed a significantly smaller decrease in the loss of activation following the fatigue experiment than the tailed controls, CE 6 and CE8 respectively. This data demonstrates that the tails protect the dye from fatigue to some extent.

The control lens, a Transitions 5 sample, produced by Transitions Optical was clearly the best performer of all of the dyes.

| | Unactivated time=0 | | Unactivated time=24 hours | | Activated time=0 | | Activated time=24 | |
|---|---|---|---|---|---|---|---|---|
| | % T | bsorbance | % T | bsorbance | %T | bsorbance | %T | bsorbance |
| CE6 | 91.14 | **0.04029** | 90.18 | **0.04489** | 83.79 | **0.0768** | 84.69 | **0.0722** |
| $E_n$ 14 | 91.57 | **0.03825** | 90.48 | **0.043447** | 89.69 | **0.0473** | 88.97 | **0.0508** |
| CE8 | 90.7 | **0.04239** | 81.15 | **0.090711** | 67.95 | **0.1678** | 77.09 | **0.1130** |
| $E_n$ 17 | 90.87 | **0.04158** | 86.98 | **0.060581** | 79.89 | **0.0975** | 85.57 | **0.0677** |
| Trans Gen | 81.11 | **0.09093** | 73.47 | **0.1339** | 26.66 | **0.5741** | 24.29 | **0.6146** |
| | | | concentration of dye in steady-state activated-state | | | | | |
| | | | time = 0 | | time = 24 | | Difference in activation | |
| | | | 0.03652 | | 0.0273 | | 0.0092 | |
| | | | 0.00901 | | 0.0073 | | 0.0017 | |
| | | | 0.12542 | | 0.0223 | | 0.1031 | |
| | | | 0.05593 | | 0.0071 | | 0.0488 | |
| | | | 0.48321 | | 0.4807 | | 0.0025 | |

## Claims

1. A compound comprising a photochromic moiety and at least one substituent comprising at least one polymer wherein the polymer is a homopolymer or copolymer comprising a plurality of monomer units of formula I

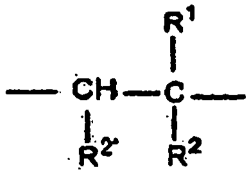

I

wherein

$R^1$ in each of the plurality of monomer units is selected from the group consisting of hydrogen, halogen, alkyl, hydroxy, hydroxy alkyl and alkoxy; $R^2$ in each of said monomer units is independently selected from the group consisting of hydroxy, alkoxy, aryloxy, heterocyclic, carboxyl, nitrile and the group of formula

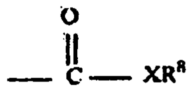

wherein $R^8$ is selected from the group consisting of alkyl, substituted alkyl, carbocyclic, substituted carbocyclic, heterocyclic, substituted heterocyclic; and X is selected from the group consisting of a bond, oxygen, sulphur and the group $NR^{7'}$ wherein $R^{7'}$ is selected from the group consisting of hydrogen, alkyl, substituted alkyl, aryl and substituted aryl, carbocyclic, substituted carbocyclic, heterocyclic and substituted heterocyclic (wherein preferably at least one of $R^{7'}$ and $R^8$ is other than hydrogen) and the group of formulae:

$-L'-(O)_q-(Z-O)_p-ZY'$; and

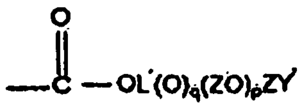

wherein

p is from 1 to 20, q is 0 or 1 , Z is selected from the group consisting of $C_2$ to $C_6$ alkylene. $C_2$ to $C_6$ haloalkylene containing one or more halo substituents, dialkylsilyl, diarylsilyl and diaryloxysilyl; L' is a bond or a linking group such as $C_1$ to $C_6$ alkylene, aryl, alkaryl and aralkyl; and Y' is a terminal group selected from the group consisting of hydrogen, alkyl, hydroxyl and alkoxy, alkoxyalkoxy, hydroxyalkoxy and aryloxy, tri-($C_1$ to $C_6$ alkyl)silane, di($C_1$ to $C_6$ alkyl)phenyl silane;

$R_2$ in each of the plurality of monomer units is hydrogen and $R^2$ and $R^{2'}$ may together form a group of formula

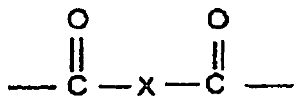

wherein

X is selected from the group consisting of oxygen, sulfur and the group $NR^7$ wherein $R^7$ is selected from the group consisting of hydrogen, alkyl, aryl, substituted alkyl and substituted aryl.

**2.** A compound according to claim 1 of formula II

$$(PC) - (L(RY)_n)_m \qquad II$$

wherein

PC is the photochromic moiety;

L is a bond or linking group;

R is an polymeric substituent chain;

Y is a terminal group of the polymeric substituent;

n is an integer of from 1 to 3;

m is an integer of from 1 to 3 and

R is a polymer, which may be a homopolymers or copolymer comprising a plurality of monomer units of formula I

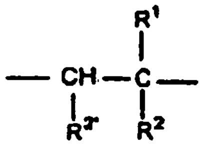 I

wherein

$R^1$ in each of the plurality of monomer units is selected from the group consisting of hydrogen, halogen, alkyl, hydroxy, hydroxy alkyl and alkoxy, $R^2$ in each of said monomer units is independency selected from the group consisting of hydroxy, alkoxy, aryloky, heterocyclic, carboxyl, nitrile and the group of formula

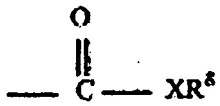

wherein $R^8$ is selected from the group consisting of alkyl, substituted alkyl, carbocyclic, substituted carbocyclic, heterocyclic, substituted heterocyclic; and X is selected from the group consisting of a bond, oxygen, sulphur and the group $NR^{7'}$ wherein $R^{7'}$ is selected from the group consisting of hydrogen, alkyl, substituted alkyl, aryl and substituted aryl, carbocyclic, substituted carbocyclic, heterocyclic and substituted heterocyclic (wherein preferably at least one of $R^{7'}$ and $R^8$ is other than hydrogen) and the group of formula:

$-L'-(O)_q-(Z-O)_p-ZY'$; and

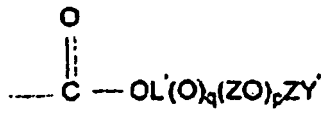

wherein

p is from 1 to 20, q is 0 or 1, Z is selected from the group consisting of $C_2$ to $C_6$ alkylene, and $C_2$ to $C_6$ haloalkylene containing one or more halo substituents, dialkylsilyl, diarylsilyl and diaryloxysilyl; L' is a bond or a linking group such as $C_1$ to $C_6$ alkylene, aryl, alkaryl and aralkyl; and Y' is a terminal group selected from the group consisting of hydrogen, alkyl, hydroxyl and alkoxy, alkoxyalkoxy, hydroxyalkoxy and aryloxy, tri-($C_1$ to $C_6$ alkyl)silane, di($C_1$ to $C_6$ alkyl)phenyl silane;

$R^{2'}$ in each of the plurality of monomer units is hydrogen and $R^2$ and $R^{2'}$ may together form a group of formula

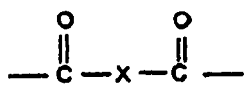

wherein

X Is selected from the group consisting of oxygen, sulfur and the group $NR^7$ wherein $R^7$ is selected from the group of hydrogen, alkyl, aryl, substituted alkyl and substituted aryl.

**3.** A compound according to claim 1 or claim 2 wherein the polymer comprising monomer units of formula 11 is a copolymer Further comprising a plurality of at least one comonomer unit of formula III:

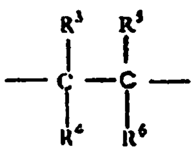 III

wherein $R^3$, $R^4$, $R^5$ and $R^6$ are Independently selected from the group consisting of hydrogen, halogen, alkyl, substituted alkyl, aryl, substituted aryl and haloalkyl.

**4.** A compound according to claim 1 or claim 2 wherein the polymeric substituent R is of formula IV

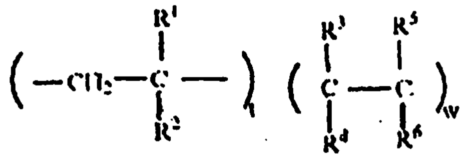

IV

wherein
$R^1$ in each of the plurality of monomer units is independently selected from the group consisting of hydrogen, halogen, alkyl, hydroxy, hydroxy alkyl and alkoxy;
$R^2$ in each of said monomer units is independently selected from the group consisting of hydroxy, alkoxy, aryl, aryloxy, heterocyclic arylalkyl, alkylaryl, carboxyl, nitrile and the group of formula

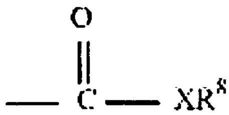

wherein $R^8$ is selected from the group consisting of alkyl, substituted alkyl, carbocyclic, substituted carbocyclic, heterocyclic, substituted heterocyclic; and X is selected from the group consisting of a bond, oxygen, sulphur and the group $NR^{7'}$ wherein $R^{7'}$ is selected from the group consisting of hydrogen, alkyl, substituted alkyl, aryl and substituted aryl, carbocyclic, substituted carbocyclic, heterocyclic and substituted heterocyclic (wherein preferably at least one of $R^{7'}$ and $R^8$ is other than hydrogen)and the group of formula:

$-L'-(O)_q-(Z-O)_p-ZY'$; and

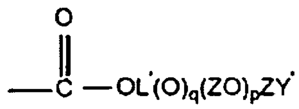

wherein
p is from 2 to 15, q is 0 or 1, Z is selected from the group consisting of $C_2$ to $C_4$ alkylene, $C_2$ to $C_4$ perhaloalkylene dialkylsilyl, diarylsilyl and diaryloxysilyl; L' is a bond or a linking group such as $C_1$ to $C_6$ alkylene, aryl, alkaryl and aralkyl; and Y' is a terminal group selected from the group consisting of hydrogen, alkyl, hydroxyl and alkoxy, alkoxyalkoxy, hydroxyalkoxy and aryloxy, tri-($C_1$ to $C_6$ alkyl)silane, di($C_1$ to $C_6$ alkyl)phenyl silane;
$R^{2'}$ in each of the plurality of monomer units is independently selected from hydrogen and wherein $R^2$ and $R^{2'}$ may together form a group of formula
$R^3$, $R^4$, $R^5$ and $R^6$ are independently selected from the group consisting of hydrogen, halogen, alkyl, substituted alkyl, aryl, substituted aryl and haloalkyl; and
t is from 2 to 500 and w is from 0 to 500.

**5.** A photochromic compound according to any one of claims 1 to 4 wherein $R^2$ in each of the plurality of monomer units is selected from the group consisting of hydroxy, alkoxy, aryl aryloxy, heterocyclic arylalkyl, alkylaryl, carboxyl, nitrile, alkoxycarbonyl, substituted alkoxycarbonyl, carbamoyl, N-alkylcarbamoyl, N,N-dialkylcarbamoyl, carbaniloyl, alkylphenylaminocarbonyl, alkoxyphenylaminocarbonyl, carbazole, acyl, substituted acyl.

**6.** A photochromic compound according to any one of the previous claims wherein the photochromic moiety is selected from the group consisting of:

chromenes such as those selected from the group consisting of naphthopyrans, benzopyrans, indenonaphthopyrans and phenanthropyrans;
spiropyrans such as those selected from the group consisting of spiro(benzindoline) naphthopyrans, spiro(indoline)benzopyrans, spiro(indoline)-naphthopyrans, spiroquinopyrans, and spiro(indoline)pyrans and spirodihydroindolizines;
spiro-oxazines such as those selected from the group consisting of spiro(indoline)naphthoxazines, spiro(indoline)pyridobenzoxazines, spiro(benzindoline)pyridobenzoxazines, spiro(benzindoline)naphthoxazines and spiro(indoline)-benzoxazines; fulgidies; fulgimides; anils; perimidinespirocyclohexadienones; stilbenes; thioindigoids; diarylperfluorocyclopentenes; diarylcyclopentenes; diheteroarylcyclopentenes; diheteroarylperfluorocyclopentenes;azo dyes; and diarylethenes.

**7.** A photochromic compound according to any one of claims 2 to 6 wherein the linking group L is a bond or the polyradical selected from the group of formula IIa, IIb, IIc, IId, IIe and IIf:

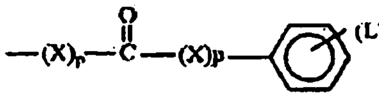

IIa

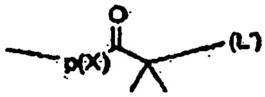

IIb

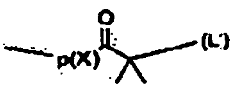

IIb

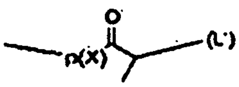

IIc

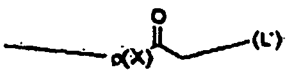

IId

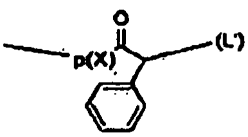

IIe

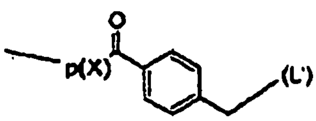

IIf

wherein in the formula IIa to IIf:

wherein L' is R or L as defined by any one of formulae IIa to IIf and the complete linker between the photochromic moiety and polymeric substituent R is no more than 6 and preferably no more than 4;
X which may be the same or different is as hereinbefore defined;
$R^4$ is selected from the group consisting of hydroxy, alkoxy, amino and substituted amino such as alkyl amino;
n is an integer from 1 to 3;
w is an integer from 1 to 4;
q is an integer from 0 to 15;
p which when there is more than one may be the same or different is 0 or 1 ; and

(R) shows the radial for attachment of polymeric substituent. R.

**8.** A photochromic compound according to any one of claims 1 to 7 wherein $R^1$ is selected from the group consisting of hydrogen, halogen, $C_1$ to $C_6$ alkyl, $C_1$ to $C_6$ alkoxy, $C_1$ to $C_6$ hydroxyalkyl and preferably $R^1$ is hydrogen or $C_1$ to $C_6$ alkyl and most preferable $R^1$ is hydrogen or methyl.

**9.** A photochromic compound according to any one of claims 1 to 8 wherein $R^2$ is selected from the group consisting of hydroxy, $C_1$ to $C_6$ alkoxy, alkoxycarbonyl, heterocyclic, aryloxy, heterocyclic comprising from 5 to 10 ring members and one or two rings and from one to three heteroatoms selected from nitrogen, oxygen and sulfur and optionally substituted by $C_1$ to $C_6$ alkyl, carboxyl, nitrile, $C_1$ to $C_{10}$ alkoxycarbonyl, alkoxycarbonyl substituted with a substituent selected from halogen, ($C_1$ to $C_6$ alkoxy) ($C_1$ to $C_8$ alkoxy), carbamoyl, N-($C_1$ to $C_6$ alkyl)carbamoyl. N,N-di($C_1$ to $C_6$ alkyl)carbamoyl, carbaniloyl ($C_1$ to $C_6$ alkyl)phenylaminocarbonyl, ($C_1$ to $C_6$ alkoxy)phenylaminocarbonyl, formyl, aroyl, ($C_1$ to $C_6$ alkoxy)carbonyl substituted by a substituent selected from the group of hydroxy and $C_1$ to $C_6$ alkoxy: and the group of formula:

$$-L'-(O)_q-(Z-O)_p-ZY'; \text{ and}$$

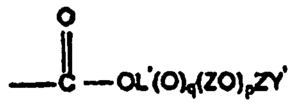

wherein q is 0 or 1, Z is selected from the group consisting of ethylene, perfluoroethylene, propylene, perfluoropropylene and dimethylsilyl and p is an integer from 2 to 20; L is a bond or a inking group selected from $C_1$ to $C_6$ alkylene; and Y' is selected from the group consisting of hydrogen, $C_1$ to $C_6$ alkyl, $C_1$ to $C_6$ alkyl substituted with a group selected from hydroxy, $C_1$ to $C_6$ alkoxy carboxyl, and ($C_1$ to $C_8$ alkoxy)carboxyl, acryloyl, methacryloyl, acryloyloxy and methacryloyloxy, halogen, dithloester (-S-C=S-R), trithlocarbonate (-S-C=S-S-R), dithiocarbamate (-S-C=S-NRR), xanthate (-S-C=S-O-R), carboxylic acids, carboxylic esters and hydroxy.

**10.** A photochromic compound according to any one of claims 1 to 9 wherein $R^2$ in each of the plurality of monomer units is Independently selected from the group consisting of carboxyl, heterocyclic of from 6 to 10 ring members comprising one or two rings and from one to three ring members optionally substituted by $C_1$ to $C_8$ alkyl, $C_1$ to $C_8$ alkoxy carbonyl, ($C_1$ to $C_6$ alkoxy) substituted ($C_1$ to $C_8$ alkoxy)carbonyl, carbamoyl, ($C_1$ to $C_6$ alkyl)carbamoyl, formyl, ($C_1$ to $C_6$ alkyl)carbonyl and the group of formula:

$$-L'-(O)_q-(Z-O)_p-ZY'; \text{ and}$$

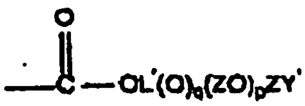

wherein
p is from 2 to 20, q is 0 or 1 , Z is ethylene, propylene, dimethylsilyl and dimethoxysilyl; L is a bond or $C_1$ to $C_4$ alkyl; and Y' is selected from the group consisting of $C_1$ to $C_6$ alkyl, $C_1$ to $C_6$ haloalkyl aryl, and $C_1$ to $C_6$ alkyl substituted with a substituent selected from $C_1$ to $C_6$ alkoxy, carboxyl, ($C_1$ to $C_8$ alkoxy)carbonyl; $R^{2'}$ is hydrogen and
$R^2$ and $R^{2'}$ may together form a bridging group of formula

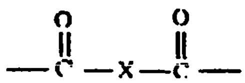

where
X is selected from oxygen, sulfur and $NR^7$, wherein $R^7$ is selected from $C_1$ to $C_6$alkyl, $C_1$ to $C_6$ alkoxy, ($C_1$ to $C_6$ alkyl).

**11.** A compound according to any one of claims 1 to 10 wherein the polymeric substituent R comprises polymers of one or more monomers selected from the group consisting of acrylic acid, methyl acrylate, ethyl acrylate, propyl acrylate, butyl acrylate, hexyl acrylate, isohexyl acrylate, cyclohexyl acrylate, isobornyl acrylate, ethoxyethyl acrylate , allyl

acrylate, acrolein, acrylamide, acryloyl chloride, poly(ethylenegylcol) acrylate, methacrylic acid, methyl methacrylate, ethyl methacrylate, propyl methacrylate, butyl methacrylate, hexyl methacrylate, isohexyl methacrylate, cyclohexyl methacrylate, isobornyl methacrylate, ethoxyethyl methacrylate, methacrylamide, methacryloyl chloride, Allyl methacrylate, 1H,1H,2H,2H-Perfluorodecyl methacrylate (and other fluorinated alkyl methacrylates), 1H,1H,2H,2H-Perfluorodecyl methacrylate, 4,4,5,5,6,6,7,7,8,9,9,9-Dodecafluoro-2-hydroxy-8-(trifluoromethyl)nonyl methacrylate, 3,3,4,4,5,5,6,6,7,8,8,8- Dodecafluoro- 7-(trifluoromethyl) octyl methacrylate, 3,3,4,4,5,5,6,6.7,7,8,8,9,9,10,10,11,12,12,12-Eicosafluoro-11-(trifluoromethyl)dodecyl methacrylate, Benzyl methacrylate, 2-Butoxyethyl methacrylate, 2-(tert-Butylamino)ethyl methacrylate, butyl 3- butoxymethacrylate, 9H-Carbazole-9-ethylmethacrylate, 3-Chloro-2- hydroxypropyl methacrylate, Cyclohexyl methacrylate, Decyl methacrylate, 3-(Diethoxymethylsilyl)propyl methacrylate, 2-(Diethylamino)ethyl methacrylate, 2-(Dimethylamino)ethyl methacrylate, 3-(Dimethylchlorosilyl)propyl methacrylate, Disperse Red 1 methacrylate, Disperse red 13 methacrylate, Disperse yellow 7 methacrylate, Ethylene glycol dicyclopentenyl ether methacrylate, Ethylene glycol methacrylate phosphate, Ethylene glycol methyl ether methacrylate, Ethylene glycol monoacetoacetate monomethacrylate, FluoresceinO-methacrylate, Glycidyl methacrylate. 3-[(3,5,7,9,11,13,15-Heptacyclopentylpentacyclo[9.5.1.1$^{3.9}$.1$^{5.6}$.1$^{7.13}$]octasiloxan-1-yloxy)-dimethylsilyl]propyl methacrylate (dimethylsilyloxy(propyl)methacrylate-POSS), Hexyl methacrylate, 2-Hydroxyethyl methacrylate, Hydroxypropyl methacrylate, Isobornyl methacrylate, Isodecyl methacrylate, Lauryl methacrylate. 2-(Methacryloyloxy)ethyl acetoacetate, [2-(Methacryloyloxy)ethyl]dimethyl-(3-sulfopropyl)ammonlum hydroxide, 2-Naphthyl methacrylate, 2-(4-nitrophenoxy)ethyl methacrylate, Pentabromobenzyl methacrylate, 2,2,3,3,3-Pentafluoropropyl methacrylate, 3-Sulfopropyl methacrylate potassium salt, 2-(tert-butylamino)-ethyl methacrylate, Tetrahydrofurfuryl methacrylate, 2,4,6-Tribromophenyl methacrylate, Tridecyl methacrylate, 3-(Trimethoxysilyl)propyl methacrylate, 3,3,5-Trimethylcyclohexyl methacrylate. Trimethylsilyl methacrylate, 3-[Tris (trimethylsiloxy)silyl]propyl methacrylate and 3-[Tris(trimethylsiloxy)silyl]propyl methacrylate, 2-methylacrylamide Methacrolei, 2-methylacryloyl chloride, polyethyleneglycol) behenyl ether methacrylate, polyethyleneglycol) methacrylate, Maleimides, styrene, acrylamide, methacrylamide, dimethylacrylamide Maleic anhydride and copolymers of two or more thereof with unsaturated comonomers.

**12.** A compound according to any one of the previous claims wherein the polymeric substituent comprises at least one monomer selected from the group consisting of alkylacrylates, alkylmethacrylates, hydroxyalkylacrylates, hydroxyalkylmethacylates, haloalkylacrylates, haloalkylmethacrylates, alkoxyalkylacrylates, alkoxyalkylmeth acrylates, optionally mono N-substituted or di-N-substituted aminoalkylmethacrylates, cycloalkylacrylates, cycloalkylmethacrylates, phenoxyacrylate, phenoxymethacylate, alkylene glycolacrylate, alkylene glycol methacrylate, polyalkyleneglycolacrylate, polyalkyleneglycolmethacrylate, acrylamides, methacrylamides, derivatives of acrylamides and methacylamides.

**13.** A photochromic compound according to any one of the claims 1 to 12 wherein the polymeric substituent R is prepared by chain growth or ring-opening polymerization method from a radical, cation or anion formed from the photochromic moiety.

**14.** A compound according to any one of claims 1 to 12 formed as an adduct of a preformed polymeric group and photochromic.

**15.** A photochromic compound according to any one of the previous claims in which the fade half life of the compound in the standard photochromic cast test is at least 20% different compared with the corresponding photochromic compound in absence of the polymeric substituent.

**16.** A photochromic compound according to any one of the previous claims wherein the fade half life in the standard photochromic cast is reduced by at least 40% compared with the corresponding photochromic compound without the polymeric substituent.

**17.** A photochromic compound according to any one of the previous claims wherein the t 3/4 of the photochromic compound in the standard photochromic cast is at least 40% reduced when compared with the corresponding composition wherein the photochromic compound does not contain the polymeric substituent.

**18.** A photochromic compound according to any one of the previous claims wherein the photochromic compound has a higher saturated absorption than the corresponding unsubstituted photochromic at the same molar concentration.

**19.** A photochromic compound according to any one of the previous claims which exhibits a reduced temperature effect when compared with the corresponding unsubstituted photochromic in the same matrix.

**20.** A process for preparing a photochromic compound according to any one of claims 1 to 21 comprising polymerising a substituted alkylene monomer to form a polymer having a carbon backbone with appended substituents wherein the polymer is (a) prepared by chain growth from an initiator comprising a photochromic moiety or (b) reacted with a reactant comprising the photochromic moiety.

**21.** A process according to claim 20 wherein polymerisation is by living free radical polymerisation from an initiator comprising a radical capping group for providing controlled chain growth.

**22.** A process for preparing a photochromic compound comprising forming a radical Initiation group from a photochromic moiety and reacting the photochromic initiator with an unsaturated monomer to form a living polymer having a radical capping group adapted to reversibly cleave from the polymer to provide controlled chain extension of the polymer and optionally terminating the living polymer with a terminating monomer.

**23.** A process for preparing a photochromic compound comprising forming a living polymeric group by living polymerisation and reacting the living polymeric group or derivative thereof with a photochromic moiety or derivative thereof to provide a photochromic compound comprising a polymeric substituent.

**24.** A process according to claim 21 wherein the radical initiating group formed from the photochromic group is of formula
PC-L-Y
wherein
PC is a photochromic moiety having a carbon based radical group;
L is a linking group; and
Y is a radical capping group.

**25.** A process according to claim 21 wherein the radical initiating group formed from a derivative of the photochromic moiety of formula:

PC-(X)-CO-B-Hal

wherein B is a stable carbon radical and Hal is halogen.

**26.** A process according to claim 20 or 24 wherein the radical capping group is selected from the group consisting of dithioester (-S-C=S-R), trithiocarbonate (-S-C=S-S-R), dithiocarbamate (-S-C=S-NRR), xanthate (-S-C=S-O-R) and alkoxyamine groups.

**27.** A process according to claim 20 wherein the polymeric substituent is formed by ATRP from a radical formed on the photochromic moiety.

**28.** A photochromic composition comprising a compound according to any one of claims 1 to 22 and a host matrix.

**29.** A photochromic composition according to claim 28 comprising a polymeric host matrix.

**30.** A composition according to claim 29 wherein the host matrix is a polymer having a cured Tg of at least 50°C.

**31.** A composition according to claim 29 or claim 30 wherein the host matrix comprises a polymer matrix selected from homopolymers and copolymers of polyol(allyl carbonate) monomers, homopolymers and copolymers of polyfunctional acrylate monomers, polyacrylates, poly(alkylacrylates) such as poly(methylmethacrylate), polyvinyl acetate), poly(vinylalcohol), poly(vinylchloride), poly(vinlylidene chloride), polyurethanes, polycarbonates, poly(ethyleneterephthalate), polystyrene, copoly(styrene-methylmethacrylate), copoly(styrene-acrylateonitrile), poly(vinylbutryal), and homopolymers and copolymers of diacylidene pentaerythritol.

**32.** A composition according to any one of claims 28 to 31 wherein the photochromic compound is present in an amount of from 0.001 wt% of host matrix up to 30 wt% of host matrix.

**33.** A composition according to any one of claims 28 to 32 in the form selected from the group consisting of ophthalmic lenses, piano lenses, interocular lenses, contact lenses, spectacle lens frames, face shields, goggles, visors, camera lenses, windows, mirrors, automotive windows, jewellery, aircraft and automotive transparencies, plastic films sheets, textiles, coatings, inks data storage devices, optical switching devices and cosmetics.

**34.** A composition according to any one of claims 28 to 32 in the form of a coating composition.

**35.** A photochromic composition according to any one of claims 28 to 32 wherein the photochromic compound is incorporated in the polymeric matrix by application to a surface of a polymer matrix which is at least partially cured.

**36.** A photochromic composition according to any one of claims 28 to 32 wherein the photochromic compound is blended with the polymeric matrix or monomer and/or prepolymer precursors of the polymeric matrix.

**37.** A photochromic composition according to any one of claims 28 to 32 in the form of an optical lens or surface coating thereof.

**38.** A photochromic composition according to any one of claims 28 to 37 wherein the fade half life of the photochromic compound in the matrix is changed by at least 20% compared with the corresponding composition in the absence of the polymeric substituent.

**39.** A photochromic composition according to claim 38 wherein the fade half life of the photochromic compound is reduced by at least 40% compared with the corresponding composition comprising the photochromic compound without the polymeric substituent.

**40.** A photochromic composition according to claim 38 wherein the t 3/4 of the photochromic compound is at least 40% reduced when compared with the corresponding composition wherein the photochromic compound does not contain the polymeric substituent.

**41.** A photochromic composition according to claim 28 to 32 wherein the photochromic compound remains unreacted with the polymer matrix.

**42.** A photochromic composition according to anyone of claims 28 to 32 wherein one or more of the substituents Y and Y' is reactive with the host matrix to form a cured matrix in which the photochromic moiety is tethered to the matrix by the polymeric substituent.

**Patentansprüche**

**1.** Verbindung, die einen photochromen Teil und mindestens einen Substituenten umfasst, der mindestens ein Polymer umfasst, wobei das Polymer ein Homopolymer oder Copolymer ist, das eine Vielzahl von Monomereinheiten der Formel I

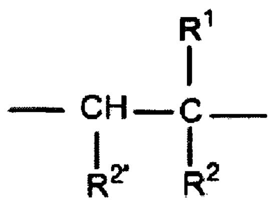

I

umfasst, wobei
$R^1$ in jeder der Vielzahl von Monomereinheiten ausgewählt ist aus der Gruppe bestehend aus Wasserstoff, Halogen, Alkyl, Hydroxy, Hydroxyalkyl und Alkoxy; $R^2$ in jeder der genannten Monomereinheiten unabhängig ausgewählt ist aus der Gruppe bestehend aus Hydroxy, Alkoxy, Aryloxy, Heterocyclus, Carboxyl, Nitril und der Gruppe der Formel

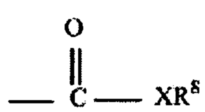

,

wobei $R^8$ ausgewählt ist aus der Gruppe bestehend aus Alkyl, substituiertem Alkyl, Carbocyclus, substituiertem Carbocyclus, Heterocyclus, substituiertem Heterocyclus; und X ausgewählt ist aus der Gruppe bestehend aus einer

Bindung, Sauerstoff, Schwefel und der Gruppe $NR^{7'}$, wobei $R^{7'}$ ausgewählt ist aus der Gruppe bestehend aus Wasserstoff, Alkyl, substituiertem Alkyl, Aryl und substituiertem Aryl, Carbocyclus, substituiertem Carbocyclus, Heterocyclus und substituiertem Heterocyclus (wobei vorzugsweise mindestens einer der Reste $R^{7'}$ und $R^8$ etwas anderes als Wasserstoff ist) und der Gruppe der Formel:

$$-L'-(O)_q-(Z-O)_p-ZY' \text{ und}$$

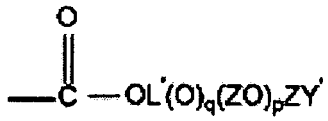

,

wobei
p von 1 bis 20 ist, q 0 oder 1 ist, Z ausgewählt ist aus der Gruppe bestehend aus $C_2$- bis $C_6$-Alkylen, $C_2$- bis $C_6$-Halogenalkylen, das ein oder mehrere Halogensubstituenten enthält, Dialkylsilyl, Diarylsilyl und Diaryloxysilyl; L' eine Bindung oder eine Verbindungsgruppe ist, wie $C_1$- bis $C_6$-Alkylen, Aryl, Alkaryl und Aralkyl; und Y eine Endgruppe ist, ausgewählt aus der Gruppe bestehend aus Wasserstoff, Alkyl, Hydroxyl und Alkoxy, Alkoxyalkoxy, Hydroxyalkoxy und Aryloxy, Tri-($C_1$- bis $C_6$-alkyl)silan, Di-($C_1$- bis $C_6$-alkyl)phenylsilan;
$R_2$ in jeder der Vielzahl der Monomereinheiten Wasserstoff ist und $R^2$ und $R^{2'}$ zusammen eine Gruppe der Formel

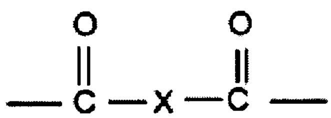

bilden können, wobei
X ausgewählt ist aus der Gruppe bestehend aus Sauerstoff, Schwefel und der Gruppe $NR^7$, wobei $R^7$ ausgewählt ist aus der Gruppe bestehend aus Wasserstoff, Alkyl, Aryl, substituiertem Alkyl und substituiertem Aryl.

**2.** Verbindung nach Anspruch 1 der Formel II,

$$(PC)-(L(RY)_n)_m \qquad \text{II}$$

wobei
PC der photochrome Teil ist;
L eine Bindung oder Verbindungsgruppe ist;
R eine Kette des polymeren Substituenten ist;
Y eine Endgruppe des polymeren Substituenten ist;
n eine ganze Zahl von 1 bis 3 ist;
m eine ganze Zahl von 1 bis 3 ist und
R ein Polymer ist, das ein Homopolymer oder Copolymer sein kann, das eine Vielzahl von Monomereinheiten der Formel I

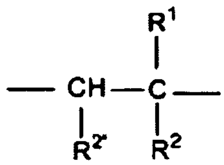

I

umfasst, wobei
$R^1$ in jeder der Vielzahl von Monomereinheiten ausgewählt ist aus der Gruppe bestehend aus Wasserstoff, Halogen, Alkyl, Hydroxy, Hydroxyalkyl und Alkoxy; $R^2$ in jeder der genannten Monomereinheiten unabhängig ausgewählt ist aus der Gruppe bestehend aus Hydroxy, Alkoxy, Aryloxy, Heterocyclus, Carboxyl, Nitril und der Gruppe der Formel

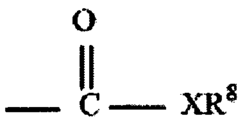

,

wobei $R^8$ ausgewählt ist aus der Gruppe bestehend aus Alkyl, substituiertem Alkyl, Carbocyclus, substituiertem Carbocyclus, Heterocyclus, substituiertem Heterocyclus; und X ausgewählt ist aus der Gruppe bestehend aus einer Bindung, Sauerstoff, Schwefel und der Gruppe $NR^{7'}$, wobei $R^{7'}$ ausgewählt ist aus der Gruppe bestehend aus Wasserstoff, Alkyl, substituiertem Alkyl, Aryl und substituiertem Aryl, Carbocyclus, substituiertem Carbocyclus, Heterocyclus und substituiertem Heterocyclus (wobei vorzugsweise mindestens einer der Reste $R^{7'}$ und $R^8$ etwas anderes als Wasserstoff ist) und der Gruppe der Formel:

$-L'-(O)_q-(Z-O)_p-ZY'$ und

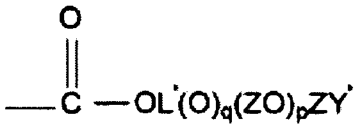

,

wobei
p von 1 bis 20 ist, q 0 oder 1 ist, Z ausgewählt ist aus der Gruppe bestehend aus $C_2$- bis $C_6$-Alkylen, $C_2$- bis $C_6$-Halogenalkylen, das ein oder mehrere Halogensubstituenten enthält, Dialkylsilyl, Diarylsilyl und Diaryloxysilyl; L' eine Bindung oder eine Verbindungsgruppe ist, wie $C_1$- bis $C_6$-Alkylen, Aryl, Alkaryl und Aralkyl; und Y eine Endgruppe ist, ausgewählt aus der Gruppe bestehend aus Wasserstoff, Alkyl, Hydroxyl und Alkoxy, Alkoxyalkoxy, Hydroxyalkoxy und Aryloxy, Tri-($C_1$- bis $C_6$-alkyl)silan, Di-($C_1$- bis $C_6$-alkyl)phenylsilan;
$R^{2'}$ in jeder der Vielzahl von Monomereinheiten Wasserstoff ist und $R^2$ und
$R^{2'}$ zusammen eine Gruppe der Formel

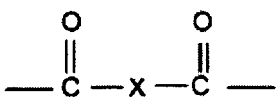

bilden können, wobei
X ausgewählt ist aus der Gruppe bestehend aus Sauerstoff, Schwefel und der Gruppe $NR^7$, wobei $R^7$ ausgewählt ist aus der Gruppe von Wasserstoff, Alkyl, Aryl, substituiertem Alkyl und substituiertem Aryl.

**3.** Verbindung nach Anspruch 1 oder 2, wobei das Polymer, das Monomereinheiten der Formel II umfasst, ein Copolymer ist, das weiterhin eine Vielzahl von mindestens einer Comonomereinheit der Formel III:

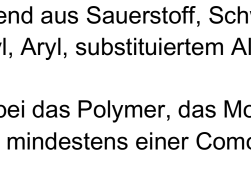
III

umfasst, wobei $R^3$, $R^4$, $R^5$ und $R^6$ unabhängig ausgewählt sind aus der Gruppe bestehend aus Wasserstoff, Halogen, Alkyl, substituiertem Alkyl, Aryl, substituiertem Aryl und Halogenalkyl.

**4.** Verbindung nach Anspruch 1 oder 2, wobei der polymere Substituent R die Formel IV

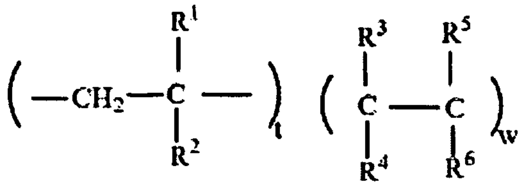 IV

aufweist, wobei
$R^1$ in jeder der Vielzahl von Monomereinheiten unabhängig ausgewählt ist aus der Gruppe bestehend aus Wasserstoff, Halogen, Alkyl, Hydroxy, Hydroxyalkyl und Alkoxy;
$R^2$ in jeder der genannten Monomereinheiten unabhängig ausgewählt ist aus der Gruppe bestehend aus Hydroxy, Alkoxy, Aryloxy, Heterocyclus; Carboxyl, Nitril und der Gruppe der Formel

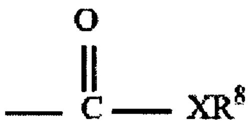,

wobei $R^8$ ausgewählt ist aus der Gruppe bestehend aus Alkyl, substituiertem Alkyl, Carbocyclus, substituiertem Carbocyclus, Heterocyclus, substituiertem Heterocyclus; und X ausgewählt ist aus der Gruppe bestehend aus einer Bindung, Sauerstoff, Schwefel und der Gruppe $NR^{7'}$, wobei $R^{7'}$ ausgewählt ist aus der Gruppe bestehend aus Wasserstoff, Alkyl, substituiertem Alkyl, Aryl und substituiertem Aryl, Carbocyclus, substituiertem Carbocyclus, Heterocyclus und substituiertem Heterocyclus (wobei vorzugsweise mindestens einer der Reste $R^{7'}$ und $R^8$ etwas anderes als Wasserstoff ist) und der Gruppe der Formeln:

$-L'-(O)_q-(Z-O)_p-ZY'$ und

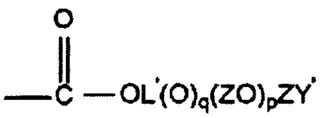,

wobei
p von 2 bis 15 ist, q 0 oder 1 ist, Z ausgewählt ist aus der Gruppe bestehend aus $C_2$- bis C4-Alkylen, $C_2$- bis $C_6$-Perhalogenaltylen, Dialkylsilyl, Diarylsilyl und Diaryloxysilyl; L' eine Bindung oder eine Verbindungsgruppe ist, wie $C_1$- bis $C_6$-Alkylen, Aryl, Alkaryl und Aralkyl; und Y eine Endgruppe ist, ausgewählt aus der Gruppe bestehend aus Wasserstoff, Alkyl, Hydroxyl und Alkoxy, Alkoxyalkoxy, Hydroxyalkoxy und Aryloxy, Tri-($C_1$- bis $C_6$-alkyl)silan, Di-($C_1$- bis $C_6$-alkyl)phenylsilan;
$R^3$, $R^4$, $R^5$ und $R^6$ unabhängig ausgewählt sind aus der Gruppe bestehend aus Wasserstoff, Halogen, Alkyl, substituiertem Alkyl, Aryl, substituiertem Aryl und Halogenalkyl und
t von 2 bis 500 ist und w von 0 bis 500 ist.

**5.** Photochrome Verbindung nach einem der Ansprüche 1 bis 4, wobei $R^2$ in jeder der Vielzahl von Monomereinheiten ausgewählt ist aus der Gruppe bestehend aus Hydroxy, Alkoxy, Arylaryloxy, heterocyclischem Arylalkyl, Alkylaryl, Carboxyl, Nitril, Alkoxycarbonyl, substituiertem Alkoxycarbonyl, Carbamoyl, N-Alkylcarbamoyl, N,N-Dialkylcarbamoyl, Carbaniloyl, Alkylphenylaminocarbonyl, Alkoxyphenylaminocarbonyl, Carbazol, Acyl, substituiertem Acyl.

**6.** Photochrome Verbindung nach einem der vorhergehenden Ansprüche, wobei der photochrome Teil ausgewählt ist aus der Gruppe bestehend aus:

Chromenen, wie den aus der Gruppe bestehend aus Naphthopyranen, Benzopyranen, Indenonaphthopyranen und Phenanthropyranen ausgewählten;
Spiropyranen, wie den aus der Gruppe bestehend aus Spiro(benzindolin)naphthopyranen, Spiro(indolin)benzopyranen, Spiro(indolin)napthopyranen, Spirochinopyranen und Spiro(indolin)pyranen und Spirodihydroindolizinen ausgewählten;
Spirooxazinen, wie den aus der Gruppe bestehend aus Spiro(indolin)naphthoxazinen, Spiro(indolin)pyridobenzoxazinen, Spiro(benzindolin)pyridobenzoxazinen, Spiro(benzindolin)naphthoxazinen und Spiro(indolin)benzoxazinen ausgewählten; Fulgiden; Fulgimiden; Anilen; Perimidinspirocyclohexadienonen; Stilbenen; Thioindigoiden; Diarylperfluorcyclopentenen; Diarylcyclopentenen; Diheteroarylcyclopentenen; Diheteroarylperfluorcyclopentenen; Azofarbstoffen und Diarylethenen.

**7.** Photochrome Verbindung nach einem der Ansprüche 2 bis 6, wobei die Verbindungsgruppe L eine Bindung oder das Polyradikal ist, ausgewählt aus der Gruppe der Formel IIa, IIb, IIc, IId, IIe und IIf:

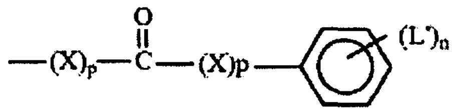
IIa

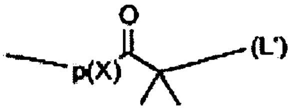
IIb

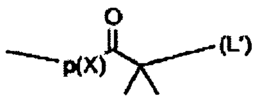
IIb

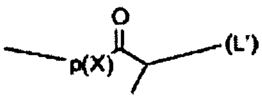
IIc

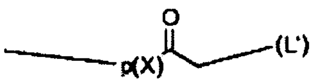
IId

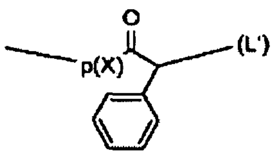
IIe

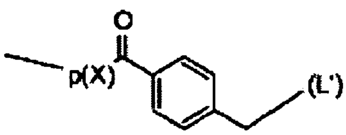
IIf,

wobei in der Formel IIa bis IIf:

wobei L' R ist oder L wie durch eine beliebige der Formeln IIa bis IIf definiert ist und der vollständige Linker zwischen dem photochromen Teil und dem polymeren Substituenten R nicht mehr als 6 und vorzugsweise nicht mehr als 4 ist;
X, das gleich oder verschieden sein kann, wie hierin oben definiert ist;
$R^4$ ausgewählt ist aus der Gruppe bestehend aus Hydroxy, Alkoxy, Amino und substituiertem Amino, wie Alkylamino;
n eine ganze Zahl von 1 bis 3 ist;
w eine ganze Zahl von 1 bis 4 ist;

q eine ganze Zahl von 0 bis 15 ist;
p, das, wenn es mehr als eins gibt, gleich oder verschieden sein kann, 0 oder 1 ist und
(R) das Radikal zur Anlagerung des polymeren Substituenten R zeigt.

**8.** Photochrome Verbindung nach einem der Ansprüche 1 bis 7, wobei $R^1$ ausgewählt ist aus der Gruppe bestehend aus Wasserstoff, Halogen, $C_1$- bis $C_6$-Alkyl, $C_1$- bis $C_6$-Alkoxy, $C_1$- bis $C_6$-Hydroxyalkyl und vorzugsweise $R^1$ Wasserstoff oder $C_1$- bis $C_6$-Alkyl ist und am meisten bevorzugt $R^1$ Wasserstoff oder Methyl ist.

**9.** Photochrome Verbindung nach einem der Ansprüche 1 bis 8, wobei $R^2$ ausgewählt ist aus der Gruppe bestehend aus Hydroxy, $C_1$- bis $C_6$-Alkoxy, Alkoxycarbonyl, Heterocyclus, Aryloxy, Heterocyclus, umfassend von 5 bis 10 Ringglieder und ein oder zwei Ringe und von ein bis drei Heteroatome, ausgewählt aus Stickstoff, Sauerstoff und Schwefel und gegebenenfalls substituiert durch $C_1$- bis $C_6$-Alkyl, Carboxyl, Nitril, $C_1$- bis $C_{10}$-Alkoxycarbonyl, Alkoxycarbonyl, substituiert mit einem Substituenten, ausgewählt aus Halogen, ($C_1$- bis $C_6$-Alkoxy)-($C_1$- bis $C_6$-alkoxy), Carbamoyl, N-($C_1$- bis $C_6$-Alkyl)carbamoyl, N,N-Di-($C_1$- bis $C_6$-alkyl)carbamoyl, Carbaniloyl, ($C_1$- bis $C_6$-Alkyl)phenylaminocarbonyl, ($C_1$- bis $C_6$-Alkoxy)phenylaminocarbonyl, Formyl, Aroyl, ($C_1$- bis $C_6$-Alkoxy)carbonyl, substituiert durch einen Substituenten, ausgewählt aus der Gruppe von Hydroxy und $C_1$- bis $C_6$-Alkoxy; und der Gruppe der Formel:

$-L'-(O)_q-(Z-O)_p-ZY'$ und

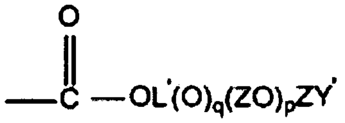
,

wobei q 0 oder 1 ist, Z ausgewählt ist aus der Gruppe bestehend aus Ethylen, Perfluorethylen, Propylen, Perfluorpropylen und Dimethylsilyl und p eine ganze Zahl von 2 bis 20 ist; L eine Bindung oder eine Verbindungsgruppe ist, ausgewählt aus $C_1$- bis $C_6$-Alkylen; und Y' ausgewählt ist aus der Gruppe bestehend aus Wasserstoff, $C_1$- bis $C_6$-Alkyl, $C_1$- bis $C_6$-Alkyl, substituiert mit einer Gruppe, ausgewählt aus Hydroxy, $C_1$- bis $C_6$-Alkoxycarboxyl, und ($C_1$- bis $C_6$-Alkoxy)carboxyl, Acryloyl, Methacryloyl, Acryloyloxy und Methacryloyloxy, Halogen, Dithioester (-S-C=S-R), Trithiocarbonat (-S-C=S-S-R), Dithiocarbamat (-S-C=S-NRR), Xanthat (-S-C=S-O-R), Carbonsäuren, Carbonsäureestern und Hydroxy.

**10.** Photochrome Verbindung nach einem der Ansprüche 1 bis 9, wobei $R^2$ in jeder der Vielzahl von Monomereinheiten unabhängig ausgewählt ist aus der Gruppe bestehend aus Carboxyl, Heterocyclus von 5 bis 10 Ringgliedern, umfassend ein oder zwei Ringe und von ein bis drei Ringgliedern, gegebenenfalls substituiert durch $C_1$- bis $C_6$-Alkyl, $C_1$- bis $C_6$-Alkoxy, Carbonyl, ($C_1$- bis $C_6$-Alkoxy)-substituiertem ($C_1$- bis $C_6$-Alkoxy)carbonyl, Carbamoyl, ($C_1$-bis $C_6$-Alkyl)carbamoyl, Formyl, ($C_1$- bis $C_6$-Alkyl)carbonyl und der Gruppe der Formel:

$-L'-(O)_q-(Z-O)_p-ZY'$ und

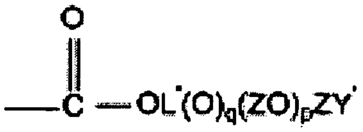
,

wobei
p von 2 bis 20 ist, q 0 oder 1 ist, Z Ethylen, Propylen, Dimethylsilyl und Dimethoxysilyl ist; L eine Bindung oder $C_1$- bis $C_6$-Alkyl ist; und Y' ausgewählt ist aus der Gruppe bestehend aus $C_1$- bis $C_6$-Alkyl, $C_1$- bis $C_6$-Halogenalkylaryl und $C_1$- bis $C_6$-Alkyl, substituiert mit einem Substituenten, ausgewählt aus $C_1$- bis $C_6$-Alkoxy, Carboxyl, ($C_1$- bis $C_6$-Alkoxy)carbonyl; $R^{2'}$ Wasserstoff ist und
$R^2$ und $R^{2'}$ zusammen eine Brückengruppe der Formel

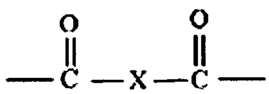

bilden können, wobei
X ausgewählt ist aus Sauerstoff, Schwefel und $NR^7$, wobei $R^7$ ausgewählt ist aus $C_1$- bis $C_6$-Alkyl, $C_1$- bis $C_6$-Alkoxy, ($C_1$- bis $C_6$-Alkyl).

**11.** Verbindung nach einem der Ansprüche 1 bis 10, wobei der polymere Substituent R Polymere von einem oder mehreren Monomeren umfasst, ausgewählt aus der Gruppe bestehend aus Acrylsäure, Methylacrylat, Ethylacrylat, Propylacrylat, Butylacrylat, Hexylacrylat, Isohexylacrylat, Cyclohexylacrylat, Isobornylacrylat, Ethoxyethylacrylat, Allylacrylat, Acrolein, Acrylamid, Acryloylchlorid, Poly(ethylenglykol)acrylat, Methacrylsäure, Methylmethacrylat, Ethylmethacrylat, Propylmethacrylat, Butylmethacrylat, Hexylmethacrylat, Isohexylmethacrylat, Cyclohexylmethacrylat, Isobornylmethacrylat, Ethoxyethylmethacrylat, Methacrylamid, Methacryloylchlorid, Allylmethacrylat, 1H, 1H,2H,2H-Perfluordecylmethacrylat (und andere fluorierte Alkylmethacrylate), 1H,1H,2H,2H-Perfluordecylmethacrylat, 4,4,5,5,6,6,7,7,8,9,9,9-Dodecafluor-2-hydroxy-8-(trifluormethyl)nonylmethacrylat, 3,3,4,4,5,5,6,6,7,8,8,8-Dodecafluor-7-(trifluormethyl)octylmethacrylat, 3,3,4,4,5,5,6,6,7,7,8,8,9,9,10,10,11,12,12,12-Eikosafluor-11-(trifluormethyl)dodecylmethacrylat, Benzylmethacrylat, 2-Butoxyethylmethacrylat, 2-(tert.-Butylamino)ethylmethacrylat, 3-butoxymethacrylsäurebutylester, 9H-Carbazol-9-ethylmethacrylat, 3-Chlor-2-hydroxypropylmethacrylat, Cyclohexylmethacrylat, Decylmethacrylat, 3-(Diethoxymethylsilyl)propylmethacrylat, 2-(Diethylamino)ethylmethacrylat, 2-(Dimethylamino)ethylmethacrylat, 3-(Dimethylchlorsilyl)propylmethacrylat, Disperse-Rot-1-Methacrylat, Disperse-Rot-13-Methacrylat, Disperse-Gelb-7-methacrylat, Ethylenglykoldicyclopentenylethermethacrylat, Ethylenglykolmethacrylatphosphat, Ethylenglykolmethylethermethacrylat, Ethylenglykolmonoacetoacetatmonomethacrylat, Fluorescein-O-Methacrylat, Glycidylmethacrylat, 3-[(3,5,7,9,11,13,15-Heptacyclopentylpentacyclo[9.5.1.$1^{3,9}$.$1^{5,5}$.$1^{7,13}$]octasiloxan-1-yloxy)dimethylsilyl]propylmethacrylat (Dimethylsilyloxy(propyl)methacrylat-POSS), Hexylmethacrylat, 2-Hydroxyethylmethacrylat, Hydroxypropylmethacrylat, Isobornylmethacrylat, Isodecylmethacrylat, Laurylmethacrylat, 2-(Methacryloyloxy)ethylacetoacetat, [2-(Methacryloyloxy)ethyl]dimethyl-(3-sulfopropyl)ammoniumhydroxid, 2-Naphthylmethacrylat, 2-(4-Nitrophenoxy)ethylmethacrylat, Pentabrombenzylmethacrylat, 2,2,3,3,3-Pentafluorpropylmethacrylat, 3-Sulfopropylmethacrylat-Kaliumsalz, 2-(tert.-Butylamino)ethylmethacrylat, Tetrahydrofurfurylmethacrylat, 2,4,6-Tribromphenylmethacrylat, Tridecylmethacrylat, 3-(Trimethoxysilyl)propylmethacrylat, 3,3,5-Trimethylcyclohexylmethacrylat, Trimethylsilylmethacrylat, 3-[Tris(trimethylsiloxy)silyl]propylmethacrylat und 3-[Tris(trimethylsiloxy)silyl]propylmethacrylat, 2-Methylacrylamidmethacrolein, 2-Methylacryloylchlorid, (Polyethylenglykol)behenylethermethacrylat, (Polyethylenglykol)methacrylat, Maleinimiden, Styrol, Acrylamid, Methacrylamid, Dimethylacrylamidmaleinsäureanhydrid und Copolymeren von zwei oder mehr davon mit ungesättigten Comonomeren.

**12.** Verbindung nach einem der vorhergehenden Ansprüche, wobei der polymere Substituent mindestens ein Monomer umfasst, ausgewählt aus der Gruppe bestehend aus Alkylacrylaten, Alkylmethacrylaten, Hydroxyalkylacrylaten, Hydroxyalkylmethacylaten, Halogenalkylacrylaten, Halogenalkylmethacrylaten, Alkoxyalkylacrylaten, Alkoxyalkylmethacrylaten, gegebenenfalls Mono-N-substitutierten oder Di-N-substitutierten Aminoalkylmethacrylaten, Cycloalkylacrylaten, Cycloalkylmethacrylaten, Phenoxyacrylat, Phenoxymethacylat, Alkylenglykolacrylat, Alkylenglykolmethacrylat, Polyalkylenglykolacrylat, Polyalkylenglykolmethacrylat, Acrylamiden, Methacrylamiden, Derivaten von Acrylamiden und Methacrylamiden.

**13.** Photochrome Verbindung nach einem der Ansprüche 1 bis 12, wobei der polymere Substituent R durch Kettenwachstum oder ein Ringöffnungspolymerisationsverfahren von einem Radikal, Kation oder Anion, gebildet aus dem photochromen Teil, hergestellt wird.

**14.** Verbindung nach einem der Ansprüche 1 bis 12, gebildet als ein Addukt einer vorher gebildeten polymeren Gruppen und einem Photochrom.

**15.** Photochrome Verbindung nach einem der vorhergehenden Ansprüche, wobei die Verblassungshalbwertszeit der Verbindung im photochromen Gussstandardtest im Vergleich mit der entsprechenden photochromen Verbindung in Abwesenheit des polymeren Substituenten um mindestens 20 % unterschiedlich ist.

**16.** Photochrome Verbindung nach einem der vorhergehenden Ansprüche, wobei die Verblassungshalbwertszeit im standardmäßigen photochromen Guss im Vergleich mit der entsprechenden photochromen Verbindung ohne den

polymeren Substituenten um mindestens 40 % verringert ist.

17. Photochrome Verbindung nach einem der vorhergehenden Ansprüche, wobei die t 3/4 der photochromen Verbindung im standardmäßigen photochromen Guss verglichen mit der entsprechenden Verbindung um mindestens 40 % verringert ist, wobei die photochrome Verbindung keinen polymeren Substituenten enthält.

18. Photochrome Verbindung nach einem der vorhergehenden Ansprüche, wobei die photochrome Verbindung eine höhere Sättigungsabsorption als das entsprechende unsubstituierte Photochrom mit der gleichen molaren Konzentration aufweist.

19. Photochrome Verbindung nach einem der vorhergehenden Ansprüche, die einen verringerten Temperatureffekt verglichen mit dem entsprechenden unsubstituierten Photochrom in der gleichen Matrix zeigt.

20. Verfahren zur Herstellung einer photochromen Verbindung nach einem der Ansprüche 1 bis 21, das das Polymerisieren eines substituierten Alkylenmonomers umfasst, um ein Polymer mit einer Kohlenstoffhauptkette mit angelagerten Substituenten zu bilden, wobei das Polymer (a) durch Kettenwachstum von einem Initiator, der einen photochromen Teil umfasst, hergestellt wird oder (b) mit einem Reaktanten, der den photochromen Teil umfasst, umgesetzt wird.

21. Verfahren nach Anspruch 20, wobei die Polymerisation durch lebende Radikalpolymerisation von einem Initiator, der eine Radikal-Capping-Gruppe zur Bereitstellung eines kontrollierten Kettenwachstums umfasst, erfolgt.

22. Verfahren zur Herstellung einer photochromen Verbindung, das das Bilden einer Radikalinitüerungsgruppe aus einem photochromen Teil und das Umsetzen des photochromen Initiators mit einem ungesättigten Monomer, um ein lebendes Polymer mit einer Radikal-Capping-Gruppe zu bilden, die dazu geeignet ist, sich umkehrbar von dem Polymer abzuspalten, um eine kontrollierte Kettenverlängerung des Polymers bereitzustellen, und gegebenenfalls das Abbrechen des lebenden Polymers mit einem Abbruchmonomer umfasst.

23. Verfahren zur Herstellung einer photochromen Verbindung, die das Bilden einer lebenden polymeren Gruppe durch lebende Polymerisation und das Umsetzen der lebenden polymeren Gruppe oder eines Derivats davon mit einem photochromen Teil oder einem Derivat davon umfasst, um eine photochrome Verbindung bereitzustellen, die einen polymeren Substituenten umfasst.

24. Verfahren nach Anspruch 21, wobei die Radikalinütüerungsgruppe, die aus der photochromen Gruppe gebildet wird, die Formel PC-L-Y aufweist, wobei
PC ein photochromer Teil mit einer kohlenstoffbasierten Radikalgruppe ist;
L eine Verbindungsgruppe ist und
Y eine Radikal-Capping-Gruppe ist.

25. Verfahren nach Anspruch 21, wobei die Radikalinitiierungsgruppe, die aus einem Derivat des photochromen Teils der Formel:

PC-(X)-CO-B-Hal

gebildet wird, wobei B ein stabiles Kohlenstoffradikal ist und Hal ein Halogen ist.

26. Verfahren nach Anspruch 20 oder 24, wobei die Radikal-Capping-Gruppe ausgewählt ist aus der Gruppe bestehend aus Dithioester- (-S-C=S-R), Trithiocarbonat- (-S-C=S-S-R), Dithiocarbamat- (-S-C=S-NRR), Xanthat- (-S-C=S-O-R) und Alkoxyamingruppen.

27. Verfahren nach Anspruch 20, wobei der polymere Substituent durch ATRP von einem Radikal gebildet wird, das an dem photochromen Teil gebildet wurde.

28. Photochrome Zusammensetzung, die eine Verbindung nach einem der Ansprüche 1 bis 22 und eine Wirtsmatrix umfasst.

29. Photochrome Zusammensetzung nach Anspruch 28, die eine polymere Wirtsmatrix umfasst.

**30.** Zusammensetzung nach Anspruch 29, wobei die Wirtsmatrix ein Polymer mit einer Härtungs-Tg von mindestens 50 °C ist.

**31.** Zusammensetzung nach Anspruch 29 oder 30, wobei die Wirtsmatrix eine Polymermatrix umfasst, ausgewählt aus Homopolymeren und Copolymeren von Polyol(allylcarbonat)-Monomeren, Homopolymeren und Copolymeren von polyfunktionellen Acrylat-Monomeren, Polyacrylaten, Poly(alkylacrylaten), wie Poly(methylmethacrylat), Poly (vinylacetat), Poly(vinylalkohol), Poly(vinylchlorid), Poly(vinylidenchlorid), Polyurethanen, Polycarbonaten, Poly (ethylenterephthalat), Polystyrol, Co-Poly(styrol-methylmethacrylat), Co-Poly(styrol-acrylonitril), Poly(vinylbutyral) und Homopolymeren und Copolymeren von Diacylidenpentaerythritol.

**32.** Zusammensetzung nach einem der Ansprüche 28 bis 31, wobei die photochrome Verbindung in einer Menge von 0,001 Gew.-% der Wirtsmatrix bis zu 30 Gew.-% der Wirtsmatrix vorliegt.

**33.** Zusammensetzung nach einem der Ansprüche 28 bis 32 in der Form, ausgewählt aus der Gruppe bestehend aus Brillengläsern, Planlinsen, Intraokularlinsen, Kontaktlinsen, Brillenglasfassungen, Gesichtsmasken, Schutzbrillen, Visieren, Kameraobjektiven, Fenstern, Spiegeln, Automobilfenstern, Schmuck, Flugzeug- und Automobilscheiben, Kunststofffolien, Textilien, Beschichtungen, Tintendatenspeichergeräten, optischen Schaltvorrichtungen und Kosmetika.

**34.** Zusammensetzung nach einem der Ansprüche 28 bis 32 in der Form einer Beschichtungszusammensetzung.

**35.** Photochrome Zusammensetzung nach einem der Ansprüche 28 bis 32, wobei die photochrome Verbindung durch Aufbringen auf eine Oberfläche einer Polymermatrix, die zumindest zum Teil gehärtet ist, in die polymere Matrix eingebunden wird.

**36.** Photochrome Zusammensetzung nach einem der Ansprüche 28 bis 32, wobei die photochrome Verbindung mit der polymeren Matrix oder Monomer- und/oder Präpolymervorläufern der polymeren Matrix vermischt wird.

**37.** Photochrome Zusammensetzung nach einem der Ansprüche 28 bis 32 in der Form einer optischen Linse oder einer Oberflächenbeschichtung davon.

**38.** Photochrome Zusammensetzung nach einem der Ansprüche 28 bis 37, wobei die Verblassungshalbwertszeit der photochromen Verbindung in der Matrix im Vergleich mit der entsprechenden Zusammensetzung in Abwesenheit des polymeren Substituenten um mindestens 20 % verändert wird.

**39.** Photochrome Zusammensetzung nach Anspruch 38, wobei die Verblassungshalbwertszeit der photochromen Verbindung im Vergleich mit der entsprechenden Zusammensetzung, die die photochrome Verbindung ohne den polymeren Substituenten umfasst, um mindestens 40 % verringert ist.

**40.** Photochrome Zusammensetzung nach Anspruch 38, wobei die t 3/4 der photochromen Verbindung verglichen mit der entsprechenden Zusammensetzung um mindestens 40% verringert ist, wobei die photochrome Verbindung keinen polymeren Substituenten enthält.

**41.** Photochrome Zusammensetzung nach den Ansprüchen 28 bis 32, wobei die photochrome Verbindung unumgesetzt mit der Polymermatrix bleibt.

**42.** Photochrome Zusammensetzung nach einem der Ansprüche 28 bis 32, wobei ein oder mehrere der Substituenten Y und Y' mit der Wirtsmatrix reaktionsfähig sind, um eine gehärtete Matrix zu bilden, bei der der photochrome Teil durch den polymeren Substituenten an die Matrix gebunden ist.

**Revendications**

**1.** Composé comprenant un fragment photochromique et au moins un substituant comprenant au moins un polymère où le polymère est un homopolymère ou un copolymère comprenant une pluralité d'unités monomères répondant à la formule I

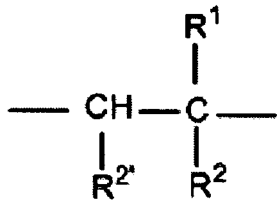

I

où

$R^1$ dans chacune de la pluralité d'unités monomères est choisi parmi le groupe constitué d'un atome d'hydrogène, d'halogène, d'un groupe alkyle, hydroxy, hydroxyalkyle et alcoxy ; $R^2$ dans chacune desdites unités monomères est indépendamment choisi parmi le groupe constitué d'un groupe hydroxy, alcoxy, aryloxy, hétérocyclique, carboxyle, nitrile et parmi le groupe répondant à la formule

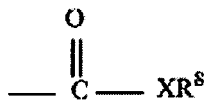

où $R^8$ est choisi parmi le groupe constitué d'un groupe alkyle, alkyle substitué, carbocyclique, carbocyclique substitué, hétérocyclique, hétérocyclique substitué ; et X est choisi parmi le groupe constitué d'une liaison, d'un atome d'oxygène, de soufre et le groupe $NR^{7'}$ où $R^{7'}$ est choisi parmi le groupe constitué d'un atome d'hydrogène, d'un groupe alkyle, alkyle substitué, aryle et aryle substitué, carbocyclique, carbocyclique substitué, hétérocyclique et hétérocyclique substitué (où de préférence au moins l'un des $R^{7'}$ et $R^8$ est autre qu'un atome d'hydrogène) et le groupe répondant aux formules :

$-L'-(O)_q-(Z-O)_p-ZY'$ ; et

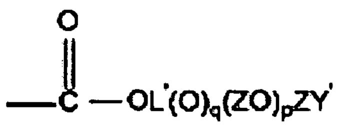

où

p est compris entre 1 et 20, q est égal à 0 ou 1, Z est choisi parmi le groupe constitué d'un groupe alcylène en $C_2$ à $C_6$, haloalcylène en $C_2$ à $C_6$ contenant un ou plusieurs substituants halogénés, un groupe dialkylsilyle, diarylsilyle et diaryloxysilyle ; L'est une liaison ou un groupe de liaison tel qu'un groupe alcylène en $C_1$ à $C_6$, aryle, alkaryle et aralkyle ; et Y' est un groupe terminal choisi parmi le groupe constitué d'un atome d'hydrogène, d'un groupe alkyle, hydroxyle et alcoxy, alcoxyalcoxy, hydroxyalcoxy et aryloxy, tri-(alkyle en $C_1$ à $C_6$) silane, di-(alkyle en $C_1$ à $C_6$) phénylsilane ;

$R^2$ dans chacune de la pluralité d'unités monomères est un atome d'hydrogène et $R^2$ et $R^{2'}$ peuvent former ensemble un groupe de formule

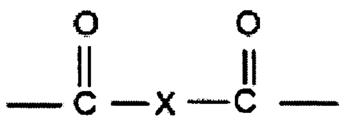

où

X est choisi parmi le groupe constitué d'un atome d'oxygène, de soufre et le groupe $NR^7$ où $R^7$ est choisi parmi le groupe constitué d'un atome d'hydrogène, d'un groupe alkyle, aryle, alkyle substitué et aryle substitué.

**2.** Composé selon la revendication 1 répondant à la formule II

$(PC)-(L(RY)_n)_m$ II

où

PC est le fragment photochromique ;
L est une liaison ou un groupe de liaison ;
R est une chaine de substituant polymérique ;
Y est un groupe terminal du substituant polymérique ;
n est un entier de 1 à 3 ;
m est un entier de 1 à 3 et
R est un polymère, qui peut être un homopolymère ou un copolymère comprenant une pluralité d'unités monomères répondant à formule I

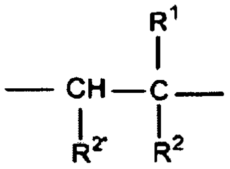 I

où
$R^1$ dans chacune de la pluralité d'unités monomères est choisi parmi le groupe constitué d'un atome d'hydrogène, d'halogène, d'un groupe alkyle, hydroxy, hydroxyalkyle et alcoxy ; $R^2$ dans chacune desdites unités monomères est indépendamment choisi parmi le groupe constitué d'un groupe hydroxy, alcoxy, aryloxy, carboxyle hétérocyclique, nitrile et parmi le groupe répondant à la formule

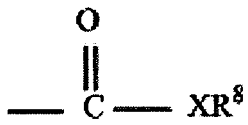

où $R^8$ est choisi parmi le groupe constitué d'un groupe alkyle, alkyle substitué, carbocyclique, carbocyclique substitué, hétérocyclique, hétérocyclique substitué ; et X est choisi parmi le groupe constitué d'une liaison, d'un atome d'oxygène, de soufre et le groupe $NR^{7'}$ où $R^{7'}$ est choisi parmi le groupe constitué d'un atome d'hydrogène, d'un groupe alkyle, alkyle substitué, aryle et aryle substitué, carbocyclique, carbocyclique substitué, hétérocyclique et hétérocyclique substitué (où de préférence au moins l'un des $R^{7'}$ et $R^8$ est autre qu'un atome d'hydrogène) et le groupe de formule :

$-L'-(O)_q-(Z-O)_p-ZY'$ ; et

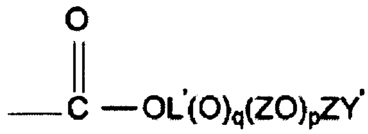

où
p est compris entre 1 et 20, q est égal à 0 ou 1, Z est choisi parmi le groupe constitué d'un groupe alcylène en $C_2$ à $C_6$, haloalcylène en $C_2$ à $C_6$ contenant un ou plusieurs substituants halogénés, un groupe dialkylsilyle, diarylsilyle et diaryloxysilyle ; L' est une liaison ou un groupe de liaison tel qu'un groupe alcylène en $C_1$ à $C_6$, aryle, alkaryle et aralkyle ; et Y' est un groupe terminal choisi parmi le groupe constitué d'un atome d'hydrogène, d'un groupe alkyle, hydroxyle et alcoxy, alcoxyalcoxy, hydroxyalcoxy et aryloxy, tri-(alkyle en $C_1$ à $C_6$)silane, di-(alkyle en $C_1$ à $C_6$) phénylsilane ;
$R^{2'}$ dans chacune de la pluralité d'unités monomères est un atome d'hydrogène et $R^2$ et $R^{2'}$ peuvent former ensemble un groupe de formule

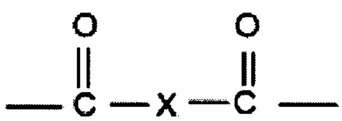

où
X est choisi parmi le groupe constitué d'un atome d'oxygène, de soufre et le groupe $NR^7$ où $R^7$ est choisi parmi le groupe constitué d'un atome d'hydrogène, d'un groupe alkyle, aryle, alkyle substitué et aryle substitué.

**3.** Composé selon la revendication 1 ou la revendication 2 dans lequel le polymère comprenant des unités monomères de la formule II est un copolymère comprenant en outre une pluralité d'au moins une unité comonomère de formule III :

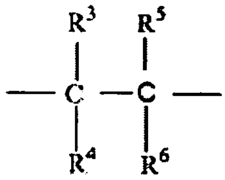
III

où $R^3$, $R^4$, $R^5$ et $R^6$ sont indépendamment choisis parmi le groupe constitué d'un atome d'hydrogène, d'halogène, d'un groupe alkyle, alkyle substitué, aryle, aryle substitué et haloalkyle.

**4.** Composé selon la revendication 1 ou la revendication 2 dans lequel le substituant polymérique R est de formule IV

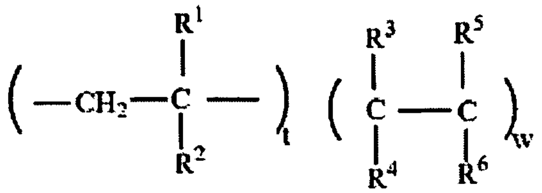
IV

où
$R^1$ dans chacune de la pluralité d'unités monomères est indépendamment choisi parmi le groupe constitué d'un atome d'hydrogène, d'halogène, d'un groupe alkyle, hydroxy, hydroxyalkyle et alcoxy ;
$R^2$ dans chacune desdites unités monomères est indépendamment choisi parmi le groupe constitué d'un groupe hydroxy, alcoxy, aryloxy, carboxyle hétérocyclique, nitrile et parmi le groupe de formule

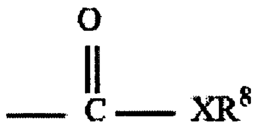

où $R^8$ est choisi parmi le groupe constitué d'un groupe alkyle, alkyle substitué, carbocyclique, carbocyclique substitué, hétérocyclique, hétérocyclique substitué, et X est choisi parmi le groupe constitué d'une liaison, d'un atome d'oxygène, de soufre et le groupe $NR^{7'}$ où $R^{7'}$ est choisi parmi le groupe constitué d'un atome d'hydrogène, d'un groupe alkyle, alkyle substitué, aryle et aryle substitué, carbocyclique, carbocyclique substitué, hétérocyclique et hétérocyclique substitué (où de préférence au moins l'un des $R^{7'}$ et $R^8$ est autre qu'un atome d'hydrogène) et le groupe de formule :

$-L'-(O)_q-(Z-O)_p-ZY'$ ; et

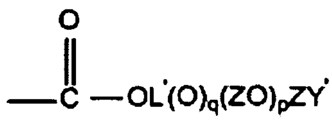

où
p est compris entre 2 et 15, q est égal à 0 ou 1, Z est choisi parmi le groupe constitué d'un groupe alcylène en $C_2$ à $C_4$, perhaloalcylène en $C_2$ à $C_4$ , dialkylsilyle, diarylsilyle et diaryloxysilyle ; L'est une liaison ou un groupe de

liaison tel qu'un groupe alcylène en $C_1$ à $C_6$, aryle, alkylaryle et aralkyle, et Y' est un groupe terminal choisi parmi le groupe constitué d'un atome d'hydrogène, d'un groupe alkyle, hydroxyle et alcoxy, alcoxyalcoxy, hydroxyalcoxy et aryloxy, tri-(alkyle en $C_1$ à $C_6$)silane, di-(alkyle en $C_1$ à $C_6$)phénylsilane ;
$R^3$ , $R^4$, $R^5$ et $R^6$ sont indépendamment choisis parmi le groupe constitué d'un atome d'hydrogène, d'halogène, d'un groupe alkyle, alkyle substitué, aryle, aryle substitué et haloalkyle, et
t est compris entre 2 et 500 et W est compris entre 0 et 500.

**5.** Composé photochromique selon l'une quelconque des revendications 1 à 4 dans lequel $R^2$ dans chacune de la pluralité d'unités monomères est choisi parmi le groupe constitué d'un groupe hydroxy, alcoxy, arylaryloxy, arylalkyle hétérocyclique, alkylaryle, carboxyle, nitrile, alcoxycarbonyle, alcoxycarbonyle substitué, carbamoyle, N-alkylcarbamoyle, N,N-dialkylcarbamoyle, carbaniloyle, alkylphénylaminocarbonyle, alcoxyphénylaminocarbonyle, carbazole, acyle, acyle substitué.

**6.** Composé photochromique selon l'une quelconque des revendications précédentes dans lequel le fragment photochromique est choisi parmi le groupe constitué de :

chromènes tels que ceux choisis parmi le groupe constitué de naphtopyranes, benzopyranes, indénonaphtopyranes et phénanthropyranes ;
spiropyranes tels que ceux choisis parmi le groupe constitué de spiro(benzindoline)naphtopyranes, spiro(indoline)benzopyranes, spiro(indoline)-naphtopyranes, spiroquinopyranes et spiro(indoline)pyranes et spirodihydroindolizines ;
spirooxazines telles que celles choisies parmi le groupe constitué de spiro(indoline)naphtoxazines, spiro(indoline)pyridobenzoxazines, spiro(benzindoline)pyridobenzoxazines, spiro(benzindoline)naphtoxazines et spiro (indoline)-benzoxazines ; fulgides ; fulgimides ; anils ; périmidinespirocyclohexadiènones ; stilbènes ; thioindigoïdes ; diarylperfluorocyclopentènes ; diarylcyclopentènes ; dihétéroarylcyclopentènes ; dihétéroarylperfluorocyclopentènes ; colorants azoïques et diaryléthènes.

**7.** Composé photochromique selon l'une quelconque des revendications 2 à 6 dans lequel le groupe de liaison L est une liaison ou bien le polyradical choisi parmi le groupe de formules IIa, IIb, IIc, IId, IIe et IIf :

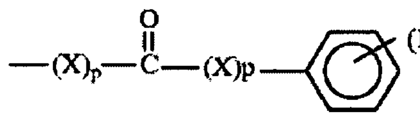

IIa

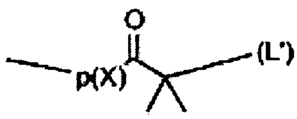

IIb

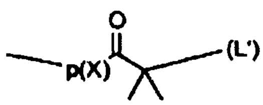

IIb

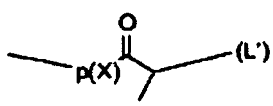

IIc

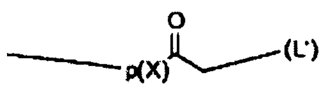

IId

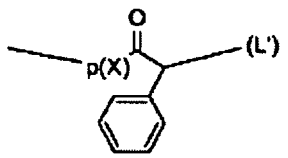

IIe

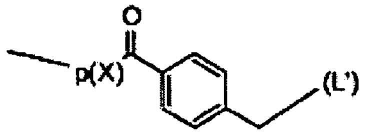

IIf

où dans les formules IIa à IIf :

où L' est R ou L tel que défini par l'une quelconque des formules IIa à IIf et le lien entier entre le fragment photochromique et le substituant polymérique R n'est pas supérieur à 6 et de préférence non supérieur à 4 ;
X qui peut être identique ou différent est tel que défini ci-dessus ;
$R^4$ est choisi parmi le groupe constitué d'un groupe hydroxy, alcoxy, amino et amino substitué comme l'aminoalkyle ;
n est un entier compris entre 1 et 3 ;
w est un entier compris entre 1 et 4 ;
q est un entier compris enter 0 et 15 ;
p qui, lorsqu'il y en a plus d'un, peut être identique ou différent, est égal à 0 ou 1, et
(R) montre le radial pour la liaison du substituant polymérique R.

**8.** Composé photochromique selon l'une quelconque des revendications 1 à 7 dans lequel $R^1$ est choisi parmi le groupe constitué d'un atome d'hydrogène, d'halogène, d'un groupe alkyle en $C_1$ à $C_6$, alcoxy en $C_1$ à $C_6$, hydroxyalkyle en $C_1$ à $C_6$ et de préférence $R^1$ est un atome d'hydrogène ou un groupe alkyle en $C_1$ à $C_6$ et plus préférablement $R^1$ est un atome d'hydrogène ou un groupe méthyle.

**9.** Composé photochromique selon l'une quelconque des revendications 1 à 8 dans lequel $R^2$ est choisi parmi le groupe constitué d'un groupe hydroxy, alcoxy en $C_1$ à $C_6$, alcoxycarbonyle, hétérocyclique, aryloxy, hétérocyclique comprenant 5 à 10 éléments de cycle et un ou deux cycles et d'un à trois hétéroatomes choisis parmi les atomes d'azote, d'oxygène et de soufre et éventuellement substitué par un groupe alkyle en $C_1$ à $C_6$, carboxyle, nitrile, alcoxycarbonyle en $C_1$ à $C_{10}$, alcoxycarbonyle substitué par un substituant choisi parmi un atome d'halogène, un groupe (alcoxy en $C_1$ à $C_6$)-(alcoxy en $C_1$ à $C_6$), carbamoyle, N-(alkyle en $C_1$ à $C_6$)-carbamoyle, N,N-di(alkyle en $C_1$ à $C_6$)carbamoyle, carbaniloyl(alkyle en $C_1$ à $C_6$)phénylaminocarbonyle, (alcoxy en $C_1$ à $C_6$) phénylaminocarbonyle, formyle, aroyle, (alcoxy en $C_1$ à $C_6$)carbonyle substitué par un substituant choisi parmi le groupe hydroxy et alcoxy en $C_1$ à $C_6$ ; et le groupe des formules :

$-L'-(O)_q-(Z-O)_p-ZY'$ ; et

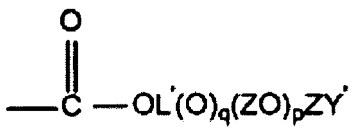

où q est égal à 0 ou 1, Z est choisi parmi le groupe constitué de l'éthylène, perfluoroéthylène, propylène, perfluoropropylène et diméthylsilyle et p est un entier compris entre 2 et 20 ; L est une liaison ou un groupe de liaison choisi parmi un groupe alcylène en $C_1$ à $C_6$; et Y' est choisi parmi le groupe constitué d'un atome d'hydrogène, d'un groupe alkyle en $C_1$ à $C_6$, alkyle en $C_1$ à $C_6$ substitué par un groupe choisi parmi le groupe hydroxy, alcoxy en $C_1$ à $C_6$, carboxyle, et (alcoxy en $C_1$ à $C_6$)carboxyle, acryloyle, méthacryloyle, acryloyloxy et méthacryloyloxy , halogène, dithioester (-S-C=S-R), trithiocarbonate (-S-C=S-S-R), dithiocarbamate (-S-C=S-NRR), xanthate (-S-C=S-O-R), acides carboxyliques, esters carboxyliques et hydroxy.

**10.** Composé photochromique selon l'une quelconque des revendications 1 à 9 dans lequel $R^2$ dans chacune de la pluralité d'unités monomères est indépendamment choisi parmi le groupe constitué d'un groupe carboxyle, hétérocyclique de 5 à 10 éléments de cycle comprenant un ou deux cycles et d'un à trois éléments de cycle éventuellement substitués par un alkyle en $C_1$ à $C_6$, alcoxy en $C_1$ à $C_6$, carbonyle, (alcoxy en $C_1$ à $C_6$) substitué, (alcoxy en $C_1$ à $C_6$)carbonyle, carbamoyle, (alkyle en $C_1$ à $C_6$)carbamoyle, formyle, (alkyle en $C_1$ à $C_6$)carbonyle et le groupe des formules :

$-L'-(O)_q-(Z-O)_p-ZY'$ ; et

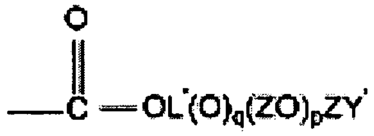

où

p est compris entre 2 et 20, q est égal à 0 ou 1, Z est un groupe éthylène, propylène, diméthylsilyle et diméthoxysilyle ; L est une liaison ou un alkyle en $C_1$ à $C_4$ ; et Y' est choisi parmi le groupe constitué d'un groupe alkyle en $C_1$ à $C_6$, haloalkyle en $C_1$ à $C_6$, aryle, et alkyle en $C_1$ à $C_6$ substitué par un substituant choisi parmi un groupe alcoxy en $C_1$ à $C_6$, carboxyle, (alcoxy en $C_1$ à $C_6$)carbonyle ; $R^2$ est un atome d'hydrogène et

$R^2$ et $R^{2'}$ peuvent former ensemble un groupe de liaison de formule

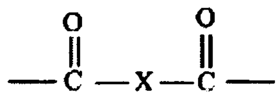

où X est choisi parmi un atome d'oxygène, de soufre et le groupe $NR^7$, où $R^7$ est choisi parmi un groupe alkyle en $C_1$ à $C_6$, alcoxy en $C_1$ à $C_6$, (alkyle en $C_1$ à $C_6$).

**11.** Composé selon l'une quelconque des revendications 1 à 10, dans lequel le substituant polymérique R comprend des polymères d'un ou plusieurs monomères choisis parmi le groupe constitué de l'acide acrylique, acrylate de méthyle, acrylate d'éthyle, acrylate de propyle, acrylate de butyle, acrylate d'hexyle, acrylate d'isohexyle, acrylate de cyclohexyle, acrylate d'isobornyle, acrylate d'éthoxyéthyle, acrylate d'allyle, acroléine, acrylamide, chlorure d'acryloyle, poly(éthylènegylcol)acrylate, acide méthacrylique, méthacrylate de méthyle, méthacrylate d'éthyle, méthacrylate de propyle, méthacrylate de butyle, méthacrylate d'hexyle, méthacrylate d'isohexyle, méthacrylate de cyclohexyle, méthacrylate d'isobornyle , méthacrylate d'éthoxyéthyle, méthacrylamide, chlorure de méthacryloyle, méthacrylate d'Allyle, méthacrylate de 1H,1H,2H,2H-Perfluorodécyle (et d'autres méthacrylates d'alkyle fluoré), méthacrylate de 1H,1H,2H,2H-Perfluorodécyle, méthacrylate de 4, 4, 5, 5, 6, 6, 7, 7, 8, 9, 9, 9-Dodécafluoro-2-hydroxy-8-(trifluorométhyl)nonyle, méthacrylate de 3,3,4,4,5,5,6,6,7,8,8,8-Dodécafluoro-7-(trifluorométhyl)octyle, méthacrylate de 3, 3, 4, 4, 5, 5, 6, 6, 7, 7, 8, 8, 9, 9, 10, 10, 11, 12, 12, 12-Eicosafluoro-11-(trifluorométhyl)dodécyle, méthacrylate de Benzyle, méthacrylate de 2-Butoxyéthyle, méthacrylate de 2-(tert-butylamino)éthyle, 3-butoxyméthacrylate de butyle, 9H-Carbazole-9-éthylméthacrylate, méthacrylate de 3-chloro-2-hydroxypropyle, méthacrylate de Cyclohexyle, méthacrylate de Décyle, méthacrylate de 3-(Diéthoxyméthylsilyl)propyle, méthacrylate de 2-(Diéthylamino)éthyle, méthacrylate de 2-(Diméthylamino)éthyle, méthacrylate de 3-(Diméthylchlorosilyl)propyle, Disperse Red 1-méthacrylate, Disperse red 13-méthacrylate , Disperse Yellow 7-méthacrylate, méthacrylate d'éther dicyclopentényle d'Ethylène glycol, phosphate de méthacrylate d'Ethylène glycol, méthacrylate d'éther méthylique d'Ethylène glycol , monométhacrylate monoacétoacétate d'Ethylène glycol, FluorescéineO-méthacrylate, méthacrylate de Glycidyle, méthacrylate de 3-[(3,5,7,9,11,13,15-Heptacyclopentylpentacyclo[$9.5.1.1^{3,9}.1^{5,5}.1^{7,13}$]octasiloxan-1-yloxy)-diméthylsilyl]propyle (diméthylsilyloxy(propyl)-méthacrylate-POSS), méthacrylate d'Hexyle, méthacrylate de 2-Hydroxyéthyle, méthacrylate d'Hydroxypropyle, méthacrylate d'Isobornyle, méthacrylate d'Isodécyle, méthacrylate de Lauryle, acétoacétate de 2-(méthacryloyloxy)éthyle, [2-(méthacryloyloxy)éthyl]-diméthyl(3-sulfopropyl)hydroxyde d'ammonium, méthacrylate de 2-Naphtyle, méthacrylate de 2-(4-nitrophénoxy)éthyle, méthacrylate de Pentabromobenzyle, méthacrylate 2,2,3,3,3-Pentafluoropropyle, sel de potassium de méthacrylate de 3-sulfopropyle ,méthacrylate de 2-(tert- butylamino)-éthyle, méthacrylate de Tétrahydrofurfuryle, méthacrylate de 2,4,6-Tribromophényle, méthacrylate de Tridécyle, méthacrylate de 3-(Triméthoxysilyl)propyle, méthacrylate de 3,3,5-Triméthylcyclohexyle, méthacrylate de Triméthylsilyle, méthacrylate de 3-[Tris(triméthylsiloxy)silyl]propyle et méthacrylate de 3-[Tris(triméthylsiloxy)silyl]propyle, Méthacroléine de 2-méthylacrylamide, chlorure de 2-méthylacryloyle, méthacrylate d'éther béhénylique de polyéthylèneglycol, méthacrylate de polyéthylèneglycol, Maléimides, styrène, acrylamide, méthacrylamide, anhydride maléique de diméthylacrylamide et des copolymères de deux ou plus de ces éléments avec des comonomères insaturés.

**12.** Composé selon l'une quelconque des revendications précédentes dans lequel le substituant polymérique comprend au moins un monomère choisi parmi le groupe constitué d'alkylacrylates, alkylméthacrylates, hydroxyalkylacrylates, hydroxyalkylméthacylates, haloalkylacrylates, haloalkylméthacrylates, alcoxyalkylacrylates, acrylates d'alcoxyalkylméthyle, aminoalkylméthacrylates éventuellement mono N-substitués ou di-N-substitués, cycloalkylacrylates, cycloalkylméthacrylates, phénoxyacrylate, phénoxyméthacylate, glycolacrylate d'alcylène, méthacrylate d'alcylène glycol, polyalcylèneglycolacrylate, polyalcylèneglycolméthacrylate, acrylamides, méthacrylamides, dérivés d'acrylamides et méthacrylamides.

**13.** Composé photochromique selon l'une quelconque des revendications 1 à 12 dans lequel le substituant polymérique R est préparé par le procédé de polymérisation par croissance de chaîne ou par ouverture de cycle à partir d'un radical, un cation ou un anion formé à partir du fragment photochromique.

**14.** Composé selon l'une quelconque des revendications 1 à 12 formé en tant que produit d'addition d'un groupe polymérique préformé et d'un photochromique.

**15.** Composé photochromique selon l'une quelconque des revendications précédentes dans lequel la demi-vie du fondu du composé dans l'essai par coulée photochromique standard est différente d'au moins 20% par rapport au composé photochromique correspondant en l'absence du substituant polymérique.

**16.** Composé photochromique selon l'une quelconque des revendications précédentes dans lequel la demi-vie du fondu dans la coulée photochromique standard est réduite d'au moins 40% par rapport au composé photochromique correspondant en l'absence du substituant polymérique.

**17.** Composé photochromique selon l'une quelconque des revendications précédentes où le t 3/4 du composé photochromique dans la coulée photochromique standard est réduit d'au moins 40% par rapport à la composition correspondante où le composé photochromique ne contient pas le substituant polymérique.

**18.** Composé photochromique selon l'une quelconque des revendications précédentes dans lequel le composé photochromique présente une absorption saturée plus élevée que celle du photochromique non-substitué correspondant à la même concentration molaire.

**19.** Composé photochromique selon l'une quelconque des revendications précédentes qui présente un effet de température réduite par rapport au photochromique non-substitué correspondant dans la même matrice.

**20.** Procédé destiné à préparer un composé photochromique selon l'une quelconque des revendications 1 à 21 comprenant la polymérisation d'un monomère alcylène substitué pour former un polymère ayant un squelette carboné avec des substituants attachés où le polymère est (a) préparé par croissance de chaîne d'un initiateur comprenant un fragment photochromique ou (b) réagit avec un réactif comprenant le fragment photochromique.

**21.** Procédé selon la revendication 20 dans lequel la polymérisation s'effectue par polymérisation radicalaire libre vivante à partir d'un initiateur comprenant un groupe piégeur de radicaux pour fournir une croissance de chaîne contrôlée.

**22.** Procédé destiné à préparer un composé photochromique comprenant le fait de former un groupe d'initiation radicalaire à partir d'un fragment photochromique et le fait de réagir l'initiateur photochromique avec un monomère insaturé pour former un polymère vivant ayant un groupe piégeur de radicaux adapté pour se cliver de manière réversible à partir du polymère pour fournir une extension de chaîne contrôlée du polymère et éventuellement le fait d'arrêter le polymère vivant par un monomère de terminaison.

**23.** Procédé destiné à préparer un composé photochromique comprenant le fait de former un groupe polymérique vivant par une polymérisation vivante et le fait de réagir le groupe polymérique vivant ou un dérivé de celui-ci avec un fragment photochromique ou avec un dérivé de celui-ci pour fournir un composé photochromique comprenant un substituant polymérique.

**24.** Procédé selon la revendication 21 dans lequel le groupe d'initiation radicalaire formé à partir du groupe photochromique est de formule PC-L-Y
où
PC est un fragment photochromique ayant un groupe radicalaire à base de carbone ;
L est un groupe de liaison, et
Y est un groupe piégeur de radicaux.

**25.** Procédé selon la revendication 21 dans lequel le groupe d'initiation radicalaire est formé à partir d'un dérivé du fragment photochromique de formule :

PC-(X)-CO-B-Hal

où B est un radical carboné stable et Hal est un halogène.

**26.** Procédé selon la revendication 20 ou 24 où le groupe piégeur des radicaux est choisi parmi le groupe constitué de dithioester (-S-C=S-R), trithiocarbonate (-S-C=S-S-R), dithiocarbamate (-S-C=S-NRR), xanthate (-S-C=S-OR) et de groupes alcoxyamines.

**27.** Procédé selon la revendication 20 dans lequel le substituant polymérique est formé par polymérisation radicalaire par transfert d'atomes (dite ATRP) à partir d'un radical formé sur le fragment photochromique.

**28.** Composition photochromique comprenant un composé selon l'une quelconque des revendications 1 à 22 et une matrice d'accueil.

**29.** Composition photochromique selon la revendication 28 comprenant une matrice d'accueil polymérique.

**30.** Composition selon la revendication 29 dans laquelle la matrice d'accueil est un polymère ayant une température de durcissement Tg d'au moins 50°C.

**31.** Composition selon la revendication 29 ou la revendication 30 dans laquelle la matrice d'accueil comprend une matrice polymère choisie parmi des homopolymères et copolymères de monomères de polyol(carbonate d'allyle), des homopolymères et copolymères de monomères d'acrylate multifonctionnels, des polyacrylates, des poly(alkylacrylates) tels que le poly(méthacrylate de méthyle), l'acétate de polyvinyle, le poly(alcool vinylique), le poly(chlorure de vinyle), poly(chlorure de vinlylidène), les polyuréthanes, les polycarbonates, le poly(téréphtalate d'éthylène), le polystyrène, le copoly(styrène-méthacrylate de méthyle), le copoly(styrène-acrylatéonitrile), le poly(vinylbutryal), et les homopolymères et copolymères du pentaérythritol de diacylidène.

**32.** Composition selon l'une quelconque des revendications 28 à 31 dans laquelle le composé photochromique est présent en une quantité de 0,001% en poids de matrice d'accueil jusqu'à 30% en poids de matrice d'accueil.

**33.** Composition selon l'une quelconque des revendications 28 à 32 sous la forme choisie parmi le groupe constitué de lentilles ophtalmiques, lentilles piano, lentilles interoculaires, lentilles de contact, montures de verres de lunettes, écrans facials, lunettes de protection, visières, lentilles de caméra, fenêtres, miroirs, fenêtres d'automobiles, bijoux, vitrages d'avions et d'automobiles, feuilles de films plastiques, textiles, revêtements, dispositifs de stockage de données à encres, dispositifs de commutation optiques et cosmétiques.

**34.** Composition selon l'une quelconque des revendications 28 à 32 sous la forme d'une composition de revêtement.

**35.** Composition photochromique selon l'une quelconque des revendications 28 à 32 dans laquelle le composé photochromique est incorporé dans la matrice polymérique par application à une surface d'une matrice polymère qui est au moins partiellement durcie.

**36.** Composition photochromique selon l'une quelconque des revendications 28 à 32 dans laquelle le composé photochromique est mélangé avec la matrice polymérique ou un monomère et/ou des précurseurs prépolymères de la matrice polymérique.

**37.** Composition photochromique selon l'une quelconque des revendications 28 à 32 sous la forme d'une lentille optique ou de son revêtement de surface.

**38.** Composition photochromique selon l'une quelconque des revendications 28 à 37 dans laquelle la demi-vie du fondu du composé photochromique dans la matrice est modifiée d'au moins 20% par rapport à la composition correspondante en l'absence du substituant polymérique.

**39.** Composition photochromique selon la revendication 38 dans laquelle la demi-vie du fondu du composé photochromique est réduite d'au moins 40% par rapport à la composition correspondante comprenant le composé photochromique sans le substituant polymérique.

**40.** Composition photochromique selon la revendication 38 dans laquelle le t 3/4 du composé photochromique est réduit d'au moins 40% par rapport à la composition correspondante où le composé photochromique ne contient pas le substituant polymérique.

**41.** Composition photochromique selon la revendication 28 à 32 dans laquelle le composé photochromique ne réagit pas avec la matrice polymère.

**42.** Composition photochromique selon l'une quelconque des revendications 28 à 32 dans laquelle un ou une pluralité de substituants Y et Y' réagit avec la matrice d'accueil afin de former une matrice durcie dans laquelle le groupement photochromique est attaché à la matrice par le substituant polymérique.

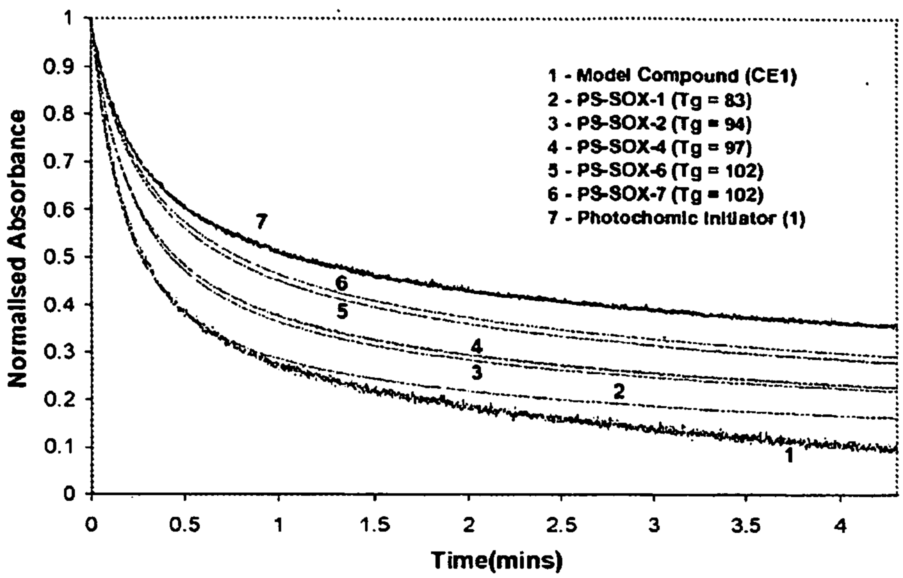


FIGURE 1

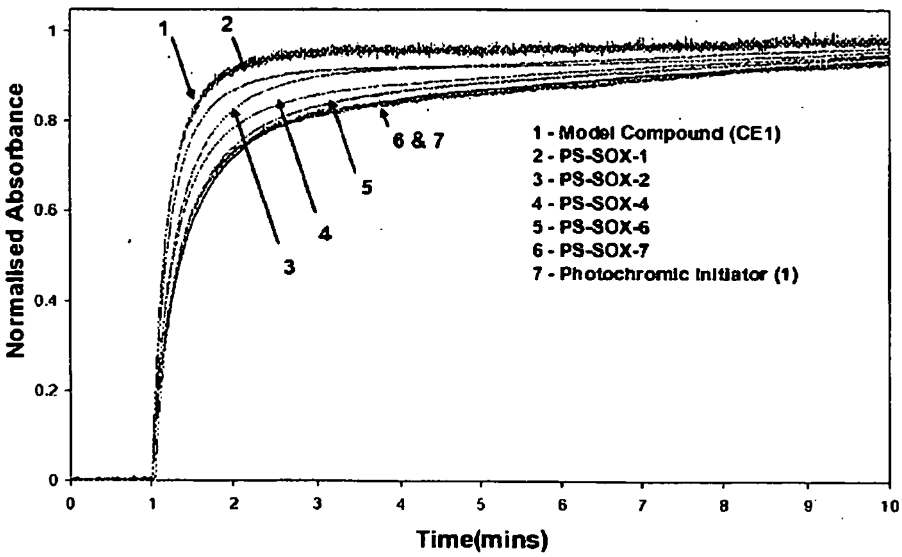


FIGURE 2

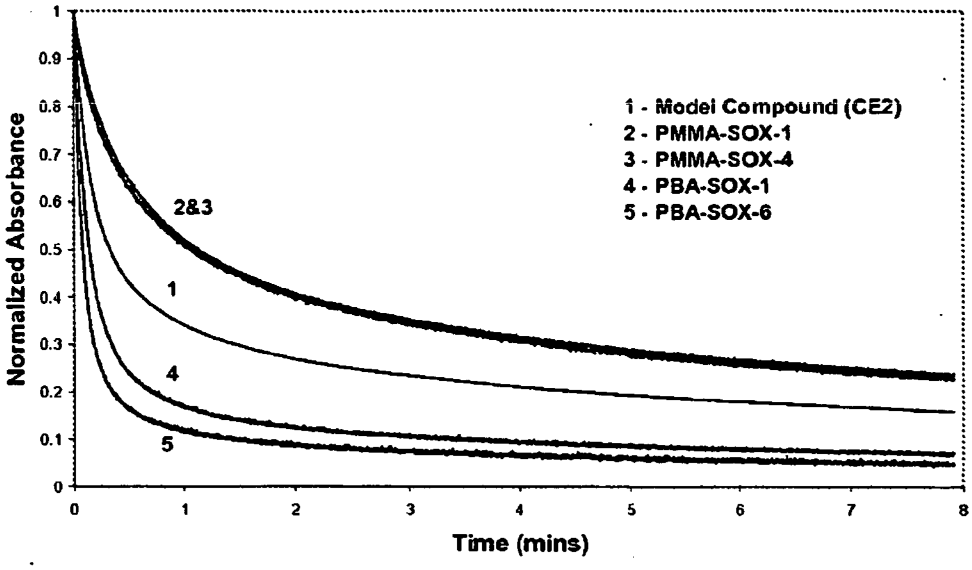


FIGURE 3

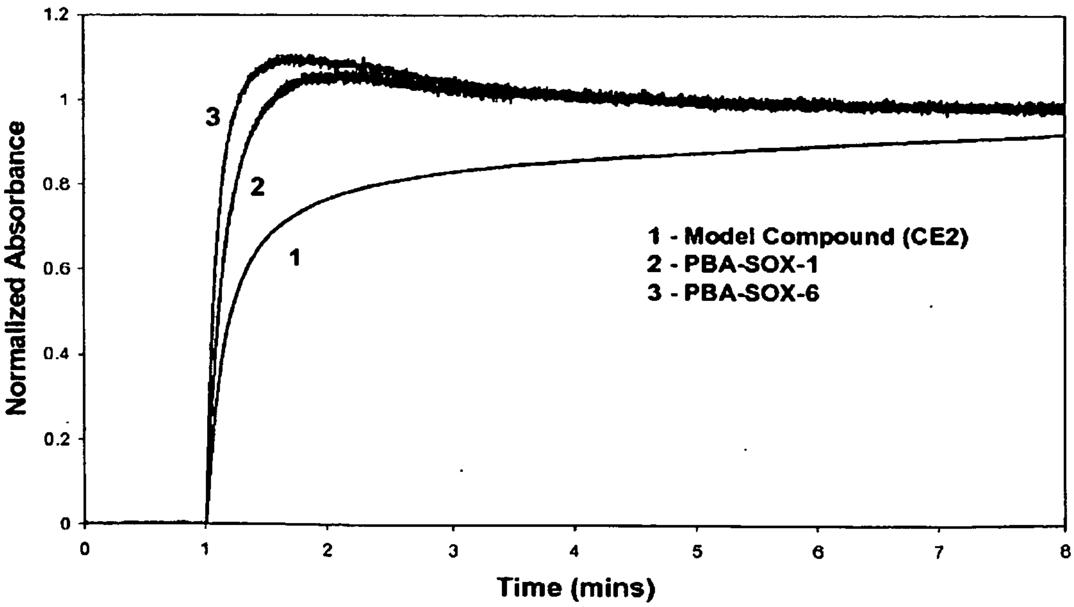


FIGURE 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 00915629 A
- WO 0170719 A
- US 20030141490 A1, Walters
- AU 2003001453 W
- WO 2004041961 A
- US 5776376 A
- US 9712540 W
- WO 9801478 A
- US 5362826 A
- US 5324879 A
- WO 9731030 A
- US 6100350 A
- US 9514428 W
- WO 960704 A
- US 5756605 A
- US 6291620 B
- US 4581429 A, Solomon
- US 4062865 A
- US 4220708 A
- AU 2004902302
- US 4286957 A
- US 4880667 A
- US 2370567 A
- US 2403113 A
- US 6113814 A


### Non-patent literature cited in the description


- **Hu et al.** *Pure Appln. Chem.,* 1996, vol. AA (6), 803-810
- **Widmaier et al.** Synthesis and characterization of polystyrene networks containing unattached photocromic polystyrene: preliminary results of self-diffusion measurements. *POLYMER,* March 1989, vol. 30, 549-552
- **Cho et al.** Preparation of diarylethene copolymers and their photoinduced refractive index change. *Optical Materials,* 2002, vol. 21, 279-284
- *Macromolecules,* 1995, vol. 28, 7901
- *Macromolecules,* 1995, vol. 28, 7970
- *Macromolecules,* 1996, vol. 29, 3665
- **Matyjaszewski ; Xia.** *Chemical Reviews,* 2001, vol. 101, 2921-2990
- **Piirma et al.** *J. Appl. Poly. Sci.,* 1979, vol. 24, 2051
- *J. Appl. Polym. Sci,* 1981, vol. 26, 3013
- *J. Appl. Polym. Sci,* 1987, vol. 33, 717
- **Reeb et al.** *Eur. Polym. J.,* 1976, vol. 12, 317
- *Poym. Prepr., Am. Chem. Soc., Div. Polym., Chem.,* 1980, vol. 21, 55
- **Riess et al.** *Eur. Polym. J.,* 1975, vol. 11, 301
- *Inf. Chim.,* 1973, vol. 116, 117
- **Yoshida et al.** Synthesis of Polystyrene having an Aminoxy Terminal by the Reactions of Living Polystyrene with Oxoaminium Salt and with Corresponding Nitroxyl Radical. *Macromolecules,* vol. 27 (12), 3119-3124
- **Vinchon et al.** Preparation de Promoteurs Azoiques Macromoleculaires Par Voie Anionique. *European Polymer Journal,* vol. 12, 317-321
- **Gale ; Wiltshire.** *J. Soc. Dye and Colourants,* 1974, vol. 90, 97-100
- **Gale ; Lin ; Wilshire.** *Aust. J. Chem.,* 1977, vol. 30, 689-94
- *Tetrahedron Lett.,* 1973, vol. 12, 903-6